(19) Europäisches Patentamt
European Patent Office
Office européen des brevets

(11) EP 4 418 773 A1

(12) EUROPEAN PATENT APPLICATION

(43) Date of publication:
**21.08.2024 Bulletin 2024/34**

(21) Application number: **24158050.5**

(22) Date of filing: **16.02.2024**

(51) International Patent Classification (IPC):
***H04W 56/00*** *(2009.01)* ***H04W 74/0833*** *(2024.01)*
*H04W 36/00* *(2009.01)* *H04W 36/08* *(2009.01)*

(52) Cooperative Patent Classification (CPC):
**H04W 56/0045;** H04W 36/0077; H04W 36/08; H04W 74/008

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.02.2023 US 202363446289 P**

(71) Applicant: **Comcast Cable Communications, LLC**
**Philadelphia, PA 19103 (US)**

(72) Inventors:
- **JEON, Hyoungsuk**
**Philadelphia, 19103 (US)**
- **KIM, Taehun**
**Philadelphia, 19103 (US)**
- **DINAN, Esmael Hejazi**
**Philadelphia, 19103 (US)**
- **PARK, Kyungmin**
**Philadelphia, 19103 (US)**
- **ZHOU, Hua**
**Philadelphia, 19103 (US)**
- **XU, Jian**
**Philadelphia, 19103 (US)**
- **LATHEEF, Fasil Abdul**
**Philadelphia, 19103 (US)**

(74) Representative: **V.O.**
**P.O. Box 87930**
**2508 DH Den Haag (NL)**

# (54) EARLY TIMING ADVANCE ACQUISITION FOR HANDOVER

(57) A wireless device may change cells. The wireless device may be provided with an early timing advance indication, before changing cells, that may indicate a repetition number. The repetition number may indicate a number of preamble transmissions the wireless device may make. To change cells the wireless device may repeat transmission of a preamble, to a target cell, a number of times corresponding to the repetition number.

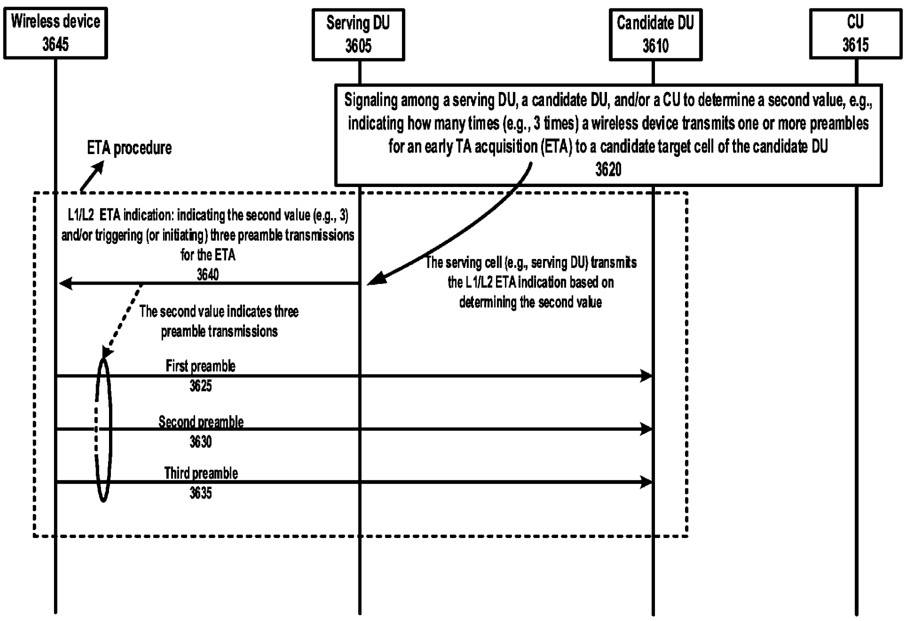


FIG. 36

EP 4 418 773 A1

## Description

CROSS-REFERENCE TO RELATED APPLICATIONS

This application claims the benefit of U.S. Provisional Application No. 63/446,289, filed on February 16, 2023. The above-referenced application is hereby incorporated by reference in its entirety.

BACKGROUND

As a wireless device moves, the wireless device may be required to change cells. Handover mobility allows an ongoing communication session of a wireless device to continue from one cell to another. Lower layer triggered mobility, enables a wireless device to change serving cells with layer 1 or layer 2 signaling while also minimizing changes to layer configurations.

SUMMARY

The following summary presents a simplified summary of certain features. The summary is not an extensive overview and is not intended to identify key or critical elements.

A wireless device may need to change cells, for example, for improved coverage, reception, transmission, and/or a handover. A serving base station of the wireless device may request, for example, a mobility handover of the wireless device to a cell of a target base station. The wireless device may initiate the mobility handover, for example, if it receives a signal. A lower layer triggered mobility procedure may be initiated by the wireless device, for example, based on the wireless device receiving a control signal (e.g., downlink control information or medium access control element). To reduce delay from the wireless device switching cells, the wireless device may initiate an early timing advance to synchronize with the target cell by sending one or more preambles to the target cell before the cell switch. The wireless device may initiate the early timing advance, for example, by receiving an early timing advance acquisition indication. The early timing advance acquisition may comprise a repetition value that may indicate a quantity of times the wireless device may send a preamble to the candidate cell. Signaling overhead between base stations may be reduced, for example, by indicating to the wireless device to send multiple preambles per early timing advance acquisition indication rather than relying on an early timing acquisition indication for each preamble transmission.

These and other features and advantages are described in greater detail below.

BRIEF DESCRIPTION OF THE DRAWINGS

Some features are shown by way of example, and not by limitation, in the accompanying drawings. In the drawings, like numerals reference similar elements.

FIG. 1A and FIG. 1B show example communication networks.
FIG. 2A shows an example user plane.
FIG. 2B shows an example control plane configuration.
FIG. 3 shows example of protocol layers.
FIG. 4A shows an example downlink data flow for a user plane configuration.
FIG. 4B shows an example format of a Medium Access Control (MAC) subheader in a MAC Protocol Data Unit (PDU).
FIG. 5A shows an example mapping for downlink channels.
FIG. 5B shows an example mapping for uplink channels.
FIG. 6 shows example radio resource control (RRC) states and RRC state transitions.
FIG. 7 shows an example configuration of a frame.
FIG. 8 shows an example resource configuration of one or more carriers.
FIG. 9 shows an example configuration of bandwidth parts (BWPs).
FIG. 10A shows example carrier aggregation configurations based on component carriers.
FIG. 10B shows example group of cells.
FIG. 11A shows an example mapping of one or more synchronization signal/physical broadcast channel (SS/PBCH) blocks.
FIG. 11B shows an example mapping of one or more channel state information reference signals (CSI-RSs).
FIG. 12A shows examples of downlink beam management procedures.
FIG. 12B shows examples of uplink beam management procedures.
FIG. 13A shows an example four-step random access procedure.
FIG. 13B shows an example two-step random access procedure.

FIG. 13C shows an example two-step random access procedure.
FIG. 14A shows an example of control resource set (CORESET) configurations.
FIG. 14B shows an example of a control channel element to resource element group (CCE-to-REG) mapping.
FIG. 15A shows an example of communications between a wireless device and a base station.
FIG. 15B shows example elements of a computing device that may be used to implement any of the various devices described herein
FIG. 16A, FIG. 16B, FIG. 16C, and FIG. 16D show examples of uplink and downlink signal transmission.
FIG. 17 shows an example of a radio resource control (RRC) connection reestablishment procedure.
FIG. 18 shows an example of a RRC connection resume procedure.
FIG. 19 shows an example of a measurement model of a wireless device.
FIG. 20 shows an example of a layer 3 (L3) handover of a wireless device.
FIG. 21 shows an example of a RRC message for a handover (HO).
FIG. 22 shows an example of RRC messages for random access channel (RACH) resource configuration for a HO procedure.
FIG. 23 shows an example of a conditional handover (CHO) procedure.
FIG. 24 shows an example of a RRC message for a CHO.
FIG. 25 shows an example of a connection recovery procedure with a CHO configuration.
FIG. 26 shows an example of a conditional primary secondary cell (PSCell) addition and/or change procedure.
FIG. 27 shows an example of a master cell group (MCG) failure information procedure.
FIG. 28 shows an example of layer 1/layer 2 (L1/L2) triggered mobility.
FIG. 29 shows an example of intra-distributed unit (DU) L1/L2 triggered mobility.
FIG. 30 shows an example of inter-DU L1/L2 triggered mobility.
FIGS. 31A and 31B show examples of timelines of PCell switching.
FIG. 32 shows an example of early timing advance (TA) acquisition for inter-DU L1/L2 triggered mobility.
FIG. 33 shows an example of a capability of a wireless device.
FIG. 34 shows an example of signaling between network nodes for early TA acquisition (ETA).
FIG. 35 shows an example of signaling between network nodes for ETA.
FIG. 36 shows an example of signaling between network nodes for ETA.
FIG. 37 shows an example of signaling between network nodes for ETA.
FIG. 38 shows an example of signaling between network nodes for ETA.
FIG. 39 shows an example of signaling between network nodes for ETA.
FIG. 40 shows an example of signaling between network nodes for ETA.

## DETAILED DESCRIPTION

The accompanying drawings and descriptions provide examples. It is to be understood that the examples shown in the drawings and/or described are non-exclusive, and that features shown and described may be practiced in other examples. Examples are provided for operation of wireless communication systems, which may be used in the technical field of multicarrier communication systems.

FIG. 1A shows an example communication network 100. The communication network 100 may comprise a mobile communication network). The communication network 100 may comprise, for example, a public land mobile network (PLMN) operated/managed/run by a network operator. The communication network 100 may comprise one or more of a core network (CN) 102, a radio access network (RAN) 104, and/or a wireless device 106. The communication network 100 may comprise, and/or a device within the communication network 100 may communicate with (e.g., via CN 102), one or more data networks (DN(s)) 108. The wireless device 106 may communicate with one or more DNs 108, such as public DNs (e.g., the Internet), private DNs, and/or intra-operator DNs. The wireless device 106 may communicate with the one or more DNs 108 via the RAN 104 and/or via the CN 102. The CN 102 may provide/configure the wireless device 106 with one or more interfaces to the one or more DNs 108. As part of the interface functionality, the CN 102 may set up end-to-end connections between the wireless device 106 and the one or more DNs 108, authenticate the wireless device 106, provide/configure charging functionality, etc.

The wireless device 106 may communicate with the RAN 104 via radio communications over an air interface. The RAN 104 may communicate with the CN 102 via various communications (e.g., wired communications and/or wireless communications). The wireless device 106 may establish a connection with the CN 102 via the RAN 104. The RAN 104 may provide/configure scheduling, radio resource management, and/or retransmission protocols, for example, as part of the radio communications. The communication direction from the RAN 104 to the wireless device 106 over/via the air interface may be referred to as the downlink and/or downlink communication direction. The communication direction from the wireless device 106 to the RAN 104 over/via the air interface may be referred to as the uplink and/or uplink communication direction. Downlink transmissions may be separated and/or distinguished from uplink transmissions, for example, based on at least one of: frequency division duplexing (FDD), time-division duplexing (TDD), any other duplexing schemes, and/or one or more combinations thereof.

As used throughout, the term "wireless device" may comprise one or more of: a mobile device, a fixed (e.g., non-mobile) device for which wireless communication is configured or usable, a computing device, a node, a device capable of wirelessly communicating, or any other device capable of sending and/or receiving signals. As non-limiting examples, a wireless device may comprise, for example: a telephone, a cellular phone, a Wi-Fi phone, a smartphone, a tablet, a computer, a laptop, a sensor, a meter, a wearable device, an Internet of Things (IoT) device, a hotspot, a cellular repeater, a vehicle road side unit (RSU), a relay node, an automobile, a wireless user device (e.g., user equipment (UE), a user terminal (UT), etc.), an access terminal (AT), a mobile station, a handset, a wireless transmit and receive unit (WTRU), a wireless communication device, and/or any combination thereof.

The RAN 104 may comprise one or more base stations (not shown). As used throughout, the term "base station" may comprise one or more of: a base station, a node, a Node B (NB), an evolved NodeB (eNB), a gNB, an ng-eNB, a relay node (e.g., an integrated access and backhaul (IAB) node), a donor node (e.g., a donor eNB, a donor gNB, etc.), an access point (e.g., a Wi-Fi access point), a transmission and reception point (TRP), a computing device, a device capable of wirelessly communicating, or any other device capable of sending and/or receiving signals. A base station may comprise one or more of each element listed above. For example, a base station may comprise one or more TRPs. As other non-limiting examples, a base station may comprise for example, one or more of: a Node B (e.g., associated with Universal Mobile Telecommunications System (UMTS) and/or third-generation (3G) standards), an Evolved Node B (eNB) (e.g., associated with Evolved-Universal Terrestrial Radio Access (E-UTRA) and/or fourth-generation (4G) standards), a remote radio head (RRH), a baseband processing unit coupled to one or more remote radio heads (RRHs), a repeater node or relay node used to extend the coverage area of a donor node, a Next Generation Evolved Node B (ng-eNB), a Generation Node B (gNB) (e.g., associated with NR and/or fifth-generation (5G) standards), an access point (AP) (e.g., associated with, for example, Wi-Fi or any other suitable wireless communication standard), any other generation base station, and/or any combination thereof. A base station may comprise one or more devices, such as at least one base station central device (e.g., a gNB Central Unit (gNB-CU)) and at least one base station distributed device (e.g., a gNB Distributed Unit (gNB-DU)).

A base station (e.g., in the RAN 104) may comprise one or more sets of antennas for communicating with the wireless device 106 wirelessly (e.g., via an over the air interface). One or more base stations may comprise sets (e.g., three sets or any other quantity of sets) of antennas to respectively control multiple cells or sectors (e.g., three cells, three sectors, any other quantity of cells, or any other quantity of sectors). The size of a cell may be determined by a range at which a receiver (e.g., a base station receiver) may successfully receive transmissions from a transmitter (e.g., a wireless device transmitter) operating in the cell. One or more cells of base stations (e.g., by alone or in combination with other cells) may provide/configure a radio coverage to the wireless device 106 over a wide geographic area to support wireless device mobility. A base station comprising three sectors (e.g., or n-sector, where n refers to any quantity n) may be referred to as a three-sector site (e.g., or an n-sector site) or a three-sector base station (e.g., an n-sector base station).

One or more base stations (e.g., in the RAN 104) may be implemented as a sectored site with more or less than three sectors. One or more base stations of the RAN 104 may be implemented as an access point, as a baseband processing device/unit coupled to several RRHs, and/or as a repeater or relay node used to extend the coverage area of a node (e.g., a donor node). A baseband processing device/unit coupled to RRHs may be part of a centralized or cloud RAN architecture, for example, where the baseband processing device/unit may be centralized in a pool of baseband processing devices/units or virtualized. A repeater node may amplify and send (e.g., transmit, retransmit, rebroadcast, etc.) a radio signal received from a donor node. A relay node may perform the substantially the same/similar functions as a repeater node. The relay node may decode the radio signal received from the donor node, for example, to remove noise before amplifying and sending the radio signal.

The RAN 104 may be deployed as a homogenous network of base stations (e.g., macrocell base stations) that have similar antenna patterns and/or similar high-level transmit powers. The RAN 104 may be deployed as a heterogeneous network of base stations (e.g., different base stations that have different antenna patterns). In heterogeneous networks, small cell base stations may be used to provide/configure small coverage areas, for example, coverage areas that overlap with comparatively larger coverage areas provided/configured by other base stations (e.g., macrocell base stations). The small coverage areas may be provided/configured in areas with high data traffic (or so-called "hotspots") or in areas with a weak macrocell coverage. Examples of small cell base stations may comprise, in order of decreasing coverage area, microcell base stations, picocell base stations, and femtocell base stations or home base stations.

Examples described herein may be used in a variety of types of communications. For example, communications may be in accordance with the Third-Generation Partnership Project (3GPP) (e.g., one or more network elements similar to those of the communication network 100), communications in accordance with Institute of Electrical and Electronics Engineers (IEEE), communications in accordance with International Telecommunication Union (ITU), communications in accordance with International Organization for Standardization (ISO), etc. The 3GPP has produced specifications for multiple generations of mobile networks: a 3G network known as UMTS, a 4G network known as Long-Term Evolution (LTE) and LTE Advanced (LTE-A), and a 5G network known as 5G System (5GS) and NR system. 3GPP may produce specifications for additional generations of communication networks (e.g., 6G and/or any other generation of communication network). Examples may be described with reference to one or more elements (e.g., the RAN) of a 3GPP 5G network, referred to as a next-generation RAN (NG-RAN), or any other communication network, such as a 3GPP network and/or a non-3GPP network. Examples described herein may be applicable to other communication networks, such as 3G and/or 4G networks, and communication networks that may not yet be finalized/specified (e.g., a 3GPP 6G network), satellite communication networks, and/or any other communication network. NG-RAN implements and updates 5G radio access technology referred to as NR and may be provisioned to implement 4G radio access technology and/or other radio access technologies, such as other 3GPP and/or non-3GPP radio access technologies.

FIG. 1B shows an example communication network 150. The communication network may comprise a mobile communication network. The communication network 150 may comprise, for example, a PLMN operated/managed/run by a network operator. The communication network 150 may comprise one or more of: a CN 152 (e.g., a 5G core network (5G-CN)), a RAN 154 (e.g., an NG-RAN), and/or wireless devices 156A and 156B (collectively wireless device(s) 156). The communication network 150 may comprise, and/or a device within the communication network 150 may communicate with (e.g., via CN 152), one or more data networks (DN(s)) 170. These components may be implemented and operate in substantially the same or similar manner as corresponding components described with respect to FIG. 1A.

The CN 152 (e.g., 5G-CN) may provide/configure the wireless device(s) 156 with one or more interfaces to one or more DNs 170, such as public DNs (e.g., the Internet), private DNs, and/or intra-operator DNs. As part of the interface functionality, the CN 152 (e.g., 5G-CN) may set up end-to-end connections between the wireless device(s) 156 and the one or more DNs, authenticate the wireless device(s) 156, and/or provide/configure charging functionality. The CN 152 (e.g., the 5G-CN) may be a service-based architecture, which may differ from other CNs (e.g., such as a 3GPP 4G CN). The architecture of nodes of the CN 152 (e.g., 5G-CN) may be defined as network functions that offer services via interfaces to other network functions. The network functions of the CN 152 (e.g., 5G CN) may be implemented in several ways, for example, as network elements on dedicated or shared hardware, as software instances running on dedicated or shared hardware, and/or as virtualized functions instantiated on a platform (e.g., a cloud-based platform).

The CN 152 (e.g., 5G-CN) may comprise an Access and Mobility Management Function (AMF) device 158A and/or a User Plane Function (UPF) device 158B, which may be separate components or one component AMF/UPF device 158. The UPF device 158B may serve as a gateway between a RAN 154 (e.g., NG-RAN) and the one or more DNs 170. The UPF device 158B may perform functions, such as: packet routing and forwarding, packet inspection and user plane policy rule enforcement, traffic usage reporting, uplink classification to support routing of traffic flows to the one or more DNs 170, quality of service (QoS) handling for the user plane (e.g., packet filtering, gating, uplink/downlink rate enforcement, and uplink traffic verification), downlink packet buffering, and/or downlink data notification triggering. The UPF device 158B may serve as an anchor point for intra-/inter-Radio Access Technology (RAT) mobility, an external protocol (or packet) data unit (PDU) session point of interconnect to the one or more DNs, and/or a branching point to support a multi-homed PDU session. The wireless device(s) 156 may be configured to receive services via a PDU session, which may be a logical connection between a wireless device and a DN.

The AMF device 158A may perform functions, such as: Non-Access Stratum (NAS) signaling termination, NAS signaling security, Access Stratum (AS) security control, inter-CN node signaling for mobility between access networks (e.g., 3GPP access networks and/or non-3GPP networks), idle mode wireless device reachability (e.g., idle mode UE reachability for control and execution of paging retransmission), registration area management, intra-system and inter-system mobility support, access authentication, access authorization including checking of roaming rights, mobility management control (e.g., subscription and policies), network slicing support, and/or session management function (SMF) selection. NAS may refer to the functionality operating between a CN and a wireless device, and AS may refer to the functionality operating between a wireless device and a RAN.

The CN 152 (e.g., 5G-CN) may comprise one or more additional network functions that may not be shown in FIG. 1B. The CN 152 (e.g., 5G-CN) may comprise one or more devices implementing at least one of: a Session Management Function (SMF), an NR Repository Function (NRF), a Policy Control Function (PCF), a Network Exposure Function (NEF), a Unified Data Management (UDM), an Application Function (AF), an Authentication Server Function (AUSF), and/or any other function.

The RAN 154 (e.g., NG-RAN) may communicate with the wireless device(s) 156 via radio communications (e.g., an over the air interface). The wireless device(s) 156 may communicate with the CN 152 via the RAN 154. The RAN 154 (e.g., NG-RAN) may comprise one or more first-type base stations (e.g., gNBs comprising a gNB 160A and a gNB 160B (collectively gNBs 160)) and/or one or more second-type base stations (e.g., ng eNBs comprising an ng-eNB 162A and an ng-eNB 162B (collectively ng eNBs 162)). The RAN 154 may comprise one or more of any quantity of types of base station. The gNBs 160 and ng eNBs 162 may be referred to as base stations. The base stations (e.g., the gNBs 160 and ng eNBs 162) may comprise one or more sets of antennas for communicating with the wireless device(s) 156 wirelessly (e.g., an over an air interface). One or more base stations (e.g., the gNBs 160 and/or the ng eNBs 162) may comprise multiple sets of antennas to respectively control multiple cells (or sectors). The cells of the base stations (e.g., the gNBs 160 and the ng-eNBs 162) may provide a radio coverage to the wireless device(s) 156 over a wide geographic area to support wireless device mobility.

The base stations (e.g., the gNBs 160 and/or the ng-eNBs 162) may be connected to the CN 152 (e.g., 5G CN) via a first interface (e.g., an NG interface) and to other base stations via a second interface (e.g., an Xn interface). The NG and Xn interfaces may be established using direct physical connections and/or indirect connections over an underlying transport network, such as an internet protocol (IP) transport network. The base stations (e.g., the gNBs 160 and/or the ng-eNBs 162) may communicate with the wireless device(s) 156 via a third interface (e.g., a Uu interface). A base station (e.g., the gNB 160A) may communicate with the wireless device 156A via a Uu interface. The NG, Xn, and Uu interfaces may be associated with a protocol stack. The protocol stacks associated with the interfaces may be used by the network elements shown in FIG. 1B to exchange data and signaling messages. The protocol stacks may comprise two planes: a user plane and a control plane. Any other quantity of planes may be used (e.g., in a protocol stack). The user plane may handle data of interest to a user. The control plane may handle signaling messages of interest to the network elements.

One or more base stations (e.g., the gNBs 160 and/or the ng-eNBs 162) may communicate with one or more AMF/UPF devices, such as the AMF/UPF 158, via one or more interfaces (e.g., NG interfaces). A base station (e.g., the gNB 160A) may be in communication with, and/or connected to, the UPF 158B of the AMF/UPF 158 via an NG-User plane (NG-U) interface. The NG-U interface may provide/perform delivery (e.g., non-guaranteed delivery) of user plane PDUs between a base station (e.g., the gNB 160A) and a UPF device (e.g., the UPF 158B). The base station (e.g., the gNB 160A) may be in communication with, and/or connected to, an AMF device (e.g., the AMF 158A) via an NG-Control plane (NG-C) interface. The NG-C interface may provide/perform, for example, NG interface management, wireless device context management (e.g., UE context management), wireless device mobility management (e.g., UE mobility management), transport of NAS messages, paging, PDU session management, configuration transfer, and/or warning message transmission.

A wireless device may access the base station, via an interface (e.g., Uu interface), for the user plane configuration and the control plane configuration. The base stations (e.g., gNBs 160) may provide user plane and control plane protocol terminations towards the wireless device(s) 156 via the Uu interface. A base station (e.g., the gNB 160A) may provide user plane and control plane protocol terminations toward the wireless device 156A over a Uu interface associated with a first protocol stack. A base station (e.g., the ng-eNBs 162) may provide Evolved UMTS Terrestrial Radio Access (E UTRA) user plane and control plane protocol terminations towards the wireless device(s) 156 via a Uu interface (e.g., where E UTRA may refer to the 3GPP 4G radio-access technology). A base station (e.g., the ng-eNB 162B) may provide E UTRA user plane and control plane protocol terminations towards the wireless device 156B via a Uu interface associated with a second protocol stack. The user plane and control plane protocol terminations may comprise, for example, NR user plane and control plane protocol terminations, 4G user plane and control plane protocol terminations, etc.

The CN 152 (e.g., 5G-CN) may be configured to handle one or more radio accesses (e.g., NR, 4G, and/or any other radio accesses). It may also be possible for an NR network/device (or any first network/device) to connect to a 4G core network/device (or any second network/device) in a non-standalone mode (e.g., non-standalone operation). In a non-standalone mode/operation, a 4G core network may be used to provide (or at least support) control-plane functionality (e.g., initial access, mobility, and/or paging). Although only one AMF/UPF 158 is shown in FIG. 1B, one or more base stations (e.g., one or more gNBs and/or one or more ng-eNB s) may be connected to multiple AMF/UPF nodes, for example, to provide redundancy and/or to load share across the multiple AMF/UPF nodes.

An interface (e.g., Uu, Xn, and/or NG interfaces) between network elements (e.g., the network elements shown in FIG. 1B) may be associated with a protocol stack that the network elements may use to exchange data and signaling messages. A protocol stack may comprise two planes: a user plane and a control plane. Any other quantity of planes may be used (e.g., in a protocol stack). The user plane may handle data associated with a user (e.g., data of interest to a user). The control plane may handle data associated with one or more network elements (e.g., signaling messages of interest to the network elements).

The communication network 100 in FIG. 1A and/or the communication network 150 in FIG. 1B may comprise any quantity/number and/or type of devices, such as, for example, computing devices, wireless devices, mobile devices, handsets, tablets, laptops, internet of things (IoT) devices, hotspots, cellular repeaters, computing devices, and/or, more generally, user equipment (e.g., UE). Although one or more of the above types of devices may be referenced herein (e.g., UE, wireless device, computing device, etc.), it should be understood that any device herein may comprise any one or more of the above types of devices or similar devices. The communication network, and any other network referenced herein, may comprise an LTE network, a 5G network, a satellite network, and/or any other network for wireless communications (e.g., any 3GPP network and/or any non-3GPP network). Apparatuses, systems, and/or methods described herein may generally be described as implemented on one or more devices (e.g., wireless device, base station, eNB, gNB, computing device, etc.), in one or more networks, but it will be understood that one or more features and steps may be implemented on any device and/or in any network.

FIG. 2A shows an example user plane configuration. The user plane configuration may comprise, for example, an NR user plane protocol stack. FIG. 2B shows an example control plane configuration. The control plane configuration may comprise, for example, an NR control plane protocol stack. One or more of the user plane configuration and/or the control plane configuration may use a Uu interface that may be between a wireless device 210 and a base station 220. The protocol stacks shown in FIG. 2A and FIG. 2B may be substantially the same or similar to those used for the Uu interface between, for example, the wireless device 156A and the base station 160A shown in FIG. 1B.

A user plane configuration (e.g., an NR user plane protocol stack) may comprise multiple layers (e.g., five layers or any other quantity of layers) implemented in the wireless device 210 and the base station 220 (e.g., as shown in FIG. 2A). At the bottom of the protocol stack, physical layers (PHYs) 211 and 221 may provide transport services to the higher layers of the protocol stack and may correspond to layer 1 of the Open Systems Interconnection (OSI) model. The protocol layers above PHY 211 may comprise a medium access control layer (MAC) 212, a radio link control layer (RLC) 213, a packet data convergence protocol layer (PDCP) 214, and/or a service data application protocol layer (SDAP) 215. The protocol layers above PHY 221 may comprise a medium access control layer (MAC) 222, a radio link control layer (RLC) 223, a packet data convergence protocol layer (PDCP) 224, and/or a service data application protocol layer (SDAP) 225. One or more of the four protocol layers above PHY 211 may correspond to layer 2, or the data link layer, of the OSI model. One or more of the four protocol layers above PHY 221 may correspond to layer 2, or the data link layer, of the OSI model.

FIG. 3 shows an example of protocol layers. The protocol layers may comprise, for example, protocol layers of the NR user plane protocol stack. One or more services may be provided between protocol layers. SDAPs (e.g., SDAPS 215 and 225 shown in FIG. 2A and FIG. 3) may perform Quality of Service (QoS) flow handling. A wireless device (e.g., the wireless devices 106, 156A, 156B, and 210) may receive services through/via a PDU session, which may be a logical connection between the wireless device and a DN. The PDU session may have one or more QoS flows 310. A UPF (e.g., the UPF 158B) of a CN may map IP packets to the one or more QoS flows of the PDU session, for example, based on one or more QoS requirements (e.g., in terms of delay, data rate, error rate, and/or any other quality/service requirement). The SDAPs 215 and 225 may perform mapping/de-mapping between the one or more QoS flows 310 and one or more radio bearers 320 (e.g., data radio bearers). The mapping/de-mapping between the one or more QoS flows 310 and the radio bearers 320 may be determined by the SDAP 225 of the base station 220. The SDAP 215 of the wireless device 210 may be informed of the mapping between the QoS flows 310 and the radio bearers 320 via reflective mapping and/or control signaling received from the base station 220. For reflective mapping, the SDAP 225 of the base station 220 may mark the downlink packets with a QoS flow indicator (QFI), which may be monitored/detected/identified/indicated/observed by the SDAP 215 of the wireless device 210 to determine the mapping/de-mapping between the one or more QoS flows 310 and the radio bearers 320.

PDCPs (e.g., the PDCPs 214 and 224 shown in FIG. 2A and FIG. 3) may perform header compression/decompression, for example, to reduce the amount of data that may need to be transmitted (e.g., sent) over the air interface, ciphering/deciphering to prevent unauthorized decoding of data transmitted (e.g., sent) over the air interface, and/or integrity protection (e.g., to ensure control messages originate from intended sources). The PDCPs 214 and 224 may perform retransmissions of undelivered packets, in-sequence delivery and reordering of packets, and/or removal of packets received in duplicate due to, for example, a handover (e.g., an intra-gNB handover). The PDCPs 214 and 224 may perform packet duplication, for example, to improve the likelihood of the packet being received. A receiver may receive the packet in duplicate and may remove any duplicate packets. Packet duplication may be useful for certain services, such as services that require high reliability.

The PDCP layers (e.g., PDCPs 214 and 224) may perform mapping/de-mapping between a split radio bearer and RLC channels (e.g., RLC channels 330) (e.g., in a dual connectivity scenario/configuration). Dual connectivity may refer to a technique that allows a wireless device to communicate with multiple cells (e.g., two cells) or, more generally, multiple cell groups comprising: a master cell group (MCG) and a secondary cell group (SCG). A split bearer may be configured and/or used, for example, if a single radio bearer (e.g., such as one of the radio bearers provided/configured by the PDCPs 214 and 224 as a service to the SDAPs 215 and 225) is handled by cell groups in dual connectivity. The PDCPs 214 and 224 may map/de-map between the split radio bearer and RLC channels 330 belonging to the cell groups.

RLC layers (e.g., RLCs 213 and 223) may perform segmentation, retransmission via Automatic Repeat Request (ARQ), and/or removal of duplicate data units received from MAC layers (e.g., MACs 212 and 222, respectively). The RLC layers (e.g., RLCs 213 and 223) may support multiple transmission modes (e.g., three transmission modes: transparent mode (TM); unacknowledged mode (UM); and acknowledged mode (AM)).The RLC layers may perform one or more of the noted functions, for example, based on the transmission mode an RLC layer is operating. The RLC configuration may be per logical channel. The RLC configuration may not depend on numerologies and/or Transmission Time Interval (TTI) durations (or other durations). The RLC layers (e.g., RLCs 213 and 223) may provide/configure RLC channels as a service to the PDCP layers (e.g., PDCPs 214 and 224, respectively), such as shown in FIG. 3.

The MAC layers (e.g., MACs 212 and 222) may perform multiplexing/demultiplexing of logical channels and/or mapping between logical channels and transport channels. The multiplexing/demultiplexing may comprise multiplexing/demultiplexing of data units/data portions, belonging to the one or more logical channels, into/from Transport Blocks (TBs) delivered to/from the PHY layers (e.g., PHYs 211 and 221, respectively). The MAC layer of a base station (e.g., MAC 222) may be configured to perform scheduling, scheduling information reporting, and/or priority handling between wireless devices via dynamic scheduling. Scheduling may be performed by a base station (e.g., the base station 220 at the MAC 222) for downlink/or and uplink. The MAC layers (e.g., MACs 212 and 222) may be configured to perform error correction(s) via Hybrid Automatic Repeat Request (HARQ) (e.g., one HARQ entity per carrier in case of Carrier Aggregation (CA)), priority handling between logical channels of the wireless device 210 via logical channel prioritization and/or padding. The MAC layers (e.g., MACs 212 and 222) may support one or more numerologies and/or transmission timings. Mapping restrictions in a logical channel prioritization may control which numerology and/or transmission timing a logical channel may use. The MAC layers (e.g., the MACs 212 and 222) may provide/configure logical channels 340 as a service to the RLC layers (e.g., the RLCs 213 and 223).

The PHY layers (e.g., PHYs 211 and 221) may perform mapping of transport channels to physical channels and/or digital and analog signal processing functions, for example, for sending and/or receiving information (e.g., via an over the air interface). The digital and/or analog signal processing functions may comprise, for example, coding/decoding and/or modulation/demodulation. The PHY layers (e.g., PHYs 211 and 221) may perform multi-antenna mapping. The PHY layers (e.g., the PHYs 211 and 221) may provide/configure one or more transport channels (e.g., transport channels 350) as a service to the MAC layers (e.g., the MACs 212 and 222, respectively).

FIG. 4A shows an example downlink data flow for a user plane configuration. The user plane configuration may comprise, for example, the NR user plane protocol stack shown in FIG. 2A. One or more TBs may be generated, for example, based on a data flow via a user plane protocol stack. As shown in FIG. 4A, a downlink data flow of three IP packets (n, n+1, and m) via the NR user plane protocol stack may generate two TBs (e.g., at the base station 220). An uplink data flow via the NR user plane protocol stack may be similar to the downlink data flow shown in FIG. 4A. The three IP packets (n, n+1, and m) may be determined from the two TBs, for example, based on the uplink data flow via an NR user plane protocol stack. A first quantity of packets (e.g., three or any other quantity) may be determined from a second quantity of TBs (e.g., two or another quantity).

The downlink data flow may begin, for example, if the SDAP 225 receives the three IP packets (or other quantity of IP packets) from one or more QoS flows and maps the three packets (or other quantity of packets) to radio bearers (e.g., radio bearers 402 and 404). The SDAP 225 may map the IP packets n and n+1 to a first radio bearer 402 and map the IP packet m to a second radio bearer 404. An SDAP header (labeled with "H" preceding each SDAP SDU shown in FIG. 4A) may be added to an IP packet to generate an SDAP PDU, which may be referred to as a PDCP SDU. The data unit transferred from/to a higher protocol layer may be referred to as a service data unit (SDU) of the lower protocol layer, and the data unit transferred to/from a lower protocol layer may be referred to as a protocol data unit (PDU) of the higher protocol layer. As shown in FIG. 4A, the data unit from the SDAP 225 may be an SDU of lower protocol layer PDCP 224 (e.g., PDCP SDU) and may be a PDU of the SDAP 225 (e.g., SDAP PDU).

Each protocol layer (e.g., protocol layers shown in FIG. 4A) or at least some protocol layers may: perform its own function(s) (e.g., one or more functions of each protocol layer described with respect to FIG. 3), add a corresponding header, and/or forward a respective output to the next lower layer (e.g., its respective lower layer). The PDCP 224 may perform an IP-header compression and/or ciphering. The PDCP 224 may forward its output (e.g., a PDCP PDU, which is an RLC SDU) to the RLC 223. The RLC 223 may optionally perform segmentation (e.g., as shown for IP packet m in FIG. 4A). The RLC 223 may forward its outputs (e.g., two RLC PDUs, which are two MAC SDUs, generated by adding respective subheaders to two SDU segments (SDU Segs)) to the MAC 222. The MAC 222 may multiplex a number of RLC PDUs (MAC SDUs). The MAC 222 may attach a MAC subheader to an RLC PDU (MAC SDU) to form a TB. The MAC subheaders may be distributed across the MAC PDU (e.g., in an NR configuration as shown in FIG. 4A). The MAC subheaders may be entirely located at the beginning of a MAC PDU (e.g., in an LTE configuration). The NR MAC PDU structure may reduce a processing time and/or associated latency, for example, if the MAC PDU subheaders are computed before assembling the full MAC PDU.

FIG. 4B shows an example format of a MAC subheader in a MAC PDU. A MAC PDU may comprise a MAC subheader (H) and a MAC SDU. Each of one or more MAC subheaders may comprise an SDU length field for indicating the length (e.g., in bytes) of the MAC SDU to which the MAC subheader corresponds; a logical channel identifier (LCID) field for identifying/indicating the logical channel from which the MAC SDU originated to aid in the demultiplexing process; a flag (F) for indicating the size of the SDU length field; and a reserved bit (R) field for future use.

One or more MAC control elements (CEs) may be added to, or inserted into, the MAC PDU by a MAC layer, such as MAC 223 or MAC 222. As shown in FIG. 4B, two MAC CEs may be inserted/added before two MAC PDUs. The MAC CEs may be inserted/added at the beginning of a MAC PDU for downlink transmissions (as shown in FIG. 4B). One or more MAC CEs may be inserted/added at the end of a MAC PDU for uplink transmissions. MAC CEs may be used for in band control signaling. Example MAC CEs may comprise scheduling-related MAC CEs, such as buffer status reports and power headroom reports; activation/deactivation MAC CEs (e.g., MAC CEs for activation/deactivation of PDCP duplication detection, channel state information (CSI) reporting, sounding reference signal (SRS) transmission, and prior configured components); discontinuous reception (DRX)-related MAC CEs; timing advance MAC CEs; and random access-related MAC CEs. A MAC CE may be preceded by a MAC subheader with a similar format as described for the MAC subheader for MAC SDUs and may be identified with a reserved value in the LCID field that indicates the type of control information included in the corresponding MAC CE.

FIG. 5A shows an example mapping for downlink channels. The mapping for uplink channels may comprise mapping between channels (e.g., logical channels, transport channels, and physical channels) for downlink. FIG. 5B shows an example mapping for uplink channels. The mapping for uplink channels may comprise mapping between channels (e.g., logical channels, transport channels, and physical channels) for uplink. Information may be passed through/via channels between the RLC, the MAC, and the PHY layers of a protocol stack (e.g., the NR protocol stack). A logical channel may be used between the RLC and the MAC layers. The logical channel may be classified/indicated as a control channel that may carry control and/or configuration information (e.g., in the NR control plane), or as a traffic channel that may carry data (e.g., in the NR user plane). A logical channel may be classified/indicated as a dedicated logical channel that may be dedicated to a specific wireless device, and/or as a common logical channel that may be used by more than one wireless device (e.g., a group of wireless device).

A logical channel may be defined by the type of information it carries. The set of logical channels (e.g., in an NR configuration) may comprise one or more channels described below. A paging control channel (PCCH) may comprise/carry one or more paging messages used to page a wireless device whose location is not known to the network on a cell level. A broadcast control channel (BCCH) may comprise/carry system information messages in the form of a master information block (MIB) and several system information blocks (SIBs). The system information messages may be used by wireless devices to obtain information about how a cell is configured and how to operate within the cell. A common control channel (CCCH) may comprise/carry control messages together with random access. A dedicated control channel (DCCH) may comprise/carry control messages to/from a specific wireless device to configure the wireless device with configuration information. A dedicated traffic channel (DTCH) may comprise/carry user data to/from a specific wireless device.

Transport channels may be used between the MAC and PHY layers. Transport channels may be defined by how the information they carry is sent/transmitted (e.g., via an over the air interface). The set of transport channels (e.g., that may be defined by an NR configuration or any other configuration) may comprise one or more of the following channels. A paging channel (PCH) may comprise/carry paging messages that originated from the PCCH. A broadcast channel (BCH) may comprise/carry the MIB from the BCCH. A downlink shared channel (DL-SCH) may comprise/carry downlink data and signaling messages, including the SIBs from the BCCH. An uplink shared channel (UL-SCH) may comprise/carry uplink data and signaling messages. A random access channel (RACH) may provide a wireless device with an access to the network without any prior scheduling.

The PHY layer may use physical channels to pass/transfer information between processing levels of the PHY layer. A physical channel may have an associated set of time-frequency resources for carrying the information of one or more transport channels. The PHY layer may generate control information to support the low-level operation of the PHY layer. The PHY layer may provide/transfer the control information to the lower levels of the PHY layer via physical control channels (e.g., referred to as L1/L2 control channels). The set of physical channels and physical control channels (e.g., that may be defined by an NR configuration or any other configuration) may comprise one or more of the following channels. A physical broadcast channel (PBCH) may comprise/carry the MIB from the BCH. A physical downlink shared channel (PDSCH) may comprise/carry downlink data and signaling messages from the DL-SCH, as well as paging messages from the PCH. A physical downlink control channel (PDCCH) may comprise/carry downlink control information (DCI), which may comprise downlink scheduling commands, uplink scheduling grants, and uplink power control commands. A physical uplink shared channel (PUSCH) may comprise/carry uplink data and signaling messages from the UL-SCH and in some instances uplink control information (UCI) as described below. A physical uplink control channel (PUCCH) may comprise/carry UCI, which may comprise HARQ acknowledgments, channel quality indicators (CQI), pre-coding matrix indicators (PMI), rank indicators (RI), and scheduling requests (SR). A physical random access channel (PRACH) may be used for random access.

The physical layer may generate physical signals to support the low-level operation of the physical layer, which may be similar to the physical control channels. As shown in FIG. 5A and FIG. 5B, the physical layer signals (e.g., that may be defined by an NR configuration or any other configuration) may comprise primary synchronization signals (PSS), secondary synchronization signals (SSS), channel state information reference signals (CSI-RS), demodulation reference signals (DM-RS), sounding reference signals (SRS), phase-tracking reference signals (PT RS), and/or any other signals.

One or more of the channels (e.g., logical channels, transport channels, physical channels, etc.) may be used to carry out functions associated with the control plan protocol stack (e.g., NR control plane protocol stack). FIG. 2B shows an example control plane configuration (e.g., an NR control plane protocol stack). As shown in FIG. 2B, the control plane configuration (e.g., the NR control plane protocol stack) may use substantially the same/similar one or more protocol layers (e.g., PHY 211 and 221, MAC 212 and 222, RLC 213 and 223, and PDCP 214 and 224) as the example user plane configuration (e.g., the NR user plane protocol stack). Similar four protocol layers may comprise the PHYs 211 and 221, the MACs 212 and 222, the RLCs 213 and 223, and the PDCPs 214 and 224. The control plane configuration (e.g., the NR control plane stack) may have radio resource controls (RRCs) 216 and 226 and NAS protocols 217 and 237 at the top of the control plane configuration (e.g., the NR control plane protocol stack), for example, instead of having the SDAPs 215 and 225. The control plane configuration may comprise an AMF 230 comprising the NAS protocol 237.

The NAS protocols 217 and 237 may provide control plane functionality between the wireless device 210 and the AMF 230 (e.g., the AMF 158A or any other AMF) and/or, more generally, between the wireless device 210 and a CN (e.g., the CN 152 or any other CN). The NAS protocols 217 and 237 may provide control plane functionality between the wireless device 210 and the AMF 230 via signaling messages, referred to as NAS messages. There may be no direct path between the wireless device 210 and the AMF 230 via which the NAS messages may be transported. The NAS messages may be transported using the AS of the Uu and NG interfaces. The NAS protocols 217 and 237 may provide control plane functionality, such as authentication, security, a connection setup, mobility management, session management, and/or any other functionality.

The RRCs 216 and 226 may provide/configure control plane functionality between the wireless device 210 and the base station 220 and/or, more generally, between the wireless device 210 and the RAN (e.g., the base station 220). The RRC layers 216 and 226 may provide/configure control plane functionality between the wireless device 210 and the base station 220 via signaling messages, which may be referred to as RRC messages. The RRC messages may be sent/transmitted between the wireless device 210 and the RAN (e.g., the base station 220) using signaling radio bearers and the same/similar PDCP, RLC, MAC, and PHY protocol layers. The MAC layer may multiplex control-plane and user-plane data into the same TB. The RRC layers 216 and 226 may provide/configure control plane functionality, such as one or more of the following functionalities: broadcast of system information related to AS and NAS; paging initiated by the CN or the RAN; establishment, maintenance and release of a RRC connection between the wireless device 210 and the RAN (e.g., the base station 220); security functions including key management; establishment, configuration, maintenance and release of signaling radio bearers and data radio bearers; mobility functions; QoS management functions; wireless device measurement reporting (e.g., the wireless device measurement reporting) and control of the reporting; detection of and recovery from radio link failure (RLF); and/or NAS message transfer. As part of establishing a RRC connection, RRC layers 216 and 226 may establish a RRC context, which may involve configuring parameters for communication between the wireless device 210 and the RAN (e.g., the base station 220).

FIG. 6 shows example RRC states and RRC state transitions. An RRC state of a wireless device may be changed to another RRC state (e.g., RRC state transitions of a wireless device). The wireless device may be substantially the same or similar to the wireless device 106, 210, or any other wireless device. A wireless device may be in at least one of a plurality of states, such as three RRC states comprising RRC connected 602 (e.g., RRC_CONNECTED), RRC idle 606 (e.g., RRC IDLE), and RRC inactive 604 (e.g., RRC_INACTIVE). The RRC inactive 604 may be RRC connected but inactive.

An RRC connection may be established for the wireless device. For example, this may be during a RRC connected state. During the RRC connected state (e.g., during the RRC connected 602), the wireless device may have an established RRC context and may have at least one RRC connection with a base station. The base station may be similar to one of the one or more base stations (e.g., one or more base stations of the RAN 104 shown in FIG. 1A, one of the gNBs 160 or ng-eNBs 162 shown in FIG. 1B, the base station 220 shown in FIG. 2A and FIG. 2B, or any other base stations). The base station with which the wireless device is connected (e.g., has established a RRC connection) may have the RRC context for the wireless device. The RRC context, which may be referred to as a wireless device context (e.g., the UE context), may comprise parameters for communication between the wireless device and the base station. These parameters may comprise, for example, one or more of: AS contexts; radio link configuration parameters; bearer configuration information (e.g., relating to a data radio bearer, a signaling radio bearer, a logical channel, a QoS flow, and/or a PDU session); security information; and/or layer configuration information (e.g., PHY, MAC, RLC, PDCP, and/or SDAP layer configuration information). During the RRC connected state (e.g., the RRC connected 602), mobility of the wireless device may be managed/controlled by an RAN (e.g., the RAN 104 or the NG RAN 154). The wireless device may measure received signal levels (e.g., reference signal levels, reference signal received power, reference signal received quality, received signal strength indicator, etc.) based on one or more signals sent from a serving cell and neighboring cells. The wireless device may report these measurements to a serving base station (e.g., the base station currently serving the wireless device). The serving base station of the wireless device may request a handover to a cell of one of the neighboring base stations, for example, based on the reported measurements. The RRC state may transition from the RRC connected state (e.g., RRC connected 602) to a RRC idle state (e.g., the RRC idle 606) via a connection release procedure 608. The RRC state may transition from the RRC connected state (e.g., RRC connected 602) to the RRC inactive state (e.g., RRC inactive 604) via a connection inactivation procedure 610.

An RRC context may not be established for the wireless device. For example, this may be during the RRC idle state. During the RRC idle state (e.g., the RRC idle 606), a RRC context may not be established for the wireless device. During the RRC idle state (e.g., the RRC idle 606), the wireless device may not have a RRC connection with the base station. During the RRC idle state (e.g., the RRC idle 606), the wireless device may be in a sleep state for the majority of the time (e.g., to conserve battery power). The wireless device may wake up periodically (e.g., once in every discontinuous reception (DRX) cycle) to monitor for paging messages (e.g., paging messages set from the RAN). Mobility of the wireless device may be managed by the wireless device via a procedure of a cell reselection. The RRC state may transition from the RRC idle state (e.g., the RRC idle 606) to the RRC connected state (e.g., the RRC connected 602) via a connection establishment procedure 612, which may involve a random access procedure.

A previously established RRC context may be maintained for the wireless device. For example, this may be during the RRC inactive state. During the RRC inactive state (e.g., the RRC inactive 604), the RRC context previously established may be maintained in the wireless device and the base station. The maintenance of the RRC context may enable/allow a fast transition to the RRC connected state (e.g., the RRC connected 602) with reduced signaling overhead as compared to the transition from the RRC idle state (e.g., the RRC idle 606) to the RRC connected state (e.g., the RRC connected 602). During the RRC inactive state (e.g., the RRC inactive 604), the wireless device may be in a sleep state and mobility of the wireless device may be managed/controlled by the wireless device via a cell reselection. The RRC state may transition from the RRC inactive state (e.g., the RRC inactive 604) to the RRC connected state (e.g., the RRC connected 602) via a connection resume procedure 614. The RRC state may transition from the RRC inactive state (e.g., the RRC inactive 604) to the RRC idle state (e.g., the RRC idle 606) via a connection release procedure 616 that may be the same as or similar to connection release procedure 608.

An RRC state may be associated with a mobility management mechanism. During the RRC idle state (e.g., RRC idle 606) and the RRC inactive state (e.g., the RRC inactive 604), mobility may be managed/controlled by the wireless device via a cell reselection. The purpose of mobility management during the RRC idle state (e.g., the RRC idle 606) or during the RRC inactive state (e.g., the RRC inactive 604) may be to enable/allow the network to be able to notify the wireless device of an event via a paging message without having to broadcast the paging message over the entire mobile communications network. The mobility management mechanism used during the RRC idle state (e.g., the RRC idle 606) or during the RRC idle state (e.g., the RRC inactive 604) may enable/allow the network to track the wireless device on a cell-group level, for example, so that the paging message may be broadcast over the cells of the cell group that the wireless device currently resides within (e.g., instead of sending the paging message over the entire mobile communication network). The mobility management mechanisms for the RRC idle state (e.g., the RRC idle 606) and the RRC inactive state (e.g., the RRC inactive 604) may track the wireless device on a cell-group level. The mobility management mechanisms may do the tracking, for example, using different granularities of grouping. There may be a plurality of levels of cell-grouping granularity (e.g., three levels of cell-grouping granularity: individual cells; cells within a RAN area identified by a RAN area identifier (RAI); and cells within a group of RAN areas, referred to as a tracking area and identified by a tracking area identifier (TAI)).

Tracking areas may be used to track the wireless device (e.g., tracking the location of the wireless device at the CN level). The CN (e.g., the CN 102, the 5G CN 152, or any other CN) may send to the wireless device a list of TAIs associated with a wireless device registration area (e.g., a UE registration area). A wireless device may perform a registration update with the CN to allow the CN to update the location of the wireless device and provide the wireless device with a new the UE registration area, for example, if the wireless device moves (e.g., via a cell reselection) to a cell associated with a TAI that may not be included in the list of TAIs associated with the UE registration area.

RAN areas may be used to track the wireless device (e.g., the location of the wireless device at the RAN level). For a wireless device in a RRC inactive state (e.g., the RRC inactive 604), the wireless device may be assigned/provided/configured with a RAN notification area. A RAN notification area may comprise one or more cell identities (e.g., a list of RAIs and/or a list of TAIs). A base station may belong to one or more RAN notification areas. A cell may belong to one or more RAN notification areas. A wireless device may perform a notification area update with the RAN to update the RAN notification area of the wireless device, for example, if the wireless device moves (e.g., via a cell reselection) to a cell not included in the RAN notification area assigned/provided/configured to the wireless device.

A base station storing a RRC context for a wireless device or a last serving base station of the wireless device may be referred to as an anchor base station. An anchor base station may maintain a RRC context for the wireless device at least during a period of time that the wireless device stays in a RAN notification area of the anchor base station and/or during a period of time that the wireless device stays in a RRC inactive state (e.g., RRC inactive 604).

A base station (e.g., gNBs 160 in FIG. 1B or any other base station) may be split in two parts: a central unit (e.g., a base station central unit, such as a gNB CU) and one or more distributed units (e.g., a base station distributed unit, such as a gNB DU). A base station central unit (CU) may be coupled to one or more base station distributed units (DUs) using an F1 interface (e.g., an F1 interface defined in an NR configuration). The base station CU may comprise the RRC, the PDCP, and the SDAP layers. A base station distributed unit (DU) may comprise the RLC, the MAC, and the PHY layers.

The physical signals and physical channels (e.g., described with respect to FIG. 5A and FIG. 5B) may be mapped onto one or more symbols (e.g., orthogonal frequency divisional multiplexing (OFDM) symbols in an NR configuration or any other symbols). OFDM is a multicarrier communication scheme that sends/transmits data over F orthogonal subcarriers (or tones). The data may be mapped to a series of complex symbols (e.g., M-quadrature amplitude modulation (M-QAM) symbols or M-phase shift keying (M PSK) symbols or any other modulated symbols), referred to as source symbols, and divided into F parallel symbol streams, for example, before transmission of the data. The F parallel symbol streams may be treated as if they are in the frequency domain. The F parallel symbols may be used as inputs to an Inverse Fast Fourier Transform (IFFT) block that transforms them into the time domain. The IFFT block may take in F source symbols at a time, one from each of the F parallel symbol streams. The IFFT block may use each source symbol to modulate the amplitude and phase of one of F sinusoidal basis functions that correspond to the F orthogonal subcarriers. The output of the IFFT block may be F time-domain samples that represent the summation of the F orthogonal subcarriers. The F time-domain samples may form a single OFDM symbol. An OFDM symbol provided/output by the IFFT block may be sent/transmitted over the air interface on a carrier frequency, for example, after one or more processes (e.g., addition of a cyclic prefix) and up-conversion. The F parallel symbol streams may be mixed, for example, using a Fast Fourier Transform (FFT) block before being processed by the IFFT block. This operation may produce Discrete Fourier Transform (DFT)-precoded OFDM symbols and may be used by one or more wireless devices in the uplink to reduce the peak to average power ratio (PAPR). Inverse processing may be performed on the OFDM symbol at a receiver using an FFT block to recover the data mapped to the source symbols.

FIG. 7 shows an example configuration of a frame. The frame may comprise, for example, an NR radio frame into which OFDM symbols may be grouped. A frame (e.g., an NR radio frame) may be identified/indicated by a system frame number (SFN) or any other value. The SFN may repeat with a period of 1024 frames. One NR frame may be 10 milliseconds (ms) in duration and may comprise 10 subframes that are 1 ms in duration. A subframe may be divided into one or more slots (e.g., depending on numerologies and/or different subcarrier spacings). Each of the one or more slots may comprise, for example, 14 OFDM symbols per slot. Any quantity of symbols, slots, or duration may be used for any time interval.

The duration of a slot may depend on the numerology used for the OFDM symbols of the slot. A flexible numerology may be supported, for example, to accommodate different deployments (e.g., cells with carrier frequencies below 1 GHz up to cells with carrier frequencies in the mm-wave range). A flexible numerology may be supported, for example, in an NR configuration or any other radio configurations. A numerology may be defined in terms of subcarrier spacing and/or cyclic prefix duration. Subcarrier spacings may be scaled up by powers of two from a baseline subcarrier spacing of 15 kHz. Cyclic prefix durations may be scaled down by powers of two from a baseline cyclic prefix duration of 4.7 μs, for example, for a numerology in an NR configuration or any other radio configurations. Numerologies may be defined with the following subcarrier spacing/cyclic prefix duration combinations: 15 kHz/4.7 μs; 30 kHz/2.3 μs; 60 kHz/1.2 μs; 120 kHz/0.59 μs; 240 kHz/0.29 μs, and/or any other subcarrier spacing/cyclic prefix duration combinations.

A slot may have a fixed number/quantity of OFDM symbols (e.g., 14 OFDM symbols). A numerology with a higher subcarrier spacing may have a shorter slot duration and more slots per subframe. Examples of numerology-dependent slot duration and slots-per-subframe transmission structure are shown in FIG. 7 (the numerology with a subcarrier spacing of 240 kHz is not shown in FIG. 7). A subframe (e.g., in an NR configuration) may be used as a numerology-independent time reference. A slot may be used as the unit upon which uplink and downlink transmissions are scheduled. Scheduling (e.g., in an NR configuration) may be decoupled from the slot duration. Scheduling may start at any OFDM symbol. Scheduling may last for as many symbols as needed for a transmission, for example, to support low latency. These partial slot transmissions may be referred to as mini-slot or sub-slot transmissions.

FIG. 8 shows an example resource configuration of one or more carriers. The resource configuration of may comprise a slot in the time and frequency domain for an NR carrier or any other carrier. The slot may comprise resource elements (REs) and resource blocks (RBs). A resource element (RE) may be the smallest physical resource (e.g., in an NR configuration). An RE may span one OFDM symbol in the time domain by one subcarrier in the frequency domain, such as shown in FIG. 8. An RB may span twelve consecutive REs in the frequency domain, such as shown in FIG. 8. A carrier (e.g., an NR carrier) may be limited to a width of a certain quantity of RBs and/or subcarriers (e.g., 275 RBs or 275×12 = 3300 subcarriers). Such limitation(s), if used, may limit the carrier (e.g., NR carrier) frequency based on subcarrier spacing (e.g., carrier frequency of 50, 100, 200, and 400 MHz for subcarrier spacings of 15, 30, 60, and 120 kHz, respectively). A 400 MHz bandwidth may be set based on a 400 MHz per carrier bandwidth limit. Any other bandwidth may be set based on a per carrier bandwidth limit.

A single numerology may be used across the entire bandwidth of a carrier (e.g., an NR such as shown in FIG. 8). In other example configurations, multiple numerologies may be supported on the same carrier. NR and/or other access technologies may support wide carrier bandwidths (e.g., up to 400 MHz for a subcarrier spacing of 120 kHz). Not all wireless devices may be able to receive the full carrier bandwidth (e.g., due to hardware limitations and/or different wireless device capabilities). Receiving and/or utilizing the full carrier bandwidth may be prohibitive, for example, in terms of wireless device power consumption. A wireless device may adapt the size of the receive bandwidth of the wireless device, for example, based on the amount of traffic the wireless device is scheduled to receive (e.g., to reduce power consumption and/or for other purposes). Such an adaptation may be referred to as bandwidth adaptation.

Configuration of one or more bandwidth parts (BWPs) may support one or more wireless devices not capable of receiving the full carrier bandwidth. BWPs may support bandwidth adaptation, for example, for such wireless devices not capable of receiving the full carrier bandwidth. A BWP (e.g., a BWP of an NR configuration) may be defined by a subset of contiguous RBs on a carrier. A wireless device may be configured (e.g., via a RRC layer) with one or more downlink BWPs per serving cell and one or more uplink BWPs per serving cell (e.g., up to four downlink BWPs per serving cell and up to four uplink BWPs per serving cell). One or more of the configured BWPs for a serving cell may be active, for example, at a given time. The one or more BWPs may be referred to as active BWPs of the serving cell. A serving cell may have one or more first active BWPs in the uplink carrier and one or more second active BWPs in the secondary uplink carrier, for example, if the serving cell is configured with a secondary uplink carrier.

A downlink BWP from a set of configured downlink BWPs may be linked with an uplink BWP from a set of configured uplink BWPs (e.g., for unpaired spectra). A downlink BWP and an uplink BWP may be linked, for example, if a downlink BWP index of the downlink BWP and an uplink BWP index of the uplink BWP are the same. A wireless device may expect that the center frequency for a downlink BWP is the same as the center frequency for an uplink BWP (e.g., for unpaired spectra).

A base station may configure a wireless device with one or more control resource sets (CORESETs) for at least one search space. The base station may configure the wireless device with one or more CORESETS, for example, for a downlink BWP in a set of configured downlink BWPs on a primary cell (PCell) or on a secondary cell (SCell). A search space may comprise a set of locations in the time and frequency domains where the wireless device may monitor/find/detect/identify control information. The search space may be a wireless device-specific search space (e.g., a UE-specific search space) or a common search space (e.g., potentially usable by a plurality of wireless devices or a group of wireless user devices). A base station may configure a group of wireless devices with a common search space, on a PCell or on a primary secondary cell (PSCell), in an active downlink BWP.

A base station may configure a wireless device with one or more resource sets for one or more PUCCH transmissions, for example, for an uplink BWP in a set of configured uplink BWPs. A wireless device may receive downlink receptions (e.g., PDCCH or PDSCH) in a downlink BWP, for example, according to a configured numerology (e.g., a configured subcarrier spacing and/or a configured cyclic prefix duration) for the downlink BWP. The wireless device may send/transmit uplink transmissions (e.g., PUCCH or PUSCH) in an uplink BWP, for example, according to a configured numerology (e.g., a configured subcarrier spacing and/or a configured cyclic prefix length for the uplink BWP).

One or more BWP indicator fields may be provided/comprised in Downlink Control Information (DCI). A value of a BWP indicator field may indicate which BWP in a set of configured BWPs is an active downlink BWP for one or more downlink receptions. The value of the one or more BWP indicator fields may indicate an active uplink BWP for one or more uplink transmissions.

A base station may semi-statically configure a wireless device with a default downlink BWP within a set of configured downlink BWPs associated with a PCell. A default downlink BWP may be an initial active downlink BWP, for example, if the base station does not provide/configure a default downlink BWP to/for the wireless device. The wireless device may determine which BWP is the initial active downlink BWP, for example, based on a CORESET configuration obtained using the PBCH.

A base station may configure a wireless device with a BWP inactivity timer value for a PCell. The wireless device may start or restart a BWP inactivity timer at any appropriate time. The wireless device may start or restart the BWP inactivity timer, for example, if one or more conditions are satisfied. The one or more conditions may comprise at least one of: the wireless device detects DCI indicating an active downlink BWP other than a default downlink BWP for a paired spectra operation; the wireless device detects DCI indicating an active downlink BWP other than a default downlink BWP for an unpaired spectra operation; and/or the wireless device detects DCI indicating an active uplink BWP other than a default uplink BWP for an unpaired spectra operation. The wireless device may start/run the BWP inactivity timer toward expiration (e.g., increment from zero to the BWP inactivity timer value, or decrement from the BWP inactivity timer value to zero), for example, if the wireless device does not detect DCI during a time interval (e.g., 1 ms or 0.5 ms). The wireless device may switch from the active downlink BWP to the default downlink BWP, for example, if the BWP inactivity timer expires.

A base station may semi-statically configure a wireless device with one or more BWPs. A wireless device may switch an active BWP from a first BWP to a second BWP, for example, based on (e.g., after or in response to) receiving DCI indicating the second BWP as an active BWP. A wireless device may switch an active BWP from a first BWP to a second BWP, for example, based on (e.g., after or in response to) an expiry of the BWP inactivity timer (e.g., if the second BWP is the default BWP).

A downlink BWP switching may refer to switching an active downlink BWP from a first downlink BWP to a second downlink BWP (e.g., the second downlink BWP is activated and the first downlink BWP is deactivated). An uplink BWP switching may refer to switching an active uplink BWP from a first uplink BWP to a second uplink BWP (e.g., the second uplink BWP is activated and the first uplink BWP is deactivated). Downlink and uplink BWP switching may be performed independently (e.g., in paired spectrum/spectra). Downlink and uplink BWP switching may be performed simultaneously (e.g., in unpaired spectrum/spectra). Switching between configured BWPs may occur, for example, based on RRC signaling, DCI signaling, expiration of a BWP inactivity timer, and/or an initiation of random access.

FIG. 9 shows an example of configured BWPs. Bandwidth adaptation using multiple BWPs (e.g., three configured BWPs for an NR carrier) may be available. A wireless device configured with multiple BWPs (e.g., the three BWPs) may switch from one BWP to another BWP at a switching point. The BWPs may comprise: a BWP 902 having a bandwidth of 40 MHz and a subcarrier spacing of 15 kHz; a BWP 904 having a bandwidth of 10 MHz and a subcarrier spacing of 15 kHz; and a BWP 906 having a bandwidth of 20 MHz and a subcarrier spacing of 60 kHz. The BWP 902 may be an initial active BWP, and the BWP 904 may be a default BWP. The wireless device may switch between BWPs at switching points. The wireless device may switch from the BWP 902 to the BWP 904 at a switching point 908. The switching at the switching point 908 may occur for any suitable reasons. The switching at a switching point 908 may occur, for example, based on (e.g., after or in response to) an expiry of a BWP inactivity timer (e.g., indicating switching to the default BWP). The switching at the switching point 908 may occur, for example, based on (e.g., after or in response to) receiving DCI indicating BWP 904 as the active BWP. The wireless device may switch at a switching point 910 from an active BWP 904 to the BWP 906, for example, after or in response receiving DCI indicating BWP 906 as a new active BWP. The wireless device may switch at a switching point 912 from an active BWP 906 to the BWP 904, for example, a based on (e.g., after or in response to) an expiry of a BWP inactivity timer. The wireless device may switch at the switching point 912 from an active BWP 906 to the BWP 904, for example, after or in response receiving DCI indicating BWP 904 as a new active BWP. The wireless device may switch at a switching point 914 from an active BWP 904 to the BWP 902, for example, after or in response receiving DCI indicating the BWP 902 as a new active BWP.

Wireless device procedures for switching BWPs on a secondary cell may be the same/similar as those on a primary cell, for example, if the wireless device is configured for a secondary cell with a default downlink BWP in a set of configured downlink BWPs and a timer value. The wireless device may use the timer value and the default downlink BWP for the secondary cell in the same/similar manner as the wireless device uses the timer value and/or default BWPs for a primary cell. The timer value (e.g., the BWP inactivity timer) may be configured per cell (e.g., for one or more BWPs), for example, via RRC signaling or any other signaling. One or more active BWPs may switch to another BWP, for example, based on an expiration of the BWP inactivity timer.

Two or more carriers may be aggregated and data may be simultaneously sent/transmitted to/from the same wireless device using carrier aggregation (CA) (e.g., to increase data rates). The aggregated carriers in CA may be referred to as component carriers (CCs). There may be a number/quantity of serving cells for the wireless device (e.g., one serving cell for a CC), for example, if CA is configured/used. The CCs may have multiple configurations in the frequency domain.

FIG. 10A shows example CA configurations based on CCs. As shown in FIG. 10A, three types of CA configurations may comprise an intraband (contiguous) configuration 1002, an intraband (non-contiguous) configuration 1004, and/or an interband configuration 1006. In the intraband (contiguous) configuration 1002, two CCs may be aggregated in the same frequency band (frequency band A) and may be located directly adjacent to each other within the frequency band. In the intraband (non-contiguous) configuration 1004, two CCs may be aggregated in the same frequency band (frequency band A) but may be separated from each other in the frequency band by a gap. In the interband configuration 1006, two CCs may be located in different frequency bands (e.g., frequency band A and frequency band B, respectively).

A network may set the maximum quantity of CCs that can be aggregated (e.g., up to 32 CCs may be aggregated in NR, or any other quantity may be aggregated in other systems). The aggregated CCs may have the same or different bandwidths, subcarrier spacing, and/or duplexing schemes (TDD, FDD, or any other duplexing schemes). A serving cell for a wireless device using CA may have a downlink CC. One or more uplink CCs may be optionally configured for a serving cell (e.g., for FDD). The ability to aggregate more downlink carriers than uplink carriers may be useful, for example, if the wireless device has more data traffic in the downlink than in the uplink.

One of the aggregated cells for a wireless device may be referred to as a primary cell (PCell), for example, if a CA is configured. The PCell may be the serving cell that the wireless initially connects to or access to, for example, during or at a RRC connection establishment, a RRC connection reestablishment, and/or a handover. The PCell may provide/configure the wireless device with NAS mobility information and the security input. Wireless device may have different PCells. For the downlink, the carrier corresponding to the PCell may be referred to as the downlink primary CC (DL PCC). For the uplink, the carrier corresponding to the PCell may be referred to as the uplink primary CC (UL PCC). The other aggregated cells (e.g., associated with CCs other than the DL PCC and UL PCC) for the wireless device may be referred to as secondary cells (SCells). The SCells may be configured, for example, after the PCell is configured for the wireless device. An SCell may be configured via a RRC connection reconfiguration procedure. For the downlink, the carrier corresponding to an SCell may be referred to as a downlink secondary CC (DL SCC). For the uplink, the carrier corresponding to the SCell may be referred to as the uplink secondary CC (UL SCC).

Configured SCells for a wireless device may be activated or deactivated, for example, based on traffic and channel conditions. Deactivation of an SCell may cause the wireless device to stop PDCCH and PDSCH reception on the SCell and PUSCH, SRS, and CQI transmissions on the SCell. Configured SCells may be activated or deactivated, for example, using a MAC CE (e.g., the MAC CE described with respect to FIG. 4B). A MAC CE may use a bitmap (e.g., one bit per SCell) to indicate which SCells (e.g., in a subset of configured SCells) for the wireless device are activated or deactivated. Configured SCells may be deactivated, for example, based on (e.g., after or in response to) an expiration of an SCell deactivation timer (e.g., one SCell deactivation timer per SCell may be configured).

DCI may comprise control information, such as scheduling assignments and scheduling grants, for a cell. DCI may be sent/transmitted via the cell corresponding to the scheduling assignments and/or scheduling grants, which may be referred to as a self-scheduling. DCI comprising control information for a cell may be sent/transmitted via another cell, which may be referred to as a cross-carrier scheduling. Uplink control information (UCI) may comprise control information, such as HARQ acknowledgments and channel state feedback (e.g., CQI, PMI, and/or RI) for aggregated cells. UCI may be sent/transmitted via an uplink control channel (e.g., a PUCCH) of the PCell or a certain SCell (e.g., an SCell configured with PUCCH). For a larger number of aggregated downlink CCs, the PUCCH of the PCell may become overloaded. Cells may be divided into multiple PUCCH groups.

FIG. 10B shows example group of cells. Aggregated cells may be configured into one or more PUCCH groups (e.g., as shown in FIG. 10B). One or more cell groups or one or more uplink control channel groups (e.g., a PUCCH group 1010 and a PUCCH group 1050) may comprise one or more downlink CCs, respectively. The PUCCH group 1010 may comprise one or more downlink CCs, for example, three downlink CCs: a PCell 1011 (e.g., a DL PCC), an SCell 1012 (e.g., a DL SCC), and an SCell 1013 (e.g., a DL SCC). The PUCCH group 1050 may comprise one or more downlink CCs, for example, three downlink CCs: a PUCCH SCell (or PSCell) 1051 (e.g., a DL SCC), an SCell 1052 (e.g., a DL SCC), and an SCell 1053 (e.g., a DL SCC). One or more uplink CCs of the PUCCH group 1010 may be configured as a PCell 1021 (e.g., a UL PCC), an SCell 1022 (e.g., a UL SCC), and an SCell 1023 (e.g., a UL SCC). One or more uplink CCs of the PUCCH group 1050 may be configured as a PUCCH SCell (or PSCell) 1061 (e.g., a UL SCC), an SCell 1062 (e.g., a UL SCC), and an SCell 1063 (e.g., a UL SCC). UCI related to the downlink CCs of the PUCCH group 1010, shown as UCI 1031, UCI 1032, and UCI 1033, may be sent/transmitted via the uplink of the PCell 1021 (e.g., via the PUCCH of the PCell 1021). UCI related to the downlink CCs of the PUCCH group 1050, shown as UCI 1071, UCI 1072, and UCI 1073, may be sent/transmitted via the uplink of the PUCCH SCell (or PSCell) 1061 (e.g., via the PUCCH of the PUCCH SCell 1061). A single uplink PCell may be configured to send/transmit UCI relating to the six downlink CCs, for example, if the aggregated cells shown in FIG. 10B are not divided into the PUCCH group 1010 and the PUCCH group 1050. The PCell 1021 may become overloaded, for example, if the UCIs 1031, 1032, 1033, 1071, 1072, and 1073 are sent/transmitted via the PCell 1021. By dividing transmissions of UCI between the PCell 1021 and the PUCCH SCell (or PSCell) 1061, overloading may be prevented and/or reduced.

A PCell may comprise a downlink carrier (e.g., the PCell 1011) and an uplink carrier (e.g., the PCell 1021). An SCell may comprise only a downlink carrier. A cell, comprising a downlink carrier and optionally an uplink carrier, may be assigned with a physical cell ID and a cell index. The physical cell ID or the cell index may indicate/identify a downlink carrier and/or an uplink carrier of the cell, for example, depending on the context in which the physical cell ID is used. A physical cell ID may be determined, for example, using a synchronization signal (e.g., PSS and/or SSS) sent/transmitted via a downlink component carrier. A cell index may be determined, for example, using one or more RRC messages. A physical cell ID may be referred to as a carrier ID, and a cell index may be referred to as a carrier index. A first physical cell ID for a first downlink carrier may refer to the first physical cell ID for a cell comprising the first downlink carrier. Substantially the same/similar concept may apply to, for example, a carrier activation. Activation of a first carrier may refer to activation of a cell comprising the first carrier.

A multi-carrier nature of a PHY layer may be exposed/indicated to a MAC layer (e.g., in a CA configuration). A HARQ entity may operate on a serving cell. A transport block may be generated per assignment/grant per serving cell. A transport block and potential HARQ retransmissions of the transport block may be mapped to a serving cell.

For the downlink, a base station may send/transmit (e.g., unicast, multicast, and/or broadcast), to one or more wireless devices, one or more reference signals (RSs) (e.g., PSS, SSS, CSI-RS, DM-RS, and/or PT-RS). For the uplink, the one or more wireless devices may send/transmit one or more RSs to the base station (e.g., DM-RS, PT-RS, and/or SRS). The PSS and the SSS may be sent/transmitted by the base station and used by the one or more wireless devices to synchronize the one or more wireless devices with the base station. A synchronization signal (SS) / physical broadcast channel (PBCH) block may comprise the PSS, the SSS, and the PBCH. The base station may periodically send/transmit a burst of SS/PBCH blocks, which may be referred to as SSBs.

FIG. 11A shows an example mapping of one or more SS/PBCH blocks. A burst of SS/PBCH blocks may comprise one or more SS/PBCH blocks (e.g., 4 SS/PBCH blocks, as shown in FIG. 11A). Bursts may be sent/transmitted periodically (e.g., every 2 frames, 20 ms, or any other durations). A burst may be restricted to a half-frame (e.g., a first half-frame having a duration of 5 ms). Such parameters (e.g., the number of SS/PBCH blocks per burst, periodicity of bursts, position of the burst within the frame) may be configured, for example, based on at least one of: a carrier frequency of a cell in which the SS/PBCH block is sent/transmitted; a numerology or subcarrier spacing of the cell; a configuration by the network (e.g., using RRC signaling); and/or any other suitable factor(s). A wireless device may assume a subcarrier spacing for the SS/PBCH block based on the carrier frequency being monitored, for example, unless the radio network configured the wireless device to assume a different subcarrier spacing.

The SS/PBCH block may span one or more OFDM symbols in the time domain (e.g., 4 OFDM symbols, as shown in FIG. 11A or any other quantity/number of symbols) and may span one or more subcarriers in the frequency domain (e.g., 240 contiguous subcarriers or any other quantity/number of subcarriers). The PSS, the SSS, and the PBCH may have a common center frequency. The PSS may be sent/transmitted first and may span, for example, 1 OFDM symbol and 127 subcarriers. The SSS may be sent/transmitted after the PSS (e.g., two symbols later) and may span 1 OFDM symbol and 127 subcarriers. The PBCH may be sent/transmitted after the PSS (e.g., across the next 3 OFDM symbols) and may span 240 subcarriers (e.g., in the second and fourth OFDM symbols as shown in FIG. 11A) and/or may span fewer than 240 subcarriers (e.g., in the third OFDM symbols as shown in FIG. 11A).

The location of the SS/PBCH block in the time and frequency domains may not be known to the wireless device (e.g., if the wireless device is searching for the cell). The wireless device may monitor a carrier for the PSS, for example, to find and select the cell. The wireless device may monitor a frequency location within the carrier. The wireless device may search for the PSS at a different frequency location within the carrier, for example, if the PSS is not found after a certain duration (e.g., 20 ms). The wireless device may search for the PSS at a different frequency location within the carrier, for example, as indicated by a synchronization raster. The wireless device may determine the locations of the SSS and the PBCH, respectively, for example, based on a known structure of the SS/PBCH block if the PSS is found at a location in the time and frequency domains. The SS/PBCH block may be a cell-defining SS block (CD-SSB). A primary cell may be associated with a CD-SSB. The CD-SSB may be located on a synchronization raster. A cell selection/search and/or reselection may be based on the CD-SSB.

The SS/PBCH block may be used by the wireless device to determine one or more parameters of the cell. The wireless device may determine a physical cell identifier (PCI) of the cell, for example, based on the sequences of the PSS and the SSS, respectively. The wireless device may determine a location of a frame boundary of the cell, for example, based on the location of the SS/PBCH block. The SS/PBCH block may indicate that it has been sent/transmitted in accordance with a transmission pattern. An SS/PBCH block in the transmission pattern may be a known distance from the frame boundary (e.g., a predefined distance for a RAN configuration among one or more networks, one or more base stations, and one or more wireless devices).

The PBCH may use a QPSK modulation and/or forward error correction (FEC). The FEC may use polar coding. One or more symbols spanned by the PBCH may comprise/carry one or more DM-RSs for demodulation of the PBCH. The PBCH may comprise an indication of a current system frame number (SFN) of the cell and/or a SS/PBCH block timing index. These parameters may facilitate time synchronization of the wireless device to the base station. The PBCH may comprise a MIB used to send/transmit to the wireless device one or more parameters. The MIB may be used by the wireless device to locate remaining minimum system information (RMSI) associated with the cell. The RMSI may comprise a System Information Block Type 1 (SIB1). The SIB1 may comprise information for the wireless device to access the cell. The wireless device may use one or more parameters of the MIB to monitor a PDCCH, which may be used to schedule a PDSCH. The PDSCH may comprise the SIB1. The SIB1 may be decoded using parameters provided/comprised in the MIB. The PBCH may indicate an absence of SIB1.The wireless device may be pointed to a frequency, for example, based on the PBCH indicating the absence of SIB 1. The wireless device may search for an SS/PBCH block at the frequency to which the wireless device is pointed.

The wireless device may assume that one or more SS/PBCH blocks sent/transmitted with a same SS/PBCH block index are quasi co-located (QCLed) (e.g., having substantially the same/similar Doppler spread, Doppler shift, average gain, average delay, and/or spatial Rx parameters). The wireless device may not assume QCL for SS/PBCH block transmissions having different SS/PBCH block indices. SS/PBCH blocks (e.g., those within a half-frame) may be sent/transmitted in spatial directions (e.g., using different beams that span a coverage area of the cell). A first SS/PBCH block may be sent/transmitted in a first spatial direction using a first beam, a second SS/PBCH block may be sent/transmitted in a second spatial direction using a second beam, a third SS/PBCH block may be sent/transmitted in a third spatial direction using a third beam, a fourth SS/PBCH block may be sent/transmitted in a fourth spatial direction using a fourth beam, etc.

A base station may send/transmit a plurality of SS/PBCH blocks, for example, within a frequency span of a carrier. A first PCI of a first SS/PBCH block of the plurality of SS/PBCH blocks may be different from a second PCI of a second SS/PBCH block of the plurality of SS/PBCH blocks. The PCIs of SS/PBCH blocks sent/transmitted in different frequency locations may be different or substantially the same.

The CSI-RS may be sent/transmitted by the base station and used by the wireless device to acquire/obtain/determine channel state information (CSI). The base station may configure the wireless device with one or more CSI-RSs for channel estimation or any other suitable purpose. The base station may configure a wireless device with one or more of the same/similar CSI-RSs. The wireless device may measure the one or more CSI-RSs. The wireless device may estimate a downlink channel state and/or generate a CSI report, for example, based on the measuring of the one or more downlink CSI-RSs. The wireless device may send/transmit the CSI report to the base station (e.g., based on periodic CSI reporting, semi-persistent CSI reporting, and/or aperiodic CSI reporting). The base station may use feedback provided by the wireless device (e.g., the estimated downlink channel state) to perform a link adaptation.

The base station may semi-statically configure the wireless device with one or more CSI-RS resource sets. A CSI-RS resource may be associated with a location in the time and frequency domains and a periodicity. The base station may selectively activate and/or deactivate a CSI-RS resource. The base station may indicate to the wireless device that a CSI-RS resource in the CSI-RS resource set is activated and/or deactivated.

The base station may configure the wireless device to report CSI measurements. The base station may configure the wireless device to provide CSI reports periodically, aperiodically, or semi-persistently. For periodic CSI reporting, the wireless device may be configured with a timing and/or periodicity of a plurality of CSI reports. For aperiodic CSI reporting, the base station may request a CSI report. The base station may command the wireless device to measure a configured CSI-RS resource and provide a CSI report relating to the measurement(s). For semi-persistent CSI reporting, the base station may configure the wireless device to send/transmit periodically, and selectively activate or deactivate the periodic reporting (e.g., via one or more activation/deactivation MAC CEs and/or one or more DCIs). The base station may configure the wireless device with a CSI-RS resource set and CSI reports, for example, using RRC signaling.

The CSI-RS configuration may comprise one or more parameters indicating, for example, up to 32 antenna ports (or any other quantity of antenna ports). The wireless device may be configured to use/employ the same OFDM symbols for a downlink CSI-RS and a CORESET, for example, if the downlink CSI-RS and CORESET are spatially QCLed and resource elements associated with the downlink CSI-RS are outside of the physical resource blocks (PRBs) configured for the CORESET. The wireless device may be configured to use/employ the same OFDM symbols for a downlink CSI-RS and SS/PBCH blocks, for example, if the downlink CSI-RS and SS/PBCH blocks are spatially QCLed and resource elements associated with the downlink CSI-RS are outside of PRBs configured for the SS/PBCH blocks.

Downlink DM-RSs may be sent/transmitted by a base station and received/used by a wireless device for a channel estimation. The downlink DM-RSs may be used for coherent demodulation of one or more downlink physical channels (e.g., PDSCH). A network (e.g., an NR network) may support one or more variable and/or configurable DM-RS patterns for data demodulation. At least one downlink DM-RS configuration may support a front-loaded DM-RS pattern. A front-loaded DM-RS may be mapped over one or more OFDM symbols (e.g., one or two adjacent OFDM symbols). Abase station may semi-statically configure the wireless device with a number/quantity (e.g., a maximum number/quantity) of front-loaded DM-RS symbols for a PDSCH. A DM-RS configuration may support one or more DM-RS ports. A DM-RS configuration may support up to eight orthogonal downlink DM-RS ports per wireless device (e.g., for single user-MIMO).A DM-RS configuration may support up to 4 orthogonal downlink DM-RS ports per wireless device (e.g., for multiuser-MIMO). A radio network may support (e.g., at least for CP-OFDM) a common DM-RS structure for downlink and uplink. A DM-RS location, a DM-RS pattern, and/or a scrambling sequence may be the same or different. The base station may send/transmit a downlink DM-RS and a corresponding PDSCH, for example, using the same precoding matrix. The wireless device may use the one or more downlink DM-RSs for coherent demodulation/channel estimation of the PDSCH.

A transmitter (e.g., a transmitter of a base station) may use a precoder matrices for a part of a transmission bandwidth. The transmitter may use a first precoder matrix for a first bandwidth and a second precoder matrix for a second bandwidth. The first precoder matrix and the second precoder matrix may be different, for example, based on the first bandwidth being different from the second bandwidth. The wireless device may assume that a same precoding matrix is used across a set of PRBs. The set of PRBs may be determined/indicated/identified/denoted as a precoding resource block group (PRG).

A PDSCH may comprise one or more layers. The wireless device may assume that at least one symbol with DM-RS is present on a layer of the one or more layers of the PDSCH. A higher layer may configure one or more DM-RSs for a PDSCH (e.g., up to 3 DMRSs for the PDSCH). Downlink PT-RS may be sent/transmitted by a base station and used by a wireless device, for example, for a phase-noise compensation. Whether a downlink PT-RS is present or not may depend on a RRC configuration. The presence and/or the pattern of the downlink PT-RS may be configured on a wireless device-specific basis, for example, using a combination of RRC signaling and/or an association with one or more parameters used/employed for other purposes (e.g., modulation and coding scheme (MCS)), which may be indicated by DCI.A dynamic presence of a downlink PT-RS, if configured, may be associated with one or more DCI parameters comprising at least MCS. A network (e.g., an NR network) may support a plurality of PT-RS densities defined in the time and/or frequency domains. A frequency domain density (if configured/present) may be associated with at least one configuration of a scheduled bandwidth. The wireless device may assume a same precoding for a DM-RS port and a PT-RS port. The quantity/number of PT-RS ports may be fewer than the quantity/number of DM-RS ports in a scheduled resource. Downlink PT-RS may be configured/allocated/confined in the scheduled time/frequency duration for the wireless device. Downlink PT-RS may be sent/transmitted via symbols, for example, to facilitate a phase tracking at the receiver.

The wireless device may send/transmit an uplink DM-RS to a base station, for example, for a channel estimation. The base station may use the uplink DM-RS for coherent demodulation of one or more uplink physical channels. The wireless device may send/transmit an uplink DM-RS with a PUSCH and/or a PUCCH. The uplink DM-RS may span a range of frequencies that is similar to a range of frequencies associated with the corresponding physical channel. The base station may configure the wireless device with one or more uplink DM-RS configurations. At least one DM-RS configuration may support a front-loaded DM-RS pattern. The front-loaded DM-RS may be mapped over one or more OFDM symbols (e.g., one or two adjacent OFDM symbols). One or more uplink DM-RSs may be configured to send/transmit at one or more symbols of a PUSCH and/or a PUCCH. The base station may semi-statically configure the wireless device with a number/quantity (e.g., the maximum number/quantity) of front-loaded DM-RS symbols for the PUSCH and/or the PUCCH, which the wireless device may use to schedule a single-symbol DM-RS and/or a double-symbol DM-RS. A network (e.g., an NR network) may support (e.g., for cyclic prefix orthogonal frequency division multiplexing (CP-OFDM)) a common DM-RS structure for downlink and uplink. A DM-RS location, a DM-RS pattern, and/or a scrambling sequence for the DM-RS may be substantially the same or different.

A PUSCH may comprise one or more layers. A wireless device may send/transmit at least one symbol with DM-RS present on a layer of the one or more layers of the PUSCH. A higher layer may configure one or more DM-RSs (e.g., up to three DMRSs) for the PUSCH. Uplink PT-RS (which may be used by a base station for a phase tracking and/or a phase-noise compensation) may or may not be present, for example, depending on a RRC configuration of the wireless device. The presence and/or the pattern of an uplink PT-RS may be configured on a wireless device-specific basis (e.g., a UE-specific basis), for example, by a combination of RRC signaling and/or one or more parameters configured/employed for other purposes (e.g., MCS), which may be indicated by DCI. A dynamic presence of an uplink PT-RS, if configured, may be associated with one or more DCI parameters comprising at least MCS. A radio network may support a plurality of uplink PT-RS densities defined in time/frequency domain. A frequency domain density (if configured/present) may be associated with at least one configuration of a scheduled bandwidth. The wireless device may assume a same precoding for a DM-RS port and a PT-RS port. A quantity/number of PT-RS ports may be less than a quantity/number of DM-RS ports in a scheduled resource. An uplink PT-RS may be configured/allocated/confined in the scheduled time/frequency duration for the wireless device.

One or more SRSs may be sent/transmitted by a wireless device to a base station, for example, for a channel state estimation to support uplink channel dependent scheduling and/or a link adaptation. SRS sent/transmitted by the wireless device may enable/allow a base station to estimate an uplink channel state at one or more frequencies. A scheduler at the base station may use/employ the estimated uplink channel state to assign one or more resource blocks for an uplink PUSCH transmission for the wireless device. The base station may semi-statically configure the wireless device with one or more SRS resource sets. For an SRS resource set, the base station may configure the wireless device with one or more SRS resources. An SRS resource set applicability may be configured, for example, by a higher layer (e.g., RRC) parameter. An SRS resource in a SRS resource set of the one or more SRS resource sets (e.g., with the same/similar time domain behavior, periodic, aperiodic, and/or the like) may be sent/transmitted at a time instant (e.g., simultaneously), for example, if a higher layer parameter indicates beam management. The wireless device may send/transmit one or more SRS resources in SRS resource sets. A network (e.g., an NR network) may support aperiodic, periodic, and/or semi-persistent SRS transmissions. The wireless device may send/transmit SRS resources, for example, based on one or more trigger types. The one or more trigger types may comprise higher layer signaling (e.g., RRC) and/or one or more DCI formats. At least one DCI format may be used/employed for the wireless device to select at least one of one or more configured SRS resource sets. An SRS trigger type 0 may refer to an SRS triggered based on higher layer signaling. An SRS trigger type 1 may refer to an SRS triggered based on one or more DCI formats. The wireless device may be configured to send/transmit an SRS, for example, after a transmission of a PUSCH and a corresponding uplink DM-RS if a PUSCH and an SRS are sent/transmitted in a same slot. A base station may semi-statically configure a wireless device with one or more SRS configuration parameters indicating at least one of following: a SRS resource configuration identifier; a number of SRS ports; time domain behavior of an SRS resource configuration (e.g., an indication of periodic, semi-persistent, or aperiodic SRS); slot, mini-slot, and/or subframe level periodicity; an offset for a periodic and/or an aperiodic SRS resource; a number of OFDM symbols in an SRS resource; a starting OFDM symbol of an SRS resource; an SRS bandwidth; a frequency hopping bandwidth; a cyclic shift; and/or an SRS sequence ID.

An antenna port may be determined/defined such that the channel over which a symbol on the antenna port is conveyed can be inferred from the channel over which another symbol on the same antenna port is conveyed. The receiver may infer/determine the channel (e.g., fading gain, multipath delay, and/or the like) for conveying a second symbol on an antenna port, from the channel for conveying a first symbol on the antenna port, for example, if the first symbol and the second symbol are sent/transmitted on the same antenna port. A first antenna port and a second antenna port may be referred to as quasi co-located (QCLed), for example, if one or more large-scale properties of the channel over which a first symbol on the first antenna port is conveyed may be inferred from the channel over which a second symbol on a second antenna port is conveyed. The one or more large-scale properties may comprise at least one of: a delay spread; a Doppler spread; a Doppler shift; an average gain; an average delay; and/or spatial Receiving (Rx) parameters.

Channels that use beamforming may require beam management. Beam management may comprise a beam measurement, a beam selection, and/or a beam indication. A beam may be associated with one or more reference signals. A beam may be identified by one or more beamformed reference signals. The wireless device may perform a downlink beam measurement, for example, based on one or more downlink reference signals (e.g., a CSI-RS) and generate a beam measurement report. The wireless device may perform the downlink beam measurement procedure, for example, after a RRC connection is set up with a base station.

FIG. 11B shows an example mapping of one or more CSI-RSs. The CSI-RSs may be mapped in the time and frequency domains. Each rectangular block shown in FIG. 11B may correspond to a resource block (RB) within a bandwidth of a cell. A base station may send/transmit one or more RRC messages comprising CSI-RS resource configuration parameters indicating one or more CSI-RSs. One or more of parameters may be configured by higher layer signaling (e.g., RRC and/or MAC signaling) for a CSI-RS resource configuration. The one or more of the parameters may comprise at least one of: a CSI-RS resource configuration identity, a number of CSI-RS ports, a CSI-RS configuration (e.g., symbol and resource element (RE) locations in a subframe), a CSI-RS subframe configuration (e.g., a subframe location, an offset, and periodicity in a radio frame), a CSI-RS power parameter, a CSI-RS sequence parameter, a code division multiplexing (CDM) type parameter, a frequency density, a transmission comb, quasi co-location (QCL) parameters (e.g., QCL-scramblingidentity, crs-portscount, mbsfn-subframeconfiglist, csi-rs-configZPid, qcl-csi-rs-configNZPid), and/or other radio resource parameters.

One or more beams may be configured for a wireless device in a wireless device-specific configuration. Three beams are shown in FIG. 11B (beam #1, beam #2, and beam #3), but more or fewer beams may be configured. Beam #1 may be allocated with CSI-RS 1101 that may be sent/transmitted in one or more subcarriers in an RB of a first symbol. Beam #2 may be allocated with CSI-RS 1102 that may be sent/transmitted in one or more subcarriers in an RB of a second symbol. Beam #3 may be allocated with CSI-RS 1103 that may be sent/transmitted in one or more subcarriers in an RB of a third symbol. A base station may use other subcarriers in the same RB (e.g., those that are not used to send/transmit CSI-RS 1101) to transmit another CSI-RS associated with a beam for another wireless device, for example, by using frequency division multiplexing (FDM). Beams used for a wireless device may be configured such that beams for the wireless device use symbols different from symbols used by beams of other wireless devices, for example, by using time domain multiplexing (TDM). A wireless device may be served with beams in orthogonal symbols (e.g., no overlapping symbols), for example, by using the TDM.

CSI-RSs (e.g., CSI-RSs 1101, 1102, 1103) may be sent/transmitted by the base station and used by the wireless device for one or more measurements. The wireless device may measure an RSRP of configured CSI-RS resources. The base station may configure the wireless device with a reporting configuration, and the wireless device may report the RSRP measurements to a network (e.g., via one or more base stations) based on the reporting configuration. The base station may determine, based on the reported measurement results, one or more transmission configuration indication (TCI) states comprising a number of reference signals. The base station may indicate one or more TCI states to the wireless device (e.g., via RRC signaling, a MAC CE, and/or DCI). The wireless device may receive a downlink transmission with an Rx beam determined based on the one or more TCI states. The wireless device may or may not have a capability of beam correspondence. The wireless device may determine a spatial domain filter of a transmit (Tx) beam, for example, based on a spatial domain filter of the corresponding Rx beam, if the wireless device has the capability of beam correspondence. The wireless device may perform an uplink beam selection procedure to determine the spatial domain filter of the Tx beam, for example, if the wireless device does not have the capability of beam correspondence. The wireless device may perform the uplink beam selection procedure, for example, based on one or more sounding reference signal (SRS) resources configured to the wireless device by the base station. The base station may select and indicate uplink beams for the wireless device, for example, based on measurements of the one or more SRS resources sent/transmitted by the wireless device.

A wireless device may determine/assess (e.g., measure) a channel quality of one or more beam pair links, for example, in a beam management procedure. A beam pair link may comprise a Tx beam of a base station and an Rx beam of the wireless device. The Tx beam of the base station may send/transmit a downlink signal, and the Rx beam of the wireless device may receive the downlink signal. The wireless device may send/transmit a beam measurement report, for example, based on the assessment/determination. The beam measurement report may indicate one or more beam pair quality parameters comprising at least one of: one or more beam identifications (e.g., a beam index, a reference signal index, or the like), an RSRP, a precoding matrix indicator (PMI), a channel quality indicator (CQI), and/or a rank indicator (RI).

FIG. 12A shows examples of downlink beam management procedures. One or more downlink beam management procedures (e.g., downlink beam management procedures P1, P2, and P3) may be performed. Procedure P1 may enable a measurement (e.g., a wireless device measurement) on Tx beams of a TRP (or multiple TRPs) (e.g., to support a selection of one or more base station Tx beams and/or wireless device Rx beams). The Tx beams of a base station and the Rx beams of a wireless device are shown as ovals in the top row of P1 and bottom row of P1, respectively. Beamforming (e.g., at a TRP) may comprise a Tx beam sweep for a set of beams (e.g., the beam sweeps shown, in the top rows of P1 and P2, as ovals rotated in a counter-clockwise direction indicated by the dashed arrows). Beamforming (e.g., at a wireless device) may comprise an Rx beam sweep for a set of beams (e.g., the beam sweeps shown, in the bottom rows of P1 and P3, as ovals rotated in a clockwise direction indicated by the dashed arrows). Procedure P2 may be used to enable a measurement (e.g., a wireless device measurement) on Tx beams of a TRP (shown, in the top row of P2, as ovals rotated in a counter-clockwise direction indicated by the dashed arrow). The wireless device and/or the base station may perform procedure P2, for example, using a smaller set of beams than the set of beams used in procedure P1, or using narrower beams than the beams used in procedure P1. Procedure P2 may be referred to as a beam refinement. The wireless device may perform procedure P3 for an Rx beam determination, for example, by using the same Tx beam(s) of the base station and sweeping Rx beam(s) of the wireless device.

FIG. 12B shows examples of uplink beam management procedures. One or more uplink beam management procedures (e.g., uplink beam management procedures U1, U2, and U3) may be performed. Procedure U1 may be used to enable a base station to perform a measurement on Tx beams of a wireless device (e.g., to support a selection of one or more Tx beams of the wireless device and/or Rx beams of the base station). The Tx beams of the wireless device and the Rx beams of the base station are shown as ovals in the top row of U1 and bottom row of U1, respectively). Beamforming (e.g., at the wireless device) may comprise one or more beam sweeps, for example, a Tx beam sweep from a set of beams (shown, in the bottom rows of U1 and U3, as ovals rotated in a clockwise direction indicated by the dashed arrows). Beamforming (e.g., at the base station) may comprise one or more beam sweeps, for example, an Rx beam sweep from a set of beams (shown, in the top rows of U1 and U2, as ovals rotated in a counter-clockwise direction indicated by the dashed arrows). Procedure U2 may be used to enable the base station to adjust its Rx beam, for example, if the wireless device (e.g., UE) uses a fixed Tx beam. The wireless device and/or the base station may perform procedure U2, for example, using a smaller set of beams than the set of beams used in procedure P1, or using narrower beams than the beams used in procedure P1. Procedure U2 may be referred to as a beam refinement. The wireless device may perform procedure U3 to adjust its Tx beam, for example, if the base station uses a fixed Rx beam.

A wireless device may initiate/start/perform a beam failure recovery (BFR) procedure, for example, based on detecting a beam failure. The wireless device may send/transmit a BFR request (e.g., a preamble, UCI, an SR, a MAC CE, and/or the like), for example, based on the initiating the BFR procedure. The wireless device may detect the beam failure, for example, based on a determination that a quality of beam pair link(s) of an associated control channel is unsatisfactory (e.g., having an error rate higher than an error rate threshold, a received signal power lower than a received signal power threshold, an expiration of a timer, and/or the like).

The wireless device may measure a quality of a beam pair link, for example, using one or more reference signals (RSs) comprising one or more SS/PBCH blocks, one or more CSI-RS resources, and/or one or more DM-RSs. A quality of the beam pair link may be based on one or more of a block error rate (BLER), an RSRP value, a signal to interference plus noise ratio (SINR) value, an RSRQ value, and/or a CSI value measured on RS resources. The base station may indicate that an RS resource is QCLed with one or more DM-RSs of a channel (e.g., a control channel, a shared data channel, and/or the like). The RS resource and the one or more DM-RSs of the channel may be QCLed, for example, if the channel characteristics (e.g., Doppler shift, Doppler spread, an average delay, delay spread, a spatial Rx parameter, fading, and/or the like) from a transmission via the RS resource to the wireless device are similar or the same as the channel characteristics from a transmission via the channel to the wireless device.

A network (e.g., an NR network comprising a gNB and/or an ng-eNB) and/or the wireless device may initiate/start/perform a random access procedure. A wireless device in a RRC idle (e.g., a RRC IDLE) state and/or a RRC inactive (e.g., a RRC_INACTIVE) state may initiate/perform the random access procedure to request a connection setup to a network. The wireless device may initiate/start/perform the random access procedure from a RRC connected (e.g., a RRC_CONNECTED) state. The wireless device may initiate/start/perform the random access procedure to request uplink resources (e.g., for uplink transmission of an SR if there is no PUCCH resource available) and/or acquire/obtain/determine an uplink timing (e.g., if an uplink synchronization status is non-synchronized). The wireless device may initiate/start/perform the random access procedure to request one or more system information blocks (SIBs) (e.g., other system information blocks, such as SIB2, SIB3, and/or the like). The wireless device may initiate/start/perform the random access procedure for a beam failure recovery request. A network may initiate/start/perform a random access procedure, for example, for a handover and/or for establishing time alignment for an SCell addition.

FIG. 13A shows an example four-step random access procedure. The four-step random access procedure may comprise a four-step contention-based random access procedure. A base station may send/transmit a configuration message 1310 to a wireless device, for example, before initiating the random access procedure. The four-step random access procedure may comprise transmissions of four messages comprising: a first message (e.g., Msg 1 1311), a second message (e.g., Msg 2 1312), a third message (e.g., Msg 3 1313), and a fourth message (e.g., Msg 4 1314). The first message (e.g., Msg 1 1311) may comprise a preamble (or a random access preamble). The first message (e.g., Msg 1 1311) may be referred to as a preamble. The second message (e.g., Msg 2 1312) may comprise as a random access response (RAR). The second message (e.g., Msg 2 1312) may be referred to as an RAR.

The configuration message 1310 may be sent/transmitted, for example, using one or more RRC messages. The one or more RRC messages may indicate one or more random access channel (RACH) parameters to the wireless device. The one or more RACH parameters may comprise at least one of: general parameters for one or more random access procedures (e.g., RACH-configGeneral); cell-specific parameters (e.g., RACH-ConfigCommon); and/or dedicated parameters (e.g., RACH-configDedicated). The base station may send/transmit (e.g., broadcast or multicast) the one or more RRC messages to one or more wireless devices. The one or more RRC messages may be wireless device-specific. The one or more RRC messages that are wireless device-specific may be, for example, dedicated RRC messages sent/transmitted to a wireless device in a RRC connected (e.g., a RRC_CONNECTED) state and/or in a RRC inactive (e.g., a RRC_INACTIVE) state. The wireless devices may determine, based on the one or more RACH parameters, a time-frequency resource and/or an uplink transmit power for transmission of the first message (e.g., Msg 1 1311) and/or the third message (e.g., Msg 3 1313). The wireless device may determine a reception timing and a downlink channel for receiving the second message (e.g., Msg 2 1312) and the fourth message (e.g., Msg 4 1314), for example, based on the one or more RACH parameters.

The one or more RACH parameters provided/configured/comprised in the configuration message 1310 may indicate one or more Physical RACH (PRACH) occasions available for transmission of the first message (e.g., Msg 1 1311). The one or more PRACH occasions may be predefined (e.g., by a network comprising one or more base stations). The one or more RACH parameters may indicate one or more available sets of one or more PRACH occasions (e.g., prach-ConfigIndex). The one or more RACH parameters may indicate an association between (a) one or more PRACH occasions and (b) one or more reference signals. The one or more RACH parameters may indicate an association between (a) one or more preambles and (b) one or more reference signals. The one or more reference signals may be SS/PBCH blocks and/or CSI-RSs. The one or more RACH parameters may indicate a quantity/number of SS/PBCH blocks mapped to a PRACH occasion and/or a quantity/number of preambles mapped to a SS/PBCH blocks.

The one or more RACH parameters provided/configured/comprised in the configuration message 1310 may be used to determine an uplink transmit power of first message (e.g., Msg 1 1311) and/or third message (e.g., Msg 3 1313). The one or more RACH parameters may indicate a reference power for a preamble transmission (e.g., a received target power and/or an initial power of the preamble transmission). There may be one or more power offsets indicated by the one or more RACH parameters. The one or more RACH parameters may indicate: a power ramping step; a power offset between SSB and CSI-RS; a power offset between transmissions of the first message (e.g., Msg 1 1311) and the third message (e.g., Msg 3 1313); and/or a power offset value between preamble groups. The one or more RACH parameters may indicate one or more thresholds, for example, based on which the wireless device may determine at least one reference signal (e.g., an SSB and/or CSI-RS) and/or an uplink carrier (e.g., a normal uplink (NUL) carrier and/or a supplemental uplink (SUL) carrier).

The first message (e.g., Msg 1 1311) may comprise one or more preamble transmissions (e.g., a preamble transmission and one or more preamble retransmissions). An RRC message may be used to configure one or more preamble groups (e.g., group A and/or group B). A preamble group may comprise one or more preambles. The wireless device may determine the preamble group, for example, based on a pathloss measurement and/or a size of the third message (e.g., Msg 3 1313). The wireless device may measure an RSRP of one or more reference signals (e.g., SSBs and/or CSI-RSs) and determine at least one reference signal having an RSRP above an RSRP threshold (e.g., rsrp-ThresholdSSB and/or rsrp-ThresholdCSI-RS). The wireless device may select at least one preamble associated with the one or more reference signals and/or a selected preamble group, for example, if the association between the one or more preambles and the at least one reference signal is configured by an RRC message.

The wireless device may determine the preamble, for example, based on the one or more RACH parameters provided/configured/comprised in the configuration message 1310. The wireless device may determine the preamble, for example, based on a pathloss measurement, an RSRP measurement, and/or a size of the third message (e.g., Msg 3 1313). The one or more RACH parameters may indicate: a preamble format; a maximum quantity/number of preamble transmissions; and/or one or more thresholds for determining one or more preamble groups (e.g., group A and group B). A base station may use the one or more RACH parameters to configure the wireless device with an association between one or more preambles and one or more reference signals (e.g., SSBs and/or CSI-RSs).The wireless device may determine the preamble to be comprised in first message (e.g., Msg 1 1311), for example, based on the association if the association is configured. The first message (e.g., Msg 1 1311) may be sent/transmitted to the base station via one or more PRACH occasions. The wireless device may use one or more reference signals (e.g., SSBs and/or CSI-RSs) for selection of the preamble and for determining of the PRACH occasion. One or more RACH parameters (e.g., ra-ssb-OccasionMskIndex and/or ra-OccasionList) may indicate an association between the PRACH occasions and the one or more reference signals.

The wireless device may perform a preamble retransmission, for example, if no response is received based on (e.g., after or in response to) a preamble transmission (e.g., for a period of time, such as a monitoring window for monitoring an RAR). The wireless device may increase an uplink transmit power for the preamble retransmission. The wireless device may select an initial preamble transmit power, for example, based on a pathloss measurement and/or a target received preamble power configured by the network. The wireless device may determine to resend/retransmit a preamble and may ramp up the uplink transmit power. The wireless device may receive one or more RACH parameters (e.g., PREAMBLE_POWER_RAMPING_STEP) indicating a ramping step for the preamble retransmission. The ramping step may be an amount of incremental increase in uplink transmit power for a retransmission. The wireless device may ramp up the uplink transmit power, for example, if the wireless device determines a reference signal (e.g., SSB and/or CSI-RS) that is the same as a previous preamble transmission. The wireless device may count the quantity/number of preamble transmissions and/or retransmissions, for example, using a counter parameter (e.g., PREAMBLE_TRANSMISSION_COUNTER). The wireless device may determine that a random access procedure has been completed unsuccessfully, for example, if the quantity/number of preamble transmissions exceeds a threshold configured by the one or more RACH parameters (e.g., preambleTransMax) without receiving a successful response (e.g., an RAR).

The second message (e.g., Msg 2 1312) (e.g., received by the wireless device) may comprise an RAR. The second message (e.g., Msg 2 1312) may comprise multiple RARs corresponding to multiple wireless devices. The second message (e.g., Msg 2 1312) may be received, for example, based on (e.g., after or in response to) the sending/transmitting of the first message (e.g., Msg 1 1311). The second message (e.g., Msg 2 1312) may be scheduled on the DL-SCH and may be indicated by a PDCCH, for example, using a random access radio network temporary identifier (RA RNTI). The second message (e.g., Msg 2 1312) may indicate that the first message (e.g., Msg 1 1311) was received by the base station. The second message (e.g., Msg 2 1312) may comprise a time-alignment command that may be used by the wireless device to adjust the transmission timing of the wireless device, a scheduling grant for transmission of the third message (e.g., Msg 3 1313), and/or a Temporary Cell RNTI (TC-RNTI). The wireless device may determine/start a time window (e.g., ra-ResponseWindow) to monitor a PDCCH for the second message (e.g., Msg 2 1312), for example, after sending/transmitting the first message (e.g., Msg 1 1311) (e.g., a preamble). The wireless device may determine the start time of the time window, for example, based on a PRACH occasion that the wireless device uses to send/transmit the first message (e.g., Msg 1 1311) (e.g., the preamble). The wireless device may start the time window one or more symbols after the last symbol of the first message (e.g., Msg 1 1311) comprising the preamble (e.g., the symbol in which the first message (e.g., Msg 1 1311) comprising the preamble transmission was completed or at a first PDCCH occasion from an end of a preamble transmission). The one or more symbols may be determined based on a numerology. The PDCCH may be mapped in a common search space (e.g., a Type1-PDCCH common search space) configured by an RRC message. The wireless device may identify/determine the RAR, for example, based on an RNTI. Radio network temporary identifiers (RNTIs) may be used depending on one or more events initiating/starting the random access procedure. The wireless device may use a RA-RNTI, for example, for one or more communications associated with random access or any other purpose. The RA-RNTI may be associated with PRACH occasions in which the wireless device sends/transmits a preamble. The wireless device may determine the RA-RNTI, for example, based on at least one of: an OFDM symbol index; a slot index; a frequency domain index; and/or a UL carrier indicator of the PRACH occasions. An example RA-RNTI may be determined as follows:

$$\text{RA-RNTI} = 1 + \text{s_id} + 14 \times \text{t_id} + 14 \times 80 \times \text{f_id} + 14 \times 80 \times 8 \times \text{ul_carrier_id}$$

where s_id may be an index of a first OFDM symbol of the PRACH occasion (e.g., 0 ≤ s_id < 14), t_id may be an index of a first slot of the PRACH occasion in a system frame (e.g., 0 ≤ t_id < 80), f_id may be an index of the PRACH occasion in the frequency domain (e.g., 0 ≤ f_id < 8), and ul_carrier id may be a UL carrier used for a preamble transmission (e.g., 0 for an NUL carrier, and 1 for an SUL carrier).

The wireless device may send/transmit the third message (e.g., Msg 3 1313), for example, based on (e.g., after or in response to) a successful reception of the second message (e.g., Msg 2 1312) (e.g., using resources identified in the Msg 2 1312). The third message (e.g., Msg 3 1313) may be used, for example, for contention resolution in the contention-based random access procedure. A plurality of wireless devices may send/transmit the same preamble to a base station, and the base station may send/transmit an RAR that corresponds to a wireless device. Collisions may occur, for example, if the plurality of wireless device interpret the RAR as corresponding to themselves. Contention resolution (e.g., using the third message (e.g., Msg 3 1313) and the fourth message (e.g., Msg 4 1314)) may be used to increase the likelihood that the wireless device does not incorrectly use an identity of another the wireless device. The wireless device may comprise a device identifier in the third message (e.g., Msg 3 1313) (e.g., a C-RNTI if assigned, a TC RNTI comprised in the second message (e.g., Msg 2 1312), and/or any other suitable identifier), for example, to perform contention resolution.

The fourth message (e.g., Msg 4 1314) may be received, for example, based on (e.g., after or in response to) the sending/transmitting of the third message (e.g., Msg 3 1313). The base station may address the wireless on the PDCCH (e.g., the base station may send the PDCCH to the wireless device) using a C-RNTI, for example, If the C-RNTI was included in the third message (e.g., Msg 3 1313). The random access procedure may be determined to be successfully completed, for example, if the unique C RNTI of the wireless device is detected on the PDCCH (e.g., the PDCCH is scrambled by the C-RNTI). Fourth message (e.g., Msg 4 1314) may be received using a DL-SCH associated with a TC RNTI, for example, if the TC RNTI is comprised in the third message (e.g., Msg 3 1313) (e.g., if the wireless device is in an RRC idle (e.g., an RRC_IDLE) state or not otherwise connected to the base station). The wireless device may determine that the contention resolution is successful and/or the wireless device may determine that the random access procedure is successfully completed, for example, if a MAC PDU is successfully decoded and a MAC PDU comprises the wireless device contention resolution identity MAC CE that matches or otherwise corresponds with the CCCH SDU sent/transmitted in third message (e.g., Msg 3 1313).

The wireless device may be configured with an SUL carrier and/or an NUL carrier. An initial access (e.g., random access) may be supported via an uplink carrier. A base station may configure the wireless device with multiple RACH configurations (e.g., two separate RACH configurations comprising: one for an SUL carrier and the other for an NUL carrier). For random access in a cell configured with an SUL carrier, the network may indicate which carrier to use (NUL or SUL). The wireless device may determine to use the SUL carrier, for example, if a measured quality of one or more reference signals (e.g., one or more reference signals associated with the NUL carrier) is lower than a broadcast threshold. Uplink transmissions of the random access procedure (e.g., the first message (e.g., Msg 1 1311) and/or the third message (e.g., Msg 3 1313)) may remain on, or may be performed via, the selected carrier. The wireless device may switch an uplink carrier during the random access procedure (e.g., between the Msg 1 1311 and the Msg 3 1313). The wireless device may determine and/or switch an uplink carrier for the first message (e.g., Msg 1 1311) and/or the third message (e.g., Msg 3 1313), for example, based on a channel clear assessment (e.g., a listen-before-talk).

FIG. 13B shows a two-step random access procedure. The two-step random access procedure may comprise a two-step contention-free random access procedure. Similar to the four-step contention-based random access procedure, a base station may, prior to initiation of the procedure, send/transmit a configuration message 1320 to the wireless device. The configuration message 1320 may be analogous in some respects to the configuration message 1310. The procedure shown in FIG. 13B may comprise transmissions of two messages: a first message (e.g., Msg 1 1321) and a second message (e.g., Msg 2 1322). The first message (e.g., Msg 1 1321) and the second message (e.g., Msg 2 1322) may be analogous in some respects to the first message (e.g., Msg 1 1311) and a second message (e.g., Msg 2 1312), respectively. The two-step contention-free random access procedure may not comprise messages analogous to the third message (e.g., Msg 3 1313) and/or the fourth message (e.g., Msg 4 1314).

The two-step (e.g., contention-free) random access procedure may be configured/initiated for a beam failure recovery, other SI request, an SCell addition, and/or a handover. A base station may indicate, or assign to, the wireless device a preamble to be used for the first message (e.g., Msg 1 1321). The wireless device may receive, from the base station via a PDCCH and/or an RRC, an indication of the preamble (e.g., ra-PreambleIndex).

The wireless device may start a time window (e.g., ra-ResponseWindow) to monitor a PDCCH for the RAR, for example, based on (e.g., after or in response to) sending/transmitting the preamble. The base station may configure the wireless device with one or more beam failure recovery parameters, such as a separate time window and/or a separate PDCCH in a search space indicated by an RRC message (e.g., recoverySearchSpaceId). The base station may configure the one or more beam failure recovery parameters, for example, in association with a beam failure recovery request. The separate time window for monitoring the PDCCH and/or an RAR may be configured to start after sending/transmitting a beam failure recovery request (e.g., the window may start any quantity of symbols and/or slots after sending/transmitting the beam failure recovery request). The wireless device may monitor for a PDCCH transmission addressed to a Cell RNTI (C-RNTI) on the search space. During the two-step (e.g., contention-free) random access procedure, the wireless device may determine that a random access procedure is successful, for example, based on (e.g., after or in response to) sending/transmitting first message (e.g., Msg 1 1321) and receiving a corresponding second message (e.g., Msg 2 1322). The wireless device may determine that a random access procedure has successfully been completed, for example, if a PDCCH transmission is addressed to a corresponding C-RNTI. The wireless device may determine that a random access procedure has successfully been completed, for example, if the wireless device receives an RAR comprising a preamble identifier corresponding to a preamble sent/transmitted by the wireless device and/or the RAR comprises a MAC sub-PDU with the preamble identifier. The wireless device may determine the response as an indication of an acknowledgement for an SI request.

FIG. 13C shows an example two-step random access procedure. Similar to the random access procedures shown in FIGS. 13A and 13B, a base station may, prior to initiation of the procedure, send/transmit a configuration message 1330 to the wireless device. The configuration message 1330 may be analogous in some respects to the configuration message 1310 and/or the configuration message 1320. The procedure shown in FIG. 13C may comprise transmissions of multiple messages (e.g., two messages comprising: a first message (e.g., Msg A 1331) and a second message (e.g., Msg B 1332)).

Msg A 1320 may be sent/transmitted in an uplink transmission by the wireless device. Msg A 1320 may comprise one or more transmissions of a preamble 1341 and/or one or more transmissions of a transport block 1342. The transport block 1342 may comprise contents that are similar and/or equivalent to the contents of the third message (e.g., Msg 3 1313) (e.g., shown in FIG. 13A). The transport block 1342 may comprise UCI (e.g., an SR, a HARQ ACK/NACK, and/or the like). The wireless device may receive the second message (e.g., Msg B 1332), for example, based on (e.g., after or in response to) sending/transmitting the first message (e.g., Msg A 1331). The second message (e.g., Msg B 1332) may comprise contents that are similar and/or equivalent to the contents of the second message (e.g., Msg 2 1312) (e.g., an RAR shown in FIGS. 13A), the contents of the second message (e.g., Msg 2 1322) (e.g., an RAR shown in FIG. 13B) and/or the fourth message (e.g., Msg 4 1314) (e.g., shown in FIG. 13A).

The wireless device may start/initiate the two-step random access procedure (e.g., the two-step random access procedure shown in FIG. 13C) for a licensed spectrum and/or an unlicensed spectrum. The wireless device may determine, based on one or more factors, whether to start/initiate the two-step random access procedure. The one or more factors may comprise at least one of: a radio access technology in use (e.g., LTE, NR, and/or the like); whether the wireless device has a valid TA or not; a cell size; the RRC state of the wireless device; a type of spectrum (e.g., licensed vs. unlicensed); and/or any other suitable factors.

The wireless device may determine, based on two-step RACH parameters comprised in the configuration message 1330, a radio resource and/or an uplink transmit power for the preamble 1341 and/or the transport block 1342 (e.g., comprised in the first message (e.g., Msg A 1331)). The RACH parameters may indicate an MCS, a time-frequency resource, and/or a power control for the preamble 1341 and/or the transport block 1342. A time-frequency resource for transmission of the preamble 1341 (e.g., a PRACH) and a time-frequency resource for transmission of the transport block 1342 (e.g., a PUSCH) may be multiplexed using FDM, TDM, and/or CDM. The RACH parameters may enable the wireless device to determine a reception timing and a downlink channel for monitoring for and/or receiving second message (e.g., Msg B 1332).

The transport block 1342 may comprise data (e.g., delay-sensitive data), an identifier of the wireless device, security information, and/or device information (e.g., an International Mobile Subscriber Identity (IMSI)). The base station may send/transmit the second message (e.g., Msg B 1332) as a response to the first message (e.g., Msg A 1331). The second message (e.g., Msg B 1332) may comprise at least one of: a preamble identifier; a timing advance command; a power control command; an uplink grant (e.g., a radio resource assignment and/or an MCS); a wireless device identifier (e.g., a UE identifier for contention resolution); and/or an RNTI (e.g., a C-RNTI or a TC-RNTI). The wireless device may determine that the two-step random access procedure is successfully completed, for example, if a preamble identifier in the second message (e.g., Msg B 1332) corresponds to, or is matched to, a preamble sent/transmitted by the wireless device and/or the identifier of the wireless device in second message (e.g., Msg B 1332) corresponds to, or is matched to, the identifier of the wireless device in the first message (e.g., Msg A 1331) (e.g., the transport block 1342).

A wireless device and a base station may exchange control signaling (e.g., control information). The control signaling may be referred to as L1/L2 control signaling and may originate from the PHY layer (e.g., layer 1) and/or the MAC layer (e.g., layer 2) of the wireless device or the base station. The control signaling may comprise downlink control signaling sent/transmitted from the base station to the wireless device and/or uplink control signaling sent/transmitted from the wireless device to the base station.

The downlink control signaling may comprise at least one of: a downlink scheduling assignment; an uplink scheduling grant indicating uplink radio resources and/or a transport format; slot format information; a preemption indication; a power control command; and/or any other suitable signaling. The wireless device may receive the downlink control signaling in a payload sent/transmitted by the base station via a PDCCH. The payload sent/transmitted via the PDCCH may be referred to as downlink control information (DCI). The PDCCH may be a group common PDCCH (GC-PDCCH) that is common to a group of wireless devices. The GC-PDCCH may be scrambled by a group common RNTI.

A base station may attach one or more cyclic redundancy check (CRC) parity bits to DCI, for example, in order to facilitate detection of transmission errors. The base station may scramble the CRC parity bits with an identifier of a wireless device (or an identifier of a group of wireless devices), for example, if the DCI is intended for the wireless device (or the group of the wireless devices). Scrambling the CRC parity bits with the identifier may comprise Modulo-2 addition (or an exclusive-OR operation) of the identifier value and the CRC parity bits. The identifier may comprise a 16-bit value of an RNTI.

DCIs may be used for different purposes. A purpose may be indicated by the type of an RNTI used to scramble the CRC parity bits. DCI having CRC parity bits scrambled with a paging RNTI (P-RNTI) may indicate paging information and/or a system information change notification. The P-RNTI may be predefined as "FFFE" in hexadecimal. DCI having CRC parity bits scrambled with a system information RNTI (SI-RNTI) may indicate a broadcast transmission of the system information. The SI-RNTI may be predefined as "FFFF" in hexadecimal. DCI having CRC parity bits scrambled with a random access RNTI (RA-RNTI) may indicate a random access response (RAR). DCI having CRC parity bits scrambled with a cell RNTI (C-RNTI) may indicate a dynamically scheduled unicast transmission and/or a triggering of PDCCH-ordered random access. DCI having CRC parity bits scrambled with a temporary cell RNTI (TC-RNTI) may indicate a contention resolution (e.g., a Msg 3 analogous to the Msg 3 1313 shown in FIG. 13A). Other RNTIs configured for a wireless device by a base station may comprise a Configured Scheduling RNTI (CS RNTI), a Transmit Power Control-PUCCH RNTI (TPC PUCCH-RNTI), a Transmit Power Control-PUSCH RNTI (TPC-PUSCH-RNTI), a Transmit Power Control-SRS RNTI (TPC-SRS-RNTI), an Interruption RNTI (INT-RNTI), a Slot Format Indication RNTI (SFI-RNTI), a Semi-Persistent CSI RNTI (SP-CSI-RNTI), a Modulation and Coding Scheme Cell RNTI (MCS-C RNTI), and/or the like.

Abase station may send/transmit DCIs with one or more DCI formats, for example, depending on the purpose and/or content of the DCIs. DCI format 0_0 may be used for scheduling of a PUSCH in a cell. DCI format 0_0 may be a fallback DCI format (e.g., with compact DCI payloads). DCI format 0_1 may be used for scheduling of a PUSCH in a cell (e.g., with more DCI payloads than DCI format 0_0). DCI format 1_0 may be used for scheduling of a PDSCH in a cell. DCI format 1_0 may be a fallback DCI format (e.g., with compact DCI payloads). DCI format 1_1 may be used for scheduling of a PDSCH in a cell (e.g., with more DCI payloads than DCI format 1_0). DCI format 2_0 may be used for providing a slot format indication to a group of wireless devices. DCI format 2_1 may be used for informing/notifying a group of wireless devices of a physical resource block and/or an OFDM symbol where the group of wireless devices may assume no transmission is intended to the group of wireless devices. DCI format 2_2 may be used for transmission of a transmit power control (TPC) command for PUCCH or PUSCH. DCI format 2_3 may be used for transmission of a group of TPC commands for SRS transmissions by one or more wireless devices. DCI format(s) for new functions may be defined in future releases. DCI formats may have different DCI sizes, or may share the same DCI size.

The base station may process the DCI with channel coding (e.g., polar coding), rate matching, scrambling and/or QPSK modulation, for example, after scrambling the DCI with an RNTI. A base station may map the coded and modulated DCI on resource elements used and/or configured for a PDCCH. The base station may send/transmit the DCI via a PDCCH occupying a number of contiguous control channel elements (CCEs), for example, based on a payload size of the DCI and/or a coverage of the base station. The number of the contiguous CCEs (referred to as aggregation level) may be 1, 2, 4, 8, 16, and/or any other suitable number. A CCE may comprise a number (e.g., 6) of resource-element groups (REGs). A REG may comprise a resource block in an OFDM symbol. The mapping of the coded and modulated DCI on the resource elements may be based on mapping of CCEs and REGs (e.g., CCE-to-REG mapping).

FIG. 14A shows an example of CORESET configurations. The CORESET configurations may be for a bandwidth part or any other frequency bands. The base station may send/transmit DCI via a PDCCH on one or more control resource sets (CORESETs). A CORESET may comprise a time-frequency resource in which the wireless device attempts/tries to decode DCI using one or more search spaces. The base station may configure a size and a location of the CORESET in the time-frequency domain. A first CORESET 1401 and a second CORESET 1402 may occur or may be set/configured at the first symbol in a slot. The first CORESET 1401 may overlap with the second CORESET 1402 in the frequency domain. A third CORESET 1403 may occur or may be set/configured at a third symbol in the slot. A fourth CORESET 1404 may occur or may be set/configured at the seventh symbol in the slot. CORESETs may have a different number of resource blocks in frequency domain.

FIG. 14B shows an example of a CCE-to-REG mapping. The CCE-to-REG mapping may be performed for DCI transmission via a CORESET and PDCCH processing. The CCE-to-REG mapping may be an interleaved mapping (e.g., for the purpose of providing frequency diversity) or a non-interleaved mapping (e.g., for the purposes of facilitating interference coordination and/or frequency-selective transmission of control channels). The base station may perform different or same CCE-to-REG mapping on different CORESETs. A CORESET may be associated with a CCE-to-REG mapping (e.g., by an RRC configuration). A CORESET may be configured with an antenna port QCL parameter. The antenna port QCL parameter may indicate QCL information of a DM-RS for a PDCCH reception via the CORESET.

The base station may send/transmit, to the wireless device, one or more RRC messages comprising configuration parameters of one or more CORESETs and one or more search space sets. The configuration parameters may indicate an association between a search space set and a CORESET. A search space set may comprise a set of PDCCH candidates formed by CCEs (e.g., at a given aggregation level). The configuration parameters may indicate at least one of: a number of PDCCH candidates to be monitored per aggregation level; a PDCCH monitoring periodicity and a PDCCH monitoring pattern; one or more DCI formats to be monitored by the wireless device; and/or whether a search space set is a common search space set or a wireless device-specific search space set (e.g., a UE-specific search space set). A set of CCEs in the common search space set may be predefined and known to the wireless device. A set of CCEs in the wireless device-specific search space set (e.g., the UE-specific search space set) may be configured, for example, based on the identity of the wireless device (e.g., C-RNTI).

As shown in FIG. 14B, the wireless device may determine a time-frequency resource for a CORESET based on one or more RRC messages. The wireless device may determine a CCE-to-REG mapping (e.g., interleaved or non-interleaved, and/or mapping parameters) for the CORESET, for example, based on configuration parameters of the CORESET. The wireless device may determine a number (e.g., at most 10) of search space sets configured on/for the CORESET, for example, based on the one or more RRC messages. The wireless device may monitor a set of PDCCH candidates according to configuration parameters of a search space set. The wireless device may monitor a set of PDCCH candidates in one or more CORESETs for detecting one or more DCIs. Monitoring may comprise decoding one or more PDCCH candidates of the set of the PDCCH candidates according to the monitored DCI formats. Monitoring may comprise decoding DCI content of one or more PDCCH candidates with possible (or configured) PDCCH locations, possible (or configured) PDCCH formats (e.g., the number of CCEs, the number of PDCCH candidates in common search spaces, and/or the number of PDCCH candidates in the wireless device-specific search spaces) and possible (or configured) DCI formats. The decoding may be referred to as blind decoding. The wireless device may determine DCI as valid for the wireless device, for example, based on (e.g., after or in response to) CRC checking (e.g., scrambled bits for CRC parity bits of the DCI matching an RNTI value). The wireless device may process information comprised in the DCI (e.g., a scheduling assignment, an uplink grant, power control, a slot format indication, a downlink preemption, and/or the like).

The may send/transmit uplink control signaling (e.g., UCI) to a base station. The uplink control signaling may comprise HARQ acknowledgements for received DL-SCH transport blocks. The wireless device may send/transmit the HARQ acknowledgements, for example, based on (e.g., after or in response to) receiving a DL-SCH transport block. Uplink control signaling may comprise CSI indicating a channel quality of a physical downlink channel. The wireless device may send/transmit the CSI to the base station. The base station, based on the received CSI, may determine transmission format parameters (e.g., comprising multi-antenna and beamforming schemes) for downlink transmission(s). Uplink control signaling may comprise scheduling requests (SR). The wireless device may send/transmit an SR indicating that uplink data is available for transmission to the base station. The wireless device may send/transmit UCI (e.g., HARQ acknowledgements (HARQ-ACK), CSI report, SR, and the like) via a PUCCH or a PUSCH. The wireless device may send/transmit the uplink control signaling via a PUCCH using one of several PUCCH formats.

There may be multiple PUCCH formats (e.g., five PUCCH formats). A wireless device may determine a PUCCH format, for example, based on a size of UCI (e.g., a quantity/number of uplink symbols of UCI transmission and a number of UCI bits). PUCCH format 0 may have a length of one or two OFDM symbols and may comprise two or fewer bits. The wireless device may send/transmit UCI via a PUCCH resource, for example, using PUCCH format 0 if the transmission is over/via one or two symbols and the quantity/number of HARQ-ACK information bits with positive or negative SR (HARQ-ACK/SR bits) is one or two. PUCCH format 1 may occupy a number of OFDM symbols (e.g., between four and fourteen OFDM symbols) and may comprise two or fewer bits. The wireless device may use PUCCH format 1, for example, if the transmission is over/via four or more symbols and the number of HARQ-ACK/SR bits is one or two. PUCCH format 2 may occupy one or two OFDM symbols and may comprise more than two bits. The wireless device may use PUCCH format 2, for example, if the transmission is over/via one or two symbols and the quantity/number of UCI bits is two or more. PUCCH format 3 may occupy a number of OFDM symbols (e.g., between four and fourteen OFDM symbols) and may comprise more than two bits. The wireless device may use PUCCH format 3, for example, if the transmission is four or more symbols, the quantity/number of UCI bits is two or more, and the PUCCH resource does not comprise an orthogonal cover code (OCC). PUCCH format 4 may occupy a number of OFDM symbols (e.g., between four and fourteen OFDM symbols) and may comprise more than two bits. The wireless device may use PUCCH format 4, for example, if the transmission is four or more symbols, the quantity/number of UCI bits is two or more, and the PUCCH resource comprises an OCC.

The base station may send/transmit configuration parameters to the wireless device for a plurality of PUCCH resource sets, for example, using an RRC message. The plurality of PUCCH resource sets (e.g., up to four sets in NR, or up to any other quantity of sets in other systems) may be configured on an uplink BWP of a cell. A PUCCH resource set may be configured with a PUCCH resource set index, a plurality of PUCCH resources with a PUCCH resource being identified by a PUCCH resource identifier (e.g., pucch-Resourceid), and/or a number (e.g., a maximum number) of UCI information bits the wireless device may send/transmit using one of the plurality of PUCCH resources in the PUCCH resource set. The wireless device may select one of the plurality of PUCCH resource sets, for example, based on a total bit length of the UCI information bits (e.g., HARQ-ACK, SR, and/or CSI) if configured with a plurality of PUCCH resource sets. The wireless device may select a first PUCCH resource set having a PUCCH resource set index equal to "0," for example, if the total bit length of UCI information bits is two or fewer. The wireless device may select a second PUCCH resource set having a PUCCH resource set index equal to "1," for example, if the total bit length of UCI information bits is greater than two and less than or equal to a first configured value. The wireless device may select a third PUCCH resource set having a PUCCH resource set index equal to "2," for example, if the total bit length of UCI information bits is greater than the first configured value and less than or equal to a second configured value. The wireless device may select a fourth PUCCH resource set having a PUCCH resource set index equal to "3," for example, if the total bit length of UCI information bits is greater than the second configured value and less than or equal to a third value (e.g., 1406, 1706, or any other quantity of bits).

The wireless device may determine a PUCCH resource from the PUCCH resource set for UCI (HARQ-ACK, CSI, and/or SR) transmission, for example, after determining a PUCCH resource set from a plurality of PUCCH resource sets. The wireless device may determine the PUCCH resource, for example, based on a PUCCH resource indicator in DCI (e.g., with DCI format 1_0 or DCI for 1_1) received on/via a PDCCH. An n-bit (e.g., a three-bit) PUCCH resource indicator in the DCI may indicate one of multiple (e.g., eight) PUCCH resources in the PUCCH resource set. The wireless device may send/transmit the UCI (HARQ-ACK, CSI and/or SR) using a PUCCH resource indicated by the PUCCH resource indicator in the DCI, for example, based on the PUCCH resource indicator.

FIG. 15A shows an example communications between a wireless device and a base station. A wireless device 1502 and a base station 1504 may be part of a communication network, such as the communication network 100 shown in FIG. 1A, the communication network 150 shown in FIG. 1B, or any other communication network. A communication network may comprise more than one wireless device and/or more than one base station, with substantially the same or similar configurations as those shown in FIG. 15A.

The base station 1504 may connect the wireless device 1502 to a core network (not shown) via radio communications over the air interface (or radio interface) 1506. The communication direction from the base station 1504 to the wireless device 1502 over the air interface 1506 may be referred to as the downlink. The communication direction from the wireless device 1502 to the base station 1504 over the air interface may be referred to as the uplink. Downlink transmissions may be separated from uplink transmissions, for example, using various duplex schemes (e.g., FDD, TDD, and/or some combination of the duplexing techniques).

For the downlink, data to be sent to the wireless device 1502 from the base station 1504 may be provided/transferred/sent to the processing system 1508 of the base station 1504. The data may be provided/transferred/sent to the processing system 1508 by, for example, a core network. For the uplink, data to be sent to the base station 1504 from the wireless device 1502 may be provided/transferred/sent to the processing system 1518 of the wireless device 1502. The processing system 1508 and the processing system 1518 may implement layer 3 and layer 2 OSI functionality to process the data for transmission. Layer 2 may comprise an SDAP layer, a PDCP layer, an RLC layer, and a MAC layer, for example, described with respect to FIG. 2A, FIG. 2B, FIG. 3, and FIG. 4A. Layer 3 may comprise an RRC layer, for example, described with respect to FIG. 2B.

The data to be sent to the wireless device 1502 may be provided/transferred/sent to a transmission processing system 1510 of base station 1504, for example, after being processed by the processing system 1508. The data to be sent to base station 1504 may be provided/transferred/sent to a transmission processing system 1520 of the wireless device 1502, for example, after being processed by the processing system 1518. The transmission processing system 1510 and the transmission processing system 1520 may implement layer 1 OSI functionality. Layer 1 may comprise a PHY layer, for example, described with respect to FIG. 2A, FIG. 2B, FIG. 3, and FIG. 4A. For transmit processing, the PHY layer may perform, for example, forward error correction coding of transport channels, interleaving, rate matching, mapping of transport channels to physical channels, modulation of physical channel, multiple-input multiple-output (MIMO) or multi-antenna processing, and/or the like.

A reception processing system 1512 of the base station 1504 may receive the uplink transmission from the wireless device 1502. The reception processing system 1512 of the base station 1504 may comprise one or more TRPs. A reception processing system 1522 of the wireless device 1502 may receive the downlink transmission from the base station 1504. The reception processing system 1522 of the wireless device 1502 may comprise one or more antenna panels. The reception processing system 1512 and the reception processing system 1522 may implement layer 1 OSI functionality. Layer 1 may include a PHY layer, for example, described with respect to FIG. 2A, FIG. 2B, FIG. 3, and FIG. 4A. For receive processing, the PHY layer may perform, for example, error detection, forward error correction decoding, deinterleaving, demapping of transport channels to physical channels, demodulation of physical channels, MIMO or multi-antenna processing, and/or the like.

The base station 1504 may comprise multiple antennas (e.g., multiple antenna panels, multiple TRPs, etc.). The wireless device 1502 may comprise multiple antennas (e.g., multiple antenna panels, etc.). The multiple antennas may be used to perform one or more MIMO or multi-antenna techniques, such as spatial multiplexing (e.g., single-user MIMO or multi-user MIMO), transmit/receive diversity, and/or beamforming. The wireless device 1502 and/or the base station 1504 may have a single antenna.

The processing system 1508 and the processing system 1518 may be associated with a memory 1514 and a memory 1524, respectively. Memory 1514 and memory 1524 (e.g., one or more non-transitory computer readable mediums) may store computer program instructions or code that may be executed by the processing system 1508 and/or the processing system 1518, respectively, to carry out one or more of the functionalities (e.g., one or more functionalities described herein and other functionalities of general computers, processors, memories, and/or other peripherals). The transmission processing system 1510 and/or the reception processing system 1512 may be coupled to the memory 1514 and/or another memory (e.g., one or more non-transitory computer readable mediums) storing computer program instructions or code that may be executed to carry out one or more of their respective functionalities. The transmission processing system 1520 and/or the reception processing system 1522 may be coupled to the memory 1524 and/or another memory (e.g., one or more non-transitory computer readable mediums) storing computer program instructions or code that may be executed to carry out one or more of their respective functionalities.

The processing system 1508 and/or the processing system 1518 may comprise one or more controllers and/or one or more processors. The one or more controllers and/or one or more processors may comprise, for example, a general-purpose processor, a digital signal processor (DSP), a microcontroller, an application specific integrated circuit (ASIC), a field programmable gate array (FPGA) and/or other programmable logic device, discrete gate and/or transistor logic, discrete hardware components, an on-board unit, or any combination thereof. The processing system 1508 and/or the processing system 1518 may perform at least one of signal coding/processing, data processing, power control, input/output processing, and/or any other functionality that may enable the wireless device 1502 and/or the base station 1504 to operate in a wireless environment.

The processing system 1508 may be connected to one or more peripherals 1516. The processing system 1518 may be connected to one or more peripherals 1526. The one or more peripherals 1516 and the one or more peripherals 1526 may comprise software and/or hardware that provide features and/or functionalities, for example, a speaker, a microphone, a keypad, a display, a touchpad, a power source, a satellite transceiver, a universal serial bus (USB) port, a hands-free headset, a frequency modulated (FM) radio unit, a media player, an Internet browser, an electronic control unit (e.g., for a motor vehicle), and/or one or more sensors (e.g., an accelerometer, a gyroscope, a temperature sensor, a radar sensor, a lidar sensor, an ultrasonic sensor, a light sensor, a camera, and/or the like). The processing system 1508 and/or the processing system 1518 may receive input data (e.g., user input data) from, and/or provide output data (e.g., user output data) to, the one or more peripherals 1516 and/or the one or more peripherals 1526. The processing system 1518 in the wireless device 1502 may receive power from a power source and/or may be configured to distribute the power to the other components in the wireless device 1502. The power source may comprise one or more sources of power, for example, a battery, a solar cell, a fuel cell, or any combination thereof. The processing system 1508 may be connected to a Global Positioning System (GPS) chipset 1517. The processing system 1518 may be connected to a Global Positioning System (GPS) chipset 1527. The GPS chipset 1517 and the GPS chipset 1527 may be configured to determine and provide geographic location information of the wireless device 1502 and the base station 1504, respectively.

FIG. 15B shows example elements of a computing device that may be used to implement any of the various devices described herein, including, for example, the base station 160A, 160B, 162A, 162B, 220, and/or 1504, the wireless device 106, 156A, 156B, 210, and/or 1502, or any other base station, wireless device, AMF, UPF, network device, or computing device described herein. The computing device 1530 may include one or more processors 1531, which may execute instructions stored in the random-access memory (RAM) 1533, the removable media 1534 (such as a Universal Serial Bus (USB) drive, compact disk (CD) or digital versatile disk (DVD), or floppy disk drive), or any other desired storage medium. Instructions may also be stored in an attached (or internal) hard drive 1535. The computing device 1530 may also include a security processor (not shown), which may execute instructions of one or more computer programs to monitor the processes executing on the processor 1531 and any process that requests access to any hardware and/or software components of the computing device 1530 (e.g., ROM 1532, RAM 1533, the removable media 1534, the hard drive 1535, the device controller 1537, a network interface 1539, a GPS 1541, a Bluetooth interface 1542, a WiFi interface 1543, etc.). The computing device 1530 may include one or more output devices, such as the display 1536 (e.g., a screen, a display device, a monitor, a television, etc.), and may include one or more output device controllers 1537, such as a video processor. There may also be one or more user input devices 1538, such as a remote control, keyboard, mouse, touch screen, microphone, etc. The computing device 1530 may also include one or more network interfaces, such as a network interface 1539, which may be a wired interface, a wireless interface, or a combination of the two. The network interface 1539 may provide an interface for the computing device 1530 to communicate with a network 1540 (e.g., a RAN, or any other network). The network interface 1539 may include a modem (e.g., a cable modem), and the external network 1540 may include communication links, an external network, an in-home network, a provider's wireless, coaxial, fiber, or hybrid fiber/coaxial distribution system (e.g., a DOCSIS network), or any other desired network. Additionally, the computing device 1530 may include a location-detecting device, such as a global positioning system (GPS) microprocessor 1541, which may be configured to receive and process global positioning signals and determine, with possible assistance from an external server and antenna, a geographic position of the computing device 1530.

The example in FIG. 15B may be a hardware configuration, although the components shown may be implemented as software as well. Modifications may be made to add, remove, combine, divide, etc. components of the computing device 1530 as desired. Additionally, the components may be implemented using basic computing devices and components, and the same components (e.g., processor 1531, ROM storage 1532, display 1536, etc.) may be used to implement any of the other computing devices and components described herein. For example, the various components described herein may be implemented using computing devices having components such as a processor executing computer-executable instructions stored on a computer-readable medium, as shown in FIG. 15B. Some or all of the entities described herein may be software based, and may co-exist in a common physical platform (e.g., a requesting entity may be a separate software process and program from a dependent entity, both of which may be executed as software on a common computing device).

FIG. 16A shows an example structure for uplink transmission. Processing of a baseband signal representing a physical uplink shared channel may comprise/perform one or more functions. The one or more functions may comprise at least one of: scrambling; modulation of scrambled bits to generate complex-valued symbols; mapping of the complex-valued modulation symbols onto one or several transmission layers; transform precoding to generate complex-valued symbols; precoding of the complex-valued symbols; mapping of precoded complex-valued symbols to resource elements; generation of complex-valued time-domain Single Carrier-Frequency Division Multiple Access (SC-FDMA), CP-OFDM signal for an antenna port, or any other signals; and/or the like. An SC-FDMA signal for uplink transmission may be generated, for example, if transform precoding is enabled. A CP-OFDM signal for uplink transmission may be generated, for example, if transform precoding is not enabled (e.g., as shown in FIG. 16A). These functions are examples and other mechanisms for uplink transmission may be implemented.

FIG. 16B shows an example structure for modulation and up-conversion of a baseband signal to a carrier frequency. The baseband signal may be a complex-valued SC-FDMA, CP-OFDM baseband signal (or any other baseband signals) for an antenna port and/or a complex-valued Physical Random Access Channel (PRACH) baseband signal. Filtering may be performed/employed, for example, prior to transmission.

FIG. 16C shows an example structure for downlink transmissions. Processing of a baseband signal representing a physical downlink channel may comprise/perform one or more functions. The one or more functions may comprise: scrambling of coded bits in a codeword to be sent/transmitted on/via a physical channel; modulation of scrambled bits to generate complex-valued modulation symbols; mapping of the complex-valued modulation symbols onto one or several transmission layers; precoding of the complex-valued modulation symbols on a layer for transmission on the antenna ports; mapping of complex-valued modulation symbols for an antenna port to resource elements; generation of complex-valued time-domain OFDM signal for an antenna port; and/or the like. These functions are examples and other mechanisms for downlink transmission may be implemented.

FIG. 16D shows an example structure for modulation and up-conversion of a baseband signal to a carrier frequency. The baseband signal may be a complex-valued OFDM baseband signal for an antenna port or any other signal. Filtering may be performed/employed, for example, prior to transmission.

A wireless device may receive, from a base station, one or more messages (e.g., RRC messages) comprising configuration parameters of a plurality of cells (e.g., a primary cell, one or more secondary cells). The wireless device may communicate with at least one base station (e.g., two or more base stations in dual-connectivity) via the plurality of cells. The one or more messages (e.g., as a part of the configuration parameters) may comprise parameters of PHY, MAC, RLC, PCDP, SDAP, RRC layers for configuring the wireless device. The configuration parameters may comprise parameters for configuring PHY and MAC layer channels, bearers, etc. The configuration parameters may comprise parameters indicating values of timers for PHY, MAC, RLC, PCDP, SDAP, RRC layers, and/or communication channels.

A timer may begin running, for example, once it is started and continue running until it is stopped or until it expires. A timer may be started, for example, if it is not running or restarted if it is running. A timer may be associated with a value (e.g., the timer may be started or restarted from a value or may be started from zero and expire once it reaches the value). The duration of a timer may not be updated, for example, until the timer is stopped or expires (e.g., due to BWP switching). A timer may be used to measure a time period/window for a process. With respect to an implementation and/or procedure related to one or more timers or other parameters, it will be understood that there may be multiple ways to implement the one or more timers or other parameters. One or more of the multiple ways to implement a timer may be used to measure a time period/window for the procedure. A random access response window timer may be used for measuring a window of time for receiving a random access response. The time difference between two time stamps may be used, for example, instead of starting a random access response window timer and determine the expiration of the timer. A process for measuring a time window may be restarted, for example, if a timer is restarted. Other example implementations may be configured/provided to restart a measurement of a time window.

A wireless device may either be in a RRC connected state or in a RRC inactive state, for example, if a RRC connection has been established. The wireless device may be in a RRC idle state, for example, if no RRC connection is established.

A RRC layer of a wireless device and/or a base station may support various operations such as PLMN selection; broadcast of system information; cell re-selection mobility; paging for mobile terminated data is initiated by 5GC; DRX for core network (CN) paging configured by non-access stratum (NAS) if a wireless device is in a RRC idle state. A wireless device specific DRX may be configured by upper layers, and/or a wireless device controlled mobility may be based on network configuration, for example, if a wireless device is in a RRC idle state. A RRC layer of the wireless device may perform various operations such as: monitor short messages sent (e.g., transmitted) with P-RNTI over DCI; monitor a paging channel for core network (CN) paging using serving temporary mobile subscriber identity (S-TMSI) (e.g., 5G-S-TMSI); perform neighboring cell measurements and cell (re-)selection; acquire system information; send (e.g., transmit) SI request; perform logging of available measurements together with location and time for logged measurement configured wireless devices if a wireless device is in a RRC idle state.

A RRC layer of the wireless device and/or a base station may support, for example: PLMN selection; broadcast of system information; cell re-selection mobility; paging may be initiated by NG-RAN (RAN paging); RAN-based notification area (RNA) may be managed by NG- RAN; DRX for RAN paging configured by NG-RAN; core network (e.g., 5G core, 5GC) - RAN (e.g., a base station) connection (e.g., both control and/or user planes) may be established for wireless device; a wireless device AS context may be stored in RAN and/or the wireless device; RAN may know the RNA to which the wireless device belongs to, if a wireless device is in a RRC inactive state. A wireless device specific DRX may be configured by upper layers and/or by RRC layer; the wireless device may perform and/or support wireless device controlled mobility based on network configuration; the wireless device may store the wireless device inactive AS context; a RAN-based notification area (RNA) may be configured by the RRC layer, for example, if the RRC layer of a wireless device is in a RRC inactive state. A RRC layer of the wireless device may, for example: monitor short messages sent (e.g., transmitted) with P-RNTI over DCI; monitor a paging channel for CN paging using S-TMSI and RAN paging using full inactive-RNTI (I-RNTI) (or full resume identity); perform neighboring cell measurements and cell (re-)selection; perform RAN-based notification area (RNA) updates periodically and if moving outside the configured RAN-based notification area; acquire system information; send (e.g., transmit) SI request; perform logging of available measurements together with location and time for logged measurement configured wireless devices, if a wireless device is in a RRC inactive state.

A RRC layer of a wireless device and/or a base station may support that: 5GC - NG-RAN connection (both C/U-planes) may be established for a wireless device; a wireless device AS context may be stored in RAN (e.g., a base station) and/or the wireless device; RAN may know the cell to which the wireless device belongs to; unicast data may be transferred to and/or from the wireless device; network controlled mobility may include measurements, for example, if a wireless device is in a RRC connected state. A RRC layer of the wireless device may: store the AS context; transfer and/or receive unicast data; at lower layers, be configured with a wireless device specific DRX; for wireless devices supporting CA, use of one or more SCells, aggregated with the SpCell, for increased bandwidth; for wireless devices supporting DC, use of one SCG, aggregated with the MCG, for increased bandwidth; perform and/or support Network controlled mobility within NR and to and/or from E-UTRA, for example, if a wireless device is in a RRC connected state. The wireless device may: monitor short messages sent (e.g., transmitted) with P-RNTI over DCI; monitor control channels associated with the shared data channel to determine, for example, if data is scheduled for it; provide channel quality and feedback information; perform neighboring cell measurements and measurement reporting; acquire system information; perform immediate minimization of drive tests (MDT) measurement together with available location reporting, for example, if a wireless device is in a RRC connected state.

Radio bearers may be categorized into two groups: data radio bearers (DRB) for user plane data and signaling radio bearers (SRB) for control plane data. Signaling radio bearers (SRBs) may be defined as radio bearers (RBs) that are used only for a transmission of RRC and NAS messages. Following SRBs may be defined: SRB0 may be for RRC messages using the common control channel (CCCH) logical channel; SRB 1 may be for RRC messages (which may include a piggybacked NAS message) as well as for NAS messages prior to an establishment of SRB2, all using dedicated control channel (DCCH) logical channel; SRB2 may be for NAS messages and for RRC messages which may include logged measurement information, all using DCCH logical channel. SRB2 may have a lower priority than SRB 1 and may be configured by the network after access stratum (AS) security activation; SRB3 may be for specific RRC messages, for example, if a wireless device is in dual connectivity (e.g., (NG)EN-DC or NR-DC), all using DCCH logical channel. In downlink, piggybacking of NAS messages may be used for one dependent (e.g., with joint success/failure) procedure: bearer establishment, modification, and/or release. In uplink piggybacking a NAS message may be used for transferring the initial NAS message for (RRC) connection setup and/or (RRC) connection resume. NAS messages transferred via SRB2 may be contained in RRC messages, which may not include any RRC protocol control information. All RRC messages on SRB 1, SRB2 and SRB3, including those containing NAS messages, may be integrity protected and/or ciphered by PDCP as AS security is activated. NAS, independently, may use integrity protection and/or ciphering to the NAS messages. Split SRB may be supported for dual connectivity (e.g., multi radio (MR)-DC options) in both SRB1 and SRB2. The split SRB may not be supported for SRB0 and SRB3. SRB0, SRB 1 and SRB3 may be assigned with the highest priority channel access priority class (CAPC), (e.g., CAPC = 1), for operation with shared spectrum channel access, for example, if CAPC for SRB2 is configurable.

A MAC layer of a wireless device and/or a base station may offer different kinds of data transfer service. Each logical channel type may be defined by the type of information that may be transferred. Logical channels may be classified into two groups: control channels and traffic channels. Control channels may be used for the transfer of control plane information: broadcast control channel (BCCH) which may be a downlink channel for broadcasting system control information; paging control channel (PCCH) which may be a downlink channel that carries paging messages; common control channel (CCCH) which may be a channel for sending (e.g., transmitting) control information between wireless devices and network. This channel is used for wireless devices having no RRC connection with the network; and dedicated control channel (DCCH) which is a point-to-point bi-directional channel that transmits dedicated control information between a wireless device and the network. Used by wireless devices having a RRC connection. Traffic channels may be used for the transfer of user plane information: dedicated traffic channel (DTCH) which may be a point-to-point channel, dedicated to one wireless device, for the transfer of user information. A DTCH may exist in both uplink and downlink.

A wireless device may transition to a RRC connected state, for example, if a RRC connection is established or resumed. The wireless device may transition to a RRC idle state, for example, if a RRC connection is released or suspended. The wireless device may transition to a RRC inactive state, for example, if a RRC connection is suspended. The wireless device may have a suspended RRC connection, for example, if the wireless device is in a RRC idle state. The wireless device may be in a RRC idle state with a suspended RRC connection, for example, based on the suspended RRC connection in the RRC idle state.

An RRC connection establishment may comprise an establishment of SRB1. A base station may complete the RRC connection establishment prior to completing the establishment of a connection (e.g., N2/N3 connection) with a core network, (e.g., prior to receiving the wireless device context information from core network entity (e.g., AMF)).

Access stratum (AS) security may not be activated for the initial phase of the RRC connection. The base station may configure a wireless device to perform measurement reporting for the initial phase of the RRC connection. The wireless device may send (e.g., transmit) the corresponding measurement reports after successful AS security activation. The wireless device may receive and/or accept a handover message (e.g., a handover command), for example, if AS security has been activated.

A RAN (e.g., a base station) may activate AS security (e.g., both ciphering and/or integrity protection) using the initial AS security activation procedure, for example, after or upon receiving the wireless device context from the core network (e.g., AMF). One or more RRC messages to activate AS security (e.g., a command and a successful response) may be integrity protected, for example, if ciphering is started after completion of the procedure. The response to the RRC messages used to activate AS security may not be ciphered, for example, if the subsequent messages (e.g., used to establish SRB2 and DRBs) may both be integrity protected and/or ciphered. The network (e.g., the base station) may initiate an establishment of SRB2 and/or DRBs, for example, after having initiated the initial AS security activation procedure. The network may initiate an establishment of SRB2 and/or DRBs prior to receiving the confirmation of the initial AS security activation from the wireless device. The network may use both ciphering and/or integrity protection for RRC reconfiguration messages used to establish SRB2 and DRBs. The network may release the RRC connection, for example, if the initial AS security activation and/ or the radio bearer establishment fails. A configuration with SRB2 but without DRB or with DRB but without SRB2 may not be supported (i.e., SRB2 and at least one DRB must be configured in the same RRC reconfiguration message, and it may not be allowed to release all the DRBs without releasing the RRC connection). A configuration with SRB2 without DRB may be supported for integrated access and backhaul mobile termination (IAB-MT).

A release of a RRC connection may be initiated by a network. The procedure of the release may be used to re-direct the wireless device to an NR frequency or an E-UTRA carrier frequency.

A suspension of a RRC connection may be initiated by a network. A wireless device may store the wireless device inactive AS context and/or any configuration received from the network, and transition to a RRC inactive state, for example, if the RRC connection is suspended. The RRC message to suspend the RRC connection may be integrity protected and/or ciphered.

A resumption of a suspended RRC connection may be initiated by upper layers, for example, if a wireless device needs to transition from a RRC inactive state to a RRC connected state, or alternatively, a suspended RRC connection may be initiated by a RRC layer to perform a RNA update, or by RAN paging from RAN (e.g., a base station). A network may configure the wireless device according to a RRC connection resume procedure based on the stored wireless device inactive AS context and/or any RRC configuration received from the network, for example, if the RRC connection is resumed. The RRC connection resume procedure may re-activate AS security and may re-established SRB(s) and DRB(s).

A network may resume a suspended RRC connection and transition a wireless device to a RRC connected state, reject the request to resume and send (e.g., transmit) the wireless device to a RRC inactive state (e.g., with a wait timer), directly re-suspend the RRC connection and send (e.g., transmit) wireless device to RRC_INACTIVE, directly release the RRC connection and transition wireless device to RRC idle state, or instruct the wireless device to initiate a NAS level recovery (e.g., the network may send a RRC setup message), based on a request to resume the RRC connection. Ciphering may provide user data confidentiality and integrity protection may provide user data integrity for user data (DRBs). Ciphering may provide signaling data confidentiality and integrity protection may provide signaling data integrity for RRC signaling (SRBs). Ciphering and integrity protections may be optionally configured except for RRC signaling for which integrity protection may be always configured. Ciphering and integrity protection may be configured per DRB.

Network entities or a wireless device processing cleartext may be protected from physical attacks and/or may be located in a secure environment for key management and/or data handling. Base station (e.g., gNB or eNB) (AS) keys may be cryptographically separated from NAS keys. Separate AS and NAS level security mode command (SMC) procedures may be used. A sequence number (COUNT) may be used as input to the ciphering and/or integrity protection and a given sequence number may be used a single time for a given key, except for identical re-transmission, on the same radio bearer in the same direction.

Keys for security may be organized and/or derived. A key for a core network entity (e.g., AMF or a key for mobility management entity (MME)) may comprise, for example, $K_{AMF}$ or $K_{MME}$. The key for a core network entity may be a key derived by mobile equipment (ME) of a wireless device and a security anchor function (SEAF) from a key for the SEAF ($K_{SEAF}$). Keys for NAS signaling may comprise, for example, $K_{NASint}$ or $K_{NASenc}$. $K_{NASint}$ may be used for the protection of NAS signaling with a particular integrity algorithm, for example, because $K_{NASint}$ is a key derived by mobile equipment (ME) of a wireless device and the core network from a key for the core network entity (e.g., $K_{AMF}$ or $K_{MME}$). $K_{NASenc}$ may be used for the protection of NAS signaling with a particular encryption algorithm because $K_{NASenc}$ is a key derived by ME and the core network entity from a key for the core network entity (e.g., $K_{AMF}$ or $K_{MME}$). A key for a base station (e.g., gNB or eNB) may comprise $K_{gNB}$, or $K_{eNB}$, a key derived by ME and a core network entity (e.g., AMF or MME) from a key for the core network entity (e.g., $K_{AMF}$ or $K_{MME}$). A key for a base station may be further derived by ME and a source base station, for example, if performing horizontal or vertical key derivation. Keys for user plane (UP) traffic may comprise: $K_{UPenc}$ may be a key derived by ME and a base station from a key for a base station and may be used for the protection of UP traffic between ME and a base station with a particular encryption algorithm; $K_{UPint}$ may be a key derived by ME and a base station from a key for a base station and may be used for the protection of UP traffic between ME and a base station with a particular integrity algorithm. Keys for RRC signaling may comprise: $K_{RRCint}$ may be a key derived by ME and a base station from a key for a base station and may be used for the protection of RRC signaling with a particular integrity algorithm; $K_{RRcenc}$ may be a key derived by ME and a base station from a key for a base station and may be used for the protection of RRC signaling with a particular encryption algorithm. Intermediate keys may comprise: next hop parameters (NH) may be a key derived by ME and a core network entity (e.g., AMF or MME) to provide forward security; $K_{gNB*}$, or $K_{eNB*}$ may be a key derived by ME and a base station, for example, if performing a horizontal or vertical key derivation.

A primary authentication may enable mutual authentication between a wireless device and a network and may provide an anchor key called $K_{SEAF}$. A key for a core network entity (e.g., $K_{AMF}$ or $K_{MME}$) may be created, for example, from $K_{SEAF}$ for a primary authentication or a NAS key re-keying and key refresh events. $K_{NASint}$ and/or $K_{NASenc}$ may be derived based on the key for the core network entity, for example, if running a successful NAS SMC procedure.

A core network entity (e.g., AMF or MME) and a wireless device may derive a key for a base station (e.g., $K_{gNB}$ or $K_{eNB}$) and a next hop parameter (NH), for example, if an initial AS security context needs to be established between a wireless device and a base station. A key for a base station and a NH may be derived from the key for a core network entity. A next hop chaining counter (NCC) may be associated with each key for a base station and NH parameter. A key for a base station may be associated with the NCC corresponding to the NH value from which it was derived., The key for a base station may be derived directly from a key for a core network entity, and after which the key may be considered to be associated with a virtual NH parameter with a NCC value equal to zero at initial setup. The derived NH value may be associated with the NCC value of one at initial setup. The basis for the key for a base station that may be used between a wireless device and a target base station, called $K_{gNB*}$, or $K_{eNB*}$, may be derived from either the currently active key for a base station or from the NH parameter on handovers. A key may be derived from a currently active key for a base station (e.g., a horizontal key derivation) and may be indicated to a wireless device using an NCC that may not increase, for example, if $K_{gNB*}$, or $K_{eNB*}$. The derivation may be referred to as a vertical key derivation and may be indicated to wireless device using an NCC increase, for example, if the $K_{gNB*}$, or $K_{eNB*}$, is derived from the NH parameter. $K_{RRCint}$, $K_{RRCenc}$, $K_{UPint}$, and $K_{UPenc}$ may be derived based on a key for a base station after a new key for a base station is derived.

A base station with knowledge of a key for a base station (e.g., a $K_{gNB}$ or $K_{eNB}$), shared with a wireless device, may be unable to compute any previous $K_{gNB}$ that may have been used between the same wireless device and a previous base station, therefore providing backward security, for example, based on a key derivation. A base station with knowledge of a key for a base station shared with a wireless device, may be unable to predict any future key for a base station that will be used between the same wireless device and another base station after n or more handovers (since NH parameters are only computable by the wireless device and the core network entity (e.g., AMF or MME)).

An AS SMC procedure may be used for RRC and UP security algorithms, negotiation, and/or RRC security activation. The AMF, or MME, may send (e.g., transmit) security capabilities of a wireless device to the base station, for example, if AS security context is to be established in a base station. The base station may determine (e.g., choose) a ciphering algorithm. The chosen ciphering algorithm may have the highest priority from its configured list and may also be present in the security capabilities. The base station may determine (e.g., choose) an integrity algorithm. The chosen integrity algorithm may have the highest priority from its configured list and may also be present in the security capabilities. The chosen algorithms may be indicated to the wireless device in the AS SMC and this message may be integrity protected. RRC downlink ciphering (e.g., encryption) at the base station may start after sending (e.g., transmitting) the AS SMC message. RRC uplink deciphering (e.g., decryption) at the base station may start after receiving and successfully verifying the integrity protected AS security mode complete message from the wireless device. The wireless device may verify the validity of the AS SMC message from the base station by verifying the integrity of the received message. RRC uplink ciphering (e.g., encryption) at the wireless device may start after sending (e.g., transmitting) the AS security mode complete message. RRC downlink deciphering (e.g., decryption) at the wireless device may start after receiving and successfully verifying the AS SMC message. The RRC connection reconfiguration procedure used to add DRBs may be performed only after RRC security has been activated as part of the AS SMC procedure.

A wireless device may support integrity protected DRBs. In case of failed integrity check (e.g., faulty or missing message authentication code for integrity (MAC-I)), the concerned packet data unit (PDU) may be discarded by a receiving PDCP entity. Key refresh may be possible for a key for a base station (e.g., $K_{gNB}$ or $K_{eNB}$), $K_{RRC-enc}$, $K_{RRc-int}$, $K_{UP-enc}$, and $K_{UP-int}$ and may be initiated by the base station, for example, if a PDCP COUNTs are about to be re-used with the same Radio Bearer identity and with the same $K_{gNB}$. Key re-keying may be possible for the key for a base station (e.g., $K_{gNB}$ or $K_{eNB}$), $K_{RRC-enc}$, $K_{RRC-int}$, $K_{UP-enc}$, and $K_{UP-int}$ and may be initiated by a core network entity (e.g.,

AMF or MME), for example, if a AS security context different from the currently active one may be activated.

RRC protection keys and UP protection keys may be generated, for example, if keys for NAS protection as well as higher layer keys are assumed to be already available, if a wireless device transition from a RRC idle state to a RRC connected state. These higher layer keys may have been established as a result of an authentication and key agreement (AKA) run, or as a result of a transfer from another AMF for handover or for idle mode mobility. A base station may delete the keys that it may store for a wireless device, for example, if the wireless device transitions from a RRC connected state to a RRC idle state, so that the state information for idle mode wireless devices needs to only be maintained in a core network entity (e.g., AMF or MME). A base station may no longer store state information about the corresponding wireless device and delete the current keys from its memory (e.g., if transitioning a RRC connected state to a RRC idle state): the base station and wireless device may delete NH, key for a base station, $K_{gNB}$, $K_{RRCint}$, $K_{RRCenc}$, $K_{UPint}$, $K_{UPenc}$, and/or related NCC; the core network entity (e.g., AMF or MME) and wireless device may keep keys for a core network entity (e.g., $K_{AMF}$ or $K_{MME}$), $K_{NASint,}$ and/or $K_{NASenc}$ stored.

On mobility with vertical key derivation a NH may be further bound to a target physical cell identifier (PCI) and/or the associated frequency absolute radio frequency channel number- downlink link (ARFCN-DL) before it is taken into use as the key for a base station in the target base station. On mobility with horizontal key derivation the currently active key for a base station may be further bound to the target PCI (e.g., PCI of the target cell) and/or the target PCI frequency ARFCN-DL before it is taken into use as the key for a base station in the target base station. In both cases, ARFCN-DL may be the absolute frequency of SSB of the target primary cell (PCell). It may not be required to change the AS security algorithms for intra-gNB-central unit (CU) handover. A wireless device may continue to use the same algorithms as before the handover, for example, if the wireless device does not receive an indication of new AS security algorithms for an intra-gNB-CU handover.

AS security may comprise integrity protection and/or ciphering of RRC signaling (SRBs) and user data (DRBs). The AS may use four different security keys: one for the integrity protection of RRC signaling ($K_{RRCint}$), one for the ciphering of RRC signaling ($K_{RRCenc}$), one for integrity protection of user data ($K_{UPint}$), and one for the ciphering of user data ($K_{UPenc}$). The four AS keys may be derived from a key for a base station (e.g., $K_{gNB}/K_{gNB^*}$). The key for a base station may be based on a key for a core network entity (e.g., $K_{AMF}$ or $K_{MME}$), which may be handled by upper layers (e.g., NAS layer). The integrity protection and/or ciphering algorithms may be changed with reconfiguration with sync (e.g., handover command). The AS keys ($K_{gNB}$, $K_{RRCint}$, $K_{RRCenc}$, $K_{UPint}$ and $K_{UPenc}$) may change upon reconfiguration with sync and upon connection re-establishment and connection resume. An independent counter (e.g., a count) may be maintained for each direction for each radio bearer. The count may be used as input for ciphering and/or integrity protection for each radio bearer.

Paging may allow a base station to reach wireless devices in a RRC idle state and/or in a RRC inactive state through paging messages and/or may allow a base station to notify wireless devices in a RRC idle state, in a RRC inactive state, a RRC connected state of system information change, earthquake and tsunami warning system (ETWS), and/or commercial mobile alert service (CMAS) indications through short messages. Both paging messages and short messages may be addressed with P-RNTI on PDCCH. The paging messages may be sent on PCCH, and the short message may be sent over PDCCH directly.

A wireless device may monitor a paging channels for core network (CN)-initiated paging, for example, if a wireless device is in a RRC idle state. The wireless device may monitor paging channels for RAN-initiated paging, for example, if a wireless device is in a RRC inactive state. A wireless device may not need to monitor paging channels continuously. Paging DRX may be defined as a wireless device in a RRC idle state or a RRC inactive state only being required to monitor paging channels for one paging occasion (PO) per DRX cycle. The Paging DRX cycles may be configured by the network (e.g., a base station or a core network entity (e.g., AMF or MME)): a default cycle may be broadcast in system information for CN-initiated paging; a wireless device specific cycle may be configured via an NAS signaling for CN-initiated paging; a wireless device-specific cycle may be configured via a RRC signaling for RAN-initiated paging. The wireless device may use the shortest of the DRX cycles that may be applicable. A wireless device in a RRC idle state, for example, may use the shortest of the first two cycles above. A wireless device in RRC_INACTIVE may use the shortest of the three cycles above.

POs of a wireless device for CN-initiated and/or RAN-initiated paging may be based on the same wireless device identity (ID), resulting in overlapping POs for both. The number of different POs in a DRX cycle may be configurable via system information, and a network may distribute wireless devices to those POs based on their IDs.

A wireless device may monitor the paging channels in any PO signaled in system information for SI change indication and PWS notification, for example, if in RRC_CONNECTED. A wireless device in RRC connected state may only monitor paging channels on the active BWP with common search space configured. A wireless device may be configured for an additional number of PDCCH monitoring occasions in its PO to monitor for paging for operation with shared spectrum channel access., A wireless device may not be required to monitor the subsequent PDCCH monitoring occasions within this PO, for example, if the wireless device detects a PDCCH transmission within the wireless device's PO addressed with P-RNTI.

A network (e.g., a base station) may initiate a paging procedure by sending (e.g., transmitting) the paging message at the wireless device's paging occasion. The network may address multiple wireless devices within a paging message by including one paging record for each wireless device. The paging message may comprise a paging record list. The paging record list may comprise one or more paging records. Each paging record may comprise at least one of: a wireless device identity (ID) and access type. The wireless device identity may comprise S-TMSI or I-RNTI (e.g., resume identity). The access type may indicate, for example, if the paging message originated because of PDU sessions from non-3GPP access.

Cell selection may be required on transition from registration management (RM)-DEREGISTERED to RM-REGISTERED, from CM-IDLE to CM-CONNECTED, and from CM-CONNECTED to CM-IDLE. The wireless device may be not registered with the network for the RM-DEREGISTERED state. The wireless device context in a core network entity (e.g., AMF or MME) may not hold valid location and/or routing information for the wireless device. The wireless device may not be reachable by the AMF. The wireless device may be registered with the network in the RM-REGISTERED state. The wireless device may receive services that may require registration with the network in the RM-REGISTERED state. A wireless device in CM-IDLE state may have no NAS signaling connection established with the core network entity (e.g., AMF or MME) (e.g., over N1/S1 interface). The wireless device may perform cell selection, cell reselection, and/or PLMN selection. A wireless device in CM-CONNECTED state may have a NAS signaling connection with the core network entity (e.g., over N1/S1 interface). A NAS signaling connection may use a RRC connection between the wireless device and a base station (e.g., RAN) and a next generation application protocol (NGAP)/S1AP wireless device association between access network (AN) (e.g., AN of the base station) and the core network entity (e.g., AMF or MME).

Cell selection may be based on the following principles. The wireless device NAS layer may identify a selected PLMN and/or equivalent PLMNs. Cell selection may be based on cell defining SSB (CD-SSBs) located on a synchronization raster. A wireless device may search the frequency (NR) bands and may identify the strongest cell as per the CD-SSB for each carrier frequency. The wireless device may read cell system information that may be broadcast to identify its PLMN(s). The wireless device may search each carrier in turn (e.g., "initial cell selection") or make use of stored information to shorten the search (e.g., "stored information cell selection"). The wireless device may seek to identify a suitable cell, and the wireless device may seek to identify an acceptable cell, for example, if the wireless device is not able to identify a suitable cell. The wireless device may camp on that cell and commence the cell reselection procedure, for example, if a suitable cell is found or if only an acceptable cell is found. A suitable cell may be one for which the measured cell attributes satisfy the cell selection criteria; the cell PLMN may be the selected PLMN, registered or an equivalent PLMN; the cell may not be barred or reserved and the cell may not be part of a tracking area which is in the list of "forbidden tracking areas for roaming"; an acceptable cell may be one for which the measured cell attributes satisfy the cell selection criteria and the cell is not barred.

A wireless device may camp on a cell as a result of cell selection according to a frequency assigned by RRC in the state transition message on a transition from a RRC connected state or RRC inactive state to a RRC idle state. The wireless device may attempt to find a suitable cell for stored information or initial cell selection as described herein. The wireless device may attempt to find an acceptable cell, for example, if no suitable cell is found on any frequency or RAT. The cell quality may be derived amongst the beams corresponding to the same cell in multi-beam operations.

A wireless device in a RRC idle may perform cell reselection. Cell reselection may be based on CD-SSBs located on the synchronization raster. The wireless device may make measurements of attributes of the serving and/or neighbor cells to enable the reselection process. The carrier frequencies need to be indicated for the search and/or measurement of inter-frequency neighboring cells. Cell reselection may identify a cell that the wireless device may camp on. The cell reselection may be based on cell reselection criteria which may involve measurements of the serving and/or neighbor cells: intra-frequency reselection may be based on a ranking of cells; inter-frequency reselection may be based on absolute priorities where a wireless device may try to camp on the highest priority frequency available; a neighbor cell list (NCL) may be provided by a serving cell to handle specific cases for intra- and inter-frequency neighboring cells; black lists may be provided to prevent the wireless device from reselecting specific intra- and inter-frequency neighboring cells; white lists may be provided to request the wireless device to reselect only specific intra- and inter-frequency neighboring cells; cell reselection may be speed dependent; service specific prioritization., The cell quality may be derived amongst the beams corresponding to the same cell in multi-beam operations.

A wireless device may perform one of two procedures such as initial cell selection and cell selection by leveraging stored information. The wireless device may perform the initial cell selection, for example, if the wireless device does not have stored cell information for the selected PLMN. Otherwise, the wireless device may perform the cell selection by leveraging stored information. A wireless device may scan all RF channels in the (NR) frequency bands according to its capabilities to find a suitable cell for initial cell selection. The wireless device may search for the strongest cell on each frequency based on results of the scan. The wireless device may select a cell which may be a suitable cell. The wireless device may require stored information of frequencies and/or, optionally, information on cell parameters from previously received measurement control information elements or from previously detected cells for the cell selection by leveraging stored information. The wireless device may search a suitable cell and/or select the suitable cell, for example, if the wireless device found the suitable cell based on the stored information. The wireless device may perform the initial cell selection, for example, if the wireless device does not find the suitable cell.

A base station may configure cell selection criteria for cell selection. A wireless device may seek to identify a suitable cell for the cell selection. The suitable cell may be one that satisfies the following conditions: (1) the measured cell attributes satisfy the cell selection criteria, (2) the cell PLMN is the selected PLMN, registered or an equivalent PLMN, (3) the cell is not barred or reserved, and/or (4) the cell is not part of a tracking area which is in the list of "forbidden tracking areas for roaming." An RRC layer in a wireless device may inform a NAS layer in the wireless device of cell selection and reselection result based on changes in received system information relevant for NAS. The cell selection and reselection result may be, for example, a cell identity, a tracking area code, and/or a PLMN identity.

A wireless device-RRC layer may initiate a RRC connection establishment procedure, a RRC connection resume procedure, and/or a RRC connection re-establishment procedure., the wireless device may perform one or more procedures, based on initiating the RRC connection establishment procedure or the RRC connection resume procedure, where the one or more procedures comprise at least one of: performing a unified access control procedure (e.g., access barring check) for access attempt of the RRC establishment or RRC connection resume procedure on a serving cell; using default configurations parameters and configurations and/or parameters provided by SIB1, (e.g., based on the access attempt being allowed, using default configurations and configurations and/or parameters provided by SIB1); sending (e.g., transmitting) a random access preamble to the serving cell, for example, based on the access attempt being allowed; sending (e.g., transmitting) a RRC request message to the serving cell (e.g., based on determining a reception of a random access response being successful); sending (e.g., transmitting) a RRC request message to the serving cell; starting a timer based on sending (e.g., transmitting) the RRC request message; receiving a RRC response message or a RRC reject message from the serving cell (e.g., based on the RRC request message); and/or sending (e.g., transmitting) a RRC complete message (e.g., based on receiving the RRC response message, sending (e.g., transmitting) a RRC complete message). The wireless device may not perform the unified access procedure (e.g., access barring check) for an access attempt of the RRC reestablishment procedure, for example, if the RRC connection re-establishment procedure.

A base station (e.g., NG-RAN) may support overload and/or access control functionality (e.g., RACH back off, RRC Connection Reject, RRC Connection Release and wireless device based access) barring mechanisms. Unified access control framework applies to all wireless device states (e.g., a RRC idle, RRC inactive, and/or RRC connected state). The base station may broadcast barring control information associated with access categories and/or access identities. The barring control information may be set individually for each PLMN, for example, for the case of network sharing. The wireless device may determine, for example, if an access attempt is authorized based on the barring information broadcast for the selected PLMN, the selected access category, and/or access identities for the access attempt. A wireless device-NAS layer may determine the access category and/or access identities for NAS triggered requests. A wireless device-RRC layer may determine the access category, for example, if NAS determines the access identities, for AS triggered requests. The base station may handle access attempts with establishment causes "emergency", "mps-priority access", and "mcs priority access" (e.g., emergency calls, MPS, MCS subscribers) with high priority and respond with a RRC reject to these access attempts only in extreme network load conditions that may threaten the base station stability.

A wireless device in a RRC inactive or RRC idle state may perform or initiate an access barring check, or a unified access control procedure, for an access attempt of the RRC connection establishment procedure or the RRC connection resume procedure, based on initiating the RRC connection establishment procedure or the RRC connection resume procedure. The wireless device may determine the access category and access identities for access attempt based on the performing or initiating the access barring check. The wireless device may determine that the access attempt may be barred based on at least one of: a timer T309 may be running for the access category for the access attempt; and a timer T302 may be running, and the access category may neither be '2' nor '0'. The wireless device may determine that the access attempt may be allowed based on at least one of: the access Category may be '0'; and system information block (e.g., system information block type 25) comprising unified access control (UAC) barring parameters may not be broadcast by a serving cell. The wireless device may determine the access attempt may be barred based on at least one of: an establishment cause (e.g., for the access attempt) being other than emergency; access barring per RSRP parameter of the system information block comprising, or being set to, threshold 0 and the wireless device being in enhanced coverage; access barring per RSRP parameter of the system information block comprising, or being set to, threshold 1 and measured RSRP being less than a first entry in RSRP thresholds PRACH info list; the access barring per RSRP parameter of the system information block comprising, or being set to, threshold 2 and measured RSRP being less than a second entry in the RSRP thresholds PRACH info list; and the access barring per RSRP parameter of the system information block comprising, or being set to, threshold 3 and measured RSRP being less than a third entry in the RSRP thresholds PRACH info list.

A wireless device may determine that an access attempt may be allowed based on a system information block not comprising the UAC barring parameters for the access attempt. For example, the wireless device may determine that the access attempt may be allowed based on that system information block not comprising the UAC barring parameters for PLMN the wireless device selected and UAC barring parameters for common. The wireless device may determine that the access attempt may be allowed based on the UAC barring parameters for common not comprising the access category of the access attempt. The UAC barring parameters may comprise at least one of: UAC barring parameters per PLMN; and UAC barring parameters for common. The wireless device may perform an access barring check for the access category of the access attempt based on the UAC barring parameters in the system information block. The wireless device may determine that the access attempt may be allowed based on a corresponding bit of at least one of the access identities in the UAC barring parameters being zero. The wireless device may draw a first random number uniformly distributed in a range where the range may be greater (e.g., higher, more, etc.) than or equal to 0 and lower (e.g., less, below, etc.) than 1.

A wireless device may determine that the access attempt may be allowed based on a first random number being lower (e.g., less, below, etc.) than a UAC barring factor in the UAC barring parameters. The wireless device may determine that the access attempt may be barred based on the first random number being greater (e.g., higher, more, etc.) than a UAC barring factor in the UAC barring parameters. The wireless device may draw a second random number uniformly distributed in a range where the range is greater (e.g., higher, more, etc.) than equal to 0 and lower (e.g., less, below, etc.) than 1. In response to the determining the access attempt being barred. The wireless device may start barring timer T309 for the access category based on the second random number. The access attempt associated with the access category may be barred (e.g., not allowed to send (e.g., transmit)), for example, if the barring timer T309 is running. The wireless device may consider barring for the access category being alleviated based on the barring timer T309 expiry. The wireless device may perform access barring check for the access category, for example, the wireless device have access attempt for the access category based on the barring for the access category being alleviated.

A wireless device may stop one or more barring timer T309 for all access categories, for example, if the one or more barring timer T309 is running based on initiating the RRC connection reestablishment procedure. The wireless device may determine that barring for all access categories may be alleviated based on stopping the one or more barring timer T309. The wireless device may perform the RRC connection reestablishment procedure based on the barring for all access categories being alleviated. The wireless device may send (e.g., transmit) a RRC establishment request without barring, for example, based on the barring for all access categories being alleviated.

A wireless device-RRC layer (e.g., UE-RRC layer) may use parameters in a received SIB1 for initiating a RRC connection, RRC establishment, RRC resume, and/or RRC reestablishment procedure. As recited herein, "UE-RRC layer" may refer to any wireless device-RRC layer. The wireless device-RRC layer may use L1 parameter values and/or a time alignment timer in the SIB1. The wireless device-RRC layer may use UAC barring information in the SIB1 to perform the unified access control procedure. The wireless device-RRC layer may determine, for example, if the access attempt of the RRC procedures may be barred or may be allowed based on the unified access control procedure. The wireless device-RRC layer may determine to send (e.g., transmit) a RRC request message to abase station, where the RRC request message may be a RRC setup request message, a RRC resume request message, or a RRC re-establishment message, based on the determining the access attempt is allowed. The wireless device-NAS layer may or may not provide S-TMSI as a wireless device identity. The wireless device-RRC layer may set a wireless device identity in the RRC request message.

A wireless device in a RRC idle state may initiate a RRC connection establishment procedure for the RRC setup request message. The wireless device-RRC layer in a RRC idle state may set the wireless device identity to S-TMSI, for example, if the wireless device-NAS layer provides the S-TMSI, based on initiating the RRC connection establishment procedure. Otherwise, the wireless device-RRC layer in a RRC idle state may draw a 39-bit random value and may set the wireless device identity to the random value. The wireless device-RRC layer in a RRC inactive or RRC idle state may set the wireless device identity to resume identity stored for the RRC resume request message. The wireless device-RRC layer in a RRC connected state may set the wireless device identity to C-RNTI used in the source PCell for the RRC reestablishment request message. The wireless device-NAS layer may provide an establishment cause (e.g., UE-NAS layer). The wireless device-RRC layer may set the establishment cause for the RRC request message.

The wireless device in a RRC inactive state may initiate a RRC connection resume procedure for the RRC resume request message. The wireless device in a RRC idle state with a suspended RRC connection may initiate the RRC connection resume procedure. The wireless device may in a RRC inactive state or a RRC idle state may initiate the RRC connection procedure based on at least one of: resuming a (e.g., suspended) RRC connection; and performing and/or initiating UP small data transmission. The wireless device-RRC layer may restore stored configuration parameters and stored security keys from the stored wireless device inactive AS context based on initiating the RRC connection resume procedure. The wireless device-RRC layer in a RRC inactive or RRC idle state may set a resume MAC-I value to the 16 least significant bits of the MAC-I calculated based on variable resume MAC input, security key of integrity protection for RRC layer in a wireless device inactive AS context, the previous configured integrity protection algorithm, and/or other security parameters (e.g., count, bearer, and direction) based on the security keys. The variable resume MAC input may comprise at least one of: physical cell identity of a source cell; C-RNTI of the source cell; and cell identity of a target cell (e.g., a selected cell) where the cell identity may be a cell identity in system information block (e.g., SIB1) of the target cell (e.g., the selected cell). The wireless device-RRC layer in a RRC inactive or RRC idle state may derive new security keys for integrity protection and/or ciphering, and may configure lower layers (e.g., UE-PDCP layer) to use them based on the security keys and a next hop chaining count (NCC) value. The wireless device may have a stored NCC value and resume identity. The wireless device may receive a RRC release message with suspend indication, or suspend configuration parameters, where the RRC release message may comprise at least one of: the resume identity; and the NCC value. The wireless device-RRC layer in a RRC inactive or a RRC idle state may re-establish PDCP entities for one or more bearers. The wireless device-RRC layer may resume one or more bearers. The wireless device-RRC layer may resume SRB1, for example, based on resuming the RRC connection. The wireless device-RRC layer may resume one or more SRB(s) and/or DRB(s) based on performing the UP small data transmission. The wireless device-RRC layer in the RRC inactive or RRC idle state may send (e.g., transmit) a RRC resume request message to a base station where the RRC resume request message may comprise at least one of: the resume identity; the resume MAC-I; and/or resume cause.

A wireless device in a RRC connected state may initiate a RRC connection reestablishment procedure for the RRC reestablishment request message. The wireless device-RRC layer in a RRC connected state may contain the physical cell identity of the source PCell and/or a short MAC-I in the RRC reestablishment message based on initiating the RRC connection reestablishment procedure. The wireless device-RRC layer in a RRC connected state may set the short MAC-I to the 16 least significant bits of the MAC-I that may be calculated based on variable short MAC input, security key of integrity protection for RRC layer and the integrity protection algorithm, which may have been used in a source PCell or the PCell in which the trigger for the reestablishment occurred, and other security parameters (e.g., count, bearer and direction). The variable short MAC input may comprise at least one of: a physical cell identity (PCI) of the source cell; C-RNTI of a source cell; and cell identity of a target cell (e.g., a selected cell) where the cell identity is a cell identity in system information block (e.g., SIB1) of the target cell (e.g., the selected cell). The wireless device-RRC layer in a RRC connected state may re-establish PDCP entities and RLC entities for SRB1 and use default SRB1 configuration parameters for SRB 1. The wireless device-RRC layer in a RRC connected state may configure lower layers (e.g., PDCP layer) to suspend integrity protection and ciphering for SRB 1 and resume SRB 1.

A wireless device-RRC layer may send (e.g., transmit) a RRC request message to lower layers (e.g., PDCP layer, RLC layer, MAC layer and/or PHY layer) for transmission where the RRC request message may be a RRC setup request message, a RRC resume request message, or a RRC re-establishment message. A wireless device-RRC layer may receive a RRC setup message based on a RRC resume request message or a RRC reestablishment request message. The wireless device-RRC layer may discard any stored AS context, suspend configuration parameters, and/or current AS security context based on the RRC setup message. The wireless device-RRC layer may release radio resources for all established RBs except SRB0, including release of the RLC entities, of the associated PDCP entities and of SDAP. The wireless device-RRC layer may release the RRC configuration except for default L1 parameter values, default MAC cell group configuration and CCCH configuration. The wireless device-RRC layer may indicate to upper layers (e.g., NAS layer) fallback of the RRC connection. The UE-RRC layer may stop timer T380, for example, if running where the timer T380 is a periodic RAN-based Notification Area (RNA) update timer.

A UE-RRC layer may receive a RRC setup message based on a RRC setup request message, a RRC resume request message, and/or a RRC reestablishment request message. The RRC setup message may comprise a cell group configurations parameters and a radio bearer configuration parameter. The radio bearer configuration parameters may comprise at least one of signaling bearer configuration parameters, data radio bearer configuration parameters and/or security configuration parameters. The security configuration parameters may comprise security algorithm configuration parameters and key to use indication indicating whether the radio bearer configuration parameters are using master key or secondary key. The signaling radio bearer configuration parameters may comprise one or more signaling radio bearer configuration parameters. Each signaling radio configuration parameters may comprise at least one of SRB identity, PDCP configuration parameters, reestablish PDCP indication, and/or discard PDCP indication. The data radio bearer configuration parameters may comprise one or more data radio bearer configuration parameters. Each data radio configuration parameters may comprise at least one of DRB identity, PDCP configuration parameters, SDAP configuration parameters, reestablish PDCP indication, and/or recover PDCP indication. The radio bearer configuration in the RRC setup message may comprise signaling radio configuration parameters for SIB1., The wireless device-RRC layer may establish SRB 1 based on the RRC setup message., The wireless device-RRC layer may perform a cell group configuration or radio bearer configuration based on the RRC setup message. The wireless device-RRC layer may stop a barring timer and/or a wait timer for the cell sending (e.g., transmitting) the RRC setup message., The wireless device-RRC layer may perform one or more of the following, based on receiving the RRC setup message: a transition to a RRC connected state; stop a cell re-selection procedure; consider the current cell sending (e.g., transmitting) the RRC setup message to be the PCell; or/and send (e.g., transmit) a RRC setup complete message by setting the content of the RRC setup complete message.

A wireless device-RRC layer may receive a RRC resume message based on a RRC resume request message. The wireless device-RRC layer may discard a wireless device inactive AS context and release a suspend configuration parameters except RNA notification area information based on the RRC resume message. The RRC resume message may comprise at least one of: radio bearer configuration parameters; cell group configuration parameters; measurement configuration parameters; sk counter for AS security; a first indication to request idle and/or inactive measurement results; a second indication to restore secondary cells (SCells) of master cell group (MCG); a third indication to restore secondary cell group (SCG); and SCG configuration parameters. The wireless device-RRC layer may perform, based on the RRC resume message, a procedure to configure or restore configuration parameters (e.g., a cell group configuration, a radio bearer configuration and/or SCG configuration); security key update procedure; and/or measurement (configuration) procedure., The wireless device-RRC layer may perform, based on receiving the RRC resume message, one or more of the following: indicating to upper layers (e.g., NAS layer) that the suspended RRC connection has been resumed; resuming SRB2, all DRBs, and measurements; entering a RRC connected state; stopping a cell re-selection procedure; considering the current cell sending (e.g., transmitting) the RRC resume message to be the PCell; and/or sending (e.g., transmitting) a RRC resume complete message by setting the content of the RRC resume complete message.

Cell group configuration parameters may be used to configure a master cell group (MCG) and/or secondary cell group (SCG). The cell group configuration parameters are master cell group configuration parameters if the cell group configuration parameters are used to configure the MCG. The cell group configuration parameters are secondary cell group configuration parameters if the cell group configuration parameters are used to configure the SCG. A cell group may comprise one or more of a MAC entity, a set of logical channels with associated RLC entities and of a primary cell (SpCell) and one or more secondary cells (SCells). The cell group configuration parameters (e.g., master cell group configuration parameters or secondary cell group configuration parameters) may comprise at least one of RLC bearer configuration parameters for the cell group, MAC cell group configuration parameters for the cell group, physical cell group configuration parameters for the cell group, SpCell configuration parameters for the cell group or SCell configuration parameters for the cell group. The MAC cell group configuration parameters may comprise MAC parameters for a cell group where the MAC parameters may comprise at least DRX parameters. The physical cell group configuration parameters may comprise cell group specific L1, layer 1, parameters.

The special cell (SpCell) may comprise a primary cell (PCell) of an MCG or a primary SCG cell (PSCell) of a SCG. The SpCell configuration parameters may comprise serving cell specific MAC and PHY parameters for a SpCell. The MR-DC configuration parameters may comprise at least one of SRB3 configuration parameters, measurement configuration parameter for SCG, and/or SCG configuration parameters.

Cell group configuration parameters may comprise at least one of RLC bearer configuration parameters, MAC cell group configuration parameters, physical cell group configuration parameters, and/or SpCell configuration parameters for the first cell group or SCell configuration parameters for other cells of the second base station. The SpCell configuration parameter may comprise at least one of radio link failure timer and constraints, radio link monitoring in sync out of sync threshold, and/or serving cell configuration parameters of the first cell. The serving cell configuration parameters may comprise at least one of: downlink BWP configuration parameters; uplink configuration parameters; uplink configuration parameters for supplement uplink carrier (SUL); PDCCH parameters applicable across for all BWPs of a serving cell; PDSCH parameters applicable across for all BWPs of a serving cell; CSI measurement configuration parameters; SCell deactivation timer; cross carrier scheduling configuration parameters for a serving cell; timing advance group (TAG) identity (ID) of a serving cell; path loss reference linking indicating whether the wireless device shall use as pathloss reference either the downlink of SpCell or SCell for this uplink; serving cell measurement configuration parameters; channel access configuration parameters for access procedures of operation with shared spectrum channel access. CSI measurement configuration parameters may be used to configure CSI-RS belonging to the serving cell, channel state information report to configure CSI-RS belonging to the serving cell and channel state information reports on PUSCH triggered by DCI received on the serving cell.

Downlink BWP configuration parameters may be used, for example, to configure dedicated (e.g., wireless device specific) parameters of one or more downlink BWPs. The one or more downlink BWPs may comprise at least one of an initial downlink BWP, a default downlink BWP, and/or a first active downlink BWP. The downlink BWP configuration parameters may comprise at least one of: configuration parameters for the one or more downlink BWPs; one or more downlink BWP IDs for the one or more downlink BWPs; and BWP inactivity timer. The configuration parameters for a downlink BWP may comprise at least one of: PDCCH configuration parameters for the downlink BWP; PDSCH configuration parameters for the downlink BWP; semi-persistent scheduling (SPS) configuration parameters for the downlink BWP; beam failure recovery SCell configuration parameters of candidate RS; and/or radio link monitoring configuration parameters for detecting cell and beam radio link failure occasions for the downlink BWP. The one or more downlink BWP IDs may comprise at least one of an initial downlink BWP ID, a default downlink BWP identity (ID), and/or a first active downlink BWP ID.

Uplink configuration parameters may be uplink configuration parameters for normal uplink carrier (e.g., not supplementary uplink carrier). The uplink configuration parameters, or the uplink configuration parameters for SUL, may be used to configure dedicated (e.g., wireless device specific) parameters of one or more uplink BWPs. The one or more uplink BWPs may comprise at least one of an initial uplink BWP and a first active uplink BWP. The uplink BWP configuration parameters may comprise at least one of: configuration parameters for the one or more uplink BWPs; one or more uplink BWP IDs for the one or more uplink BWPs; PUSCH parameters common across the wireless device's BWPs of a serving cell; SRS carrier switching information; and/or power control configuration parameters. The configuration parameters for a uplink BWP may comprise at least one of: one or more PUCCH configuration parameters for the uplink BWP; PUSCH configuration parameters for the uplink BWP; one or more configured uplink grant configuration parameters for the uplink BWP; SRS configuration parameters for the uplink BWP; beam failure recovery configuration parameters for the uplink BWP; and/or cyclic prefix (CP) extension parameters for the uplink BWP.

One or more uplink BWP IDs may comprise at least one of an initial uplink BWP ID (e.g., the initial uplink BWP ID =0) and/or an first active uplink BWP ID. A SRS carrier switching information may be used to configure for SRS carrier switching, for example, if PUSCH is not configured and independent SRS power control from that of PUSCH. The power control configuration parameters may comprise at least one of power control configuration parameters for PUSCH, power configuration control parameters for PUCCH, and/or power control parameters for SRS.

A wireless device-RRC layer in a RRC inactive or RRC idle state may receive a RRC reject message based on a RRC setup request message or a RRC resume request message. The RRC reject message may contain a wait timer. The wireless device-RRC layer may start timer T302, with the timer value set based on the wait timer. The wireless device-RRC layer may inform upper layers (e.g., UE-NAS layer) about the failure to setup a RRC connection or resume a RRC connection based on the RRC reject message. The wireless device-RRC layer may reset MAC and/or release the default MAC cell group configuration., the wireless device-RRC layer may inform the upper layer (e.g., NAS layer) that access barring is applicable for all access categories except categories '0' and '2' based on the RRC Reject received based on a request from upper layers.

A wireless device-RRC layer in a RRC inactive or RRC idle state may receive a RRC reject message based on a RRC resume request message. The wireless device-RRC layer may discard current security keys based on the RRC reject message. The wireless device-RRC layer may re-suspend the RRC connection. The wireless device-RRC layer may set pending RNA update value to true, for example, if resume is triggered due to an RNA update.

A wireless device-RRC layer in a RRC inactive or RRC idle state may perform a cell selection or reselection procedure, for example, if performing a RRC procedure to establish a RRC connection. The wireless device-RRC layer may change a cell of a camped wireless device and/or may stop the RRC procedure based on cell selection or cell selection or reselection. The wireless device-RRC layer may inform upper layers (e.g., NAS layer) about the failure of the RRC procedure.

A wireless device in a RRC connected state may detect a failure of a connection with a base station. The wireless device in the RRC connected state may activate AS security with the base station before detecting the failure. The failure may comprise at least one of: a radio link failure (RLF); a reconfiguration with sync failure; a mobility failure from new radio (NR); an integrity check failure indication from lower layers (e.g., PDCP layer) concerning signaling radio bearer 1 (SRB1) or signaling radio bearer 2 (SRB2); and/or a RRC connection reconfiguration failure.

A radio link failure may be a radio link failure of a primary cell of a base station. The base station may send (e.g., transmit) a reconfiguration with sync in a RRC message to a wireless device in a RRC connected state. The reconfiguration with sync may comprise a reconfiguration timer (e.g., T304). The wireless device may start the reconfiguration timer and may perform the reconfiguration with sync (e.g., handover) based on receiving the reconfiguration sync. The wireless device may determine the reconfiguration sync failure based on expiry of the reconfiguration timer. A base station may send (e.g., transmit) mobility from NR command message to the wireless device in RRC connected state. The wireless device may perform a handover from NR to a cell using other RAT (e.g., E-UTRA) based on receiving the mobility from NR command message. The wireless device may determine the mobility failure from NR, for example, based on at least one of conditions being met: if the wireless device does not succeed in establishing the connection to the target radio access technology; if the wireless device is unable to comply with any part of the configuration included in the mobility from NR command message; and/or if there is a protocol error in the inter RAT information included in the mobility from NR message.

A wireless device in a RRC connected state may initiate a RRC connection reestablishment procedure based on detecting a failure. The wireless device may start a timer T311, may suspend all radio bearers except for SRB0, and/or may reset MAC (layer), for example, based on initiating the RRC connection reestablishment procedure. The wireless device in the RRC connected state may release MCG SCells, release special cell (SpCell) configuration parameters, and/or multi-radio dual connectivity (MR-DC) related configuration parameters based on initiating the RRC connection reestablishment procedure. The wireless device may release master cell group configuration parameters, for example, based on initiating the RRC connection reestablishment procedure.

A wireless device in the RRC connected state may perform a cell selection procedure based on initiating the RRC connection reestablishment procedure. The wireless device may select a cell based on a signal quality of the cell exceeding a threshold based on the cell selection procedure. The wireless device in the RRC connected state may select a cell based on a signal quality of the cell exceeding a threshold. The wireless device may determine, based on a cell selection procedure, the selected cell exceeding the threshold. The signal quality may comprise at least one of: a reference signal received power; a received signal strength indicator; a reference signal received quality; and/or a signal to interference plus noise ratio.

A wireless device in a RRC connected state may stop a timer T311 and start a timer T301 based on selecting a suitable cell. The wireless device in the RRC connected state may stop a barring timer T390 for all access categories based on selecting the suitable cell. The wireless device in the RRC connected state may consider a barring for all access category to be alleviated for the cell based on stopping the barring timer T390. The wireless device in the RRC connected state may use the default L1 parameter values except for the parameters provided in SIB1, use the default MAC cell group configuration, use the CCCH configuration, use a timer alignment timer in SIB1, and/or initiate transmission of the RRC reestablishment request message Based on selecting the cell.

A wireless device in a RRC connected state may stop a timer T301 based on reception of a RRC response message in response to a RRC reestablishment request message. The RRC response message may comprise at least one of a RRC reestablishment message, a RRC setup message, and/or a RRC reestablishment reject message. The wireless device in the RRC connected state may stop the timer T301, for example, if the selected cell becomes unsuitable.

A wireless device in a RRC connected state may select an inter-RAT cell based on the cell selection procedure that may be triggered by initiating the RRC connection reestablishment procedure. The wireless device (UE-AS layer) in the RRC connected state may transition to RRC IDLE state and may provide a release cause 'RRC connection failure' to upper layers (UE-NAS layer) of the wireless device based on selecting an inter-RAT cell.

A wireless device in the RRC connected state may send (e.g., transmit) the RRC reestablishment request message based on initiating the transmission of the RRC reestablishment request message. The RRC reestablishment request message may comprise at least one of C-RNTI used in the source PCell, a physical cell identity (PCI) of the source PCell, short MAC-I, and/or a reestablishment cause. The reestablishment cause may comprise at least one of reconfiguration failure, handover failure, and/or other failure.

A wireless device (e.g., RRC layer) in the RRC connected state may re-establish PDCP for SRB 1, re-establish RLC for SRB1, use default SRB configurations for SRB1, configure lower layers (e.g., PDCP layer) to suspend integrity protection and ciphering for SRB1, resume SRB1, and/or submit the RRC reestablishment request message to lower layers (e.g., PDCP layer) for transmission based on initiating the transmission of the RRC reestablishment request message. The wireless device in the RRC connected state may send (e.g., transmit) the RRC reestablishment request message to a target base station via the cell selected based on the cell selection procedure wherein the target base station may or may not be the source base station based on submitting the RRC reestablishment request message to lower layers. The wireless device (UE-AS layer) may transition to a RRC idle state and may provide a release cause 'RRC connection failure' to upper layers (UE-NAS layer) of the wireless device Based on expiry of the timer T311 or T301.

A wireless device (e.g., UE-NAS layer) in a RRC idle state may perform a NAS signaling connection recovery procedure, for example, if the wireless device does not have signaling pending and user data pending, based on receiving the release cause 'RRC connection failure'. The wireless device in the RRC idle state may initiate the registration procedure by sending (e.g., transmitting) a registration request message to the AMF based on performing the NAS signaling connection recovery procedure. The wireless device (e.g., UE-NAS layer) in the RRC idle state may perform a service request procedure by sending (e.g., transmitting) a service request message to the AMF, for example, if the wireless device has signaling pending or user data pending, based on receiving the release cause 'RRC connection failure'.

A target base station may check, for example, if a wireless device context of a wireless device may be locally available based on receiving the RRC reestablishment request message. The target base station may perform a retrieve wireless device context procedure by sending (e.g., transmitting) a retrieve wireless device context request message to the source base station (e.g., the last serving base station) of the wireless device based on the wireless device context being not locally available.

A retrieve wireless device context request message may comprise, for a RRC connection reestablishment procedure, at least one of: a wireless device context ID; integrity protection parameters; and/or a new cell identifier. The wireless device context ID may comprise at least one of: C-RNTI contained the RRC reestablishment request message; and/or a PCI of the source PCell (e.g., the last serving PCell). The integrity protection parameters for the RRC reestablishment procedure may be the short MAC-I. The new cell identifier may be an identifier of the target cell where the target cell is a cell where the RRC connection has been requested to be re-established. The new cell identifier may be a cell identity in system information block (e.g., SIB1) of the target cell (e.g., the selected cell).

A source base station may check a retrieve wireless device context request message for a RRC connection reestablishment procedure, based on receiving the retrieve wireless device context request message. The source base station may respond to a target base station with a retrieve wireless device context response message, for example, if the source base station is able to identify the wireless device context by means of the wireless device context ID, successfully verifies the wireless device by means of the integrity protection contained in the retrieve wireless device context request message, and determines to provide the wireless device context to the target base station. The source base station may respond to the target base station with a retrieve wireless device context failure message, for example, if the source base station is not able to identify the wireless device context by means of the wireless device context ID, or if the integrity protection contained in the retrieve wireless device context request message is not valid.

A retrieve wireless device context response message may comprise at least one of Xn application protocol (XnAP) ID of the target base station, XnAP ID of the source base station, globally unique AMF identifier (GUAMI), and/or wireless device context information (e.g., wireless device context information retrieve wireless device context response) for the RRC connection reestablishment procedure. The wireless device context information may comprise at least one of a NG-C wireless device associated signaling reference, wireless device security capabilities, AS security information, wireless device aggregate maximum bit rate, PDU session to be setup list, RRC context, mobility restriction list, and/or index to RAT/frequency selection priority. The NG-C wireless device associated signaling reference may be a NG application protocol ID allocated at the AMF of the wireless device on the NG-C connection with the source base station. The AS security information may comprise a security key of a base station ($K_{gNB}$) and next hop chaining count (NCC) value. The PDU session to be setup list may comprise PDU session resource related information used at wireless device context in the source base station. The PDU session resource related information may comprise a PDU session ID, a PDU session resource aggregate maximum bitrate, a security indication, a PDU session type or QoS flows to be setup list. The security indication may comprise a user plane integrity protection indication and/or a confidentiality protection indication which may indicate the requirements on UP integrity protection and/or ciphering for the corresponding PDU session, respectively. The security indication may also comprise at least one of an indication that may indicate whether UP integrity protection is applied for the PDU session, an indication that may indicate whether UP ciphering is applied for the PDU session, and/or a maximum integrity protected data rate values (e.g., uplink and/or downlink) per wireless device for integrity protected DRBs. The PDU session type may indicate at least one of internet protocol version 4 (IPv4), IPv6, IPv4v6, ethernet, and/or unstructured. The QoS flow to be setup list may comprise at least one of QoS flow identifier, QoS flow level QoS parameters (e.g., the QoS Parameters to be applied to a QoS flow), and/or bearer identity. The retrieve wireless device context failure message may comprise at least XnAP ID of the target base station and a cause value For the RRC connection reestablishment procedure.

A target base station may send (e.g., transmit) a RRC reestablishment message to a wireless device, based on receiving a retrieve wireless device context response message, for the RRC connection reestablishment procedure. The RRC reestablishment message may comprise at least a network hop chaining count (NCC) value.

The wireless device may derive a new security key of a base station ($K_{gNB}$), based on at least one of current $K_{gNB}$ or next hop (NH) parameters associated to the NCC value, based on receiving the RRC reestablishment message. The wireless device may derive a security key for integrity protection of a RRC signaling ($K_{RRCint}$) and a security key for integrity protection of user plane (UP) data ($K_{UPint}$) based on the new security key of the base station and a previously configured integrity protection algorithm. The wireless device may derive a security key for ciphering a RRC signaling ($K_{RRCenc}$) and a security key for ciphering of user plane (UP) data ($K_{UPenc}$) based on the new security key of the base station and a previously configured ciphering algorithm. The wireless device may verify the integrity protection of the RRC reestablishment message based on the $K_{RRCint}$, and the previously configured integrity protection algorithm. The wireless device (UE-AS layer) may go to a RRC IDLE state and may provide a release cause 'RRC connection failure' to upper layers (UE-NAS layer) of the wireless device based on the verifying being failed. The wireless device may configure to resume integrity protection for SRB1, based on the previously configured integrity protection algorithm and the $K_{RRCint}$, and may configure to resume ciphering for SRB1, based on the previously configured ciphering algorithm and $K_{RRCenc}$, based on the verifying being successful. The wireless device may send (e.g., transmit) a RRC reestablishment complete message to the target base station.

A target base station may send (e.g., transmit) a RRC release message to the wireless device based on receiving the retrieve wireless device context failure message. The target base station may send (e.g., transmit) the RRC release message to the wireless device, for example, based on the retrieve wireless device context failure message comprising the RRC release message. The target base station may send (e.g., transmit) a RRC setup message and/or a RRC reject message based on receiving the retrieve wireless device context failure message. The target base station may not send (e.g., transmit) any response message to the wireless device Based on receiving the retrieve wireless device context failure message.

FIG. 17 shows an example of a RRC connection reestablishment procedure. A wireless device 1705 in a RRC connected state may send (e.g., transmit) and receive data to and/or from a first base station (e.g., a source base station) via cells where the cells comprise a primary cell (PCell) of the first base station. The wireless device 1705 may detect a failure 1720 of a connection with the first base station. The wireless device 1705 may initiate the RRC reestablishment procedure 1700 based on the failure 1720.

The wireless device 1705 may start a timer T311, suspend all radio bearers except for SRB0 1725, and/or reset a MAC (layer) based on initiating the RRC connection reestablishment procedure 1700. The wireless device 1705 may release MCG SCells, release the special cell (SpCell) configuration parameters, and/or the multi-radio dual connectivity (MR-DC) related configuration parameters 1730 based on initiating the RRC connection reestablishment procedure 1700. The wireless device 1705 may perform a cell selection procedure 1735 based on initiating the RRC connection reestablishment procedure 1700. The wireless device 1705 may select a second cell 1710 of a second base station (e.g., a target base station) where the second cell 1710 is a suitable cell based on the cell selection procedure 1735. The wireless device 1705 may stop the timer T311 and start a timer T301 based on selecting a suitable cell. The wireless device 1705 may stop one or more barring timer T309(s) for all access categories, based on selecting the suitable cell, for example, if the one or more barring timer T309(s) is running. The wireless device 1705 may consider barring for all access category to be alleviated for the cell based on stopping the one or more barring timer T309(s). The wireless device 1705 may use the default L1 parameter values except for the parameters provided in SIB1, use the default MAC cell group configuration, use the CCCH configuration, use a timer alignment timer in SIB1, and/or initiate transmission of a RRC reestablishment request message 1740 based on selecting the cell.

The RRC reestablishment message 1740 may comprise at least one of C-RNTI that may be used in the source PCell (e.g., the first cell 1715), a PCI of the source PCell, a short MAC-I, and/or a reestablishment cause. The wireless device 1705 (e.g., RRC layer) may re-establish PDCP for SRB1, re-establish RLC for SRB1, use default SRB configurations for SRB1, configure lower layers (e.g., PDCP layer) to suspend integrity protection and ciphering for SRB 1, resume SRB1 and submit the RRC reestablishment request message 1740 to lower layers (e.g., PDCP layer) for transmission based on initiating the transmission of the RRC reestablishment request message 1740. The wireless device 1705 may send (e.g., transmit) the RRC reestablishment request message 1740 to the second base station via the second cell 1710 based on initiating the transmission of the RRC reestablishment request message 1740.

The second base station may check whether a wireless device context of the wireless device 1705 may be locally available based on receiving the RRC reestablishment request message 1740. The second base station may perform the retrieve wireless device context procedure by sending (e.g., transmitting) a retrieve wireless device context request message 1745 to the source base station of the wireless device 1705 based on the wireless device context not being locally available. The retrieve wireless device context request message 1745 may comprise at least one of: a wireless device context ID; integrity protection parameters; or a new cell identifier. The wireless device context ID may comprise at least one of: C-RNTI contained the RRC reestablishment request message 1740; and a PCI of the source PCell (e.g., the last serving PCell). The integrity protection parameters for the RRC reestablishment procedure may be the short MAC-I. The new cell identifier may be an identifier of the target cell where the target cell is a cell where the RRC connection has been requested to be re-established. The new cell identifier may be a cell identity in a system information block (e.g., SIB1) of the target cell (e.g., the selected cell).

The source base station may check the retrieve wireless device context request message 1745 based on receiving the retrieve wireless device context request message 1745. The source base station may respond to the second base station with a retrieve wireless device context response message 1750, for example, if the source base station successfully identifies the wireless device context by means of the C-RNTI, successfully verifies the wireless device 1705 by means of the short MAC-I, and determines to provide the wireless device context to the second base station. The retrieve wireless device context response message 1750 may comprise at least one of GUAMI and/or the wireless device context information. The second base station may send (e.g., transmit) a RRC reestablishment message 1755 to the wireless device 1705 based on receiving the retrieve wireless device context response message 1750. The RRC reestablishment message 1755 may comprise a network hop chaining count (NCC) value.

The wireless device 1705 may derive a new security key 1760 of a base station ($K_{gNB}$) based on at least one of current $K_{gNB}$ or next hop (NH) parameters associated to the NCC value based on receiving the RRC reestablishment message 1755. The wireless device 1705 may derive security keys for integrity protection and/or ciphering of RRC signaling (e.g., $K_{RRCint}$ and $K_{RRCenc}$ respectively) and user plane (UP) data (e.g., $K_{UPint}$ and $K_{UPenc}$ respectively) based on the new security key of a base station ($K_{gNB}$) and the previously configured security algorithms. The wireless device 1705 may verify the integrity protection of the RRC reestablishment message 1755 based on the security key for integrity protection of the RRC signaling ($K_{RRCint}$). The wireless device 1705 may configure to resume integrity protection 1765 for one or more bearers (e.g., signaling radio bearer or a RRC message) based on the previously configured integrity protection algorithm and the $K_{RRCint}$ and configure to resume ciphering for one or more bearers based on the previously configured ciphering algorithm and the $K_{RRCenc}$ based on the verifying being successful.

The second base station may send (e.g., transmit) a first RRC reconfiguration message 1770. The first RRC reconfiguration message 1770 may comprise the SpCell configuration parameters. The wireless device 1705 may initiate transmission and reception of data to and/or from the second base station based on receiving the SpCell configuration parameters. The wireless device 1705 may send (e.g., transmit) a RRC reestablishment complete message 1775 to the second base station. The RRC reestablishment complete message 1775 may comprise measurement report. The second base station may determine to configure SCells and/or secondary cell groups (e.g., SCG or PSCells) based on receiving the measurement report. The second base station may send (e.g., transmit) a second RRC reconfiguration message 1780 comprising SCell configuration parameters and/or MR-DC related configuration parameters based on the determining. The wireless device 1705 may send (e.g., transmit) and receive data via the SCells and/or SCGs based receiving the second RRC reconfiguration message 1780. A RRC reconfiguration message may comprise at least one of cell group configuration parameters of MCG and/or SCG, radio bearer configuration parameters or AS security key parameters.

A base station may initiate a RRC connection release procedure to transit a RRC state of a wireless device from a RRC connected state to a RRC idle state, from a RRC connected state to a RRC inactive state, of from a RRC inactive state back to a RRC inactive state, for example, if the wireless device tries to resume, or from RRC inactive state to RRC idle state, for example, if the wireless device tries to resume. The RRC connection procedure may also be used to release a RRC connection of the wireless device and redirect a wireless device to another frequency. The base station may send (e.g., transmit) to a wireless device the RRC release message comprising suspend configuration parameters. The wireless device may suspend a RRC connection based on the RRC release message. The wireless device may transition a RRC state of the wireless device to a RRC inactive state or a RRC idle state. The suspend configuration parameters may comprise at least one of a resume identity, RNA configuration, RAN paging cycle, and/or network hop chaining count (NCC) value where the RNA configuration may comprise RNA notification area information, or periodic RNA update timer value (e.g., T380 value). The base station may use the resume identity (e.g., inactive-RNTI (I-RNTI)) to identify the wireless device context, for example, if the wireless device 1705 is in RRC inactive state.

A base station may include a NCC in suspend configuration parameters, for example, if the base station has a fresh and unused pair of {NCC, next hop (NH)}. Otherwise, the base station may include the same NCC associated with the current $K_{gNB}$ in the suspend configuration parameters. The NCC may be used for AS security. The base station may delete the current AS keys (e.g., $K_{RRCenc}$, $K_{UPenc}$), and $K_{UPint}$ after sending (e.g., transmitting) a RRC release message comprising the suspend configuration parameters to the wireless device 1705 but may keep the current AS key $K_{RRCint}$. The base station may save the pair of {NCC, NH} in the current wireless device AS security context and may delete the current AS key $K_{gNB}$, for example, if the sent NCC value is fresh and belongs to an unused pair of {NCC, NH}. The base station may keep the current AS key $K_{gNB}$ and NCC, for example, if the sent NCC value is equal to the NCC value associated with the current $K_{gNB}$. The base station may store the sent resume identity together with the current wireless device context including the remainder of the AS security context.

A wireless device may verify that the integrity of a received RRC release message comprising suspend configuration parameters may be correct by checking PDCP MAC-I based on receiving the RRC release message comprising the suspend configuration parameters from the base station. The wireless device may take the received NCC value and save it as stored NCC with the current wireless device context, for example, if the verification is successful. The wireless device may delete the current AS keys $K_{RRCenc}$, $K_{UPenc}$, and $K_{UPint}$, but keep the current AS key $K_{RRCint}$ key. The wireless device may delete the current AS key $K_{gNB}$, for example, if the stored NCC value is different from the NCC value associated with the current $K_{gNB}$. The wireless device shall keep the current AS key KgNB, for example, if the stored NCC is equal to the NCC value associated with the current $K_{gNB}$. The wireless device may store the received resume identity together with the current wireless device context including the remainder of the AS security context, for the next state transition.

A wireless device may reset MAC, release the default MAC cell group configuration, and/or re-establish RLC entities for one or more bearers based on receiving the RRC release message comprising the suspend configuration parameters. The wireless device may store in the wireless device inactive AS context current configuration parameters and current security keys based on receiving the RRC release message comprising suspend configuration parameters. The wireless device may store some of the current configuration parameters. The stored current configuration parameters may comprise a robust header compression (ROHC) state, quality of service (QoS) flow to DRB mapping rules, the C-RNTI used in the source PCell, the global cell identity, and/or the PCI of the source PCell, and all other parameters configured except for the ones within reconfiguration with sync and serving cell configuration common parameters in SIB. The stored security keys may comprise at least one of $K_{gNB}$ and $K_{RRCint}$. The serving cell configuration common parameters in SIB may be used to configure cell specific parameters of a wireless device's serving cell in SIB 1. The wireless device may suspend all SRB(s) and DRB(s) except for SRB0 based on receiving the RRC release message comprising the suspend configuration parameters. The wireless device may start a timer T380, enter RRC inactive state, perform cell selection procedure based on receiving the RRC release message comprising suspend configuration parameters.

A wireless device in a RRC inactive state may initiate a RRC connection resume procedure. The wireless device in RRC inactive state may initiate the RRC connection resume procedure, for example, based on having data or signaling to send (e.g., transmit), or receiving RAN paging message., the wireless device may select access category based on triggering condition of the RRC connection resume procedure and may perform a unified access control procedure based on the access category based on initiating the RRC connection resume procedure. The wireless device may consider access attempt for the RRC connection resume procedure as allowed based on the unified access control procedure. The wireless device may use the default L1 parameter values as specified in corresponding physical layer specifications, except for the parameters for which values are provided in SIB1, use the default SRB1 configuration, use the CCCH configuration, use the time alignment timer common included in SIB1, use the default MAC cell group configuration, start a timer T319, and/or initiate transmission of a RRC resume request message based on considering the access attempt as allowed.

A wireless device may set the contents of the RRC resume request message based on initiating the transmission of the RRC resume request message. The RRC resume request message may comprise at least one of resume identity, resume MAC-I, and/or resume cause. The resume cause may comprise at least one of emergency, high priority access, mt access, mo signaling, mo data, mo voice call, mo sms, ran update, mps priority access, and/or mcs priority access.

A wireless device may restore stored configuration parameters and stored security keys from wireless device inactive AS context (e.g., stored wireless device inactive AS context) except for master cell group configuration parameters, MR-DC related configuration parameters (e.g., secondary cell group configuration parameters), and/or PDCP configuration parameters based on initiating the transmission of the RRC resume request message. The configuration parameter may comprise at least one of the C-RNTI used in the source PCell, the global cell identity, and/or the physical cell identity of the source PCell, and all other parameters configured except for the ones within reconfiguration with sync and serving cell configuration common parameters in SIB. The wireless device may derive a new key of a base station ($K_{gNB}$) based on current (e.g., restored) $K_{gNB}$ or next hop (NH) parameters associated to the stored NCC value. The wireless device may derive security keys for integrity protection and ciphering of RRC signaling (e.g., $K_{RRCenc}$ and $K_{RRCint}$ respectively) and security keys for integrity protection and ciphering of user plane data (e.g., $K_{UPint}$ and the $K_{UPenc}$ respectively) Based on the new key of the base station. The wireless device may configure lower layers (e.g., PDCP layer) to use integrity protection for all radio bearers except SRB0 based on configured algorithm and the $K_{PRcint}$ and $K_{UPint}$. The wireless device may configure lower layers (e.g., PDCP layer) to use ciphering for all radio bearers except SRB0 based on configured algorithm and the $K_{RRCenc}$ and the $K_{UPenc}$. The wireless device may re-establish PDCP entities for one or more bearers, resume the one or more bearers, and/or submit the RRC resume request message to lower layers where the lower layers may comprise at least one of PDCP layer, RLC layer, MAC layer, and/or physical (PHY) layer based on initiating the transmission of the RRC resume request message.

A target base station may receive a RRC resume request message. The target base station may check whether a wireless device context of a wireless device may be locally available based on receiving the RRC resume request message. The target base station may perform a retrieve wireless device context procedure by sending (e.g., transmitting) a retrieve wireless device context request message to the source base station (e.g., the last serving base station) of the wireless device based on the wireless device context being not locally available. The retrieve wireless device context request message may comprise at least one of a wireless device context ID, integrity protection parameters, a new cell identifier, and/or the resume cause where the resume cause is in the RRC resume request message.

A source base station may check a retrieve wireless device context request message based on receiving the retrieve wireless device context request message for a RRC connection resume procedure. The source base station may respond to a target base station with the retrieve wireless device context response message, for example, if the source base station is able to identify a wireless device context by means of a wireless device context ID, and to successfully verify the wireless device by means of the integrity protection contained in the retrieve wireless device context request message and determines to provide the wireless device context to the target base station. Alternatively, the source base station may respond to the target base station with a retrieve wireless device context failure message, for example, if the source base station is not able to identify the wireless device context by means of the wireless device context ID, or the integrity protection contained in the retrieve wireless device context request message is not valid, or the source base station determines not to provide the wireless device context to the target base station. The retrieve wireless device context failure message may comprise at least XnAP ID of the target base station, a RRC release message or a cause value for the RRC connection resume procedure.

A target base station may send (e.g., transmit) a RRC resume message to a wireless device for a RRC connection resume procedure, based on receiving a retrieve wireless device context response message. The RRC resume message may comprise at least one of radio bearer configuration parameters, cell group configuration parameters for MCG and/or SCG, measurement configuration parameters, and/or sk counter where the sk counter may be used to derive a security key of secondary base station based on $K_{gNB}$.

A target base station may send (e.g., transmit) a RRC release message to a wireless device based on receiving the retrieve wireless device context failure message. The target base station may send (e.g., transmit) the RRC release message to the wireless device, for example, based on the retrieve wireless device context failure message comprising the RRC release message. The target base station may send (e.g., transmit) a RRC setup message or a RRC reject message based on receiving the retrieve wireless device context failure message. The target base station may not send (e.g., transmit) any response message to the wireless device based on receiving the retrieve wireless device context failure message.

A wireless device may stop a timer T319 and T380 based on receiving a RRC resume message. The wireless device may restore mater cell group configuration parameters, secondary cell group configuration parameters and PDCP configuration parameters in the wireless device inactive AS context based on receiving the RRC resume message. The wireless device may configure SCells of MCG and/or SCG by configuring lower layers to consider the restored MCG and/or SCG SCells to be in deactivated state, discard the wireless device inactive AS context and release the suspend configuration parameters based on restoring the master cell group configuration parameter and/or the secondary cell group configuration parameters.

A wireless device may perform cell group configuration of MCG and/or SCG based on receiving cell group configuration parameters in a RRC resume message. The wireless device may perform radio bearer configuration based on receiving radio bearer configuration parameters in the RRC resume message. The wireless device may perform to update the security key of secondary base station based on the sk counter in the RRC resume message.

A wireless device may remain in CM-CONNECTED and move within an area configured by a base station without notifying the base station, for example, if the wireless device is in a RRC inactive state where the area may be an RNA. A last serving base station may keep the wireless device context and the wireless device-associated NG connection with the serving AMF and UPF in a RRC inactive state. The last serving base station may page in cells corresponding to the RNA and may send (e.g., transmit) RAN paging via an Xn interface to neighbor base stations, for example, if the RNA includes cells of neighbor base stations based on received downlink data from the UPF or downlink wireless device-associated signaling from the AMF, for example, if the wireless device is in RRC inactive state.

An AMF may provide a base station core network assistance information to assist the base station in determining, for example, if a wireless device can be sent to RRC inactive state. The core network assistance information may include registration area configured for a wireless device, a periodic registration update timer, a wireless device identity index value, a wireless device specific DRX, an indication indicating, for example, if the wireless device is configured with mobile initiated connection only (MICO) mode by the AMF, and/or the expected wireless device behavior. The base station may use the wireless device specific DRX and the wireless device identity index value to determine a paging occasion for RAN paging. The base station may use a periodic registration update timer to configure a periodic RNA update timer (e.g., a timer T380). The base station may use an expected wireless device behavior to assist the wireless device RRC state transition decision.

FIG. 18 shows an example of a RRC connection resume procedure 1800. A wireless device 1805 in a RRC connected state 1820 may send (e.g., transmit) data 1825 to and/or receive data 1825 from a first base station (e.g., a source base station) via a first cell 1815. The first base station may determine to transit a wireless device 1805 in a RRC connected state to a RRC inactive state. The base station may send (e.g., transmit) a RRC release message 1830 comprising suspend configuration parameters based on the determining.

The wireless device 1805 may store in a wireless device inactive AS context current security keys (e.g., $K_{gNB}$ and KRRCint keys) and current configuration parameters based on receiving a RRC release message comprising suspend configuration parameters. The wireless device 1805 may store one or more of the current configuration parameters 1840. The stored (e.g., current) configuration parameters may be at least one of: a robust header compression (ROHC) state; a QoS flow to DRB mapping rules; a C-RNTI used in source PCell; a global cell identity and physical cell identity of the source PCell; and/or all other parameters configured, except for configuration parameters within reconfiguration with sync and serving cell configuration common parameters in SIB. The robust header compression (ROHC) state may comprise ROHC states for all PDCP entity, or all bearers, where each PDCP entity per bearer, or each bearer, may have one ROHC state. The QoS flow to DRB mapping rules may be QoS flow to DRB mapping rules for all data radio bearer (DRB) where each DRB may have one QoS follow to DRB mapping rule.

The wireless device 1805 may suspend all radio bearers 1845 (e.g., SRB(s) and DRB(s)) except for SRB0 based on receiving a RRC release message 1830 comprising suspend configuration parameters. The wireless device 1805 may start a timer T380, enter a RRC inactive state, perform cell selection procedures based on receiving the RRC release message 1830 comprising suspend configuration parameters. The wireless device 1805 may select a second cell 1810 of a second base station (e.g., a target base station) based on the cell selection procedure. The wireless device 1805, in a RRC inactive state, may initiate a RRC connection resume procedure 1850. The wireless device 1805 may perform the unified access control procedure. The wireless device 1805 may consider access attempt for the RRC connection resume procedure 1850 as allowed based on the unified access control procedure. The wireless device 1805 may use the default SRB1 configuration, use the CCCH configuration, use the time alignment timer common included in SIB1, use the default MAC cell group configuration, start a timer T319, initiate a transmission of a RRC resume request message, and/or use the default L1 parameter values as specified in corresponding physical layer specifications, except for the parameters for which values are provided in SIB1.

The wireless device 1805 may restore the stored configuration parameters and/or the stored security keys 1855 from the wireless device inactive AS context (e.g., the stored wireless device inactive AS context) based on initiating the transmission of the RRC resume request message. The wireless device 1805 may restore the stored configuration parameters and/or the stored security keys 1855 (e.g., $K_{gNB}$ and $K_{RRCint}$) from the stored wireless device inactive AS context, except for the master cell group configuration parameters, MR-DC related configuration parameters (e.g., secondary cell group configuration parameters), and/or PDCP configuration parameters. The wireless device 1805 may derive a new key of a base station ($K_{gNB}$) based on current (e.g., restored) $K_{gNB}$ or next hop (NH) parameters associated with the stored NCC value 1860. The wireless device 1805 may derive security keys for integrity protection and ciphering of RRC signaling (e.g., $K_{RRCenc}$ and $K_{RRCint}$ respectively) and security keys for integrity protection and ciphering of user plane data (e.g., $K_{UPint}$ and the $K_{UPenc}$ respectively) based on the new key of the base station. The wireless device 1805 (e.g., RRC layer) may configure lower layers (e.g., PDCP layer) to use integrity protection for all radio bearers except SRB0 1865 based on configured algorithm and the $K_{RRCint}$ and $K_{UPint}$. The wireless device 1805 may configure lower layers (e.g., PDCP layer) to use ciphering for all radio bearers except SRB0 1865 based on configured algorithm and the $K_{RRCenc}$ and the $K_{UPenc}$. The integrity protection and/or the ciphering may be required for communication between the wireless device 1805 and the base station. The wireless device 1805 may be able to send (e.g., transmit) and receive data to and/or from the second base station based on the integrity protection and/or the ciphering. The wireless device 1805 may use the restored configuration parameters to send (e.g., transmit) and receive the data to and/or from the second base station.

The wireless device 1805 may re-establish PDCP entities for one or more bearers 1870, resume one or more bearers, and/or submit a RRC resume request message to lower layers based on initiating the transmission of the RRC resume request message 1875. The second base station may check whether the wireless device context of the wireless device 1805 may be locally available based on receiving the RRC resume request message 1875. The second base station may perform the retrieve wireless device context procedure by sending (e.g., transmitting) the retrieve wireless device context request message 1880 to the first base station (e.g., the last serving base station) of the wireless device 1805 based on the wireless device context not being locally available. The retrieve wireless device context request message 1880 may comprise at least one of: resume identity; resume MAC-I; or the resume cause.

The first base station may check the retrieve wireless device context request message 1880 based on receiving the retrieve wireless device context request message 1880. The first base station may respond to the second base station with a retrieve wireless device context response message 1885, for example, if the first base station is able to identify the wireless device context by means of the wireless device context ID, and is able to successfully verify the wireless device 1805 by means of the resume MAC-I, and determines to provide the wireless device context to the second base station. The second base station may send (e.g., transmit) a RRC resume message 1895 to the wireless device 1805 based on receiving the retrieve wireless device context response message 1885. The wireless device 1805 may restore mater cell group configuration parameters, secondary cell group configuration parameters and PDCP configuration parameters in the wireless device inactive AS context based on receiving the RRC resume message 1895. The wireless device 1805 may configure SCells of MCG and/or SCG by configuring lower layers to consider restored MCG and/or SCG SCells to be in a deactivated state, discard the wireless device inactive AS context, and/or release the suspend configuration parameters based on restoring the master cell group configuration parameter and/or the secondary cell group configuration parameters. The wireless device 1805 may send (e.g., transmit) and receive data via the SCells and/or SCGs.

A base station may send (e.g., transmit) a RRC release message to a wireless device to release a RRC connection of the wireless device. The wireless device 1805 may release established radio bearers as well as all radio resources based on the RRC release message.

A base station may send (e.g., transmit) a RRC release message to a wireless device to suspend the RRC connection. The wireless device may suspend all radio bearers except for signaling radio bearer 0 (SRBO) Based on the RRC release message. The RRC release message may comprise suspend configuration parameters. The suspend configuration parameters may comprise next hop chaining count (NCC) and/or resume identity (e.g., ID or identifier).

A base station may send (e.g., transmit) a RRC release message to transit a wireless device in a RRC connected state to a RRC idle state; or to transit a wireless device in a RRC connected state to a RRC inactive state; or to transit a wireless device in a RRC inactive state back to a RRC inactive state, for example, if the wireless device tries to resume. A base station may send (e.g., transmit) a RRC release message to transit a wireless device in a RRC inactive state to a RRC idle state, for example, if the wireless device tries to resume. A base station may send (e.g., transmit) a RRC release message to redirect a wireless device to another frequency.

A wireless device may receive a RRC release message from the base station of a serving cell (e.g., PCell). The wireless device may perform wireless device actions for the RRC release message from the base station based on the RRC release message. The wireless device may delay actions of the wireless device for a period of time (e.g., 60 ms) from the receipt of the RRC release message or the receipt of the RRC release message successful acknowledgement. The wireless device may send (e.g., transmit) HARQ acknowledgments to the base station for acknowledgments of the RRC release message. The wireless device may send (e.g., transmit) a RLC message (e.g., a status report) to the base station for acknowledgments of the RRC release message based on a RLC protocol data unit (PDU) comprising the RRC release message and the RLC PDU comprising poll bit.

Actions of a wireless device for a RRC release message from a base station may comprise at least one of: suspending a RRC connection; releasing a RRC connection; cell (re)selection procedure; and/or idle and/or inactive measurements. The RRC release message from the base station may comprise the suspend configuration parameters. The wireless device may perform the suspending a RRC connection based on the suspend configuration parameters.

The suspending a RRC connection may comprise at least one of: a medium access control (MAC) reset (e.g., resetting MAC); releasing a default MAC cell group configuration; re-establishing RLC entities for one or more radio bearers; storing current configuration parameters and/or current security keys; suspending one or more bearers where the bearers comprise signaling radio bearer and/or data radio bearer; and/or transitioning a RRC idle state or a RRC inactive state.

A suspend configuration parameters may further comprise RNA configuration parameters. The wireless device may transition to a RRC inactive state based on the RNA configuration parameters. The wireless device may transition to a RRC idle state, for example, based on the suspend configuration parameters not comprising the RNA configuration parameters. The RRC release message comprising the suspend configuration parameters may comprise an indication transitioning to a RRC inactive state. The wireless device may transition to a RRC inactive state based on the indication. The wireless device may transition to a RRC idle state, for example, based on the RRC release message not comprising the indication.

A wireless device may perform, based on the MAC reset, at least one of: stop all timers running in the wireless device-MAC layer; consider all time alignment timers as expired; set new data indicators (NDIs) for all uplink HARQ processes to the value 0; stop, ongoing RACH procedure; discard explicitly signaled contention-free Random Access Resources, if any; flush Msg 3 buffer; cancel, triggered scheduling request procedure; cancel, triggered buffer status reporting procedure; cancel, triggered power headroom reporting procedure; flush the soft buffers for all DL HARQ processes; for each DL HARQ process, consider the next received transmission for a TB as the very first transmission; and/or release, temporary C-RNTI.

A wireless device may perform, based on the considering the time alignment timers as expired, at least one of: flush all HARQ buffers for all serving cells; notify RRC to release PUCCH for all Serving cells, if configured; notify RRC to release SRS for all serving cells, if configured; clear any configured downlink assignments and configured uplink grants; clear any PUSCH resource for semi-persistent CSI reporting; and/or consider all running time alignment timers as expired.

Default MAC cell group configuration parameters may comprise buffer status report (BSR) configuration parameters (e.g., BSR timers) for a cell group of the base station and power headroom reporting (PHR) configuration parameters (e.g., PHR timers or PHR transmission power factor change parameter) for the cell group of the base station. Re-establishing RLC entities may comprise at least one of: discarding all RLC SDUs, RLC SDU segments, and RLC PDUs, if any; stopping and resetting all timers of the RLC entities; and resetting all state variables of the RLC entities to their initial values.

A RRC release message from a base station may not comprise suspend configuration parameters. The wireless device may perform the releasing a RRC connection based on the RRC message not comprising the suspend configuration parameters. The releasing a RRC connection may comprise at least one of: MAC reset (e.g., resetting MAC); discarding the stored configuration parameters and stored security keys (e.g., discarding the stored wireless device inactive AS context); releasing the suspend configuration parameters; releasing all radio resources, including release of RLC entity, MAC configuration and associated PDCP entity and SDAP for all established radio bearers; and/or transitioning to a RRC idle state. The RRC release message may comprise a RRC early data complete message.

Layers may be associated with an open system interconnection (OSI) model of computer networking functionality. Layer 1 may correspond to the bottom layer, with higher layers on top of the bottom layer In the OSI model. Layer 1 may correspond to a physical layer, which may be concerned with the physical infrastructure used for transfer of signals (e.g., cables, fiber optics, and/or radio frequency transceivers). Layer 1 may comprise a physical layer (PHY) in New Radio (NR). Layer 2 may correspond to a data link layer. Layer 2 may be concerned with packaging of data (e.g., into data frames) for transfer, between nodes of the network, using the physical infrastructure of layer 1. Layer 2 may comprise a media access control layer (MAC), a radio link control layer (RLC), a packet data convergence layer (PDCP), and a service data application protocol layer (SDAP) in NR.

Layer 3 may correspond to a network layer. Layer 3 may be concerned with routing of the data which may be packaged in layer 2. Layer 3 may handle prioritization of data and traffic avoidance. Layer 3 may comprise a radio resource control layer (RRC) and a non-access stratum layer (NAS) in NR. Layers 4 through 7 may correspond to a transport layer, a session layer, a presentation layer, and/or an application layer. The application layer may interact with an end user to provide data associated with an application. An end user implementing the application may generate data associated with the application and initiate sending (e.g., transmitting) of that information to a targeted data network (e.g., the Internet, an application server, etc.). Each layer in the OSI model may manipulate and/or repackage the information and deliver it to a lower layer starting at the application layer. The manipulated and/or repackaged information may be exchanged via physical infrastructure (e.g., electrically, optically, and/or electromagnetically) at the lowest layer. The information may be unpackaged and may be provided to higher and higher layers, until it again reaches the application layer in a form that may be usable by the targeted data network (e.g., the same form in which it was provided by the end user) as it approaches the targeted data network. The data network may perform this procedure in reverse to respond to the end user.

A user plane protocol stack, as described herein in FIG. 2A, may be a new radio (NR) protocol stack for a Uu interface between a wireless device and a base station. The wireless device may implement PHY and the base station may implement PHY in layer 1 of the UP protocol stack. The wireless device may implement MAC, RLC, PDCP, and/or SDAP in layer 2 of the UP protocol stack. The base station may implement MAC, RLC, PDCP, and/or SDAP.

A control plane protocol stack, as described herein in FIG. 2B, may be an NR protocol stack for the Uu interface between a wireless device and a base station and/or an N1 interface between the wireless device and an AMF. The wireless device may implement PHY and the base station may implement PHY in layer 1 of the CP protocol stack. The wireless device may implement MAC, RLC, PDCP, RRC, and/or NAS. The base station may implement MAC, RLC, PDCP, and/or RRC. The AMF may implement NAS in layer 2 of the CP protocol stack.

A NAS, as described herein in FIG. 2B, may be concerned with the non-access stratum communication between a wireless device and a core network (e.g., the AMF). Lower layers may be concerned with the access stratum, for example, communication between the wireless device and a base station. Messages sent between the wireless device and the core network may be referred to as NAS messages. A NAS message may be relayed by the base station, but the content of the NAS message (e.g., information elements of the NAS message) may not be visible to the base station.

A wireless device may receive services through a PDU session, as described herein in FIG 3, which may be a logical connection between the wireless device and a data network (DN). The wireless device and the DN may exchange data packets associated with the PDU session. The PDU session may comprise one or more quality of service (QoS) flows. SDAP may perform mapping and/or demapping between the one or more QoS flows of the PDU session and one or more radio bearers (e.g., data radio bearers). The mapping between the QoS flows and the data radio bearers may be determined in the SDAP by the base station, and the wireless device may be notified of the mapping (e.g., based on control signaling and/or reflective mapping). The SDAP of the base station may mark downlink packets with a QoS flow indicator (QFI) and deliver the downlink packets to the wireless device for reflective mapping. The wireless device may determine the mapping based on the QFI of the downlink packets.

PDCP may perform header compression and/or decompression as described herein in FIG 3. Header compression may reduce the amount of data sent (e.g., transmitted) over a physical layer. The PDCP may perform ciphering and/or deciphering. Ciphering may reduce unauthorized decoding of data sent (e.g., transmitted) over the physical layer (e.g., intercepted on an air interface), and protect data integrity (e.g., to ensure control messages originate from intended sources). The PDCP may perform retransmissions of undelivered packets, in-sequence delivery and reordering of packets, duplication of packets, and/or identification and removal of duplicate packets. PDCP may perform mapping between a split radio bearer and RLC channels In dual connectivity.

RLC may perform segmentation and/or retransmission through automatic repeat request (ARQ) as described herein in FIG 3. The RLC may perform removal of duplicate data units received from MAC , respectively. The RLCs may provide RLC channels as a service to PDCPs, respectively.

MAC may perform multiplexing and/or demultiplexing of logical channels as described herein in FIG 3. MAC and MAC may map logical channels to transport channels. A wireless device may, in MAC, multiplex data units of one or more logical channels into a transport block. The wireless device may send (e.g., transmit) a transport block to a base station using PHY. The base station may receive the transport block using PHY and demultiplex data units of the transport blocks back into logical channels. MAC may perform error correction through Hybrid Automatic Repeat Request (HARQ), logical channel prioritization, and/or padding.

PHY may perform mapping of transport channels to physical channels as described herein in FIG 3. PHY may perform digital and analog signal processing functions (e.g., coding or decoding and modulation or demodulation) for sending (e.g., transmitting) and receiving information (e.g., transmission via an air interface). PHY may perform multi-antenna mapping.

One or more of the base stations of the NG-RAN may be split into a central unit (CU) and/or one or more distributed units (DUs). A CU may be coupled to one or more DUs via an F1 interface. The CU may handle one or more upper layers in the protocol stack and the DU may handle one or more lower layers in the protocol stack. The CU may handle RRC, PDCP, and SDAP, and the DU may handle RLC, MAC, and PHY. The one or more DUs may be in geographically diverse locations relative to the CU and/or each other. Accordingly, the CU/DU split architecture may permit increased coverage and/or better coordination.

A CU may be referred to as and/or interchangeable with a base station central unit, a central unit of a base station, a CU, or a gNB-CU. The distributed unit may be referred to as and/or interchangeable with a base station distributed unit, a distributed unit of a base station, a DU, or a gNB-DU.

a wireless device may measure multiple beams (e.g., at least one) of a cell and the measurements results (e.g., power values) may be averaged to derive the cell quality in a RRC connected state. The wireless device may be configured to consider a subset of the detected beams. Filtering may take place at two different levels: at the physical layer to derive beam quality and then at RRC level to derive cell quality from multiple beams. Cell quality from beam measurements may be derived in the same way for the serving cell(s) and for the non-serving cell(s). Measurement reports may contain the measurement results of the X best beams, for example, if the wireless device is configured to do so by a base station (e.g., gNB).

Layer 1 filtering may be internal layer 1 filtering of inputs measured at point A. Exact filtering may be implementation dependent. The measurements may be executed in a physical layer by an implementation (e.g., inputs A and Layer 1 filtering). The A may be measurements (e.g., beam specific samples) internal to the physical layer. A1 may be measurements (e.g., beam specific measurements) reported by layer 1 to layer 3 after layer 1 filtering.

Layer 1 filtering may introduce a certain level of measurement averaging. How and if the wireless device may perform the required measurements may be implementation specific to the point that the output at B may fulfil set performance requirements. The B may be a measurement (e.g., cell quality) derived from beam-specific measurements reported to layer 3 after beam consolidation and/or selection. The beam consolidation and/or selection is beam specific measurements which are consolidated to derive cell quality. The configuration of this module may be provided by RRC signaling. Reporting period at B may equal one measurement period at A1.

Layer 3 filtering for cell quality may be filtering performed on the measurements provided at point B. The configuration of the layer 3 filters may be provided by a RRC signaling. Filtering reporting period at C in may equal one measurement period at B. Layer 3 filtering for cell quality and related parameters used may not introduce any delay in the sample availability between B and C. Measurement at point C, C1 may be the input used in the event evaluation. The C may be a measurement based on (e.g., after) processing in the layer 3 filter. The reporting rate may be identical to the reporting rate at point B. This measurement may be used as input for one or more evaluation of reporting criteria. Evaluation of reporting criteria may check whether actual measurement reporting may be necessary at point D. The D may be measurement report information (message) sent on the radio interface. The evaluation may be based on more than one flow of measurements at reference point C, for example, to compare between different measurements. This may be shown by input C and C1. The wireless device evaluates the reporting criteria at least every time a new measurement result may be reported at point C, C1. The configuration may be provided by RRC signaling (e.g., wireless device measurements).

L3 beam filtering and related parameters that may be used may not introduce delay in a sample availability between E and F. L3 beam filtering may be filtering performed on measurements (e.g., beam specific measurements) provided at point A1. Configuration of the beam filters may be provided by RRC signaling. The L3 beam filtering may provide K beams. The K beams may correspond to the measurements on SSB and/or CSI-RS resources configured for L3 mobility by a base station (e.g., gNB) and detected by a wireless device at L1. Filtering reporting period at E may equal one measurement period at A1. E may be a measurement (e.g., beam-specific measurement) after processing in the beam filter. A reporting rate may be identical to a reporting rate at point A1. This measurement may be used as input for selecting X measurements to be reported. Beam selection for beam reporting may comprise selecting the X measurements from the measurements provided at point E. The configuration of this module may be provided by RRC signaling. F may be beam measurement information included in measurement report (sent) on the radio interface.

Measurement reports may be characterized by the following: measurement reports may include measurement identity of an associated measurement configuration that may have triggered the reporting; cell and beam measurement quantities to be included in measurement reports may be configured by a network; the number of non-serving cells to be reported may be limited through configuration by the network; cells belonging to a blacklist configured by the network may not be used in event evaluation and/or reporting, and/or, conversely, only cells belonging to a whitelist may be used in event evaluation and/or reporting if the whitelist is configured by the network; beam measurements to be included in measurement reports may be configured by the network (e.g., beam identifier only, measurement result and/or beam identifier, and/or no beam reporting).

Intra-frequency neighbour (e.g., cell) measurements and/or inter-frequency neighbour (e.g., cell) measurements may be defined, for example, as follows: SSB based intra-frequency measurement if a measurement is defined as an SSB based intra-frequency measurement provided that the center frequency of the SSB of the serving cell and the center frequency of the SSB of the neighbour cell are the same, and the subcarrier spacing of the two SSBs is also the same; SSB based inter-frequency measurement if a measurement is defined as an SSB based inter-frequency measurement provided the center frequency of the SSB of the serving cell and the center frequency of the SSB of the neighbour cell are different, or the subcarrier spacing of the two SSBs is different; CSI-RS based intra-frequency measurement; and/or CSI-RS based inter-frequency measurement if a measurement is defined as a CSI-RS based inter-frequency measurement and if it is not a CSI-RS based intra-frequency measurement.

CSI-RS based intra-frequency measurement may be a measurement defined as a CSI-RS based intra-frequency measurement provided that: the subcarrier spacing of CSI-RS resources on the neighbour cell configured for measurement is the same as the SCS of CSI-RS resources on the serving cell indicated for measurement; for 60kHz subcarrier spacing, the CP type of CSI-RS resources on the neighbour cell configured for measurement is the same as the CP type of CSI-RS resources on the serving cell indicated for measurement; and/or the center frequency of CSI-RS resources on the neighbour cell configured for measurement is the same as the center frequency of CSI-RS resource on the serving cell indicated for measurement.

One measurement object may correspond to one SSB and a wireless device may consider different SSBs as different cells for SSB based measurements. The active BWP of the wireless device and the current operating frequency, for example, if a measurement is non-gap-assisted or gap-assisted depends on the capability of a wireless device. A measurement gap configuration may be provided according to the information for SSB based inter-frequency measurement, for example, if the measurement gap requirement information is reported by the wireless device. Otherwise, a measurement gap configuration may be provided, for example, for the following cases: if the wireless device only supports per- wireless device measurement gaps; if the wireless device supports per-FR measurement gaps, and/or any of the serving cells are in the same frequency range of the measurement object. A measurement gap configuration may be provided according to the information for SSB based intra-frequency measurement, if the measurement gap requirement information is reported by the wireless device. Otherwise, a measurement gap configuration may always be provided for the following case: other than the initial BWP, if any of the wireless device configured BWPs do not contain the frequency domain resources of the SSB associated to the initial DL BWP. A wireless device may carry out measurements without measurement gaps in non-gap-assisted examples. A wireless device may not be assumed to be able to carry out such measurements without measurement gaps in gap-assisted examples.

A measurement timing configuration (measurementtimingconfiguration) may be used to convey assistance information for measurement timing (meastiming). The measurement timing configuration may comprise at least one of: a measurement timing (meastiming); camp on first SSB (camponfirstSSB); PSCell only on first SSB (PScellonlyonfirstSSB); and CSI-RS configuration (CSI-RS-config). The measurement timing (meastiming) may comprise a frequency and timing (frequencyandtiming); SSB to measure (ssb-tomeasure); and/or a physical cell identifier (physcellid). The frequency and timing (frequencyandtiming) may comprise at least one of: a carrier frequency (carrierfreq); SSB subcarrier spacing (ssbSubcarrierSpacing); SSB measurement timing configuration (ssb-measurementtimingconfiguration); SS-RSSI measurement (ss-RSSI-Measurement).

A CSI-RS configuration may comprise at least one of: CSI-RS subcarrier spacing (csi-RS-subcarrierspacing); CSI-RS cell mobility (csi-RS-cellmobility); and/or reference SSB frequency (refSSBfreq). The csi-RS-cellmobility may indicate the CSI-RS configuration of the cell for which this message is included. The timing of the CSI-RS resources may be based on the SSB indicated by the refSSBfreq. The csi-RS-subcarrierspacing may indicate the subcarrier spacing of the CSI-RS resources included in csi-RS-cellmobility.

Measurement timing (meastiming) may be a list of SMTC information, SSB RSSI measurement information and associated frequency (e.g., NR frequency) exchanged via X2 interface (e.g., for X2 setup/update, DC configuration setup/update, and/or Xn setup/update or node (e.g., a base station) configuration update or F1 messages between a base station central unit and a base station distributed unit). Physical cell ID (physcellid) may be physical cell identity of a SSB on the ARFCN indicated by carrierfreq (carrier frequency). The camponfirstSSB (e.g., indicating be a value true) may indicate that the SSB indicated in the first instance of meastiming in the meastiming list may be used for camping and for a PCell configuration. The meastiming list may comprise one or more meastimings. The ssb-tomeasure may be the set of SS blocks to be measured within the SMTC measurement duration.

carrierfreq (carrier frequency) and/or SSB subcarrier spacing (ssbSubcarrierSpacing) may indicate a frequency and/or subcarrier spacing of a SS block of a cell for which this message may be included or of other SS blocks within the same carrier. The SSB measurement timing configuration (ssb-measurementtimingconfiguration) may indicate the SMTC which may be used to search for SSB of the cell for which the message is included. The SS-RSSI measurement (ss-RSSI-measurement) may provide the configuration which may be used for RSSI measurements of the cell for which the message is included.

A transmitter (e.g., a radio transmitter) of a wireless device may be an electronic device which may produce radio waves with an antenna. The transmitter may generate a radio frequency alternating current, which may be applied to the antenna. The antenna may radiate radio waves. The term transmitter may be limited to equipment that may generate radio waves for communication purposes; or radiolocation, such as radar and navigational transmitters. A transmitter may be a separate piece of electronic equipment, and/or an electrical circuit within another electronic device. A transmitter and a receiver combined in one unit may be called a transceiver. The term transmitter is often abbreviated "XMTR" or "TX" in technical documents. The purpose of most transmitters may be radio communication of information over a distance. The information may be provided to the transmitter in the form of an electronic signal, such as an audio (e.g., sound) signal from a microphone, a video (e.g., TV) signal from a video camera, in wireless (e.g., networking) devices, and/or a digital signal from a computer. The transmitter may combine the information signal to be carried with the radio frequency signal which generates the radio waves, which is called the carrier signal. This process may be called modulation. The radio signal from the transmitter may be applied to the antenna, which radiates the energy as radio waves. The antenna may be enclosed inside the case or attached to the outside of the transmitter, as in portable devices such as cell phones. The transmitter may be an antenna, or a group of antennas, an antenna panel, or a group of antenna panels, a MIMO layer, or a group of MIMO layers, and/or an emitter, or a group of emitters. Each antenna panel may have one or more antenna elements. A first one or more antennas, a first one or more antenna panels, and/or a first one or more MIMO layers may be a first transmitter. A second one or more antennas, a second one or more antenna panels, and/or a first one or more MIMO layers may be a second transmitter. A base station and/or a wireless device may have multiple antennas. A number of antenna elements may be assembled into multiple antennas. Multi-panel MIMO (e.g., layer) may be used for communication between the wireless and a base station.

A wireless device may receive, from a base station, a measurement configuration. The measurement configuration may indicate one or more frequencies and/or one or more cells on which the wireless device may perform measurements. The wireless device may perform the measurements on a frequency and/or a cell which is indicated by the measurement configuration based on the measurement configuration.

A wireless device may perform measurements using the measurement configuration during a measurement gap, (e.g., indicated by the measurement configuration). A measurement gap may be referred to as and/or interchangeable with a gap, a gap (e.g., period and/or interval), a measurement gap (period and/or interval), and/or the like.

A measurement gap may be a time duration for which a wireless device may measure wireless channel condition associated with a cell, of a particular base station (e.g., network), and/or configured in a particular frequency using a particular RAT. A particular base station (e.g., network) may be the same base station (e.g., the same network) that the wireless device maintains a connection (e.g., RRC connection). The particular base station (e.g., network) may be different from a base station (e.g., a network) that the wireless device maintains a connection (e.g., RRC connection). The particular RAT may be WiFi, LTE, NR, and/or the like. The particular RAT may be the same RAT that the wireless device uses to maintain a connection (e.g., RRC connection) with a first base station (e.g., a network). The particular RAT may be different from an RAT that the wireless device uses to maintain a connection (e.g., RRC connection) with a first base station (e.g., a network).

A wireless device may maintain a connection (e.g., RRC connection) with a current base station (e.g., network) during a measurement gap. The wireless device may not communicate with the current base station during a measurement gap. The wireless device may not send (e.g., transmit) to and/or receive from a current base station data (e.g., message, packet, SDU, PDU, and/or transport block) and/or a reference signal (e.g., SRS, and/or CSI-RS), for example, during the measurement gap. The wireless device may not monitor a downlink control channel configured by the current base station during the measurement gap. The current base station may not communicate with the wireless device during the measurement gap. The current base station may not send (e.g., transmit) to and/or receive from the wireless device, data (e.g., message, packet, SDU, PDU, and/or transport block) and/or a reference signal (e.g., SRS, and/or CSI-RS), for example, during the measurement gap. The current base station may not monitor an uplink control channel configured for the wireless device during the measurement gap.

A wireless device may communicate with a second device (e.g., a second wireless device, a second base station, a second network, and/or the like) during the measurement gap, for example, if maintaining a connection (e.g., RRC connection) with a current base station (e.g., network). Communicating with the second device may comprise monitoring a downlink channel (e.g., paging channel, PDCCH, PDSCH, SSB, CSI-RS, and/or the like) of the second device during the measurement gap. Communicating with the second device may comprise receiving a signal and/or data via a downlink channel (e.g., PDCCH, PDSCH, SSB, CSI-RS, and/or the like) from the second device during the measurement gap. Communicating with the second device may comprise receiving a signal (e.g., reference signal such as SSB, CSI-RS) and/or data (e.g., message, packet, SDU, PDU, and/or transport block) via a downlink channel (e.g., PDCCH, PDSCH, SSB, CSI-RS, and/or the like) from the second device during the measurement gap. Communicating with the second device may comprise sending (e.g., transmitting) a signal (e.g., reference signal such as SRS, preamble, and/or the like) and/or data (e.g., message, packet, SDU, PDU, Msg3, MsgB, and/or transport block) via an uplink channel (e.g., PRACH, PUSCH, PUCCH, and/or SRS, and/or the like) to the second device during the measurement gap.

A wireless device may not communicate with a current base station during a measurement gap. The wireless device may not, send (e.g., transmit) to and/or receive from the current base station data (e.g., packet, SDU, PDU, and/or transport block) and/or a reference signal (e.g., SRS, and/or CSI-RS), for example, during the measurement gap. The wireless device may not monitor a downlink control channel configured by the current base station during the measurement gap. The current base station may not communicate with the wireless device during the measurement gap. The current base station may not, send (e.g., transmit) to and/or receive from the wireless device, data (e.g., packet, SDU, PDU, and/or transport block) and/or a reference signal (e.g., SRS, and/or CSI-RS), for example, during the measurement gap. The current base station may not monitor an uplink control channel configured for the wireless device during the measurement gap.

A wireless device may receive, from a base station, a measurement configuration. The measurement configuration may comprise measurement gap configuration. The measurement gap configuration may comprise one or more configuration parameters. The one or more configuration parameters of the measurement gap may indicate periods that the wireless device may use to perform measurements. The one or more configuration parameters may indicate one or more measurement gaps. Each measurement gap of the one or more measurement gaps may be associated with one or more frequency ranges that the wireless device may perform one or more measurements using the one or more configuration parameters. Each measurement gap of the one or more measurement gaps may be per a frequency or a frequency range (e.g., FR1. FR2, and/or FR3) and/or per a wireless device. The measurement gap per a frequency range (e.g., FR1, FR2, and/or FR3) may be applied to measurement(s) that the wireless device may perform in a respective frequency range. The measurement gap per the wireless device may be applied to measurement(s) that the wireless device may perform for one or more (e.g., all) frequencies (e.g., FR1, FR2, and/or FR3). Each measurement gap may comprise at least one of: measurement gap repetition period (mgrp) value, measurement gap length (mgl) value, gap offset value, and/or a serving cell identifier. The mgrp value may indicate measurement gap repetition period in (ms) of the measurement gap. The mgl value may indicate the measurement gap length in ms of the measurement gap. The gap offset value may indicate the gap offset of the gap pattern with mgrp indicated in the field mgrp.

A wireless device may not send (e.g., transmit) data to a base station during a measurement gap period and/or time. The data may comprise at least one of: HARQ feedback, SR, and CSI, SRS report and UL-SCH. The wireless device may not monitor downlink channel (e.g., PDCCH) of a serving cell of the base station during the measurement gap. The wireless device may not receive (e.g., downlink data) on DL-SCH.

A base station may not send (e.g., transmit) downlink data to the base station, for example, during the measurement gap period and/or time. The downlink data may comprise at least one of: DCI, MAC CE, and/or a data on DL-SCH. The base station (e.g., a serving cell of the base station) may not monitor uplink channel (e.g., PUCCH and/or PUSCH) of the wireless device during the measurement gap. The base station may not receive (uplink data) on UL-SCH.

A wireless device may receive from a base station one or more messages (e.g., RRC messages) comprising configuration parameters of a plurality of cells (e.g., primary cell, secondary cell). The wireless device may communicate with at least one base station (e.g., two or more base stations in dual-connectivity) via the plurality of cells. The one or more messages (e.g., as a part of the configuration parameters) may comprise parameters of physical, MAC, RLC, PCDP, SDAP, RRC layers for configuring the wireless device. The configuration parameters may comprise parameters for configuring physical and MAC layer channels, bearers, etc. The configuration parameters may comprise parameters indicating values of timers for physical, MAC, RLC, PCDP, SDAP, RRC layers, and/or communication channels.

A timer may begin running as it is started and continue running until it is stopped or until it expires. A timer, for example, may be started if it is not running or restarted if it is running. A timer may be associated with a value (e.g., the timer may be started or restarted from a value or may be started from zero and expire as it reaches the value). The duration of a timer may not be updated until the timer is stopped or expires (e.g., due to BWP switching). A timer may be used to measure a time period and/or time window for a process. There may be multiple ways to implement one or more timers if the specification refers to an implementation and/or procedure related to one or more timers. It may be understood that one or more of the multiple ways to implement a timer may be used to measure a time period and/or time window for the procedure. A random access response window timer may be used for measuring a window of time for receiving a random access response. The time difference between two time stamps may be used instead of starting and expiry of a random access response window timer. A process for measurement of time window may be restarted, for example, if a timer is restarted. Other implementations may be provided to restart a measurement of a time window.

A wireless device may measure one or more beams of a cell and the measurement results (e.g., power values) may be averaged to derive a cell quality in a RRC connected state. The wireless device may be configured to consider a subset of detected beams. Filtering may take place at two different levels: at the physical layer to derive beam quality and/or at a RRC level to derive cell quality from multiple beams. Cell quality from beam measurements may be derived using the same method for serving cell(s) and for non-serving cell(s). Measurement reports may contain measurement results for a quantity of best beams, for example, if the wireless device is configured to do so by a base station (e.g., gNB).

FIG. 19 shows an example of a measurement model of a wireless device. More specifically, FIG. 19 shows an example of a measurement model of a wireless device in a RRC connected state. Layer 1 filtering may be internal layer 1 filtering of inputs measured at point A 1925. Exact filtering may be left to wireless device implementation (e.g., how the measurements may be executed in a physical layer by an implementation (e.g., inputs A and Layer 1 filtering). The A 1925 may be measurements (e.g., beam specific samples) internal to the physical layer. A1 1930 may be measurements (e.g., beam specific measurements) reported by layer 1 to layer 3 after layer 1 filtering. Layer 1 filtering may introduce a certain level of measurement averaging. How and if the wireless device exactly performs the required measurements may be implementation specific to the point that the output at B 1935 fulfils the defined minimum performance requirements.

B 1935 may be a measurement (e.g., cell quality) derived from beam-specific measurements reported to layer 3 after beam consolidation and/or selection 1940. The beam consolidation and/or selection 1940 may use beam specific measurements which are consolidated to derive cell quality. A configuration of this module may be provided by RRC signaling. Reporting period at B 1935 may equal one measurement period at A1 1930.

Layer 3 filtering for cell quality may be filtering performed on the measurements provided at point B 1935. The configuration of the layer 3 filters may be provided by a RRC signaling. Filtering reporting period at C 1950 may equal one measurement period at B 1935. Layer 3 filtering for cell quality and related parameters used may not introduce any delay in the sample availability between B 1935 and C 1950. The measurement at point C 1950 and/or C1 1955 may be the input used in the event evaluation. The C 1950 may be a measurement after processing in the layer 3 filter. The reporting rate may be identical to the reporting rate at point B 1935. The measurement may be used as input for one or more evaluation of reporting criteria 1975. The evaluation of reporting criteria 1975 may check, for example, if actual measurement reporting is necessary at point D 1980. The D 1980 measurement may report information (e.g., a message) sent on a radio interface. The evaluation may be based on more than one flow of measurements at reference point C 1950 (e.g., to compare between different measurements). This may be illustrated by input C 1950 and C1 1955. The wireless device may evaluate the reporting criteria at least every time a new measurement result may be reported at point C 1950 and/or C1 1955. The configuration may be provided by RRC signaling (e.g., wireless device measurements).

L3 Beam filtering and related parameters used may not introduce any delay in the sample availability between E 1960 and F 1965. L3 beam filtering may be filtering performed on the measurements (e.g., beam specific measurements) provided at point A1 1930. The configuration of the beam filters may be provided by RRC signaling. The L3 beam filtering may provide K beams. The K beams may correspond to the measurements on SSB, or CSI-RS resources configured for L3 mobility by a base station (e.g., gNB) and detected by wireless device at L1. Filtering reporting period at E 1960 may equal one measurement period at A1 1930. E 1960 may be a measurement (e.g., beam-specific measurement) based on (e.g., after) processing in the beam filter. The reporting rate may be identical to the reporting rate at point A1 1930. This measurement may be used as input for selecting X measurements that may be reported. Beam selection for beam reporting 1970 may select the X measurements from the measurements provided at point E 1960. The configuration of this module may be provided by RRC signaling. F 1965 may be beam measurement information included in a measurement report (e.g., sent) on a radio interface.

Measurement reports may comprise the following: a measurement identity of an associated measurement configuration that triggered the reporting; cell and beam measurement quantities configured by a network; a number of non-serving cells that may be reported and that may be limited through configuration by the network; cells that may belong to a blacklist and/or an exclude-list configured by a network that may not be used in event evaluation and/or reporting. Conversely, only the cells belonging to a whitelist and/or an allow-list may be used in event evaluation and/or reporting, for example, if a whitelist is configured by the network. The measurement reports, in this case, may comprise: beam measurements that may be configured by the network (e.g., beam identifier only, measurement result and beam identifier, and/or no beam reporting).

Intra-frequency neighbor (e.g., neighbor cell) measurements and inter-frequency neighbor (e.g., neighbor cell) measurements may be defined as follows: SSB based intra-frequency measurement, if a measurement may be defined as an SSB based intra-frequency measurement, provided that the center frequency of the SSB of a serving cell and the center frequency of the SSB of the neighbor cell may be the same, and the subcarrier spacing of the two SSBs may also be the same; SSB based inter-frequency measurement where a measurement may be defined as an SSB based inter-frequency measurement provided the center frequency of the SSB of the serving cell and the center frequency of the SSB of the neighbor cell are different, and/or the subcarrier spacing of the two SSBs may be different; CSI-RS based intra-frequency measurement; and CSI-RS based inter-frequency measurement where a measurement may be defined as a CSI-RS based inter-frequency measurement, if it is not a CSI-RS based intra-frequency measurement.

A CSI-RS based intra-frequency measurement may be a measurement that may be defined as a CSI-RS based intra-frequency measurement if: the subcarrier spacing of CSI-RS resources on the neighbor cell that may be configured for measurement may be the same as SCS of CSI-RS resources on the serving cell indicated for measurement; for 60kHz subcarrier spacing, a CP type of CSI-RS resources on the neighbor cell that may be configured for measurement may be the same as the CP type of CSI-RS resources on the serving cell indicated for measurement; and/or the center frequency of CSI-RS resources on the neighbor cell that may be configured for measurement may be the same as the center frequency of CSI-RS resource on the serving cell indicated for measurement.

One measurement object may correspond to one SSB and a wireless device may consider different SSBs as different cells for SSB based measurements. A measurement may be non-gap-assisted or gap-assisted. A measurement being non-gap-assisted or gap-assisted may depend on the capability of a wireless device, the active BWP of the wireless device, and/or the current operating frequency. A measurement gap configuration may be provided according to the information for SSB, for example, based inter-frequency measurement, if the measurement gap requirement information is reported by the wireless device. Otherwise, a measurement gap configuration may be provided, for example, in the following cases: if the wireless device only supports per- wireless device measurement gaps; if the wireless device supports per-FR measurement gaps and any of the serving cells are in the same frequency range of the measurement object. A measurement gap configuration may be provided according to the information for SSB based intra-frequency measurement, if the measurement gap requirement information is reported by the wireless device. Otherwise, a measurement gap configuration may always be provided in the following case: other than the initial BWP, if any of the wireless device configured BWPs do not contain the frequency domain resources of the SSB associated to the initial DL BWP.

A wireless device may carry out such measurements without measurement gaps for non-gap-assisted measurements. A wireless device may not be assumed to be able to carry out such measurements without measurement gaps for gap-assisted measurements.

FIG. 20 shows an example of a layer 3 (L3) handover of a wireless device. A wireless device 2005 may send (e.g., transmit) a measurement report 2020 to the base station. A source base station 2010 may determine to hand off the wireless device 2005 to a target base station 2015. The determination may be based on the measurement report 2020, load balancing requirement, issues with the source and/or among others base station, etc. The source base station 2010 may issue a handover request 2025 message to the target base station 2015 passing necessary information to prepare the HO at the target side (wireless device/UE X2/Xn signaling context reference at, wireless device/UE S1 EPC signaling context reference, target cell ID, KeNB*/ KgNB*, RRC context including the identity (e.g., Cell-radio network temporary identifier, C-RNTI)) of the wireless device 2005 in the source base station 2010, AS-configuration, radio (e.g., radio access) bearer context and physical layer ID of the source cell + short MAC-I for possible RLF recovery). The radio (e.g., radio access) bearer context may comprise necessary radio network layer (RNL) and transport network layer (TNL) addressing information, and QoS profiles of the E-RABs. The information may further comprise at least RRM-configuration including wireless device 2005 inactive time. AS-configuration may comprise antenna Info and DL carrier frequency, the current QoS flow to DRB mapping rules applied to the wireless device 2005, the SIB 1 from the source base station 2010, the wireless device 2005 capabilities for different RATs and PDU session related information. The AS-configuration may further comprise the wireless device 2005 reported measurement information including beam-related information. The PDU session related information may include the slice information and QoS flow level QoS profile(s). The source base station 2010 may also request a DAPS handover for one or more DRBs.

Admission Control may be performed by a target base station 2015 dependent on a received radio (e.g., radio access) bearer QoS information to increase the likelihood of a successful HO, for example, if resources may be granted by target base station 2015. The target base station 2015 may configure required resources according to the received radio (e.g., radio access) bearer QoS information and reserves a C-RNTI and/or, optionally, a RACH preamble. AS-configuration that may be used in the target cell may either be specified independently (e.g., an establishment) or, alternatively, as a delta compared to the AS-configuration used in the source cell (e.g., a reconfiguration). The target base station 2015 may prepare HO with L1/L2 and send the handover request acknowledge 2030 (e.g., Handover request ack) to the source base station 2010. The handover request acknowledge 2030 (e.g., Handover request ack) message may include a transparent container to be sent to the wireless device 2005 as an RRC message to perform the handover. The container may include a new C-RNTI, target base station 2015 security algorithm identifiers for the selected security algorithms, may include a dedicated RACH preamble, and possibly some other parameters i.e., access parameters, SIBs, etc. For RACH-less HO (e.g., if RACH-less HO may be configured), the container includes timing adjustment indication and optionally a pre-allocated uplink grant. The handover request 2020 acknowledge message may also include RNL/TNL information for the forwarding tunnels, if necessary.

A target base station 2015 may generate a RRC message to perform a handover. The RRC message may be an RRC reconfiguration message 2035 (e.g., RRC reconfiguration) including information for HO (e.g., mobility control info and/or reconfiguration sync), to be sent by a source base station 2010 to a wireless device 2005. The source base station 2010 may perform the necessary integrity protection and/or ciphering of the message.

A source base station 2010 may trigger a handover (e.g., a Uu handover) by sending an RRC reconfiguration message 2035 (e.g., RRC reconfiguration) to a wireless device 2005. The RRC reconfiguration message 2035 (e.g., RRC reconfiguration) may comprise information required to access a target cell: the target cell ID, new C-RNTI, a target base station 2015 security algorithm identifiers for the selected security algorithms. The RRC reconfiguration message 2035 (e.g., RRC reconfiguration) may comprise a set of dedicated RACH resources, an association between RACH resources and SSB(s), an association between RACH resources and wireless device-specific CSI-RS configuration(s), common RACH resources, and/or system information of the target cell, etc.

A wireless device 2005 may receive a RRC reconfiguration message 2035 (e.g., RRC reconfiguration) with necessary parameters (e.g., new C-RNTI, target base station security algorithm identifiers, and optionally dedicated RACH preamble, target base station SIBs, etc.) and/or may be commanded by a source base station 2010 to perform a HO. The RRC reconfiguration may include a timing adjustment indication and/or, optionally, a pre-allocated uplink grant for accessing a target base station 2015, for example, if RACH-less HO may be configured. The wireless device 2005 may monitor PDCCH of the target base station 2015 (step 2055) to receive an uplink grant 2060, for example, if the pre-allocated uplink grant may not be included. The wireless device 2005 may not need to delay the handover execution for delivering the HARQ/ARQ responses to the source base station 2010.

A wireless device 2005, may perform synchronization to a target base station 2015, for example, for no RACH-less HO, (e.g., if RACH-less HO is not configured), after the wireless device receives a RRC reconfiguration message 2035 (e.g., RRC reconfiguration) including the information for HO (e.g., mobility control info or reconfiguration sync). The wireless device 2005 may perform synchronization to target base station 2015 and/or access the target cell via RACH, following a contention-free procedure, for example, if a dedicated RACH preamble was indicated in the information for HO, and/or following a contention-based procedure, if no dedicated preamble was indicated. For the contenting-free procedure, the wireless device 2005 may send the dedicated RACH preamble 2040 to the target base station 2015. The target base station 2015, based on the dedicated RACH preamble, may send RAR 2045 to the wireless device 2005. The wireless device 2005, using uplink grant indicated by RAR, may send RRC reconfiguration complete 2050 to the target base station 2015. The wireless device 2005 may derive the target base station 2015 specific keys and/or configure selected security algorithms that may be used in the target cell. The target base station 2015 may respond with a UL allocation and/or a timing advance, for example, for no RACH-less HO, (e.g., if RACH-less HO may not be configured).

For no RACH-less HO, (e.g., if RACH-less HO may not be configured), if the wireless device 2005 has successfully accessed the target cell, the wireless device 2005 may send the RRC reconfiguration complete message (C-RNTI) to confirm the handover. The RRC reconfiguration complete message may also comprise an uplink buffer status report (BSR), and/or UL data, whenever possible, to the target base station 2015, which indicates that the handover procedure may be completed for the wireless device 2005. The target base station 2015 may verify the C-RNTI sent in the RRC reconfiguration complete message. The target base station 2015 may be able to now begin sending data to the wireless device 2005.

A wireless device 2005 may perform synchronization to target base station 2015, for example, if RACH-less HO is configured (e.g., RACH-less HO). The wireless device 2005 may derive a target base station 2015 specific keys and/or configure selected security algorithms that may be used in the target cell. The wireless device 2005 may receive an uplink grant 2060 via the PDCCH of the target cell, for example, if RACH-less HO is configured (e.g., RACH-less HO), and if the wireless device 2005 did not receive a periodic pre-allocated uplink grant in the RRC reconfiguration message 2035 (e.g., RRC reconfiguration) including information for a HO (e.g., mobility control info or reconfiguration sync). The wireless device 2005 may use the first available uplink grant after synchronization to the target cell. The wireless device 2005 may send the RRC reconfiguration complete message (C-RNTI) 2065 to confirm the handover, together with an uplink BSR, and/or UL data, for example, to the target base station 2015, if possible, if RACH-less HO is configured (e.g., RACH-less HO), and after the wireless device 2005 has received the uplink grant 2060. The target base station 2015 may verify the C-RNTI sent in the RRC reconfiguration complete message 2070. The target base station 2015 may be able to now begin sending data to the wireless device 2005. The handover procedure may be completed for the wireless device 2005, for example, if the wireless device 2005 receives a wireless device contention resolution identity MAC control element from the target base station 2015.

A RRM configuration may include bothbeam measurement information (e.g., for layer 3 mobility) associated with SSB(s) and/or CSI-RS(s) for reported cell(s), for example, if both types of measurements are available. The RRM measurement information may comprise the beam measurement for listed cells that belong to a target base station 2015. The common RACH configuration for beams in the target cell may only be associated with the SSB(s). The network may be able to have a dedicated RACH configurations associated with the SSB(s) and/or have dedicated RACH configurations associated with CSI-RS(s) within a cell. The target base station 2015 may include only one of the following RACH configurations in a handover command to enable the wireless device 2005 to access the target cell: common RACH configuration; common RACH configuration + dedicated RACH configuration associated with SSB; common RACH configuration + dedicated RACH configuration associated with CSI-RS. The dedicated RACH configuration may allocate RACH resource(s) together with a quality threshold to use them. The dedicated RACH resources may be prioritized by the wireless device 2005 and/or the wireless device 2005 may not switch to contention-based RACH resources, for example, if dedicated RACH resources are provided, and if the quality threshold of those dedicated resources is met. The order to access the dedicated RACH resources may be determined by a wireless device 2005 implementation.

A wireless device 2005 may send (e.g., transmit) to a base station an RACH-less HO capability indication that may indicate, for example, if the wireless device 2005 supports RACH-less handover. A base station may determine to configure and/or send (e.g., transmit) a configuration for RACH-less HO (RACH skip configuration) Based on the RACH-less HO capability indication.

A PCell may be changed using a RRC connection reconfiguration message (e.g., RRCReconfiguration) including reconfigurationWithSync (in NR specifications) or mobilityControlInfo in LTE specifications (e.g., handover), for example, for network-controlled mobility in RRC connected state (e.g., L3 handover). SCell(s) may be changed using the RRC connection reconfiguration message either with or without the reconfigurationWithSync or mobilityControlInfo. A network may trigger a HO procedure (e.g., based on radio conditions, load, QoS, UE category, and/or the like). The RRC connection reconfiguration message may be implemented as described herein in FIG. 21 and FIG. 22.

The network may configure the wireless device 2005 to perform measurement reporting (e.g., possibly including a configuration of measurement gaps). The measurement reporting may be a layer 3 reporting, that may be different from layer 1 CSI reporting. The wireless device 2005 may send (e.g., transmit) one or more measurement reports 2020 to the source base station 2010 (e.g., the source PCell). The network may initiate HO blindly, for example, without having received measurement reports from the wireless device 2005. The source base station 2010 may prepare one or more target cells before sending (e.g., transmitting) the HO message to the wireless device 2005. The source base station 2010 may select a target PCell.

The source base station 2010 may provide the target base station 2015 with a list of best cells on each frequency for which measurement information is available based on the one or more measurement reports from the wireless device 2005. The list of best cells on each frequency may be ordered, for example, in order of decreasing RSRP values. The source base station 2010 may also include available measurement information for the cells provided in the list. The target base station 2015 may decide which cells may be configured for use after HO, which may include cells other than the ones indicated by the source base station 2010. The source base station 2010 may send (e.g., transmit) a HO request 2025 to the target base station 2015. The target base station 2015 may respond with a HO message 2030 (e.g., handover request ack). The target base station 2015 may indicate access stratum configuration to be used in the target cell(s) for the wireless device 2005, for example, in the HO message 2030.

the source base station 2010 may transparently (e.g., does not alter values and/or content) forward the HO message 2035 (e.g., RRC reconfiguration) and/or information received from the target base station 2015 to the wireless device 2005. RACH resource configuration may be configured for the wireless device 2005 to access a cell in the target base station 2015 in the HO message. The source base station 2010 may initiate data forwarding for the dedicated radio bearers (e.g., a subset of radio bearers), for example, if appropriate.

the wireless device 2005 may start a HO timer (e.g., T304) with an initial timer value after receiving the HO message 2035 (e.g., RRC reconfiguration). The HO timer may be configured in the HO message 2035 (e.g., RRC reconfiguration). The wireless device 2005 may use the RRC parameters of a target PCell and/or a cell group (MCG/SCG) that may be associated with the target PCell of the target base station 2015 and perform downlink synchronization to the target base station 2015 based on the HO message 2035 (e.g., RRC reconfiguration). The wireless device 2005 may initiate a random access (e.g., contention-free or contention-based as described herein in FIGS. 13A - 13C) procedure attempting to access the target base station 2015 at the available RACH occasion according to a RACH resource selection, where the available RACH occasion may be configured in the RACH resource configuration (e.g., as described herein in FIG. 22) after, or in response to, performing downlink synchronization (e.g., searching a suitable and/or detectable SSB from candidate SSBs configured on the target base station 2015) to the target base station 2015. RAN may ensure the preamble may be available from the first RACH occasion the wireless device 2005 may use, for example, if allocating a dedicated preamble for the random access in the target base station 2015. A wireless device 2005 may activate an uplink BWP configured with firstActiveUplinkBWP-id and a downlink BWP configured with firstActiveDownlinkBWP-id on a target PCell upon performing HO to the target PCell.

The wireless device 2005 may perform UL synchronization by conducting RACH procedure (e.g., as described herein in FIGS. 13A - 13C after using the RRC parameters of a target PCell and/or completing the downlink synchronization with the target PCell. The performing UL synchronization may comprise sending (e.g., transmitting) a preamble via an active uplink BWP (e.g., a BWP configured as firstActiveUplinkBWP-id as described herein in FIG. 21) of uplink BWPs of the target PCell, monitoring PDCCH on an active downlink BWP (e.g., a BWP configured as firstActiveDownlinkBWP-id as described herein in FIG. 21) for receiving an RAR comprising a TA which may be used for PUSCH and/or PUCCH transmission via the target PCell, receiving the RAR, and/or obtaining the TA. The wireless device 2005 may obtain the TA to be used for PUSCH and/or PUCCH transmission via the target PCell based on completing the UL synchronization. The wireless device 2005 may send (e.g., transmit) PUSCH and/or PUCCH via the target PCell by using the TA to adjust uplink transmission timing. The adjusting uplink transmission timing may comprise advancing or delaying the transmissions by an amount that may be indicated by a value of the TA (e.g., to ensure the uplink signals received at the target PCell are aligned (in time domain) with uplink signals sent (e.g., transmitted) from other wireless devices).

A wireless device 2005 may release RRC configuration parameters of the source PCell and an MCG/SCG associated with the source PCell. A HO triggered by receiving a RRC reconfiguration message (e.g., RRCReconfiguration) comprising the HO command/message (e.g., by including reconfigurationWithSync (e.g., in NR specifications) or mobilityControlInfo in LTE specifications (handover)) may be referred to as a normal HO, an unconditional HO, which may contrast with a conditional HO (CHO).

The wireless device 2005 may send (e.g., transmit) a preamble 2040 to the target base station 2015 via a RACH resource. The RACH resource may be selected from a plurality of RACH resources (e.g., configured in rach-ConfigDedicated IE as described herein in FIG. 21 and FIG. 22) based on SSBs and/or CSI-RSs measurements of the target base station 2015. The wireless device 2005 may select a SSB and/or CSI-RS (e.g., a best SSB and/or CSI-RS) of the configured SSBs and/or CSI-RSs of the target base station 2015. The wireless device 2005 may select a SSB and/or CSI-RS, from the configured SSBs and/or CSI-RSs of the target base station 2015, with a RSRP value greater (e.g., higher, more, etc.) than a RSRP threshold configured for the RA procedure. The wireless device 2005 may determine a RACH occasion (e.g., time domain resources, etc.) associated with the selected SSB and/or CSI-RS and determines the preamble associated with the selected SSB and/or CSI-RS.

The target base station 2015 may receive the preamble 2040 sent (e.g., transmitted) from the wireless device 2005. The target base station 2015 may send (e.g., transmit) a random access response (RAR) 2045 to the wireless device 2005, where the RAR 2045 may comprise the preamble sent (e.g., transmitted) by the wireless device 2005. The RAR 2045 may further comprise a TAC to be used for uplink transmission via the target PCell. The wireless device 2005 may complete the random access procedure based on receiving the RAR 2045 comprising the preamble. The wireless device 2005 may stop the HO timer (T304) based on completing the random access procedure. The wireless device 2005 may send (e.g., transmit) a RRC reconfiguration complete message 2050 to the target base station 2015, after completing the random access procedure or before completing the random access procedure. The wireless device 2005 may use first parts of CQI reporting configuration, SR configuration and SRS configuration that do not require the wireless device 2005 to know a system frame number (SFN) of the target base station 2015 based on completing the random access procedure towards the target base station 2015. The wireless device 2005 may use second parts of measurement and radio resource configuration that require the wireless device 2005 to know the SFN of the target base station 2015 (e.g., measurement gaps, periodic CQI reporting, SR configuration, SRS configuration), upon acquiring the SFN of the target base station 2015 and after completing the random access procedure towards the target PCell.

A base station may instruct each wireless device in a source cell to perform a 4-step or 2-step RACH-based (e.g., contention free) HO to a neighbor cell, for example, based on HO procedure (e.g., as described herein in FIG. 20), for network energy saving purpose. The base station may turn off RF parts, BBUs, etc. for energy saving based on the wireless devices completing the HO procedure to neighbor cells.

FIG. 21 shows an example of RRC message for handover (HO). A base station may send (e.g., transmit), and/or a wireless device may receive, a RRC reconfiguration message (e.g., RRCReconfiguration-IEs) indicating a RRC connection modification. The RRC reconfiguration method may comprise information for measurement configuration, mobility control, radio resource configuration (e.g., RBs, MAC main configuration, and/or physical channel configuration) and/or AS security configuration. The RRC reconfiguration message may comprise a configuration of a master cell group (masterCellGroup). The master cell group may be associated with a SpCell (SpCellConfig). The wireless device may determine that the SpCell may be a target PCell for the HO, for example, if the SpCellConfig comprises a reconfiguration with Sync (reconfigurationWithSync). The reconfiguration with sync (reconfigurationWithSync) may comprise cell common parameters (spCellConfigCommon) of the target PCell, a RNTI (newUE-Identity) identifying the wireless device in the target PCell, a value of T304, a dedicated RACH resource (rach-ConfigDedicated), etc. A dedicated RACH resource may comprise one or more RACH occasions, one or more SSBs, one or more CSI-RSs, one or more RA preamble indexes, etc.

FIG. 22 shows an example of RRC messages for RACH resource configuration for a HO procedure. A reconfigurationWithSync IE may comprise a dedicated RACH resource indicated by a rach-ConfigDedicated IE (e.g., as described herein in FIG. 21). A rach-ConfigDedicated IE comprises a contention free RA resource indicated by a cfra IE. The cfra IE comprises a plurality of occasions indicated by a rach-ConfigGeneric IE, a ssb-perRACH-Occasion IE, a plurality of resources associated with SSB (e.g., indicated by a ssb IE) and/or CSI-RS (e.g., indicated by a csirs IE). The ssb-perRACH-Occasion IE may indicate a number of SSBs per RACH occasion. The rach-ConfigGeneric IE indicates configuration of CFRA occasions. The wireless device may ignore preambleReceivedTargetPower, preambleTransMax, powerRampingStep, ra-ResponseWindow signaled within this field and may use the corresponding values provided in RACH-ConfigCommon.

Resources (resources IE) may comprise an ssb IE, for example, if the plurality of resources for the CFRA configured in the reconfigurationWithSync IE are associated with SSBs. The ssb IE comprises a list of CFRA SSB resources (ssb-ResourceList) and an indication of PRACH occasion mask index (ra-ssb-OccasionMaskIndex). Each of the list of CFRA SSB resources may comprise a SSB index, a RA preamble index, etc. The ra-ssb-OccasionMaskIndex may indicate a PRACH mask index for RA resource selection. The mask may be valid for all SSB resources signaled in ssb-ResourceList.

Resources (resources IE) may comprise csirs IE, for example, if the plurality of resources for the CFRA configured in the reconfigurationWithSync IE are associated with CSI-RSs. The csirs IE may comprise a list of CFRA CSI-RS resources (csirs-ResourceList) and/or a RSRP threshold (rsrp-ThresholdCSI-RS). Each of the list of CFRA CSI-RS resources may comprise a CSI-RS index, a list of RA occasions (ra-OccasionList), a RA preamble index, etc.
executing the HO, triggered by receiving a RRC reconfiguration message comprising a reconfigurationWithSync IE, may introduce HO latency (e.g., too-late HO), for example, if a wireless device is moving in a network deployed with multiple small cells (e.g., with hundreds of meters of cell coverage of a cell). An improved HO mechanism that may reduce the HO latency, based on measurement event triggering s described herein in FIG. 23.

Multi-radio dual connectivity (MR-DC or DC) may be dual connectivity between E-UTRA (e.g., eNB, LTE base station) and NR nodes (e.g., gNB, NR base station), or between two NR nodes. SpCell may be a primary cell of a master cell group (MCG) or a primary cell of secondary cell group (SCG). PCell may be SpCell of a master cell group. PSCell may be SpCell of a secondary cell group.

A MCG may be in MR-DC, a group of serving cells associated with a master node, comprising a SpCell (e.g., a PCell) and may further comprise one or more SCells. A master node (MN) may be in DC, a radio access node (e.g., base station) that provides a control plane connection to a core network. The MN may be a master eNB, a master ng-eNB, and/or a master base station. A secondary cell group (SCG) may be in MR-DC, a group of serving cells associated with a secondary node, comprising the SpCell (e.g., the PSCell) and may further comprise one or more SCells. The secondary node may be in MR-DC, a radio access node, with no control plane connection to the core network, providing additional resources to a wireless device 1910. The secondary node may be an en-gNB, a secondary ng-eNB, and/or a secondary base station.

Conditional PSCell addition may be a PSCell addition procedure that may be executed only, for example, if PSCell addition condition(s) are met. Conditional PSCell change: a PSCell change procedure that may be executed only, for example, if PSCell execution condition(s) are met.

A conditional handover (CHO) may be defined as a handover (e.g., layer 3 handover) that may be executed by a wireless device if one or more handover execution conditions may be met. The wireless device may begin evaluating the execution condition(s) based on receiving the CHO configuration, and may stop evaluating the execution condition(s) based on a handover being executed.

The following principles may apply to a CHO: the CHO configuration may contain the configuration of CHO candidate cell(s) generated by candidate base station(s) and/or execution condition(s) generated by a source base station. An execution condition may consist of one or more trigger condition(s) (e.g., CHO events, A3/A5, etc.). Only a single reference signal (RS) type may be supported and/or at most two different trigger quantities (e.g., RSRP and RSRQ, RSRP and SINR, etc.) may be configured simultaneously for an evaluation of the CHO execution condition of a single candidate cell. A wireless device 1910 may execute a HO procedure, (e.g., regardless of any previously received CHO configuration), for example, based on receiving a HO command (e.g., without CHO configuration), and before any CHO execution condition may be satisfied. The wireless device 1910 may not monitor a source cell, for example, if executing a CHO (e.g., from the time a wireless device 1910 begins synchronization with a target cell).

A CHO procedure (e.g., intra-AMF/UPF CHO procedure) may be as follows. A wireless device context within a source base station may contain information comprising roaming and/or access restrictions that may have been provided either at connection establishment and/or at a last tracking area (TA) update. The source base station may configure the wireless device = measurement procedures and the wireless device may report according to the measurement configuration. The source base station may determine to use a CHO. The source base station may request a CHO for one or more candidate cells belonging to one or more candidate base stations. A CHO request message may be sent for each candidate cell. Admission control may be performed by a target base station. Slice-aware admission control may be performed, if the slice information may be sent to the target base station. The target base station may reject such PDU sessions, if the PDU sessions are associated with non-supported slices.

A candidate base station(s) may send a CHO response (e.g., HO request acknowledge) including configuration of a CHO candidate cell(s) to a source base station, for example, as a CHO procedure. The CHO response message may be sent to each candidate cell. The source base station may send a RRC reconfiguration message, to the wireless device 1910, containing the configuration of CHO candidate cell(s) and/or the CHO execution condition(s). The CHO configuration of candidate cells may be followed by other reconfiguration from the source base station.

A wireless device may send a RRC reconfiguration complete message to a source base station for a CHO procedure. The source base station may send an early status transfer message to a target base station(s) of a candidate cell(s), for example, if early data forwarding is applied. The wireless device may maintain connection with the source base station after receiving CHO configuration, and may begin evaluating the CHO execution conditions for the candidate cell(s). The wireless device may detach from the source base station, may apply the stored corresponding configuration for that selected candidate cell, may synchronize to the candidate cell, and may complete the RRC handover procedure by sending a RRC reconfiguration complete message to the target base station, for example, if at least one CHO candidate cell satisfies the corresponding CHO execution condition. The wireless device may release stored CHO configurations, for example, based on (e.g., after) a successful completion of a RRC handover procedure. The target base station may send the handover success message to the source base station to inform the source base station that the wireless device has successfully accessed the target cell. The source base station may send the SN (e.g., PDCP sequence number) status transfer message. Late data forwarding may be initiated as soon as the source base station receives the handover success message. The source base station may send a handover cancel message to other signaling connections and/or any other candidate target base stations, to cancel a CHO for the wireless device.

A CHO may be characterized by a configured execution condition that may determine if a corresponding HO command may be executed. A base station may send a CHO configuration. A wireless device may begin evaluating the execution condition(s) for CHO candidate cells based on receiving the CHO configuration. The wireless device 1910 may execute the HO command based on condition(s) being met for a CHO candidate cell. The wireless device may stop evaluating execution condition(s) for other candidate cells during the CHO execution. The CHO configuration may contain the configuration of CHO candidate cell(s) generated by candidate target base stations and execution condition(s) generated by a source base station. The execution condition may consist of measurement event, for example, like A3 and/or A5. At most two different trigger quantities (e.g., RSRP and RSRQ, RSRP and SINR, etc.) may be configured simultaneously for the evaluation of CHO execution condition of a single candidate cell. The wireless device may maintain connection with source base station until the wireless device satisfies the CHO execution condition for CHO candidate cell(s). A reception of a normal HO command (e.g., without a conditional component) may override any configured CHO configuration. The network may be allowed to change a source base station configuration based on the source base station sending the CHO command to wireless device. The network may add, modify, and/or release a configured CHO configuration using a RRC message (e.g., until the wireless device begins executing CHO to a candidate cell). The wireless device may not monitor the source cell for example, if executing CHO.

FIG. 23 shows an example of a conditional handover procedure. A source base station 2305 (e.g., source) may determine a conditional handover 2315 (e.g., a CHO decision) based on a measurement report 2310 from a wireless device 2320. The source base station 2305 (e.g., source) may send a CHO request message 2325 to CHO target base station candidates (e.g., target 1 2360 and/or target 2 2365). The target base station (e.g., target 1 2360 and/or target 2 2365) may send a CHO response message 2330 (e.g., CHO request ack) including a CHO configuration, for example, based on receiving the CHO request message 2325. The source base station 2305 (e.g., source) may send a RRC reconfiguration message 2335 containing the CHO configuration of candidate cell(s) to the wireless device 2320, for example, based on receiving the CHO response message 2330 (e.g., CHO request ack). The wireless device 2320 may send a RRC reconfiguration complete message 2340 to the source base station 2305 (e.g., source), for example, based on receiving the RRC reconfiguration message 2335. The wireless device 2320 may begin evaluating CHO execution conditions for candidate cells in the CHO configuration 2345 and may maintain a connection with the source base station 2305 (e.g., source). The wireless device 2320 performing random access procedure 2350 may detach from the source base station 2305 (e.g., source), may apply the stored configuration of the selected candidate cell, and may synchronize to the candidate cell, for example, based on at least one CHO candidate cell satisfying the corresponding CHO execution condition. The wireless device 2320 may complete the handover procedure by sending a RRC reconfiguration complete message 2355 to the target base station via the candidate cell based the synchronization.

A base station may send a CHO configuration. A wireless device may execute the HO command as the condition(s) may be met for a CHO candidate cell based on receiving the CHO configuration. The wireless device may detect a radio link failure (RLF) in a source base station (e.g., a primary cell (PCell)). The wireless device may perform a cell selection procedure based on detecting the radio link failure. The wireless device may select a cell based on the cell selection procedure. The wireless device may perform CHO execution to the selected cell based on the selected cell being a CHO candidate. Otherwise, the wireless device may perform a RRC connection reestablishment procedure. The wireless device may perform a cell selection procedure based on legacy handover failure or failure to access a CHO candidate cell. The wireless device may perform CHO execution based on the selected cell being a CHO candidate cell. Otherwise, the wireless device may perform a RRC connection reestablishment procedure.

A network (e.g., a base station, a source base station) may configure the wireless device 2320 to perform measurement reporting (e.g., possibly including the configuration of measurement gaps) for a plurality of neighbor cells (e.g., cells from a candidate target base station 1 2360, a candidate target base station 2 2365, etc.). The measurement reporting may be a layer 3 reporting that may be different from layer 1 CSI reporting. The wireless device 2320 may send (e.g., transmit) one or more measurement reports to the source base station (e.g., source PCell).

A source base station 2305 may provide the target base station with a list of best cells on each frequency for which measurement information is available, for example, based on one or more measurement reports 2310 from a wireless device 2320, and in order of decreasing RSRP. The source base station 2305 may also include available measurement information for the cells provided in the list. The target base station may decide which cells may be configured for use after the CHO, which may include cells other than the ones indicated by the source base station. The source base station 2305 may send (e.g., transmit) a HO request 2325 to the target base station. The target base station may response with a HO message 2320 (e.g., CHO request ack). The target base station may indicate access stratum configuration (e.g., RRC configurations of the target cells) to be used in the target cell(s) for the wireless device 2320, for example, in the HO message.

A source base station may transparently (e.g., does not alter values and/or content) forward the handover (e.g., contained in RRC reconfiguration messages of the target base station) message and/or information received from the target base station to the wireless device 2320.

A source base station may configure a CHO procedure that may be different from a normal HO procedure (e.g., as described herein in FIG. 20, FIG. 21 and/or FIG. 22), by comprising a conditional reconfiguration message (e.g., conditionalReconfiguration IE in RRC reconfiguration message, as described herein in FIG. 24). The conditional reconfiguration message may comprise a list of candidate target PCells, each candidate target PCell may be associated with dedicated RACH resources for the RA procedure in case a CHO is executed to the candidate target PCell. A CHO execution condition, or RRC reconfiguration condition, may also be configured for each of the candidate target PCells, etc. A CHO execution condition may comprise a measurement event A3 where a candidate target PCell becomes amount of offset better than the current PCell (e.g., the PCell of the source base station), a measurement event A4 where a candidate target PCell becomes better than absolute threshold configured in the RRC reconfiguration message, a measurement event A5 where the current PCell becomes worse than a first absolute threshold and a candidate target PCell becomes better than a second absolute threshold, etc.

the wireless device 2320, according to the received RRC reconfiguration messages 2335 that may comprise parameters of a CHO procedure, may evaluate the (RRC) reconfiguration conditions for the list of candidate target PCells and/or the current (e.g., source) PCell. The wireless device 2320 may measure RSRP and/or RSRQ of SSBs and/or CSI-RSs of each candidate target PCell of the list of candidate target PCells. The wireless device 2320 may not execute a HO to the target PCell based on receiving the RRC reconfiguration messages 2335 that may comprise the parameters of the CHO procedure that may be different from a normal HO procedure. The wireless device 2320 may execute the HO to a target PCell for the CHO, for example, only if the reconfiguration condition(s) (e.g., a RRC reconfiguration) of the target PCell are met (e.g., satisfied). Otherwise, the wireless device 2320 may keep evaluating the reconfiguration conditions for the list of the candidate target PCells (e.g., until an expiry of a HO timer, or receiving a RRC reconfiguration indicating an abort of the CHO procedure).

A wireless device 2320 may execute the CHO procedure towards the first candidate target PCell based on a reconfiguration condition of a first candidate target PCell (e.g., PCell 1) being met or satisfied. The wireless device 2320 may select one of multiple candidate target PCells by its implementation, for example, if the multiple candidate target PCells have reconfiguration conditions satisfied or met.

Executing the CHO procedure towards a first candidate target PCell may be same as or similar to executing a HO procedure. The wireless device 2320 may release RRC configuration parameters of the source PCell and the MCG associated with the source PCell, use the RRC configuration parameters of the PCell 1, reset MAC, perform cell group configuration for the received MCG comprised in the RRC reconfiguration message of the PCell 1, and/or perform RA procedure to the PCell 1, etc. by executing the CHO procedure

MCG of a RRC reconfiguration message of the PCell 1 may be associated with a SpCell (SpCellConfig) on a target base station 1. A wireless device may determine that the SpCell may be a target PCell (PCell 1) for the HO, for example, if the sPCellConfig comprises a reconfiguration with Sync (reconfigurationWithSync). The reconfiguration with sync (reconfigurationWithSync) may comprise cell common parameters (spCellConfigCommon) of the target PCell, a RNTI (newUE-Identity) identifying the wireless device in the target PCell, a value of T304, a dedicated RACH resource (rach-ConfigDedicated), etc. A dedicated RACH resource may comprise one or more RACH occasions, one or more SSBs, one or more CSI-RSs, one or more RA preamble indexes, etc. In an example, the wireless device may perform cell group configuration for the received master cell group comprised in the RRC reconfiguration message of the PCell 1 on the target base station 1 according to the example as described herein in FIG. 20.

FIG. 24 shows an example of RRC message for CHO. A base station may send (e.g., transmit), and/or a wireless device may receive, a RRC reconfiguration message (e.g., RRCReconfiguration-V1610-IEs) indicating a RRC connection modification. The RRC reconfiguration message may be included in a RRC reconfiguration message (e.g., a parent RRC reconfiguration method) (RRCReconfiguration-IEs) as described herein in FIG. 21, where the RRC reconfiguration message may comprise measurement configuration (e.g., a L3 beam and/or cell) (measConfig IE).

A RRC reconfiguration message (e.g., RRCReconfiguration-V1610-IEs) may comprise a conditional reconfiguration IE (conditionalReconfiguration IE). The conditional reconfiguration IE may comprise a list of conditional reconfigurations (condReconfigToAddModList). Each conditional reconfiguration corresponds to a respective candidate target cell (e.g., PCell) of a list of candidate target cells. The base station may indicate one or more measurement events (condExecutionCond) for triggering the CHO on the candidate target PCell for each conditional reconfiguration of the list of conditional reconfigurations (e.g., a RRC reconfiguration message (condRRCReconfig) of a candidate target cell (PCell) which is received by the source base station from the target base station via X2/Xn interface). The RRC reconfiguration message of the candidate target cell may be implemented as described herein in FIG. 21 and/or FIG. 22. The RRC reconfiguration message may comprise a configuration of a master cell group (masterCellGroup) for the target base station. The master cell group may be associated with a SpCell (SpCellConfig). The SpCell is a target PCell for executing the CHO, for example, if the sPCellConfig comprises a reconfiguration with Sync (reconfigurationWithSync). The reconfiguration with sync (reconfigurationWithSync) may comprise cell common parameters (spCellConfigCommon) of the target PCell, a RNTI (newUE-Identity) identifying the wireless device in the target PCell, a value of T304, a dedicated RACH resource (rach-ConfigDedicated), etc. A dedicated RACH resource may comprise one or more RACH occasions, one or more SSBs, one or more CSI-RSs, one or more RA preamble indexes, etc.

A measurement event (condExecutionCond) for triggering the CHO on the candidate target PCell may be an execution condition that may need to be fulfilled (e.g., at the wireless device) to trigger an execution of a conditional reconfiguration for CHO. The indication of the measurement event may point to a measurement ID (*MeasId*) which may identify a measurement configuration of a plurality of measurement configurations (e.g., comprised in *measConfig IE*) configured by a source base station. The measurement configuration may be associated with a measurement event (or a conditional event) of a plurality of measurements. A conditional event may comprise a conditional event A3, conditional event A4, and/or conditional event A5, etc. A conditional event A3 is that a candidate target PCell becomes amount of offset better than the current PCell (e.g., the PCell of the source base station). A conditional event A4 is that a candidate target PCell becomes better than an absolute threshold configured in the RRC reconfiguration message. A conditional event A5 is that the current PCell becomes worse than a first absolute threshold and a candidate target PCell becomes better than a second absolute threshold, etc.

Executing CHO by a determination of a wireless device based on evaluating reconfiguration conditions (e.g., long-term and/or layer 3 beam and/or cell measurements against one or more configured thresholds) on a plurality of candidate target cells may cause a load unbalanced on cells, and/or lead to CHO failure, for example, if the target cell changes its configuration (e.g., for network energy saving) during a CHO condition evaluation, etc. A layer 1 signaling may comprise a DCI sent (e.g., transmitted) via a PDCCH. A layer 2 signaling may comprise a MAC CE scheduled by a DCI. Layer 1/2 signaling may be different from Layer 3 signaling, for HO and/or CHO, which may comprise RRC reconfiguration message.

FIG. 25 shows an example of a connection recovery procedure with a CHO configuration. A source base station 2505 may determine a conditional handover 2530 based on a measurement report 2525 from a wireless device 2510. The source base station 2505 may send a CHO request message 2535 to CHO target base station candidates (e.g., target 1 2515 and target 2 2520). A target base station (e.g., target 1 2515 and target 2 2520) may send (e.g., transmit) a CHO response message 2540 (e.g., CHO request ack) that may include a CHO configuration based on receiving the CHO request message 2535. The source base station 2505 may send (e.g., transmit) a RRC reconfiguration message 2545 that may comprise the CHO configuration of candidate cells to the wireless device 2510 based on receiving the CHO response message 2540. The wireless device 2510 may send (e.g., transmit) a RRC reconfiguration complete message 2550 to the source base station 2505 based on receiving the RRC reconfiguration message 2545. The wireless device 2510 may start evaluating CHO execution conditions for candidate cells in the CHO configuration 2555, for example, if maintaining connection with source base station 2505. The wireless device 2510 may detect a radio link failure 2560 in the source base station 2505 (e.g., PCell) or a conditional handover failure. The wireless device 2510 may perform a cell selection procedure 2565. The wireless device 2510 may perform a CHO execution based on a selected cell being a conditional handover candidate cell (e.g., target 1 in FIG.26). The CHO execution may comprise a random access procedure 2570 to the selected cell (e.g., target 1 2515), and the selected cell (e.g., target 1 2515) may send (e.g., transmit) a RRC reconfiguration message 2575 to the selected cell based on a successful completion of the random access procedure.

A wireless device may detach from a source base station, use a stored configuration of the selected candidate cell, and synchronize to the candidate cell based on at least one CHO candidate cell satisfying the corresponding CHO execution condition. The wireless device may complete the handover procedure by sending (e.g., transmitting) a RRC reconfiguration complete message to the target base station via the candidate cell based the synchronization.

A conditional PSCell addition (CPA) may be defined as a PSCell addition that may be executed by a wireless device, for example, if execution condition(s) are met. The wireless device may begin evaluating the execution condition(s) based on receiving a CPA configuration, and may stop evaluating the execution condition(s) based on a PSCell addition and/or a PCell change being triggered.

The following principles may apply to a CPA: The CPA configuration may comprise configurations) of CPA candidate PSCell(s), execution condition(s), and may further comprise a MCG configuration, that may be applied, for example, if a CPA execution is triggered. An execution condition may consist of one or two trigger condition(s) (e.g., CondEvents). Only a single RS type, and at most two different trigger quantities (e.g., RSRP and RSRQ, RSRP and SINR, etc.), may be able to be used for the evaluation of CPA execution condition of a single candidate PSCell. A wireless device may execute a PSCell addition procedure and/or a PCell change procedure (e.g., regardless of any previously received CPA configuration), for example, before any CPA execution condition is satisfied, upon reception of a PSCell addition command and/or a PCell change command. The wireless device may release the stored CPA configuration, for example, after the successful completion of a PSCell addition procedure and/or a PCell change procedure. The wireless device may not be required to continue evaluating the execution condition of other candidate PSCell(s), for example, if executing CPA. The wireless device may release all stored conditional reconfigurations (e.g., for CPA and for CHO), for example, based on the CPA procedure being executed successfully.

A SN addition procedure may be initiated by a MN and may be used to establish a wireless device context at the SN to provide resources from the SN to the wireless device. This procedure may be used to add at least an initial SCG serving cell of the SCG, for example, for bearers that may require SCG radio resources. This procedure may be used to configure an SN terminated MCG bearer (e.g., where no SCG configuration may be needed). A conditional secondary node addition procedure may be used for CPA configuration and/or CPA execution, for example, for the case of a CPA.

A MN may determine to configure CPA for a wireless device. The MN may requests the candidate SN(s) to allocate resources for one or more specific PDU Sessions/QoS Flows, indicating QoS Flows characteristics (QoS Flow Level QoS parameters, PDU session level TNL address information, and PDU session level Network Slice info), indicating that the request may be for CPA and/or for providing an upper limit for the number of PSCells that may be prepared by the candidate SN. The MN may also indicate the requested SCG configuration information, including the entire wireless device capabilities and/or the wireless device capability coordination result, for example, for bearers requiring SCG radio resources. The MN may provide the candidate cells recommended by MN via the latest measurement results for the candidate SN to choose and/or configure the SCG cell(s), for bearers requiring SCG radio resources. The MN may request that the candidate SN allocate radio resources for split SRB operation. The MN may provide all the needed security information to the candidate SN (e.g., even if no SN terminated bearers are setup) to enable SRB3 to be setup, for example, based on SN decision, and in NR-DC.

A MN may provide Xn-U UL TNL address information for MN terminated bearer options that require Xn-U resources between the MN and a candidate SN, for example, in a conditional SN addition procedure. The MN may provide a list of available DRB IDs for SN terminated bearers. The candidate SN may store this information and/or may use it if establishing SN terminated bearers. The candidate SN may reject the addition request. The candidate SN may determine how to map QoS flows to DRB for SN terminated bearer options that require Xn-U resources between the MN and the candidate SN, for example, based on the MN providing a list of QoS flows per PDU sessions for which SCG resources may be requested to be setup. MCG and SCG resources may be requested of such an amount, that the QoS for the respective QoS Flow may be guaranteed by the exact sum of resources provided by the MCG and the SCG together, or even more, for split bearers. The MN decision may be reflected by the QoS Flow parameters signaled to the candidate SN, which may differ from QoS Flow parameters received over NG For MN terminated split bearers. The MN may request the direct establishment of SCG and/or split bearers (e.g., without first having to establish MCG bearers) for a specific QoS flow. All QoS flows may be allowed to be mapped to SN terminated bearers (e.g., there may be no QoS flow mapped to an MN terminated bearer).

A SN may allocate respective radio resources and/or, dependent on bearer type options, respective transport network resources and/or the SN may provide a prepared PSCell ID(s) to a MN, for example, in a conditional SN addition procedure, and if the RRM entity in the candidate SN may be able to admit the resource request. The candidate SN may configure random access, so that synchronization of the SN radio resource configuration may be performed at the CPA execution, for bearers requiring SCG radio resources. The candidate SN may determine the list of PSCell(s) to prepare (e.g., considering a maximum number that may be indicated by the MN), for example, among the list of cells as indicated in measurement results indicated by the MN, and the candidate SN may determine other SCG SCells and may provide new, corresponding SCG radio resource configuration(s) to the MN, for example, in an NR RRC reconfiguration message (e.g., by the SN) contained in the SN addition request acknowledge message, for each prepared PSCell. The candidate SN may be able to accept or alternatively, to reject each of the candidate cells listed within the measurement results indicated by the MN (e.g., the candidate SN may not able to configure any alternative candidates). The candidate SN may provide Xn-U TNL address information (e.g., tunnel address) for a respective DRB, Xn-U UL TNL address information for SN terminated bearers, Xn-U DL TNL address information for MN terminated bearers, for example, for cases of bearer options that require Xn-U resources between the MN and the candidate SN. The candidate SN may provide the NG-U DL TNL address information for the respective PDU Session and security algorithm for SN terminated bearers. A SCG radio resource configuration may be provided, for example, if SCG radio resources have been requested. The MN may provide Xn-U DL TNL address information in the Xn-U address indication message for SN terminated bearers using MCG resources. The MN may send the early status transfer message to the candidate SN, for example, for a case of early data forwarding in CPA.

A MN may send to a wireless device a RRC reconfiguration message that may comprise a CPA configuration, (e.g., a list of RRC reconfiguration* messages and/or associated execution conditions), wherein each RRC reconfiguration message* may contain a SCG configuration, in the RRC reconfiguration** received from a candidate SN, and may possibly contain an MCG configuration, for example, in a conditional SN addition procedure. The RRC reconfiguration message may also include an updated MCG configuration (e.g., to configure the required conditional measurements).

A wireless device may use the RRC reconfiguration message, may store the CPA configuration, and/or may reply to a MN with a RRC reconfiguration complete message, for example, in a conditional SN addition procedure. The wireless device may perform the reconfiguration failure procedure, for example, in case the wireless device may be unable to comply with a part of the configuration included in the RRC reconfiguration message*. The wireless device may begin evaluating the execution conditions. The wireless device may apply a RRC reconfiguration message corresponding to the selected candidate PSCell, and may send an MN RRC reconfiguration complete message*, that may comprise a RRC reconfiguration complete** message for the selected candidate PSCell and information enabling the MN to identify the SN of the selected candidate PSCell, for example, if the execution condition of one candidate PSCell is satisfied. The MN may inform the SN of the selected candidate PSCell that the wireless device has completed the reconfiguration procedure successfully via SN reconfiguration complete message, including the RRC reconfiguration complete** message. The MN may send the SN release request message(s) to cancel CPA in the other candidate SN(s), if configured. The other candidate SN(s) may acknowledge the release request.

A wireless device may perform synchronization towards a PSCell indicated in a RRC reconfiguration* message applied, for example, in a conditional SN addition procedure. A successful RA procedure towards a SCG may not be required for a successful completion of a RRC connection reconfiguration procedure. A MN may send a SN status transfer message, for example, if PDCP termination point may be changed to the SN for bearers using RLC AM, and if RRC full configuration may not be used. The MN may take actions to minimize service interruption due to activation of MR-DC (e.g., Data forwarding), for example, for SN terminated bearers and/or QoS flows moved from the MN, and dependent on the characteristics of the respective bearer and/or QoS flow. The update of the UP path towards the 5GC may be performed via a PDU Session Path Update procedure, if applicable.

A Conditional PSCell Change (CPC) may be defined as a PSCell change that may be executed by a wireless device, for example, if execution condition(s) are met. The wireless device may begin evaluating the execution condition(s) based on receiving the CPC configuration, and may stop evaluating the execution condition(s) based on a PSCell change and/or PCell change being triggered. Intra-SN CPC without MN involvement, inter-SN CPC initiated either by MN and/or SN may be supported.

A CPC configuration may comprise a configuration of CPC candidate PSCell(s) and/or execution condition(s), and the CPRC configuration may comprise a MCG configuration for inter-SN CPC, that may be applied, for example, if CPC execution is triggered. An execution condition may consist of one or more trigger condition(s) (e.g., CondEvents). Only a single RS type and at most two different trigger quantities (e.g., RSRP and RSRQ, RSRP and SINR, etc.) may be able to be used for the evaluation of CPC execution condition of a single candidate PSCell. A wireless device may execute a PSCell change procedure and/or the PCell change procedure (e.g., regardless of any previously received CPC configuration), for example, before any CPC execution condition may be satisfied, and/or upon reception of a PSCell change command or a PCell change command. The wireless device may release all stored CPC configurations, for example, based on the successful completion of a PSCell change procedure and/or PCell change procedure. The wireless device may not be required to continue evaluating the execution condition of other candidate PSCell(s), for example, if executing CPC. The wireless device may release all stored conditional reconfigurations (e.g., for CPC and for CHO), for example, based on the CPC procedure being executed successfully. The wireless device may release the stored CPC configurations, for example, based on the release of SCG.

A secondary node change procedure may be initiated either by MN and/or SN and may be used to transfer a wireless device context from a source SN to a target SN and to change a SCG configuration in a wireless device from one SN to another. A conditional secondary code change procedure, that may be initiated either by the MN or SN, may be used for CPC configuration and/or CPC execution, for example, in case of CPC.

A MN may initiate a conditional SN change by requesting a candidate SN(s) allocate resources for a wireless device by means of a SN addition procedure, that may indicate that the request may be for a CPC. The MN may provide candidate cells recommended by MN, via the latest measurement results for the candidate SN(s) to choose and configure the SCG cell(s), upper limit for a number of PSCells that may be prepared by the candidate SN. The candidate SN may determine a list of PSCell(s) to prepare (e.g., by considering the maximum number indicated by the MN) and, for each prepared PSCell, a candidate SN may determine other SCG SCells and/or may provide the new corresponding SCG radio resource configuration to the MN in a RRC reconfiguration** message contained in the SN addition request acknowledge message with the prepared PSCell ID(s) among the list of cells as indicated within the measurement results indicated by the MN. The candidate SN may provide data forwarding addresses to the MN, for example, if data forwarding is needed. The candidate SN may include an indication of a full and/or a delta RRC configuration. The candidate SN may either accept or reject each of the candidate cells listed within the measurement results indicated by the MN (e.g., the candidate SN may be not able to configure any alternative candidates). The MN may trigger the MN-initiated SN modification procedure (e.g., to the source SN) to retrieve the current SCG configuration and to allow provision of data forwarding related information before initiating the conditional SN change.

A MN may send to the wireless device a RRC reconfiguration message including a CPC configuration, (e.g., a list of RRC reconfiguration* messages and associated execution conditions), in which each RRC reconfiguration* message may contain a SCG configuration in the RRC reconfiguration** message received from the candidate SN and possibly an MCG configuration, for example, if the MN initiated a conditional SN change. The RRC reconfiguration message may be able to include an updated MCG configuration (e.g., to configure the required conditional measurements). The wireless device may apply the RRC reconfiguration message received, store the CPC configuration and replies to the MN with a RRC reconfiguration complete message. The wireless device may perform a reconfiguration failure procedure, for example, if the wireless device is unable to comply with the configuration included in the RRC reconfiguration message.

A MN may inform a source SN that a CPC may not have been configured via Xn-U address indication procedure, the source SN, (e.g., if applicable, together with the early status transfer procedure), and may begin early data forwarding, for example, for the case of MN initiated conditional SN change, upon receiving the MN RRC reconfiguration complete message from a wireless device. The PDCP SDU forwarding may take place during early data forwarding. The wireless device may begin evaluating the execution conditions, for example, based on receiving a RRC reconfiguration message. The wireless device may apply a RRC reconfiguration* message corresponding to the selected candidate PSCell, and may send an MN RRC reconfiguration complete* message, that may comprise an NR RRC reconfiguration complete** message for the selected candidate PSCell and information enabling the MN to identify the SN of the selected candidate PSCell, for example, if the execution condition of one candidate PSCell is satisfied. The MN may trigger a MN initiated SN release procedure to inform the source SN to stop providing user data to the wireless device, and may trigger the Xn-U address indication procedure to inform the source SN the address of the SN of the selected candidate PSCell, to begin late data forwarding.

A MN may inform a target candidate SN via a SN reconfiguration complete message, including a SN RRC reconfiguration complete** message, for example, for the case of MN initiated conditional SN change, and if the RRC connection reconfiguration procedure was successful. The MN may send the SN release request message(s) to cancel CPC in other candidate SN(s), if configured. The other candidate SN(s) may acknowledge the release request. The wireless device may synchronize to a PSCell indicated in the RRC reconfiguration* message applied, for example, if configured with bearers requiring SCG radio resources. The source SN may send a message, that the MN may send to the SN of the selected candidate PSCell, for example, if a PDCP termination point is changed for bearers using RLC AM. Data forwarding from the source SN may take place. Data forwarding may be initiated as early as the source SN receives an early data forwarding address. The source SN may send a secondary RAT data usage report message to the MN and may include the data volumes delivered to and/or received from the wireless device. A PDU session path update procedure may be triggered by the MN. The source SN may release radio and/or C-plane related resources associated with the wireless device context based on receiving the wireless device context release message. Any ongoing data forwarding may continue.

A base station may send a conditional primary secondary cell group cell (e.g., a PSCell) configuration. A wireless device may begin evaluating the execution condition(s) for PSCell candidate cells based on receiving the conditional PSCell configuration. The wireless device may execute a PSCell addition and/or change (e.g., SCG addition), for example, based on the condition(s) being met for a PSCell candidate cell. The wireless device may stop evaluating the execution condition for other candidate cells during the PSCell addition and/or change execution. The conditional PSCell configuration may comprise the configuration of PSCell candidate cell(s) generated by candidate target base stations and/or execution condition(s) generated by a source base station. The execution condition for conditional PSCell change may consist of measurement event such as A3 and A5. The execution condition for conditional PSCell addition may consist of measurement event such as A4 and A1.

FIG. 26 shows an example of a conditional PSCell addition and/or change procedure. A source base station 2605 (e.g., source) may determine a conditional PSCell addition and/or change 2610 based on measurement report 2615 from a wireless device 2620. A source base station 2605 (e.g., source) may send a conditional PSCell addition and/or change request message 2625 to target candidate cells (e.g., target 1 2630, target 2 2635, etc.) for the PSCell addition and/or change. The target cell (e.g., target 1 2630, target 2 2635, etc.) may send a conditional PSCell addition and/or change response message 2640 including a conditional PSCell addition and/or change configuration, for example, based on receiving the conditional PSCell addition and/or change request message 2625. The source base station 2605 (e.g., source) may send a RRC reconfiguration message 2645 containing the conditional PSCell addition and/or change configuration of candidate cells to the wireless device 2620, for example, based on receiving the conditional PSCell addition and/or change response message 2640. The wireless device 2620 may send a RRC reconfiguration complete message 2650 to the source base station 2605 (e.g., source), for example, based on receiving the RRC reconfiguration message 2645. The wireless device 2620 may begin evaluating conditional PSCell addition and/or change execution conditions for candidate cells in the conditional PSCell addition and/or change configuration 2655. The wireless device 2620 may apply the stored configuration of the selected candidate cell and synchronize to the candidate cell, for example, based on at least one conditional PSCell addition and/or change candidate cell satisfying the corresponding conditional PSCell addition and/or change execution condition. The wireless device 2620 may complete the conditional PSCell addition and/or change procedure, for example, based on successfully synchronizing the random access procedure.

A wireless device 2620 may be configured with a MCG and a SCG. Neither MCG nor SCG transmission may be suspended in the wireless device 2620. The wireless device 2620 may be configured with split SRB 1 and/or SRB3. The wireless device 2620 may initiate an MCG failure information procedure, for example, based on detecting RLF of the MCG (e.g., PCell). The wireless device 2620 may send a MCG failure information message to the MCG (e.g., PCell) via the SCG (e.g., PSCell) using the split SRB1 and/or SRB3. The MCG failure information message may comprise a failure type and/or measurement results. The SCG (e.g., PSCell) may forward the MCG failure information message to the MCG, for example, based on receiving the MCG failure information message. The MCG may send a RRC reconfiguration message 2645 and/or a RRC release message to the wireless device 2620 via the SCG, for example, based on receiving the MCG failure information message. The wireless device 2620 may continue the RRC connection without re-establishment, for example, based on receiving the RRC reconfiguration message 2645.

FIG. 27 shows an example of a MCG failure information procedure. A base station of MCG 2705 may send a RRC reconfiguration message 2710 comprising a cell group configuration for a SCG 2715. A wireless device 2720 may perform the cell group configuration for the SCG 2715 and/or synchronization 2725 to a PSCell of the SCG 2715 where the SCG 2715 may comprise one PSCell and optionally one or more secondary cells (SCells), for example, based on receiving the RRC reconfiguration message. The wireless device 2720 may perform a random access procedure to the PSCell for the synchronization 2725. The wireless device 2720 may detect a RLF 2730 in the MCG 2705 (e.g., PCell). The wireless device 2720 may configure split SRB1 and/or SRB3. The wireless device 2720 may initiate an MCG failure information procedure, for example, based on detecting the RLF. The wireless device 2720 may set primary path to a cell group identity of the SCG 2715, for example, based on the initiating the MCG failure information procedure 2725, and the split SRB1 being configured and/or PDCP duplication not being configured for the split SRB1. The wireless device 2720 may send an MCG failure information 2735 message to the MCG 2705 via SCG 2715, using the split SRB1 and/or the SRB3. The MCG failure information 2735 may comprise a failure type and measurement report. The SCG 2715 may send (e.g., forward) the MCG failure information 2740 to the MCG 2705, for example, based on receiving the MCG failure information 2735. The MCG 2705 may send a RRC reconfiguration message or a RRC release message 2745, for example, based on receiving the MCG failure information 2740. The SCG 2715 may send (e.g., forward) a RRC reconfiguration message or a RRC release message 2750, for example, based on receiving the RRC reconfiguration message or the RRC release message 2745.

An L1/L2 triggered mobility (LTM) may refer to a handover and/or cell switch (e.g., from a current serving cell to a target cell) that a wireless device may initiate, trigger, execute, and/or perform, for example, based on receiving an L1 control signaling (e.g., DCI) and/or an L2 control signaling (e.g., MAC CE). The LTM may refer to an L1 control signaling and/or an L2 control signaling that may initiate and/or trigger a handover and/or cell switch (e.g., from a current serving cell to a target cell). The LTM may be referred to as one or more different names. LTM may be referred to as and/or interchangeable with L1/L2 inter-cell mobility, L1/L2 signaling based handover, L1/L2 based handover, lower layer mobility (LLM) and/or the like. The L1/L2 signaling that may trigger the L1/L2 triggered mobility may comprise at least one of layer 1 (e.g., Physical layer) signal (e.g., DCI and/or UCI) and/or a layer 2 (e.g., MAC layer) signal (e.g., MAC CE and/or MAC subheader). The LTM may refer to and/or comprise a procedure that the wireless device receives, from a network (e.g., a serving cell or a serving base station), at least two signals (e.g., at least two control signals/messages). The at least two signals may comprise an L3 signaling (e.g., a RRC message and/or SIB) comprising configuration parameters of the LTM. The configuration parameters may be semi-statically configured (e.g., preconfigured) for the LTM. The at least two signals may comprise the L1/L2 signaling that may trigger (e.g., performs and/or initiates) the LTM. Handover may be referred to as and/or interchangeable with cell switch, LTM and/or the like, for example, if the handover is initiated and/or triggered by an L1 control signaling (e.g., DCI) and/or an L2 control signaling (e.g., MAC CE).

A wireless device may receive, from a network (e.g., a serving cell, a serving base station, a serving DU, and/or a serving CU), one or more messages (e.g., RRC message and/or SIB) comprising parameters used for the L1/L2 triggered mobility. The wireless device may receive the one or more messages, for example, via a source cell (e.g., current serving cell) of the network. The one or more messages may comprise one or more configurations for LTM. The one or more configuration for LTM may comprise parameters used for the LTM. Each of the one or more configurations may be associated with a respective (e.g., candidate) target cell, for example, to which the wireless device initiates, executes, triggers, and/or performs an LTM. A configuration (e.g., that may be associated with a respective target cell) of the one or more configuration for LTM may comprise configuration parameters of LTM to the respective target cell. Each of the configuration parameters may comprise, for example: an identifier of the respective target cell; the configuration to be applied if the wireless device accesses the target cell; and/or an indication indicating that the corresponding to the configuration parameters is triggered and/or initiated by the L1/L2 signaling.

A wireless device may monitor downlink transmission occasions (e.g., PDCCH and/or PDSCH) of a source cell after or based on receiving the one or more messages. The wireless device may receive the L1/L2 signaling (e.g., cell switch command) via the downlink transmission occasions. The L1/L2 signaling may comprise a DCI with a particular format, for example, that the wireless device may detect and/or receive via the downlink transmission occasion (e.g., PDCCH). The DCI may be addressed to a particular RNTI with which the wireless device monitors a PDCCH (e.g., of a serving cell and/or source cell). The L1/L2 signaling may comprise an MAC CE that the wireless device may receive, decode, and/or parse from a PDSCH that may be scheduled by a DCI or a PDCCH that the wireless device receives via downlink transmission occasion(s). The L1/L2 signaling may comprise an indication indicating one of the one or more configurations for LTM that are configured and/or indicated by the one or more messages (e.g., RRC message and/or SIB) that the wireless device receives. The indication may indicate a first configuration of the one or more configurations for LTM. The indication may comprise an identifier of the first configuration. The indication may be a configuration ID of the first configuration. The indication may comprise an identifier of a target cell respective to the first configuration. The wireless device may perform and/or execute the LTM (e.g., cell switch) to the target cell using configuration parameters of the first configuration based on receiving the L1/L2 signaling.

L1/L2 signaling (e.g., cell switch command) may comprise an indication indicating a first target cell that may be one or more target cell(s) (e.g., candidate cell(s)) for LTM. Each of the one or more configurations for the LTM that a wireless device may receive according may be associated with a respective target cell. The first target cell may be a target cell of LTM that a first configuration of the one or more configurations may indicate. The indication may comprise an identifier or an index of the first target cell. The L1/L2 signaling indicating the first target cell may indicate that the wireless device initiates, executes, triggers, and/or performs, for example, based on receiving the L1/L2 signaling the LTM to the first target cell using configuration parameters associated with the first target cell. The indication may indicate the first target cell and may comprise an indication indicating a configuration associated with the first target cell. The indication may comprise an indication indicating a configuration ID of the configuration associated with the first target cell that the wireless device uses for the LTM to the first target cell.

A network (e.g., base station, DU, and/or CU) may determine to perform (e.g., trigger and/or initiate) LTM, for example, after or in response to sending (e.g., transmitting) one or more LTM configurations to a wireless device. The network may determine to send (e.g., transmit), to the wireless device, the L1/L2 signaling to perform (e.g., trigger and/or initiate) LTM, for example, after or in response to sending (e.g., transmitting) the one or more LTM configurations to the wireless device. The wireless device may send (e.g., transmit), for the network to determine to perform the LTM, a report comprising one or more measurements (e.g., L1 measurement and/or L3 measurement) of radio channel(s) over which the wireless device receives one or more reference signals from the network. The network may determine to perform (e.g., trigger and/or initiate) the LTM based on the report comprising the one or more measurements. The network may determine which cell, among one or more cells configured for the LTM (e.g., as potential target cells for L1/L2 triggered mobility) may be a target cell of the LTM based on the one or more measurements. The network may indicate the target cell by sending (e.g., transmitting), to the wireless device, the L1/L2 signaling that may comprise one or more indications indicating the target cell and/or a trigger to perform and/or initiate the LTM to the target cell. The network may determine, for example, based on the one or more measurements, if to send (e.g., transmit), to the wireless device, the indication of the L1/L2 signaling to trigger to perform and/or initiate the LTM to the target cell. The LTM may be applied for a PCell change and/or for a PSCell change.

A report that a wireless device transmits to a network may comprise a L1 measurement. The L1 measurement may refer to a measurement report generated by a layer 1 (e.g., physical layer) and/or sent (e.g., transmitted) via physical channel(s) (e.g., as described herein in FIG. 5B). The physical channel(s) may comprise a PUCCH and/or PUSCH. The wireless device may send (e.g., transmit) the L1 measurement via PUSCH by piggybacking the PUCCH (e.g., comprising the L1 measurement) onto the PUSCH. The report may comprise a L3 measurement. The L3 measurement may refer to a measurement report generated by a layer 3 (e.g., RRC layer) and/or sent (e.g., transmitted) via logical channel(s) (e.g., as described herein FIG. 5B). The logical channel(s) may comprise CCCH and/or DCCH. The wireless device may multiplex the L3 measurement into an MAC PDU and/or send (e.g., transmit) the MAC PDU as a TB via the PUSCH.

The network may send (e.g., transmit) one or more LTM configurations for the L1/L2 triggered mobility for a L1 measurement. The one or more messages (e.g., a LTM configuration of the one or more LTM configurations) may comprise one or more resource configurations (e.g., CSI-ResourceConfig IE) of one or more reference signals and/or one or more report configurations (e.g., CSI-ReportConfig IE). The one or more resource configurations and/or the one or more report configurations may be for the L1 measurement of the L1/L2 triggered mobility. The one or more resource configurations may indicate radio resource configuration parameters based on a wireless device receiving the one or more reference signals. The one or more report configurations may indicate parameter(s) and/or value(s) that may be contained in a report comprising a L1 measurement. Each of the one or more report configurations may be associated with at least one (e.g., downlink) reference signal indicated by the one or more resource configurations. A first reporting configuration of the one or more report configurations may comprise an identifier of at least one reference signal indicated by the one or more resource configurations. The wireless device may send (e.g., transmit) a report comprising a measured quantity of the at least one reference signal, for example, if the report is generated based on the first reporting configuration and/or if the first reporting configuration comprises the identifier of at least one reference signal. Each of the one or more report configurations may be associated with a respective uplink resource (e.g., PUCCH and/or PUSCH). The wireless device may send (e.g., transmit) the report via the uplink resource associated with the first reporting configuration, for example, if the report is generated based on the first reporting configuration.

Each (e.g., CSI-ResourceConfig IE) of one or more resource configurations may be associated with one or more (e.g., downlink) reference signals. A first resource configuration of the one or more resource configurations may comprise radio resource configuration parameters of the one or more reference signals. The radio resource configuration parameters may indicate a set of downlink resources on which the wireless device may perform measurements (e.g., receives the set of reference signals) in order to determine the quantity or quantities to be reported. The radio resource configuration parameters may comprise an identifier of each of the one or more reference signals, a type (e.g., CSI-RS, SSB, DM-RS, and/or PT-RS) of each of the one or more reference signals, a transmission type (e.g., periodic, aperiodic, and/or semi-persistent) of each of the one or more reference signals, a sequence ID of each of the one or more reference signals, power control parameter(s) of each of the one or more reference signals, and/or time and frequency resource(s) via which the wireless device receives each of the one or more reference signals.

Each of one or more reference signals indicated by one or more resource configurations may be associated with a respective cell. The cell associated with (e.g., respective to) a reference signal of the one or more reference signals may be one of one or more cells configured by the network. The cell associated with (e.g., respective to) the reference signal may be a serving cell (e.g., PCell, PSCell, SCell, SPCell). The cell associated with (e.g., respective to) the reference signal may be a non-serving cell (e.g., referred to as one or more SSBs (e.g., or TRP) configured with a serving cell and/or configured with different PCI than PCI of the serving cell). The cell associated with (e.g., respective to) the reference signal may be a cell configured as one of target cell(s) of L1/L2 triggered mobility. The cell associated with (e.g., respective to) the reference signal may be a neighbor cell configured as measurement configurations for L3 measurement.

Each (e.g., CSI-ReportConfig IE) of one or more report configurations may indicate: a specific quantity or a set of quantities to be contained in a report; downlink resource(s) (e.g., from where the wireless device receives the one or more reference signals) on which the wireless device performs measurements (e.g., receives the set of reference signals) in order to determine the quantity or quantities to be reported; how actual reporting may be carried out (e.g., if the reporting is to be done and/or what uplink physical channel to use for the reporting).

A report configuration of one or more report configurations may indicate a set of (e.g., downlink) reference signals and/or a set of (e.g., downlink) resources on which the wireless device performs measurements (e.g., receives the set of reference signals) for the wireless device to determine the quantity or quantities to be reported. This may be done by associating the report configuration with one or more reference signals (e.g., NZP-CSI-RSResourceSet) to be used for the wireless device to measure channel characteristics. A report configuration may comprise an identifier (e.g., set ID) of a set of one or more reference signals. One or more resource configurations may comprise the identifier and a corresponding set of one or more reference signals. Each of the one or more reference signals may comprise one or more CSI-RSs, one or more SSBs, and/or one or more PT-RSs. The set of one or more reference signals may comprise any combination of one or more CSI-RSs, one or more SSBs, and/or one or more PT-RSs.

A report configuration of one or more report configurations may indicate a quantity and/or a set of quantities that a wireless device may report and/or contain in a report. A quantity and/or set of quantities may be referred to as channel-state information (CSI). The set of quantities may comprise at least one of any combination of channel-quality indicator (CQI), rank indicator (RI), and/or precoder-matrix indicator (PMI). The report configuration may indicate a reporting of received signal strength (e.g., reference-signal received power (RSRP)), received signal quality (e.g., reference-signal received quality (RSRQ)), and/or signal to interference and noise ratio (SINR). The RSRP and/or RSRQ for the L1 measurement may be referred to as L1-RSRP and/or L1-RSRQ, respectively (e.g., the reporting does not include the more long-term ("layer 3") filtering applied for the higher-layer RSRP reporting).

A report configuration of one or more report configurations may indicate if and/or how a wireless device may send (e.g., transmit) a report. The transmission of the report by the wireless device may be periodic (e.g., referred to as periodic reporting), semi-persistent (e.g., referred to as semi-persistent reporting), and/or aperiodic (e.g., referred to as aperiodic reporting). The report configuration may indicate a periodicity of the periodic reporting, for the periodic reporting. The wireless device may send (e.g., transmit) the report periodically (e.g., perform the periodic reporting) via PUCCH. The report configuration may comprise information about a periodically available PUCCH resource that may be used for the periodic reporting. The wireless device may be configured with periodically occurring reporting instances in the same way as for periodic reporting with activation and/or deactivation mechanism, for example, for semi-persistent reporting. The wireless device may activate (e.g., begin) and/or deactivate (e.g., stop or suspend) the semi-persistent reporting, for example, based on receiving a control signal (e.g., DCI and/or MAC CE) indicating the activation or deactivation. The wireless device may send (e.g., transmit) the report semi-persistently (e.g., perform the semi-persistent reporting). The report configuration may comprise information about a periodically available PUCCH resource to be used for the semi-persistent reporting. The wireless device may send (e.g., transmit) the report semi-persistently (e.g., perform the semi-persistent reporting) via semi-persistently allocated PUSCH resource(s).

A wireless device may receive, from a network (e.g., a serving cell, a service base station, a serving DU, and/or a serving CU), one or more messages (e.g., RRC message and/or SIB). The one or more messages may comprise one or more LTM configurations for the L1/L2 triggered mobility (e.g., L1/L2 triggered mobility). The one or more messages may comprise configuration parameters used for L1 measurement of the L1/L2 triggered mobility. The configuration parameters may comprise one or more resource configurations (e.g., CSI-ResourceConfig IE) and/or of one or more report configurations (e.g., CSI-ReportConfig IE) that are used for the L1 measurement. The wireless device may start, perform, and/or initiate the L1 measurement according to the configuration parameters of: one or more resource configurations (e.g., CSI-ResourceConfig IE); and/or of one or more report configurations (e.g., CSI-ReportConfig IE), for example, after or in response to receiving the configuration parameters. The wireless device may determines (e.g., measure) CQI, RI, PMI, RSRP, RSRQ, and/or SINR of and/or using one or more reference signals (e.g., CSI-RSs, SSBs, PT-RSs) that may be configured by the one or more resource configurations. The wireless device may generate a report comprising the L1 measurement. The wireless device may determine the contents and/or parameter value(s) contained in the report or the L1 measurement according to a report configuration, of the one or more report configurations, that triggers the transmission of the report. The wireless device may send (e.g., transmit) the report to the network. The wireless device may receive L1/L2 signaling that may trigger and/or initiate the L1/L2 triggered mobility using one of the one or more LTM configurations after or in response to sending (e.g., transmitting) the report.

FIG. 28 shows an example of L1/L2 triggered mobility. A wireless device 2805 may send (e.g., transmit) to a base station 2810 (e.g., a serving base station) and/or a network a measurement report 2815 (e.g., L3 measurement report) comprising one or more measurements of one or more cells. The base station 2810 (e.g., a serving base station) may determine at least one of the one or more cells as a candidate target cell for LTM 2820. The base station 2810 (e.g., a serving base station), upon receiving the measurement report 2815, may send (e.g., transmit) to the wireless device 2805 a RRC reconfiguration message 2825 that may include the configuration of a candidate target cell for LTM. The wireless device 2805 may store the configuration 2830 of the candidate target cell for LTM and send (e.g., transmit) a RRC reconfiguration complete message 2835 to a DU of the base station 2810 (e.g., a serving base station) based on receiving the RRC reconfiguration message 2825.

A target cell may refer to a cell to which a wireless device 2805 may perform, initiate, trigger, and/or execute a handover and/or a cell switch, wherein the handover and/or the cell switch may comprise any type of handover and/or cell switch as described herein (e.g., L3 handover, CHO, LTM, and LTM) based on an early TA procedure. The candidate target cell may refer to a cell indicated in a LTM configuration, for example, as a target cell (e.g., a potential cell) to which the wireless device 2805 may perform a LTM and/or a cell switch based on receiving a L1/L2 signal of the LTM. The wireless device 2805 may receive a plurality of LTM configurations. Each of the plurality of LTM configurations may comprise an indication and/or identifier of a respective candidate target cell. A candidate target cell may remain as a candidate of the target cell of the LTM (e.g., may not be a target cell) until the L1/L2 signal of the LTM indicates the target cell. None of candidate target cells that may be indicated by the plurality of the LTM configuration may become a target cell, for example, if the wireless device 2805 doesn't receive the L1/L2 signal of the LTM. One of the candidate target cells that may be indicated by the plurality of the LTM configuration may become a target cell, for example, if the wireless device 2805 receives the L1/L2 signal, of the LTM, that indicate the candidate target cell as a cell to which the wireless device 2805 may perform the LTM and/or a cell switch based on receiving the L1/L2 signal of the LTM.

A timing adjustment may be used interchangeably with the timing advance. The TA acquisition may refer to an acquisition of a timing adjustment value (e.g., a timing advance value). The acronym, TA, used herein may be interchangeable with a timing advance, time adjustment, timing advance value, and/or a time adjustment value. The timing advance value may be referred to as a timing alignment value. The timing advance offset value may be referred to as a timing alignment offset value. The timing alignment timer may be referred to as a time alignment timer, a timing advance timer, and/or a time advance timer. The timing advance group may be referred to as a timing alignment group.

The wireless device 2805, in FIG. 28, may send (e.g., transmit) a L1 measurement report 2840 to the base station. The base station 2810 may determine a cell switch 2845 using LTM based on the L1 measurement report. The base station 2810 may send (e.g., transmit) to the wireless device 2805 a L1/L2 signaling 2850 (e.g., cell switch command) indicating the determining the cell switch using LTM. The L1/L2 signaling 2850 may indicate a target cell of the candidate target cell and/or a configuration, associated with the target cell, among the configuration(s) for LTM. The wireless device 2805 may switch serving cell to the target cell 2855 (e.g., may indicate and/or determine the target cell as a (e.g., new) serving cell) based on receiving the L1/L2 signaling. The wireless device 2805 may perform synchronization 2860 with the target cell. The synchronization 2860 may comprise uplink synchronization and/or downlink synchronization. The wireless device 2805 may perform a random access procedure for (e.g., to acquire) the uplink synchronization. The wireless device 2805 may determine a downlink timing advance value and/or an uplink timing advance value from the uplink synchronization and/or the downlink synchronization. The wireless device 2805 may use the downlink timing advance value to adjust reception timing of a downlink transmission from the target cell. The wireless device 2805 may use the uplink timing advance value to adjust transmission timing of an uplink transmission to the target cell.

L1/L2 based inter-cell mobility (e.g., LTM) may comprise at least one of three phases: preparation, execution, and completion. The base station central unit (CU) may take decision (e.g., based on L3 measurements from the wireless device (UE)) to configure mobility parameters to the wireless device and base station distributed unit(s) (DU(s)) for target candidate cell(s) in advance for the preparation phase. The base station distributed unit may receive L1 measurements from a wireless device and may trigger a change of cell directly to the wireless device for the execution phase. A path switch toward the new cell may take place for the completion phase.

FIG. 29 shows an example of intra-DU LTM. The intra-DU LTM may refer to a handover and/or cell switch using LTM from a source cell of a DU to a target cell of the same DU. A serving DU 2905 may comprise a source cell (e.g., current serving cell) of a wireless device 2910 and/or a target cell of the LTM. The wireless device 2910 may send (e.g., transmit), to a CU 2920 via a serving DU 2905, a measurement report 2915 including one or more measurements of one or more cells, which may become candidate target cell(s) for LTM. A serving DU 2905, of a serving base station, may receive, from the wireless device 2910, the measurement report 2915 and/or may include the received measurement report 2915 in an UL RRC message transfer message 2925a to a CU of the serving base station. The serving DU 2905 may send (e.g., transmit), to the CU, the UL RRC message transfer message 2925 comprising the measurement report 2915 (e.g., to convey the received measurement report). The CU may send (e.g., transmit) a wireless device context request (e.g., UE context modification request) message 2930 to the DU 2905, that may indicate a request for the DU 2905 to configure the wireless device 2910 with the LTM. The DU 2905 may send (e.g., transmit) a wireless device context response message 2935 (e.g., UE context modification response), to the CU 2920, that may include the configuration of the candidate target cell(s) for LTM, for example, if the DU 2905 accepts the request for configuring LTM for the wireless device 2910 upon reception of the wireless device context request message 2930 (e.g., UE context modification request).

The DU 2905 may have identified one or more cells, as (e.g., preferred cell(s) of) candidate target cell(s) for the LTM and correspondingly may send (e.g., transmit) the one or more cells, for example, as a suggestion, to the CU 2920. This may be realized by the DU 2905 initiating a wireless device context modification procedure. The CU 2920 may take the one or more cells under consideration to determine the target cell(s) of the LTM.

The CU 2920 may send (e.g., transmit) to the DU 2905 aDL RRC message transfer message 2940 comprising a RRC reconfiguration 2945 to be sent (e.g., transmitted) to the wireless device 2910 based on a reception of the wireless device context modification response message 2935. The DU 2905 may send (e.g., transmit) to the wireless device 2910 the RRC reconfiguration message 2945 for configuring the one or more candidate target cells for LTM. The wireless device 2910 may send (e.g., transmit) a RRC reconfiguration complete message 2950 to the DU 2905, for example, based on the reception of the RRC reconfiguration message 2945. The DU 2905 may encapsulate the RRC reconfiguration message 2945 in the UL RRC message transfer message 2925b. The DU 2905 may send (e.g., transmit) the UL RRC message transfer message 2925b (e.g., comprising the RRC reconfiguration message 29) to the CU 2920. The CU 2920 may receive, from the DU 2905, the UL RRC message transfer message 2925b and may determine (e.g., consider) the wireless device 2910 to be configured with LTM, for example, based on the UL RRC message transfer message.

The wireless device 2910 may send (e.g., transmit) L1 measurement report 2955 (e.g., L1 measurements) to the serving DU 2905 of the base station. The LTM configuration in the RRC reconfiguration 2945 that the wireless device 2910 receives may comprise configuration parameters of the L1 measurement report. The configuration parameters may comprise one or more resource configurations (e.g., CSI-ResourceConfig IE) and/or one or more report configurations (e.g., CSI-ReportConfig IE). The wireless device 2910 may perform and/or start the L1 measurement based on the configuration parameters of the L1 measurement report 2955. The serving DU 2905 may determine a handover and/or a cell switch to a target cell using LTM 2960 (e.g., LTM decision) based on the L1 measurement report 2955. The serving DU 2905 may comprise a (e.g., current) service cell and a target cell of the LTM. The serving DU 2905 of the base station may send (e.g., transmit) to the wireless device 2910 a L1/L2 signaling 2965 (e.g., cell switch command) that may indicate the determining the handover and/or the cell switch to the target cell using the LTM. The serving DU 2905 may send (e.g., transmit) the L1/L2 signaling 2965 to the wireless device 2910 may send (e.g., transmit) to the CU 2920 a message 2970 (e.g., LTM trigger) that may indicate the sending (e.g., transmitting) the L1/L2 signaling 2965 to the wireless device 2910. The message may indicate an identity or identifier (ID) of the target cell. The L1/L2 signaling 2965 may indicate a target cell and/or a configuration (e.g., and/or configuration parameters to be used by the wireless device 2910 for the LTM to the target cell), associated with the target cell, among the configuration for LTM. The serving DU 2905 may receive, from the CU 2920, a response to the message. The response may be a wireless device context modification confirmation message 2975 (e.g., a UE context modification confirm). The wireless device 2910 may switch serving cell to the target cell based on receiving the L1/L2 signaling 2965. The wireless device 2910 may perform synchronization 2980 with the target cell. The synchronization 2980 may comprise uplink synchronization and/or downlink synchronization. The wireless device 2910 may perform a random access procedure for the uplink synchronization. The wireless device 2910 may send (e.g., transmit) uplink packet via the target cell and/or receive downlink packet via the target cell based on the synchronization being successfully completed.

FIG. 30 shows an example of inter-DUL1/L2 triggered mobility. The inter-DU LTM may refer to a handover and/or a cell switch using LTM from a source cell of a first DU to a target cell of a second DU (e.g., different from the first DU). A serving DU 3010 may comprise a source cell (e.g., current serving cell) of a wireless device 3005. A candidate DU 3015 may comprise a target cell of the wireless device 3005 for the LTM. The serving DU 3010 and the candidate DU 3015 may communicate to each other, for example, for the inter-DU LTM,, via one or more CUs to coordinate (e.g., determine) an LTM for the wireless device 3005. The serving DU 3010 and the candidate DU 3015 may communicate to each other via the same CU as described herein, for example, if the serving DU 3010 and the candidate DU 3015 are associated with a same CU. The serving DU 3010 and the candidate DU 3015 may be associated with different CUs. The serving DU 3010 and the candidate DU 3015 may be respectively associated with a serving CU and a candidate CU. The serving DU 3010 and the candidate DU 3015 may communicate to their respective CUs for this case. The CUs may communicate to each other, for example, to coordinate (e.g., determine) an LTM from the source cell of the serving DU 3010 to the target cell of the candidate DU 3015 for the wireless device 3005.

A wireless device 3005 may send (e.g., transmit) a measurement report 3020 (e.g., a L3 measurement report and/or a L1 measurement report) including one or more measurements of one or more cells, which may become candidate target cells for LTM. A serving DU 3010, of a serving base station, that may receive the measurement report may include the measurement report in an UL RRC message transfer message 3025 to a CU 3030 of the serving base station. The serving DU 3010 may send (e.g., transmit) the UL RRC message transfer message 3025 to the CU, for example, to convey the received measurement report 3020 to the CU. The CU may send (e.g., transmit) a wireless device context setup request message 3035 (e.g., UE context setup request) to a candidate DU 3015, for example, to create a wireless device context of the wireless device 3005 and/or indicate a request to the candidate DU 3015 to configure the wireless device 3005 with LTM. The candidate DU 3015 may send (e.g., transmit) a wireless device context setup response message 3040 (e.g., UE context setup response) to the CU. The wireless device context setup response message 3040 may comprise the configuration of a candidate target cell associated with the candidate DU 3015 for the LTM, for example, if the candidate DU 3015 accepts the request for configuring LTM for the wireless device 3005 upon reception of the wireless device context setup request message 3035. The CU may send (e.g., transmit) a wireless device context request message 3045 (e.g., UE context modification request) to the serving DU 3010 that may indicate the candidate target cells for LTM. The CU may send (e.g., transmit) to the serving DU 3010 a DL RRC message transfer message 3050 comprising a RRC reconfiguration 3055 to be sent (e.g., transmitted) to the wireless device 3005 based on reception of the wireless device context response message 3060 (e.g., UE context modification response). The RRC reconfiguration may comprise one or more LTM configurations. Each LTM configuration of the one or more LTM configurations may be associated with a respective target cell (e.g., candidate cell) and/or may comprise a respective LTM configuration parameters used by the wireless device 3005 for and/or during an LTM to the respective target cell. The serving DU 3010 may send (e.g., transmit) to the wireless device 3005 the RRC reconfiguration message 3055 for configuring the one or more LTM candidates. The wireless device 3005 may send (e.g., transmit) a RRC reconfiguration complete message 3065 to the serving DU 3010. The serving DU 3010 may encapsulate the RRC reconfiguration complete message 3065 in the UL RRC message transfer message 3070 and send (e.g., transmit) the UL RRC message transfer message 3070 to the CU 3030. The CU 3030 may receive the message and determine (e.g., consider) the wireless device 3005 configured with LTM.
the wireless device 3005 may send (e.g., transmit) L1 measurement report 3075 (e.g., L1 measurements) to the serving DU 3010 of the base station. The serving DU 3010 may determine a handover and/or a cell switch using LTM 3080 based on the L1 measurement report 3075. The serving DU 3010 of the base station may send (e.g., transmit) to the wireless device 3005 a L1/L2 signaling 3085 (e.g., L/L2 signal) that may indicate the determining. The serving DU 3010 may send (e.g., transmit) to the CU 3030 a LTM trigger message 3090 (e.g., LTM trigger) indicating the sending (e.g., transmitting) of the L1/L2 signaling 3085 to the wireless device 3005 based on sending (e.g., transmitting) the L1/L2 signaling 3085 to the wireless device 3005. The LTM trigger message 3090 may indicate an identity and/or identifier (ID) of the target cell. The L1/L2 signaling 3085 may indicate a target cell of the candidate target cell and/or a configuration, associated with the target cell, among the configuration for LTM. The wireless device 3005 may switch serving cell to the target cell based on receiving the L1/L2 signaling. The wireless device 3005 may perform synchronization 3092 with the target cell. The synchronization 3092 may comprise uplink synchronization and/or downlink synchronization. The wireless device 3005 may perform a random access procedure for the uplink synchronization. The wireless device 3005 may send (e.g., transmit) uplink packet via the target cell and/or receive downlink packet via the target cell based on the synchronization being successfully completed. The candidate DU 3015 may receive a signal for uplink synchronization (e.g., preamble) and/or uplink packet via the target cell. The candidate DU 3015 may send (e.g., transmit) to the CU 3030 a access success message 3094 indicating that the wireless device 3005 successfully accesses to the target cell of the candidate DU 3015 based on the receiving.

A serving DU may have identified some cells for the LTM and correspondingly may send (e.g., transmit) the identified cells as a suggestion to the CU. The CU may take them under consideration. This may be realized by the DU initiating a wireless device context modification procedure.

A base station may configure to a wireless device, RRC configuration parameters (e.g., SSBs, RACH resources, MAC parameters, PHY cell common and/or wireless device-specific parameters) of a target PCell for performing a HO and/or a CHO to the target PCell from a source PCell. The wireless device may apply the received and/or stored RRC configuration parameters, for example, if performing the HO and/or the CHO to the target PCell. The wireless device may begin to perform downlink synchronization towards the target PCell (e.g., time/frequency alignment by monitoring the SSBs configured on the target PCell). The wireless device may begin to perform uplink synchronization, for example, by initiating an RA procedure based on the RACH resources configured on the target PCell based on the downlink synchronization being complete. The wireless device may receive a time alignment (TA) command in an RAR corresponding to a preamble being sent (e.g., transmitted) by the wireless device.

A wireless device may select a first SSB from a plurality of candidate SSBs configured in RACH resources (e.g., as described herein in FIG. 22) on a target PCell based on a RSRP value of a first SSB being greater (e.g., higher, more, etc.) than a RSRP threshold for sending (e.g., transmitting) a preamble during a RA procedure. The RA procedure that the wireless device performs may be based on methods described herein (e.g., FIG. 13A, FIG. 13B, and/or FIG. 13C). The RA procedure may be a CBRA and/or CFRA that the wireless device performs based on methods described herein (e.g., FIG. 13A, FIG. 13B, and/or FIG. 13C). A wireless device may determine a preamble with a preamble index associated with the selected first SSB according to RACH resource configuration parameters. The wireless device determines a next available PRACH occasion from PRACH occasions corresponding to the selected first SSB permitted by the restrictions given by the ra-ssb-OccasionMaskIndex configured in the rach-ConfigDedicated IE based on selecting the first SSB. The wireless device may transmit the preamble via the determined PRACH occasion to the target PCell. The wireless device may monitor a PDCCH of the target PCell for receiving an RAR corresponding to the preamble. The wireless device may receive the RAR comprising the preamble index and/or a TA command. The wireless device may complete the CFRA procedure. The CFRA procedure may be implemented based methods described herein (e.g., FIG. 13B). The wireless device may receive, from the target PCell, a beam indication (or a TCI state indication) used for PDCCH, PDSCH, and/or CSI-RS reception and/or PUCCH, PUSCH, and/or SRS transmission for the target PCell based on completing the CFRA procedure. The wireless device may use the beam (or the TCI state) for PDCCH, PDSCH, and/or CSI-RS reception and/or PUCCH, PUSCH, and/or SRS transmission for the target PCell.

A wireless device may perform downlink synchronization, uplink synchronization, beam alignment, and/or management via a target PCell, for example, after receiving a HO command (e.g., RRC reconfiguration with a ReconfigurationWithSync IE). Performing downlink synchronization, uplink synchronization and/or beam alignment may be time consuming.

FIG. 31A shows an example of a timeline of PCell switching. More specifically, FIG. 31A shows an example of a timeline of L3 handover for which a wireless device may receive (e.g., from a base station) one or more messages and/or signals and/or may transmit (e.g., to the base station) one or more messages and/or signals. The wireless device may spend around 10ms for RRC message processing 3105 (e.g., PDCCH and/or PDSCH decoding, ACK/NACK feedback etc.) and then spend 20 ms for wireless device processing 3110 (e.g., loading RRC/MAC/PHY related parameters to memory unit of the wireless device, etc.), for example, if a wireless device receives a HO command 3115 (e.g., a RRC reconfiguration message as described herein in FIG. 20, FIG. 21 and/or FIG. 22). This process of RRC message processing and wireless device processing may be referred to as wireless device reconfiguration 3130 (e.g., UE Reconfiguration). The wireless device may spend more than 20ms for searching for a first SSB 3120 (Tfirst-SSB) and may need an additional 2ms for processing the SSB 3125 (TSSB-processing). The SSB searching and processing may be referred to as downlink (DL) synchronization 3135. The wireless device may spend around 20ms for uplink (UL) synchronization 3140 comprising a first time period of an interruption uncertainty 3145 (TIU) in acquiring a first available PRACH occasion for a preamble transmission in the target cell, a second time period used for PRACH transmission, a third time period 3150 (RAR delay) for monitoring PDCCH for receiving an RAR corresponding to the preamble transmission, and/or receiving and/or decoding the RAR. TIU 3145 (15ms) may be up to the summation of SSB to PRACH occasion association period and 10 ms. There may be additional time periods for processing and/or coding a RRC message for a HO complete indication. Existing HO procedure may increase PCell switching latency.

FIG. 31B shows an example of a timeline of PCell switching. More specifically, FIG. 31B shows an example of timeline of LTM in which a wireless device may receive (e.g., from a base station) one or more messages and/or signals and/or may transmit (e.g., to the base station) one or more messages and/or signals for mobility management and/or network energy saving. The wireless device may receive a RRC reconfiguration message 3155 (e.g., Pre-Config) as described herein. The wireless device may spend 10ms for RRC processing 3160, for example, before a wireless device receives a HO command (e.g., a L1/L2 signal as described herein).

The wireless device may receive an L1/L2 signal 3165 that may indicate a cell switch (e.g., a PCell switching), for example, after receiving the RRC reconfiguration message 3155. The wireless device may perform DL synchronization 3175 and/or UL synchronization 3180 based on receiving the layer 1/2 signal indicating the cell switch. The wireless device may receive a TCI state indication 3170 of the new PCell for PDCCH and/or PDSCH reception and/or PUCCH and/or PUSCH transmission via the new PCell based on completing the DL/UL synchronization. A wireless device may use wireless device reconfiguration based on completing the DL synchronization 3175 and/or UL synchronization 3180. The wireless device reconfiguration may be conducted upon receiving the RRC reconfiguration message 3155, for example, if the wireless device supports the wireless device reconfiguration after receiving the RRC reconfiguration message 3155 rather than after completing the DL synchronization 3175 and/or UL synchronization 3180. The latency for HO to the new PCell in this case comprises DL synchronization 3175, UL synchronization 3180, and TCI state indication and/or application.

The wireless device may perform UL synchronization 3180 by conducting RACH procedure, for example, after or in response to receiving the L1/L2 signal 3165 indicating a cell switch (e.g., cell switching command) using methods as described herein in FIG. 13A, FIG. 13B and/or FIG. 13C. The performing UL synchronization 3180 may comprise, sending (e.g., transmitting) a preamble via an active uplink BWP (e.g., a BWP configured as firstActiveUplinkBWP-id as described herein) of uplink BWPs of the target PCell, monitoring PDCCH on an active downlink BWP (e.g., a BWP configured as firstActiveDownlinkBWP-id as described herein) of the target PCell for receiving an RAR 3185 comprising a TA which is used for PUSCH and/or PUCCH transmission via the target PCell, receiving the RAR and/or obtaining the TA. The wireless device may activate the uplink BWP that may be configured with firstActiveUplinkBWP-id and/or the downlink BWP that may be configured with firstActiveDownlinkBWP-id on the target PCell upon performing HO to the target PCell. The wireless device may obtain the TA to be used for PUSCH and/or PUCCH transmission via the target PCell after or in response to completing the UL synchronization. The wireless device may adjust uplink transmission timing by using the TA and may send (e.g., transmit) PUSCH and/or PUCCH via the target PCell based on the adjusted timing. The adjusting uplink transmission timing may comprise advancing or delaying the transmissions by an amount indicated by a value of the TA, for example, to ensure the uplink signals received at the target PCell are aligned (e.g., in time domain) with uplink signals sent (e.g., transmitted) from other wireless devices.

A network and/or a wireless device may perform an early TA acquisition (ETA) or early random access (Early RACH) procedure, for example, to further reduce HO latency, especially the latency introduced for uplink synchronization. The ETA may refer to a procedure comprising a downlink transmission that a wireless device, that may be configured with an LTM, receives as a first indication of the ETA from the network (e.g., a serving base station and/or a serving cell). The first indication of the ETA may indicate a uplink reference signal (e.g., preamble, SRS, DM-RS, and/or PT-RS) to a candidate target cell that may be one of the candidate target cells configured in the LTM configuration. The first indication may be DCI and/or MAC CE. The ETA may refer to a procedure comprising an uplink transmission that a wireless device transmits, to the candidate target cell, the uplink reference signal. The ETA may be for acquiring a TA value before triggering, initiating, and/or executing the LTM. The wireless device may receive a second indication (e.g., L1/L2 signal in FIG. 28, FIG. 29, FIG. 30, and/or FIG. 31B) indicating a cell switch to a target cell (e.g., the candidate target cell) that is one of candidate targets cell configured in the LTM configuration, for example, after or in response to receiving the first indication and/or sending (e.g., transmitting) the uplink reference signal. For example, the wireless device that performs the ETA procedure may not perform an RA procedure to the target cell, for example, after or in response to receiving the second indication, for example, if the target cell is the same as the candidate target cell to which the wireless device transmits the uplink reference signal based on the first indication.

A base station central unit of a base station determines a layer 3 (L3) handover (e.g., may be referred to as and/or comprise a normal handover or conditional handover) based on L3 measurement report received from a wireless device. For example, the wireless device transmits to the base station the L3 measurement report via a RRC message (e.g., measurement report message). A base station distributed unit of the base station may receive the RRC message and forwards the RRC message to the base station central unit. Based on the determining the L3 handover, the base station central unit may send (e.g., transmit) to the wireless device a RRC message (e.g., a handover command) for the L3 handover. The wireless device may require more time to obtain L3 measurement results for the L3 measurement report as compared to a L1 measurement results as described herein in FIG. 18. The L3 measurement results may be an averaged value of one or more L1 measurement results.

A base station distributed unit may determine a LTM (e.g., a layer 1/2 handover) based on L1 measurement report received from a wireless device. For example, the wireless device transmits L1 measurement report via a L1/L2 signal to the base station distributed unit. Based on determining the LTM, the base station distributed unit may send (e.g., transmit) a L1/L2 signal triggering the LTM to the wireless device. The LTM decision by the base station distributed unit may not require signals between the base station distributed unit and the base station central unit. It may reduce a time for a handover decision and the signals. The LTM decision based on L1 measurement report may increase a chance to handover (e.g., switch a cell) as compared to a handover (e.g., L3 handover) decision based on the L3 measurement report.

A wireless device may receive a RRC reconfiguration message triggering a layer 3 (L3) handover (e.g., normal handover) from a base station. The wireless device, receiving the RRC reconfiguration message triggering the L3 handover, may spend around 10ms for RRC message processing and may spend 20 ms for wireless device processing as described herein in FIG. 31A. The wireless device may delay the L3 handover until the RRC processing and wireless device processing are completed.

A wireless device may receive a RRC reconfiguration message comprising a pre-configuration for LTM (e.g., a LTM configuration) as described herein in FIG 31B. The wireless device may spend 10ms for RRC processing the RRC reconfiguration. The wireless device may receive the L1/L2 signal for LTM after the RRC processing is completed. The wireless device that may be receiving the L1/L2 signal for LTM may perform a handover and/or cell switch for the LTM without the delay due to the RRC processing time.

FIG. 32 shows an example method of early TA acquisition (ETA). More specifically, FIG. 32 shows an example of ETA for an LTM (e.g., inter-DU LTM). A wireless device 3205 and/or network (e.g., serving DU 3210, candidate DU 3215, and/or CU 3220) may perform, among a wireless device 3205, serving DU 3210, candidate DU 3215, and/or CU 3220, one or more transmissions and/or receptions as described herein in FIG. 30 before the CU 3220 performing the transmission of the DL RRC message transfer 3225 to serving DU 3210. The wireless device 3205 and/or network (e.g., serving DU 3210, candidate DU 3215, and/or CU 3220) may perform, among the wireless device 3205, the serving DU 3210, the candidate DU 3215, and the CU 3220, signaling (e.g., reception(s) and/or transmissions) from a transmission of measurement report (e.g., from the wireless device 3205 to the serving DU) to a reception of a RRC reconfiguration 3230 (e.g., from the serving DU 3210 to the wireless device 3205) as described herein in FIG. 30, for example, before the CU 3220 performs the transmission of the DL RRC message transfer 3225 to serving DU 3215. The network (e.g., a base station, a source base station, etc.) may configure the wireless device 3205 to perform measurement reporting (e.g., including the configuration of measurement gaps) for a plurality of neighbor cells (e.g., cell 1 from a candidate DU 3215, cell 2 from a serving DU 3210, etc.), for example, before the early TA (ETA) procedure 3240. The measurement reporting may be a L3 measurement reporting, that may be different from L1 measurement reporting (e.g., L1 CSI reporting). The wireless device 3205 may send (e.g., transmit) one or more measurement reports 3235 (e.g., L1 measurements) to the source base station (e.g., serving DU 3210as described herein in FIG. 32).

The base station (e.g., the CU 3220) may determine a candidate target cell for LTM before the early TA procedure 3240 (e.g., ETA procedure) based on the one or more measurement reports from the wireless device 3205, as described herein (e.g., as described herein in FIG. 30). The base station 3220 may also include available measurement information for the candidate target cells provided in the list.

The base station may send (e.g., transmit) to the wireless device a RRC reconfiguration messages that may comprise one or more LTM configurations as described herein (e.g., as described herein in FIG. 30) before the early TA procedure 3235. Each of the one or more LTM configurations may be associated with and/or indicate a respective candidate target cell for LTM. A LTM configuration, of the one or more LTM configurations, may comprise cell group configuration IE of the base station, and/or SpCell configuration IE of the candidate target cell (e.g., a candidate target PCell/SCells of the base station).

The base station may configure the wireless device 3205 with a LTM (e.g., for PCell switching/changing, mobility, etc.) procedure that may be different from a normal HO procedure (e.g., as described herein in FIG. 20) and/or a CHO procedure (e.g., as described herein in FIG. 23) as described herein (e.g., as described herein in FIG. 30) and before the early TA procedure by comprising a LTM configuration in a RRC reconfiguration message.

A LTM configuration, of the one or more LTM configurations, that may be associated with a candidate target cell may comprise a list of cells, for example, for a CA and/or DC operation for the case that a wireless device 3205 may perform a handover to the candidate target cell. The LTM configuration may comprise one or more indications and/or parameters that may indicate, among the cells in the list, which cells may become a PCell, PSCell, SpCell, and/or SCell for the CA and/or DC operation for the case that a wireless device 3205 performs a handover to the candidate target cell. The wireless device 3205 may configure the CA and/or DC operation according the LTM configuration, for example, if the wireless device 3205 successfully completes a handover based on the LTM to the candidate target cell. A cell (e.g., the candidate target cell) that may be indicated in the list as a PCell may become, for example, a PCell based on the wireless device 3205 successfully completing the handover based on the LTM to the candidate target cell. A cell that may be indicated in the list as a PSCell may become a PSCell, for example, based on the wireless device 3205 successfully completing the handover based on the LTM to the candidate target cell. A cell that may be indicated in the list as a SpCell may become a SpCell, for example, based on the wireless device 3205 successfully completing the handover based on the LTM to the candidate target cell. A cell that may be indicated in the list as a SCell may become a SCell, for example, based on the wireless device 3205 successfully completing the handover based on the LTM to the candidate target cell.

The wireless device 3205, may send (e.g., transmit), using/via a PRACH occasion, the preamble 3250, or a SRS which is not shown in FIG. 32) to the candidate target cell of a candidate DU 3215 based on receiving a first L1/L2 signal 3245. The candidate DU 3215 may monitor the PRACH occasion for receiving the preamble, from the wireless device 3205. The candidate DU 3215 may determine and/or estimate a TA 3254 to be used by the wireless device 3205 for a future uplink transmission in the candidate target cell, for example, after the wireless device 3205 successfully completes a handover based on the LTM to the candidate target cell.

As a first option 3258 (e.g., Option 1) the candidate DU 3215 may not send (e.g., transmit) to the wireless device 3205 a response (e.g., RA response, RAR) that may indicate an estimated TA value (e.g., associated with the candidate target cell of the candidate DU 3215) based on receiving the preamble from the wireless device 3205 for early ETA 3240. The candidate DU 3215 may send (e.g., transmit) and/or forward the estimated TA value 3264 (e.g., TA indication) for the candidate target cell to the serving DU 3210 via the CU 3220 of the base station. The wireless device 3205, in the first option 3258, may not monitor PDCCH on the candidate target cell, based on sending (e.g., transmitting) the preamble to the candidate target cell. The serving DU 3210 may indicate the estimated TA together with a second L1/L2 signal 3266 (e.g., $2^{nd}$ L1/L2 signal in FIG. 32) that may indicate and/or trigger LTM to the candidate target cell of the candidate DU 3215.

Alternatively, as a second option 3270 (e.g., Option 2), the candidate DU 3215 may send (e.g., transmit) the estimated TA value 3274 to the wireless device 3205 (e.g., as an RAR, and/or as a TAC MAC CE), for example, after or in response to receiving the preamble from the wireless device 3205. The wireless device 3205, in the second option, may monitor (e.g., start to monitor) PDCCH of the candidate target cell of the candidate DU 3215, for example, for receiving the RAR to the preamble (e.g., as described herein with respect to FIG. 13A, FIG. 13B, and/or FIG. 13C) after or in response to sending (e.g., transmitting) the preamble to the candidate target cell of the candidate DU 3215. The wireless device 3205 may maintain a TAT for a TAG associated with the candidate target cell. The wireless device 3205 may maintain the candidate target cell as a non-serving cell. The RAR and/or the TAC MAC CE may indicate (e.g., one or more bitfields of the MAC CE), for example, if the TA value in the RAR and/or the TAC MAC CE may be for a serving cell, or a TAG associated with the serving cell, for example, of the serving DU 3210, and/or for a non-serving cell (e.g., the candidate target cell) of the candidate DU 3215.

The candidate DU 3215, in the second option 3270, may send (e.g., transmit) the estimated TA value to the wireless device 3205, for example, after or in response to receiving the preamble from the wireless device 3205. The wireless device 3205, in the second option 3270, may monitor (e.g., start to monitor) PDCCH of the candidate target cell of the candidate DU 3215, for receiving the estimated TA (e.g., as described herein with respect to FIG. 13A, FIG. 13B and/or FIG. 13C), for example, after or in response to sending (e.g., transmitting) the preamble to the candidate target cell of the candidate DU 3215. For example, the candidate target cell may send (e.g., transmit) to the wireless device 3205, a message (e.g., RAR) comprising the estimated TA based on the preamble received from the wireless device 3205. The wireless device 3205 may maintain a TAT for a TAG associated with the candidate target cell. The wireless device 3205 may maintain the candidate target cell as a non-serving cell. The RAR and/or the TAC MAC CE may indicate (e.g., one or more bitfields of the MAC CE), for example, if the TA value in the RAR and/or the TAC MAC CE are for a serving cell, for a TAG that may be associated with the serving cell (e.g., of the serving DU 3210), and/or for a non-serving cell (e.g., candidate target cell) of the candidate DU 3215.

The transmission of a preamble to a target candidate target cell, before receiving an L1/L2 signal, with or without comprising a TA estimated by the target base station for the candidate target cell, that may provide an indication to perform a LTM and/or a cell switch to the candidate target cell, may be referred to as an early TA acquisition (ETA) procedure. By implementing the ETA, before the wireless device 3205 performs the HO, the target base station may obtain the TA to be used by the wireless device after performing the HO and/or LTM to the candidate target cell. The TA for the candidate target cell may be sent (e.g., transmitted) as a part of an RAR and/or combined with the L1/L2 signal and/or command that may indicate the candidate target cell for switching. Compared with the timelines described herein in FIG. 31A and/or FIG. 31B, the wireless device may skip the RA procedure after receiving the L1/L2 signal and/or command that may indicate the LTM and/or cell. The ETA procedure may, therefore, reduce the interruption due to uplink synchronization with the candidate target cell upon performing HO procedure or PCell switching procedure.

An ETA of a wireless device may be referred to as and/or may be interchangeable with acquiring, by a wireless device, a TA associated with a cell before performing, by the wireless device a handover to the cell and/or the like. Sending (e.g., transmitting), by a wireless device, a reference signal to a cell before performing, by the wireless device, a handover to the cell may be referred to as and/or may be interchangeable with ETA and/or the like. Sending (e.g., transmitting), by a wireless device, a reference signal to a cell before performing, by the wireless device a handover to the cell may be for ETA. Before performing a handover (e.g., LTM) to a cell may be referred to as and/or may be interchangeable with before executing a handover (e.g., LTM) to a cell, before receiving a L1/L2 signal indicating cell switch (or LTM or handover) to a cell and/or the like.

The first L1/L2 signal 3245 sent (e.g., transmitted) from a serving cell of the serving DU 3210 for early TA acquisition (ETA) may be referred to as an L1/L2 ETA indication. The L1/L2 ETA indication may be a PDCCH order, DCI, and/or MAC CE that a serving cell transmits to a wireless device. The L1/L2 ETA indication may comprise one or more fields that may indicate an identifier of a candidate target cell to which the wireless device may send (e.g., transmit) the reference signal (e.g., preamble) for the ETA before the LTM and/or before receiving the second L1/L2 signal 3266 or 3278 (e.g., cell switch command to the candidate target cell). The wireless device 3205 may monitor PDCCH of the serving cell for receiving the L1/L2 ETA indication.

An ETA may comprise a procedure to send (e.g., transmit), by a wireless device, a reference signal to a cell before receiving, by the wireless device, a L1/L2 signal, for LTM, indicating a cell switch (or a handover) to the cell. A reference signal for ETA may comprise a preamble, a sounding reference signal (SRS), a demodulation reference signal (DM-RS), a phase tracking reference signal (PT-RS) and/or the like. A resource for transmission of the reference signal may be time and/or frequency resources via which the wireless device may send (e.g., transmit) the reference signal for ETA. The resource may be PRACH, a SRS resource, a DM-RS resource (e.g., one or more DM-RS symbol over one or more subcarriers), a PT-RS resource (e.g., one or more PT-RS symbol over one or more subcarriers) and/or the like.

An ETA may be referred to as an early RACH (e.g., an early RA procedure), for example, if the reference signal is a preamble. The early RACH (e.g., early RA procedure) may comprise a procedure to send (e.g., transmit), by a wireless device, a preamble to a cell before receiving, by the wireless device, a signal indicating a cell switch (e.g., a handover) to the cell. A resource for transmission of the preamble may be time and frequency resources via which the wireless device may transmit the preamble for early RACH. The resource may be PRACH. An LTM performed after or in response to the ETA being performed may be referred to as a RACH-less (e.g., a RACH skip) LTM or LTM with RACH-less (e.g., RACH skip) or the like.

For the first option 3258 (e.g., option 1) of ETA, the wireless device 3205 may receive a second L1/L2 signal and/or command 3266 (e.g., 2nd L1/L2 signal in FIG. 32), for example, that may indicate to perform LTM and/or cell switch to the candidate target cell. The second L1/L2 signal and/or command 3266 may further indicate the TA (e.g., forwarded from the candidate DU 3215 of a target base station to the serving DU 3210 of a source base station that may be used for the target PCell in the future), for example, if the wireless device does not receive the TA before or until receiving the second L1/L2 signal and/or command 3266. The wireless device may switch the serving cell 3286 (e.g., a PCell from a serving cell of the serving DU 3210 to the candidate target cell of the candidate DU 3215), and the wireless device may send (e.g., transmit) PUSCH and/or PUCCH 3290 via the candidate target cell (e.g., that becomes a PCell) of the candidate DU 3215 based on the TA and on receiving the second L1/L2 signal and/or command 3266. Switching the PCell from the serving cell in the serving DU 3210 to the candidate target cell may comprise at least one of: using RRC configuration parameters of the candidate target cell that may become the PCell, stopping using RRC configuration parameters of the serving cell of the serving DU 3210, resetting and/or reconfiguring a MAC entity, receiving RRC messages, MIB, SSBs, SIBs, PDCCHs, and/or PDSCHs from the candidate target cell that may become the PCell and stop receiving RRC messages, MIB, SSBs, SIBs, PDCCHs, and/or PDSCHs from Cell 0.

For the second option 3270 (e.g., option 2) of ETA, the candidate DU 3215 may send (e.g., transmit) to the wireless device 3205 a response 3274 (e.g., RA response, RAR) that may indicate a TA, that may be associated with the candidate target cell of the candidate DU 3215, for the wireless device 3205 based on receiving the preamble from the wireless device. The wireless device 3205 may monitor PDCCH on the candidate target cell of the candidate DU 3215 and may receive the response 3274 (e.g., RA response, RAR) via the PDCCH based on sending (e.g., transmitting) the preamble to the candidate target cell of the candidate DU 3215. The wireless device may maintain a TAT for a TAG associated with the candidate target cell of the candidate DU 3215. The wireless device may maintain the candidate target cell of the candidate DU 3215 as a non-serving cell, for example, after or in response to receiving the response and/or before or until receiving a second L1/L2 signal and/or command. The response may indicate (e.g., one or more bitfields of the MAC CE), for example, if the TAC is for a serving cell (or a TAG associated the serving cell) or for a non-serving cell (e.g., the candidate target cell of the candidate DU 3215). The wireless device may receive, via the serving cell of the serving DU 3210, the second L1/L2 signal and/or command 3278, for cell switch, that may indicate the candidate target cell of the candidate DU 3215. The wireless device may switch the serving cell 3286 (e.g., the PCell from the serving cell of the serving DU 3210 to the candidate target cell of the candidate DU 3215) and may send (e.g., transmit) PUSCH and/or PUCCH 3290 via the candidate target cell of the candidate DU 3215 based on the TA and based on receiving the second L1/L2 signal and/or command 3278.

FIG. 33 shows example of a capability of a wireless device. A wireless device 3305 may receive, from a serving CU 3310, a RRC message comprising a wireless device 3305 capability enquiry 3315. The wireless device 3305 may send (e.g., transmit) to a serving base station 3320 a first indication of one or more capabilities 3325 (e.g., UE capability information) of the wireless device 3305, for example, based on receiving the wireless device 3305 capability enquiry. For example, the wireless device 3305 may send (e.g., transmit) to a serving base station a RRC message (e.g., wireless device capacity information message) comprising a first indication of one or more capabilities 3325 of the wireless device 3305. A wireless device 3305 may send (e.g., transmit) to a serving CU of a serving base station, via a serving DU of the serving base station, for example, a RRC message (e.g., wireless device capacity information message) comprising a first indication of one or more capabilities 3325 of the wireless device 3305.

The wireless device 3305 may send (e.g., transmit) to the serving base station 3320, or the CU 3310 (e.g., serving CU), the first indication based on receiving a downlink RRC message (e.g., wireless device capacity enquiry message) from the serving base station 3320, or the CU 3310. The downlink RRC message may indicate one or more types of capabilities 3325 of the wireless device 3305. The wireless device 3305 may send (e.g., transmit) the first indication of one or more capabilities 3325 associated with the one or more types based on receiving the downlink RRC message.

A CU 3310 (e.g., serving CU) of a serving base station 3320 that may receive the first indication 3325 (e.g., UE capability information) from a wireless device 3305 may send (e.g., transmit) the second indication 3330 to a DU 3335 (e.g., serving DU). The second indication 3330 may indicate at least one of the one or more capability, of the wireless device 3305, indicated by the first indication. The CU 3310 may send (e.g., transmit) to the DU 3335 the second indication 3330 via wireless device 3305 associated signaling (e.g., wireless device context setup and/or modification request or wireless device context setup and/or modification response). The DU 3335 may consider the second indication 3330 (e.g., if allocating resource to the wireless device 3305 and/or configuring one or more configuration to the wireless device 3305) based on receiving the second indication 3330.

A LTM configuration (e.g., as described herein in FIG. 28, FIG. 29, FIG. 30, and/or FIG. 32) may use a RRC reconfiguration message structure of a RRC reconfiguration message as described herein in FIG. 21 and/or FIG. 22. A RRC reconfiguration message that may have been sent (e.g., transmitted) by a base station may comprise one or more RRC reconfiguration messages. Each RRC reconfiguration message, of the one or more RRC reconfiguration messages, may be associated with a respective LTM configuration. Each RRC reconfiguration message of the one or more RRC reconfiguration messages may comprise a respective LTM configuration.

A LTM configuration (e.g., as described herein in FIG. 28, FIG. 29, FIG. 30, and/or FIG. 32) may use a cell group configuration IE structure as described herein in FIG. 21 and/or FIG. 22. A RRC reconfiguration message that may have been sent (e.g., transmitted) by a base station may comprise one or more cell group configuration IEs. Each cell group configuration IE, of the one or more cell group configuration Ies, may be associated with a respective LTM configuration. For example, each cell group configuration IE of the one or more cell group configuration IEs comprises a respective LTM configuration.

A LTM configuration in the present disclosure, e.g., in FIG. 28, FIG. 29, FIG. 30, and/or FIG. 32, may use the SpCell configuration IE structure, as described herein in FIG. 21 and/or FIG. 22. For example, a RRC reconfiguration message sent (e.g., transmitted) by a base station may comprise one or more a SpCell configuration IE. Each a SpCell configuration IE of the one or more SpCell configuration IE may be associated with a respective LTM configuration. For example, the each SpCell configuration IE may comprise a candidate target cell configuration as a respective LTM configuration.

A source base station, as described herein in FIG. 28, FIG. 29, FIG. 30, and/or FIG. 32, may indicate cell common parameter(s) and/or wireless device specific parameter(s) (e.g., SSBs and/or CSI-RSs, BWPs, RACH resources, PDCCH/PDSCH/PUCCH/PUSCH resources etc.) for each candidate target cell. A wireless device, as described herein in FIG. 32, may perform a L1/L2 measurement report (CSI and/or beam) for the list of candidate target cell(s) (e.g., PCell) and/or the current serving PCell according to the received RRC reconfiguration message comprising a LTM configuration of a list of candidate target cell(s). The L1/L2 measurement report may comprise layer 1 RSRP, layer 1 RSRQ, PMI, RI, layer 1 SINR, CQI, etc. A wireless device may trigger the L1/L2 measurement report, for example, if the measurement of the CSI and/or beam of a candidate target cell is greater (e.g., higher, more, larger, etc.) than a threshold and/or greater (e.g., higher, more, larger, etc.) than a measurement, or the measurement plus some offset, of the CSI and/or beam of the current serving PCell.

A wireless device may send (e.g., transmit) a L1/L2 measurement report with a periodicity configured by a base station. A UCI via PUCCH and/or PUSCH, or a MAC CE (e.g., event-triggered or associated with a configured SR for the transmission of the MAC CE) may comprise and/or carry the L1/L2 measurement report. A master base station may be referred to as and/or interchangeable with a master node (MN), a base station and/or like. A secondary base station may be referred to as and/or interchangeable with a secondary node (SN) and/or like. A master node (SN) may be interchangeable with master cell group (MCG) and/or like. A secondary node (SN) may be interchangeable with secondary cell group (SCG) and/or like. Configuration may be referred to as and/or interchangeable with configuration parameter and/or the like. Keeping may be referred to as and/or interchangeable with retaining, maintaining, suspending, storing and/or the like.

A wireless device may receive one or more conditional configurations from a base station (e.g., a master base station), for example, from a base station. The one or more conditional configurations may comprise one or more conditional configuration for one or more candidate SCGs (e.g., CPC and/or CPA configurations). Each conditional configuration for SCGs, among the one or more conditional configurations, may be associated with respective candidate SCG, or PSCell, of the one or more candidate SCGs, or PSCells. The wireless device may store the one or more conditional configuration and start evaluation of execution conditions of the one or more conditional configurations based on receiving the one or more conditional configurations. The wireless device may release the one or more conditional configurations stored in the wireless device based on performing reconfiguration with synchronization (e.g., reconfiguration with sync). Releasing the one or more conditional configurations stored in the wireless device may cause, for the wireless and the base station, additional signals and may delay configuration of the SCG(s). The wireless device may, for example, send (e.g., transmit) measurement report for cells of the SCG(s). The base station receiving the measurement may send (e.g., transmit) a request of configuration parameter for SCG to a secondary base station of the SCG and may receive the response comprising the configuration parameter from the secondary base station. The base station may send (e.g., transmit) the configuration for the SCG to the wireless device.

A base station may send (e.g., transmit) to a wireless device reconfiguration with sync (e.g., information element (IE)). A cell group configuration of MCG or SCG may comprise, for example, a SPCell configuration of PCell or PSCell. The SPCell configuration may comprise the reconfiguration with sync. The wireless device may perform a RRC reconfiguration to perform reconfiguration sync based on receiving the reconfiguration with sync. Performing the reconfiguration with sync may comprise performing reconfiguration of the configuration parameter (e.g., of SPCell) and synchronization with SPCell indicated by the reconfiguration with sync. The synchronization may comprise a random access procedure. The reconfiguration with sync may be used, for example, for changing SPCell. Changing PCell may be handover. Changing PSCell may be SN addition and/or change, or PSCell addition and/or change. A base station may send (e.g., transmit) to a wireless device a RRC reconfiguration message comprising the reconfiguration with sync. The RRC reconfiguration message may comprise a cell group configuration of MCG or SCG. The cell group configuration may comprise the reconfiguration with sync.

A RRC reconfiguration to perform reconfiguration with sync may include the following cases: reconfiguration with sync and security key refresh, involving random access (RA) to the PCell and/or PSCell, MAC reset, refresh of security and re-establishment of RLC and PDCP triggered by explicit L2 indicators; reconfiguration with sync but without security key refresh, that may involve RA to the PCell and/or PSCell, MAC reset and RLC re-establishment and PDCP data recovery (e.g., for AM DRB or AM MRB) triggered by explicit L2 indicators; reconfiguration with sync for dual active protocol stacks (DAPS) and security key refresh, involving RA to the target PCell, establishment of target MAC; reconfiguration with sync for DAPS but without security key refresh, involving RA to the target PCell, establishment of target MAC; reconfiguration with sync for direct-to-indirect path switch, not involving RA at target side, involving re-establishment of PDCP /PDCP data recovery (for AM DRB) triggered by explicit L2 indicators.

For reconfiguration with sync for DAPS and with security key refresh, for non-DAPS bearer: refresh of security and re-establishment of RLC and PDCP triggered by explicit L2 indicators; for DAPS bearer: establishment of RLC for the target PCell, refresh of security and reconfiguration of PDCP to add the ciphering function, the integrity protection function and ROHC function of the target PCell; for SRB: refresh of security and establishment of RLC and PDCP for the target PCell. For reconfiguration with sync for DAPS but without security key refresh, for non-DAPS bearer: RLC re-establishment and PDCP data recovery (for AM DRB or AM MRB) triggered by explicit L2 indicators. For DAPS bearer: establishment of RLC for target PCell, reconfiguration of PDCP to add the ciphering function, the integrity protection function and ROHC function of the target PCell; for SRB: establishment of RLC and PDCP for the target PCell.

Reconfiguration with sync (IE) may comprise at least one of: SPCell configuration, of SPCell, comprising a configuration parameter of the SPCell; an identity, of the wireless device, configured/assigned for the SPCell; a value of T304 timer (HO timer); dedicated RACH configuration comprising a parameter for RACH (or random access procedure); RACH skip configuration comprising a parameter for skipping RACH (or random access procedure). The wireless device may configure, or reconfigure, the SPCell configuration for the SPCell and synchronize with the SPCell using the dedicated RACH configuration and/or the RACH skip configuration based on receiving the reconfiguration with sync. The wireless device may start T304 timer with the value of T305 timer based on initiating the reconfiguration with sync or initiating synchronization. The wireless device may strop the T304 timer based on the reconfiguration with sync or the synchronization being successfully completed. The wireless device may determine a failure of the reconfiguration with sync or the synchronization (e.g., handover failure) based on T304 timer being expired.

A wireless device may receive a message (e.g., RRC message and/or RRC reconfiguration message) comprising an LTM configuration from a network (e.g., from a serving DU and/or a serving CU). The LTM configuration may comprise configuration parameters of ETA associated with one or more candidate DUs. The LTM configuration may comprise one or more ETA configurations. Each of the one or more ETA configurations may be associated with a respective candidate target cell, of one or more candidate target cells, that may be associated with a DU, of the one or more candidate DUs. Each of the one or more ETA configurations may be associated with a respective candidate DU, of the one or more candidate DUs. Each of the one or more ETA configurations, that may be associated with a respective candidate target cell, may comprise configuration parameters of an ETA of the respective candidate target cell.

A first ETA configuration of one or more ETA configurations may be associated with a first candidate target cell, of one or more candidate target cells, of a first candidate DU, of one or more candidate DUs. The first ETA configuration may comprise configuration parameters of a transmission of a preamble (e.g., uplink reference signal and/or sounding reference signal) to the first candidate target cell of the first candidate DU. A wireless device may receive, for example, from a serving DU, an indication (e.g., L1 signal (e.g., DCI), L2 signal (e.g., MAC CE)) that may trigger an ETA comprising a preamble transmission to the first candidate target cell of the first candidate DU.

A wireless device may receive, from a network (e.g., a serving DU, a candidate DU, and/or a serving CU), an identifier of a first candidate target cell where the wireless device may send (e.g., transmit) a preamble for an ETA, a preamble identifier of the preamble that the wireless device may send (e.g., transmit) to the first candidate target cell, and/or PRACH resource(s) configured in the first candidate target cell (e.g., time and frequency resource(s) that may be indicated by prach-configuration index, msg1-FDM, and/or msg1-FrequencyStart) via which the wireless device may send (e.g., transmit) the preamble, and/or transmission power parameters (e.g., preamble received target power) with which the wireless device may send (e.g., transmit) the preamble to perform an ETA. The first ETA configuration, for example, may comprise one or more fields that may indicate at least one of: an identifier of the first candidate target cell to which the wireless device may send (e.g., transmit) the preamble for the ETA, the preamble identifier of the preamble that the wireless device may send (e.g., transmit) to the first candidate target cell, the PRACH resource(s) configured in the first candidate target cell (e.g., time and frequency resource(s) that may be indicated by prach-configuration index, msg1-FDM, and/or msg1-FrequencyStart) via which the wireless device may send (e.g., transmit) the preamble, and/or the transmission power parameter(s) (e.g., preamble received target power) with which the wireless device may send (e.g., transmit) the preamble.

An indication (e.g., L1 signal (e.g., DCI), L2 signal (e.g., MAC CE)) that may trigger an ETA may comprise one or more fields that may indicate at least one of: an identifier of a first candidate target cell where a wireless device may send (e.g., transmit) a preamble for the ETA, a preamble identifier of the preamble that the wireless device sends (e.g., transmits) to the first candidate target cell, the PRACH resource(s) configured in the first candidate target cell (e.g., time and frequency resource(s) indicated by prach-configuration index, msg1-FDM, and/or msg1-FrequencyStart) via which the wireless device sends (e.g., transmits) the preamble, and/or the transmission power parameter(s) (e.g., preamble received target power) with which the wireless device sends (e.g., transmits) the preamble.

An ETA may not be successful with a single transmission of a preamble. A wireless device may determine that the ETA for a candidate target cell that may be associated with a candidate DU may not be successful, for example, if the wireless device does not receive a response (e.g., comprising a TA associated with the candidate target cell) after or in response to sending (e.g., transmitting) the preamble. The wireless device may determine that the ETA may not be successful, for example, if the wireless device does not send (e.g., transmit) the preamble to, or drops the preamble transmission to, the candidate target cell because the preamble transmission occasion overlaps with other scheduled transmission, reception, and/or measurement and/or because the preamble transmission is deprioritized over other scheduled transmissions. The candidate DU (e.g., associated with the candidate target cell) and/or serving DU may determine that the ETA for the candidate target cell may not be successful, for example, if the candidate target cell and/or the candidate DU associated with the candidate target cell, to which the wireless device sends (e.g., transmits) the (e.g., single) preamble, does not receive and/or detect the preamble because the received power strength (e.g., RSRP) of the preamble is low (e.g., being smaller than a detection threshold). The candidate DU (e.g., associated with the candidate target cell) and/or serving DU may determine that the ETA for the candidate target cell of the candidate DU may not be successful, for example, if the candidate target cell (e.g., associated with the candidate DU) and/or a serving cell (e.g., associated with the serving DU) does not send (e.g., transmit), to the wireless device, a response to the preamble that the candidate DU receives from the wireless device because of the high congestion of the candidate DU and/or the serving DU.

A problem may arise, for example, if a network node (e.g., comprising a serving DU, a candidate DU, and/or a serving CU) schedules a wireless device to send (e.g., transmit), to a candidate target cell, a second transmission of a second preamble for an ETA. A second transmission may be scheduled, for example, if the ETA is unsuccessful based on a first (e.g., single) transmission of a first preamble to the candidate target cell. Network nodes may send (e.g., transmit) and/or receive multiple signals and/or messages between them to schedule the wireless device to send (e.g., transmit) the second transmission of the second preamble to the candidate target cell. The transmissions of the multiple signals and/or messages between network nodes may not occur in parallel but may occur one to the next in an ordered manner, for example, because the candidate DU may communicate with the serving DU through the serving CU. Thus, it may take time for the network nodes to schedule the second transmission of the second preamble from the wireless device to the candidate DU, which may cause a latency and/or delay in LTM.

A candidate DU, that may be associated with a candidate target cell to which a wireless device may send (e.g., transmit) a first preamble, may determine a second transmission of a second preamble to the candidate target cell, for example, if the candidate DU determines that the ETA with a first transmission of the first preamble to the candidate target cell is unsuccessful. The candidate DU may send (e.g., transmit), to the serving CU, a first message that may indicate the second transmission of the second preamble from the wireless device to the candidate target cell, for example, if the candidate DU determines that the ETA with a first transmission of the first preamble to the candidate target cell is unsuccessful. The serving CU may send (e.g., transmit) a second message, that may indicate the second transmission of the second preamble from the wireless device to the candidate target cell, to the serving DU based on receiving the first message from the candidate DU. The serving DU may send (e.g., transmit), to the wireless device a third message that may indicate, trigger, and/or initiate the second transmission of the second preamble from the wireless device to the candidate target cell based on receiving the second message from the serving CU. The third message may be an L1/L2 signal and/or an indication in L1 or L2 layer. The third message may comprise at least one of: DCI, PDCCH order, and/or MAC CE. Multiple signaling may comprise transmissions of the multiple signal and/or messages between network nodes may result in missing timing (e.g., inaccurate timing determination) for the network nodes to trigger the wireless device to perform the LTM to the candidate target cell. Missing the timing to trigger the LTM may cause a radio link failure on a serving cell, for example, before switching the cell to the candidate target cell (e.g., a too late handover).

FIG. 34 shows an example of signaling between network nodes for ETA. One of one or more network nodes (e.g., a serving DU 3405, a candidate DU 3410, and/or a CU 3415) may determine 3417 that a serving cell that may be associated with the serving DU 3405 may send (e.g., transmit) a first L1/L2 ETA indication 3420 that may trigger and/or initiate, for an ETA, a wireless device 3430 to send (e.g., transmit) a first preamble 3425 (e.g., a first preamble transmission) to a candidate target cell associated with the candidate DU 3410. The serving cell and/or the serving DU 3405 may send (e.g., transmit), to a wireless device 3430, the first L1/L2 ETA indication 3420 based on the determining the serving cell to send (e.g., transmit) the first L1/L2 ETA indication 3420 and triggering a transmission of the first preamble 3425 by the wireless device 3430. The wireless device 3430 may send (e.g., transmit) the first preamble 3425 to the candidate target cell of the candidate DU 3410 based on receiving the first L1/L2 ETA indication 3420. One of one or more network nodes (e.g., the serving DU 3405, the candidate DU 3410, and/or the CU 3415) may determine 3435 that the serving cell may send (e.g., transmit) a second L1/L2 ETA indication 3440 that may trigger and/or initiate, for the ETA (e.g., the same ETA), the wireless device 3430 to send (e.g., transmit) a second preamble 3445 (e.g., a second preamble transmission) to the candidate target cell associated with the candidate DU 3410. The one of one or more network nodes (e.g., comprising a serving DU 3405, a candidate DU 3410, and/or a CU 3415) may determine 3435 that the serving cell may send (e.g., transmit) the second L1/L2 ETA indication 3440 based on the candidate target cell not receiving the first preamble 3425 and/or based on the candidate target cell not sending (e.g., transmitting) a first response to the first preamble 3425. The serving cell and/or the serving DU 3405 may send (e.g., transmit), to the wireless device 3430, the second L1/L2 ETA indication 3440 based on the determining that the serving cell (e.g., serving DU 3405) to send (e.g., transmit) the second L1/L2 ETA indication 3420 that may trigger a sending (e.g., transmission) of the second preamble 3445 (e.g., second preamble transmission) by the wireless device 3430. The wireless device 3430 may send (e.g., transmit) the second preamble 3445 to the candidate target cell based on receiving the second L1/L2 ETA indication 3440. One of one or more network nodes (e.g., comprising a serving DU 3405, a candidate DU 3410, and/or a CU 3415) may determine 3450 that the serving cell 3405 (e.g., serving DU) may send (e.g., transmit) a third L1/L2 ETA indication 3455 that may trigger and/or initiate the wireless device 3430 to send (e.g., transmit) a third preamble 3460 (e.g., a third preamble transmission) to the candidate target cell for the ETA (e.g., the same ETA). One of the one or more network nodes (e.g., comprising a serving DU 3405, a candidate DU 3410, and/or a CU 3415) may determine 3450 that the serving cell 3405 (e.g., serving DU) may send (e.g., transmit) the third L1/L2 ETA indication 3455 based on the candidate target cell not receiving the second preamble 3445 and/or based on the candidate target cell not sending (e.g., transmitting) a second response to the second preamble. The serving cell and/or the serving DU 3405 may send (e.g., transmit), to the wireless device 3430, the third L1/L2 ETA indication 3455 based on the determining that the serving cell may send (e.g., transmit) the third L1/L2 ETA indication 3455 that may trigger a sending (e.g., transmission) of the third preamble 3460 (e.g., third preamble transmission) by the wireless device 3430. The wireless device 3430 may send (e.g., transmit) the third preamble 3460 to the candidate target cell 3410 (e.g., the candidate DU) based on receiving the third L1/L2 ETA indication 3455.

Multiple signaling comprising transmissions of the multiple signals and/or messages between the network nodes may be needed, for example, if (and/or each time) one of one or more network nodes (e.g., comprising a serving DU, a candidate DU, and/or a CU) may determine that the serving cell may send (e.g., transmit) an L1/L2 ETA indication. Multiple signaling may cause a latency in determining of ETA and may result in missing the timing (e.g., inaccurate timing determination) for the network nodes to trigger the wireless device 3430 to perform the LTM to the candidate target cell in a proper time. Missing the timing to trigger the LTM may cause a radio link failure on a serving cell before switching the cell to the candidate target cell (e.g., a too late handover). Current LTM requires signaling among the network nodes if (e.g., whenever) an additional transmission of preambles may be needed. Determination of preamble repetition in LTM may cause unnecessary signaling among the network nodes. A network node (e.g., the serving DU) may receive lower layer measurement reports from a wireless device and may determine a required number of preamble repetitions.

As described herein a serving cell may send (e.g., transmit) multiple L1/L2 ETA indications (e.g., DCI, PDCCH order, and/or MAC CE), without signaling among a serving DU, a candidate DU, and/or a CU, that may be needed each time a serving cell may send (e.g., transmit) an L1/L2 ETA indication (e.g., to determine if the serving cell may send (e.g., transmit) each of the multiple L1/L2 ETA indications). As described herein a network node (e.g., a serving DU, a candidate DU, and/or a CU) may determine a number of preamble repetitions. As described herein a serving cell of a serving DU may trigger (e.g., initiate and/or schedule) multiple preamble transmissions to a candidate target cell of a candidate DU for the ETA with reduced latency and/or with reduced signaling between the network nodes. Network nodes (e.g., the serving DU, the candidate DU, and/or the CU) may determine (e.g., pre-determine) that a serving cell may send (e.g., transmit) L1/L2 ETA indications N times (e.g., $N \geq 1$) for the ETA (e.g., the same ETA) to the candidate target cell (e.g., the same candidate target cell). The network nodes may not have, between the L1/L2 ETA indications (e.g., each may trigger a preamble transmission to the candidate target cell for the ETA), signaling sent (e.g., transmitted) and/or received between the network nodes to determine, for example, if the serving cell sends (e.g., transmits) the L1/L2 ETA indications for each of the N times.

Network nodes may determine (e.g., predetermine) a number of L1/L2 ETA indications (e.g., transmissions of L1/L2 ETA indications N times, $N \geq 1$) that may trigger one or more preamble transmissions that a wireless device may send (e.g., transmit) to a candidate target cell for an ETA, for example, before a serving cell (and/or a serving DU) sends (e.g., transmits), to the wireless device, the L1/L2 ETA indications to the wireless device N times. The network nodes may determine a number of the one or more L1/L2 ETA indications, for example, based on the number of preamble transmissions. The number of the one or more L1/L2 ETA indications, for example, may be the same as the number of preamble transmissions. Determination (e.g., pre-determination) of the number of the L1/L2 ETA indications, before sending (e.g., transmitting) the L1/L2 ETA indications, may reduce signaling overhead, for example, by removing the multiple signals and/or messages sent (e.g., transmitted) between network nodes (e.g., comprising a serving DU, a candidate DU, and/or serving CU).

FIG. 35 shows an example of signaling between network nodes for ETA. Network nodes (e.g., comprising a serving DU 3505, a candidate DU 3510, and/or a CU3515) may send (e.g., transmit) and/or receive between the network nodes one or more signals 3520 to determine a first value 3525 that may indicate a number of times (e.g., 3 times) that a serving cell of the serving DU 3505 may send (e.g., transmit) an L1/L2 ETA indication.

The network nodes (e.g., comprising a serving DU 3505, a candidate DU 3510, and/or a CU 3515) may determine the first value as 3 so that the serving cell 3505 (e.g., the serving DU) may send (e.g., transmit) the L1/L2 ETA indication 3 times 3530, 3535, and 3540 to the wireless device 3545. A number of times that the serving cell 3505 may send (e.g., transmit) the L1/L2 ETA indication (e.g., actual transmission of L1/L2 ETA indication) may be smaller than or equal to the first value. A number of times that the serving cell 3505 may send (e.g., transmit) the L1/L2 ETA indication (e.g., actual transmission of L1/L2 ETA indication) may be smaller than or equal to the first value, for example, if the first value is a maximum number of transmissions that the serving cell (e.g., is allowed to) may send (e.g., transmit) an L1/L2 ETA indication to the wireless device 3545. A number of times that the serving cell may send (e.g., transmit) the L1/L2 ETA indication (e.g., actual transmission of L1/L2 ETA indication) may be equal to the first value, for example, if the first value is a number of transmissions that the serving cell may actually send (e.g., transmit) an L1/L2 ETA indication to the wireless device.

Each ofL1/L2 ETA indications 3530, 3535, and 3540 (e.g., comprising first, second, and/or third L1/L2 ETA indications) that the serving cell 3505 (e.g., serving DU) may send (e.g., transmit) to the wireless device 3545 may trigger, schedule, and/or initiate at least one preamble transmission 3550, 3555, or 3560 to a candidate target cell 3510 (e.g., candidate DU) for the ETA. The first L1/L2 ETA indication 3530 that the serving cell may send (e.g., transmit) to the wireless device 3545 may trigger, schedule, and/or initiate a first preamble transmission 3550 of the first preamble to a candidate target cell for the ETA. The second L1/L2 ETA indication 3535 that the serving cell 3505 may send (e.g., transmit) to the wireless device 3545 may trigger, schedule, and/or initiate a second preamble transmission 3555 of the second preamble to a candidate target cell 3510 for the ETA. The third L1/L2 ETA indication 3540 that the serving cell may send (e.g., transmit) to the wireless device 3545 may trigger, schedule, and/or initiate a third preamble transmission 3560 of the third preamble to a candidate target cell 3510 for the ETA.

The serving cell associated with the serving DU 3505 may send (e.g., transmit) the L1/L2 ETA indication 3 times. The network nodes may not send (e.g., transmit) and/or receive a signal, a message, and/or a parameter, for determining 3525 to send (e.g., transmit) the second L1/L2 ETA indication 3555, and/or the third L1/L2 ETA indication 3560, between any two of three L1/L2 ETA indications 3530, 3535, and 3540 (e.g., comprising the first L1/L2 ETA indication, the second L1/L2 ETA indication, and the third L1/L2 ETA indication). The methods as described herein (e.g., FIG. 35) may reduce a latency in deciding of LTM and may enable the network nodes (e.g., comprising a serving DU 3505, a candidate DU 3510, and/or a CU 3515) to trigger the wireless device 3545 to perform the LTM to the candidate target cell 3510 (e.g., candidate DU) in a proper time, which may result in reducing a risk of a radio link failure on a serving cell (e.g., due to the too late handover).

The ETA procedure as described herein in FIG. 35 may be an example of the ETA procedure described herein in FIG. 32. Signaling and/or procedure(s) that may occur (e.g., performed) before, after, and/or in response to the ETA procedure in FIG. 32 (and/or corresponding example embodiments), for example, may be (e.g., applicable as) a common procedure for the ETA procedure described in FIG. 35. Signaling and/or procedure(s) occurring (e.g., performed) before, after, and/or in response to the ETA procedure as described herein in FIG. 32, for example, may be applicable as signaling and/or procedure(s) occurring (e.g., performed) before, after, and/or in response to the ETA procedure as described herein in FIG. 35. DL RRC message transfer, RRC reconfiguration, and/or L1 measurements as described herein in FIG. 32 may occur, for example, before the ETA procedure as described herein in FIG. 35. The first L1/L2 ETA indication, the second L1/L2 ETA indication, and/or third L1/L2 ETA indication may be the 1st L1/L2 signal (L1/L2 ETA indication) sent (e.g., transmitted) from the serving cell to the wireless device 3545 as described herein in FIG. 35, for example, before receiving the 2nd L1/L2 signal as described herein in FIG. 32. The first preamble, the second preamble, and/or third preamble as described herein in FIG. 35 may be, for example, the reference signal (e.g., preamble) sent (e.g., transmitted) from the wireless device to the candidate target cell after or in response to 1st L1/L2 signal (L1/L2 ETA indication) and/or before the 2nd L1/L2 signal as described herein in FIG. 32. The signaling and/or procedure(s) that may occur (e.g., be performed) after or in response to the reference signal sent (e.g., transmitted) from the wireless device to the candidate DU as described herein in FIG. 32 may occur (e.g., be performed) as signaling and/or procedure(s) occurring (e.g., performed), for example, after or in response to the first preamble, the second preamble, and/or the third preamble sent (e.g., transmitted) from the wireless device to the candidate target cell of the candidate DU as described herein in FIG. 35. The signaling and/or procedure(s) that may occur (e.g., be performed), for example, after or in response to the reference signal sent (e.g., transmitted) from the wireless device to the candidate DU as described herein in FIG. 32 may comprise signaling and/or procedure(s) that may be associated with Option 1, Option2, the 2nd L1/L2 signal (for Option 1 and/or Option 2), and/or switch serving, and PUSCH transmission using the TA as described herein.

Network nodes may determine (e.g., predetermine) a number of preamble transmissions (e.g., transmissions of one or more preambles N times, N≥1) that a wireless device may send (e.g., transmit) to a candidate target cell for an ETA may be based on receiving an L1/L2 ETA indication (e.g., per an L1/L2 ETA indication). The number (e.g., N) of preamble transmissions may indicate that the wireless device may send (e.g., transmit) one or more repetitions of a same preamble N times to the candidate target cell. The number (e.g., N) of preamble transmissions may indicate, for example, that the wireless device sends (e.g., transmits) different preambles N times to the candidate target cell. Determination (e.g., pre-determination) of the number of the L1/L2 ETA indications, before sending (e.g., transmitting) the L1/L2 ETA indications, may reduce signaling overhead, for example, by removing the multiple signals and/or messages sent (e.g., transmitted) between network nodes(s) (e.g., comprising a serving DU, a candidate DU, and/or serving CU).

FIG. 36 shows an example of signaling between network nodes for ETA. Network nodes (e.g., comprising a serving DU 3605, a candidate DU 3610, and/or a CU 3615) may send (e.g., transmit) and/or receive between the network nodes one or more signals 3620 to determine a second value that may indicate a number of times (e.g., 3 times) that a wireless device may send (e.g., transmit) one or more preambles 3625, 3630, and 3635 to a candidate target cell 3610 (e.g., candidate DU) based on receiving, from a serving cell 3605 (e.g., of the serving DU 3605), an L1/L2 ETA indication 3640.

The network nodes (e.g., comprising a serving DU 3605, a candidate DU 3610, and/or a CU 3615) may determine the second value as 3 such that the wireless device 3645 may send (e.g., transmit) a same preamble or different preambles a total of 3 times to the candidate target cell 3610 (e.g., candidate DU) based on receiving, from the serving cell 3605 (e.g., serving DU), the L1/L2 ETA indication 3640. The L1/L2 ETA indication 3640 may comprise a field indicating the second value. The wireless device 3645 may receive, from the CU 3615, a RRC message that may comprise an ETA configuration that may comprise the second value for ETA to the candidate target cell 3610 (e.g., candidate DU). In this case, the reception of the L12/L2 ETA indication 3640 indicating the ETA to the candidate target cell 3610 (e.g., candidate DU) may indicate that the wireless device 3645 may perform the ETA based on the second value. The wireless device 3645 may sends (e.g., transmit) a same preamble or different preambles a total of 3 times (e.g., the second value) based on receiving, from the serving cell, the L1/L2 ETA indication 3640.

The wireless device 3645 may send (e.g., transmit) each of preambles (e.g., the first preamble, the second preamble, and the third preamble) via multiple consecutive PRACH resources of the candidate target cell. The wireless device 3645 may send (e.g., transmit) each of the preambles 3625, 3630, and 3635 (e.g., the first preamble, the second preamble, and the third preamble) via multiple non-consecutive PRACH resources of the candidate target cell 3610 (e.g., candidate DU). The ETA configuration that the wireless device 3645 receives or the L1/L2 ETA indication 3640 may indicate a PRACH resource. The PRACH resource may be a periodic resource that occurs (e.g., re-occurs) and/or repeats in a same occasion within a period (e.g., with a periodicity). The wireless device 3645 may send (e.g., transmit) the first preamble 3625 via a first PRACH resource in a first period, the second preamble 3630 via a second PRACH resource in a second period, and the third preamble 3635 via a third PRACH resource in a third period. The first period may be a next period of the second period. The second period may be a next period of the third period.

The network nodes may not send (e.g., transmit) and/or receive a signal, a message, and/or a parameter, for determining to trigger, initiate, and/or schedule the first preamble, the second preamble, and/or the third preamble, between any two of three preambles (e.g., comprising the first preamble, the second preamble, and the third preamble). The methods described herein (e.g., as described herein in FIG. 36) may reduce a latency in determining of LTM and may enable the network nodes to trigger the wireless device to perform the LTM to the candidate target cell in a proper time, which results in reducing a risk of an radio link failure on a serving cell (e.g., due to the too late handover).

The ETA procedure as described herein in FIG. 36 may be an example of the ETA procedure described herein in FIG. 32. Signaling and/or procedure(s) may occur (e.g., be performed), for example, before, after, and/or in response to the ETA procedures described herein in (e.g., as described herein in FIG. 32) may be (e.g., applicable as) a common procedure for the ETA procedure described herein in FIG. 36. Signaling and/or procedure(s) may occur (e.g., be performed), for example, before, after, and/or in response to the ETA procedure described herein in FIG. 32, or may be applicable as signaling and/or procedure(s) that may occur (e.g., be performed) before, after, and/or in response to the ETA procedure described herein in FIG. 36. A DL RRC message transfer, RRC reconfiguration, and/or L1 measurements described herein in FIG. 32 may occur (e.g., be perform as described herein in FIG. 32), for example, before the ETA procedure described herein in FIG. 36. The L1/L2 ETA indication, in FIG. 36, may be, for example, the 1st L1/L2 signal (e.g., L1/L2 ETA indication) sent (e.g., transmitted) from the serving cell to the wireless device before receiving the 2nd L1/L2 signal as described herein in FIG. 32. The first preamble, the second preamble, and/or third preamble in FIG. 36 may be the reference signal (e.g., preamble) sent (e.g., transmitted) from the wireless device to the candidate target cell, for example, after or in response to 1st L1/L2 signal (L1/L2 ETA indication) and/or before the 2nd L1/L2 signal as described herein in FIG. 32. The signaling and/or procedure(s) that may occur (e.g., performed), for example, after or in response to the reference signal sent (e.g., transmitted) from the wireless device to the candidate DU as described herein in FIG. 32 may occur (e.g., be performed) as signaling and/or procedure(s) that may occur (e.g., performed) after or in response to the first preamble, the second preamble, and/or the third preamble sent (e.g., transmitted) from the wireless device to the candidate target cell of the candidate DU as described herein in FIG. 36. The signaling and/or procedure(s) that may occur (e.g., be performed), for example, after or in response to the reference signal sent (e.g., transmitted) from the wireless device to the candidate DU as described herein in FIG. 32 may comprise signaling and/or procedure(s) that may be associated with Option 1, Option2, the 2nd L1/L2 signal (e.g., for Option 1 and/or Option 2), and/or switch serving, and PUSCH transmission using the TA as described.

Network nodes may determine (e.g., predetermine) a first value (e.g., as described herein in FIG. 35) and/or a second value (e.g., as described herein in FIG. 36). The first value may indicate a number of L1/L2 ETA indications (e.g., transmissions of L1/L2 ETA indications N times, N≥1) that may trigger one or more preamble transmissions that a wireless device may perform and/or send (e.g., transmit) to the candidate target cell for the ETA, for example, before a serving cell, and/or a serving DU, may send (e.g., transmit), to the wireless device, the L1/L2 ETA indications to the wireless device N times. The second value may indicate a number of preamble transmissions (e.g., transmissions of one or more preambles M times, M≥1) that the wireless device may send (e.g., transmit) to the candidate target cell for the ETA based on receiving an L1/L2 ETA indication (e.g., per an L1/L2 ETA indication). The number (e.g., M) of preamble transmissions may indicate that the wireless device may send (e.g., transmit) one or more repetitions of a same preamble M times to the candidate target cell. The number (e.g., M) of preamble transmissions may also indicate that the wireless device may send (e.g., transmit) different preambles M times to the candidate target cell.

FIG. 37 shows an example of signaling between network nodes for ETA. Network nodes (e.g., comprising a serving DU 3705, a candidate DU 3710, and/or a CU 3715) may send (e.g., transmit) and/or receive between the network nodes (e.g., comprising the serving DU 3705, the candidate DU 3710, and/or the CU 3715) one or more signals 3720 to determine the first value 3725 and/or the second value 3730. The first value 3725 (e.g., 3) may indicate a number of times (e.g., 3 times) that a serving cell of the serving DU 3705 may send (e.g., transmit) an L1/L2 ETA indication 3735, 3740, or 3745 to the wireless device 3765. The second value 3730 (e.g., 2) may indicate a number of times (e.g., 2 times) that the wireless device 3765 may send (e.g., transmit) one or more preambles 3750, 3755, and 3760 to a candidate target cell 3710 (e.g., candidate DU) based on receiving, from a serving cell 3705 (e.g., serving DU) of the serving DU 3705, an L1/L2 ETA indication 3735, 3740, or 3745 (e.g., per each of L1/L2 ETA indication).

The network nodes (e.g., comprising the serving DU 3705, the candidate DU 3710, and/or the CU 3715) may determine the first value 3725 as 3 and/or the second value 3730 as 2 so that the serving cell 3705 may send (e.g., transmit) the L1/L2 ETA indication 3 times (e.g., in total) to the wireless device 3765 and/or the wireless device 3765 may send (e.g., transmit) a same preamble or different preambles in total of 2 times to the candidate target cell after or in response to receiving, from the serving cell 3705, each of three L1/L2 ETA indications 3735, 3740, or 3745. A number of times that the serving cell 3705 may send (e.g., transmit) the L1/L2 ETA indication 3735, 3740, or 3745 (e.g., actual transmission of L1/L2 ETA indication) may be smaller than or equal to the first value 3725. A number of times that the serving cell 3705 may send (e.g., transmit) the L1/L2 ETA indication 3735, 3740, or 3745 (e.g., actual transmission of L1/L2 ETA indication) may be smaller than or equal to the first value 3725, for example, if the first value 3725 is a maximum number of transmissions that the serving cell 3705 may send (e.g., transmit) an L1/L2 ETA indication 3735, 3740, or 3745 to the wireless device 3765. A number of times that the serving cell 3705 may send (e.g., transmit) the L1/L2 ETA indication 3735, 3740, or 3745 (e.g., actual transmission of L1/L2 ETA indication) may be equal to the first value 3725, for example, if the first value 3725 is a number of transmissions that the serving cell 3705 actually sends (e.g., transmits) an L1/L2 ETA indication 3735, 3740, or 3745 to the wireless device 3765. The L1/L2 ETA indication 3735, 3740, or 3745 may comprise a field that may indicate the second value 3730. The wireless device 3765 may receive, from the CU 3715, a RRC message comprising an ETA configuration that may comprise the second value 3730 for ETA to the candidate target cell 3710 (e.g., candidate DU). The reception of the L12/L2 ETA indication 3735, 3740, or 3745 may indicate that the ETA to the candidate target cell 3710 may indicate that the wireless device 3765 may perform the ETA based on the second value 3730. The wireless device 3765 sends (e.g., transmits) a same preamble or different preambles in total of 2 times (e.g., equal to the second value 3730), for example, based on receiving, from the serving cell 3705, the L1/L2 ETA indication.

Each of L1/L2 ETA indications 3735, 3740, or 3745 (e.g., comprising first, second, and/or third L1/L2 ETA indications) that the serving cell 3705 may send (e.g., transmit) to the wireless device 3765 may trigger, schedule, and/or initiate at least one preamble transmission 3750, 3755, and/or 3760 to a candidate target cell 3710 (e.g., candidate DU) for the ETA. The first L1/L2 ETA indication 3735 that the serving cell 3705 sends (e.g., transmits) to the wireless device 3765 may trigger, schedule, and/or initiate the wireless device 3765 to send (e.g., transmit) first preambles 3750 (e.g., comprising two preamble transmissions based on the second value 3730) to a candidate target cell 3710 for the ETA. A number of the first preambles may be equal to the second value 3730. The second L1/L2 ETA indication 3740 that the serving cell 3705 may send (e.g., transmit) to the wireless device 3765 may trigger, schedule, and/or initiate the wireless device 3765 to send (e.g., transmit) second preambles 3755 (e.g., comprising two preamble transmissions based on the second value 3730) to a candidate target cell 3710 for the ETA. A number of the second preambles 3755 may be equal to the second value 3730. The third L1/L2 ETA indication 3745 that the serving cell 3705 may send (e.g., transmit) to the wireless device 3765 may trigger, schedule, and/or initiate the wireless device 3765 to send (e.g., transmit) third preambles 3750 to a candidate target cell 3710 for the ETA. A number of the third preambles 3750 may be equal to the second value 3730.

The wireless device 3765 may send (e.g., transmit) each of the preambles of each group of preambles 3750, 3755, or 3760 (e.g., a group of preambles may be the first preambles, the second preambles, and/or the third preambles) via multiple consecutive PRACH resources (e.g., in time domain) of the candidate target cell 3710 (e.g., candidate DU). The wireless device 3765 may send (e.g., transmit) each of preambles in the group of preambles 3750, 3755, or 3760 (e.g., the group of preambles may be the first preambles, the second preambles, and/or the third preambles) via multiple non-consecutive PRACH resources (e.g., in time domain) of the candidate target cell 3710. The ETA configuration that the wireless device 3765 may receive or the L1/L2 ETA indication may indicate a PRACH resource for the preamble transmission of the first preambles 3750, the second preamble 3755, and/or the third preambles 3760. The PRACH resource may be a periodic resource that may occur (e.g., re-occur) and/or may repeat in a same occasion within a period (e.g., with a periodicity). The wireless device 3765 may send (e.g., transmit) the first preambles 3750 via first PRACH resource(s) in a first period, the second preambles 3755 via second PRACH resource(s) in a second period, and the third preambles 3760 via third PRACH resource(s) in a third period. The first period may be a next period of the second period. The second period may be a next period of the third period.

The serving cell 3705 (e.g., the serving DU) may send (e.g., transmit) the L1/L2 ETA indication 3 times (e.g., that is equal to the first value 3725). The network nodes (e.g., comprising the serving DU 3705, the candidate DU 3710, and/or the CU 3715) may not send (e.g., transmit) and/or receive a signal, a message, and/or a parameter, for determining to send (e.g., transmit) the second L1/L2 ETA indication 3740 and/or the third L1/L2 ETA indication 3745, between any two of three L1/L2 ETA indications (e.g., comprising the first L1/L2 ETA indication 3735, the second L1/L2 ETA indication 3740, and the third L1/L2 ETA indication 3745). The network nodes (e.g., comprising the serving DU 3705, the candidate DU 3710, and/or the CU 3715) may not send (e.g., transmit) and/or receive a signal, a message, and/or a parameter, for determining to trigger, initiate, and/or schedule the first preambles 3750, the second preambles 3755, and/or the third preambles 3760, between any two of three preamble groups (e.g., comprising the first preambles 3750, the second preambles 3755, and the third preambles 3760). The network nodes (e.g., comprising the serving DU 3705, the candidate DU 3710, and/or the CU 3715) may not send (e.g., transmit) and/or receive a signal, a message, and/or a parameter, for determining to trigger, initiate, and/or schedule a preamble, between any two of preambles in a group of preambles (e.g., the group comprising the first preambles 3750, the second preambles 3755, and the third preambles 3760). The methods described herein (e.g., as described herein in FIG. 37) may reduce a latency in deciding LTM and/or enabling the network nodes (e.g., comprising the serving DU 3705, the candidate DU 3710, and/or the CU 3715) to trigger the wireless device 3765 to perform the LTM to the candidate target cell 3710 in a proper time, which may result in reducing a risk of a radio link failure on a serving cell 3705 (e.g., due to the too late handover).

The ETA procedure described herein in FIG. 37 may be an example of the ETA procedure as described herein in FIG. 32. Signaling and/or procedure(s) may occur (e.g., be performed), for example, before, after, and/or in response to the ETA procedure as described herein (e.g., as described herein in FIG. 32) may be (e.g., applicable as) a common procedure for the ETA procedure as described herein in FIG. 37. Signaling and/or procedure(s) may occur (e.g., be performed), for example, before, after, and/or in response to the ETA procedure, as described herein in FIG. 32, and may be applicable as signaling and/or procedure(s) that may occur (e.g., be performed) before, after, and/or in response to the ETA procedure as described herein in FIG. 37. DL RRC message transfer, RRC reconfiguration, and/or L1 measurements as described herein in FIG. 32 may occur (e.g., be performed), for example, before the ETA procedure as described herein in FIG. 37. The first L1/L2 ETA indication, the second L1/L2 ETA indication 3740, and/or third L1/L2 ETA indication, for example, may be the 1st L1/L2 signal (e.g., L1/L2 ETA indication) sent (e.g., transmitted) from the serving cell to the wireless device before receiving the 2nd L1/L2 signal as described herein in FIG. 32. At least one of the first preambles, the second preambles, and/or third preambles as described herein in FIG. 37, for example, may be the reference signal (e.g., preamble) sent (e.g., transmitted) from the wireless device to the candidate target cell after or in response to 1st L1/L2 signal (L1/L2 ETA indication) and/or before the 2nd L1/L2 signal as described herein in FIG. 32. The signaling and/or procedure(s) may occur (e.g., be performed), for example, after or in response to the reference signal sent (e.g., transmitted) from the wireless device to the candidate DU as described herein in FIG. 32. Signaling and/or procedure(s) that may occur (e.g., be performed), for example, after or in response to at least one of the first preambles, the second preambles, and/or the third preambles being sent (e.g., transmitted) from the wireless device to the candidate target cell of the candidate DU as described herein in FIG. 37. The signaling and/or procedure(s) may occur (e.g., performed) after or in response to the reference signal being sent (e.g., transmitted) from the wireless device to the candidate DU, as described herein in FIG. 32. Signaling and/or procedure(s) may comprise signaling and/or procedure(s) that may be associated with Option 1, Option2, the 2nd L1/L2 signal (for Option 1 and/or Option 2), and/or switch serving, and PUSCH transmission using the TA in FIG. 32 and corresponding example embodiments.

FIG. 38 shows an example of signaling between network nodes for ETA. In FIG. 38, a serving DU 3805 may determine a first value 3810a (e.g., that may refer to a first value as described herein in FIG. 35 and/or FIG. 37) and/or a second value 3810b (e.g., that may refer to a second value as described herein in FIG. 36 and/or FIG. 37). The first value 3810a may indicate, as described herein in FIG 35 and/or FIG. 37, a number of L1/L2 ETA indications (e.g., transmissions of L1/L2 ETA indications N times, N≥1) that may trigger one or more preamble transmissions that a wireless device 3820 may perform to the candidate target cell 3815 (e.g., candidate DU) for the ETA, for example, before a serving cell of a serving DU 3805 may send (e.g., transmit), to the wireless device 3820, the L1/L2 ETA indications to the wireless device 3820 N times. For example, the second value 3810b in FIG. 38 may indicate, as in FIG. 36 and/or FIG. 37, a number of preamble transmissions (e.g., transmissions of one or more preambles M times, M≥1) that the wireless device 3820 sends (e.g., transmits) to the candidate target cell for the ETA based on receiving an L1/L2 ETA indication (e.g., per an L1/L2 ETA indication). The number (e.g., M) of preamble transmissions may indicate that the wireless device 3820 may send (e.g., transmit) one or more repetitions of a same preamble M times to the candidate target cell 3815 (e.g., candidate DU). The number (e.g., M) of preamble transmissions may also indicate that the wireless device 3820 may send (e.g., transmit) different preambles M times to the candidate target cell.

The ETA procedure 3825 may be and/or may indicate an ETA procedure as described herein in FIG. 35, FIG. 36, and/or FIG. 37. The signaling and/or procedure(s) as described herein in FIG. 38 may be signaling and/or procedure(s) that may occur and/or may be performed before the ETA procedure 3825 as described herein in FIG. 35, FIG. 36, and/or FIG. 37.

The candidate DU 3815 may determine one or more parameters of preamble transmission 3830 to a candidate target cell (e.g., a preamble identifier of a preamble, transmission power parameter of the preamble, resource(s) (e.g., PRACH) for transmission of the preamble). The one or more parameters may be for the ETA 3825 from the wireless device 3820 to the candidate target cell of the candidate DU 3815. The candidate DU 3815 may send (e.g., transmit) the one or more parameters 3830 to the CU for the ETA and/or the LTM comprising the ETA. The configuration of the candidate target cell of the candidate DU 3815 for the LTM that the candidate DU 3815 may send (e.g., transmit) to the CU 3835 (e.g., as described herein in FIG. 30) may comprise the one or more parameters 3830.

A message (e.g., a wireless device context setup response message, a wireless device context modification response message, and/or a wireless device context modification required message) that the DU (e.g., candidate DU 3815 and/or serving DU 3805) may send (e.g., transmit) to the CU 3835 may comprise the configuration of the candidate target cell for the LTM and/or the one or more parameters 3830. The CU 3835 may send (e.g., transmit), after or in response to receiving the one or more parameters 3830, the one or more parameters to the serving DU 3805 and/or the wireless device 3820. A message (e.g., a wireless device context setup request message, a wireless device context modification request message, a wireless device context modification confirm message, and/or a DL RRC message transfer message) that the CU 3835 may send (e.g., transmit) to the DU (e.g., candidate DU 3815 and/or serving DU 3805) may comprise the one or more parameters 3840. A message (e.g., a RRC message and/or RRC reconfiguration message) that the CU 3835 may send (e.g., transmit) via the DU (e.g., candidate DU 3815 and/or serving DU 3805) to the wireless device 3820 may comprise the one or more parameters 3840. The DL RRC message transfer may comprise the RRC message and/or the RRC reconfiguration message. The wireless device 3820 may perform one or more measurements. The wireless device 3820 may send (e.g., transmit), to the serving cell of the serving DU 3805, L1 measurements 3845 comprising the measurement results of the one or more measurements. The serving DU 3805 may determine (e.g., select) the first value 3810a and/or the second value 3810b after or in response to receiving the L1 measurements 3845.

The serving DU 3805 may determine (e.g., select) the first value 3810a and/or the second value 3810b, for example, after or in response to receiving L1 measurements 3845 from the wireless device 3820. The serving DU 3805 may determine (e.g., select) the first value 3810a and/or the second value 3810b based on the measurement results in the L1 measurements 3845. The serving DU 3805 may send (e.g., transmit), to the CU 3835, a first message 3850 comprising field(s) and/or parameter(s) that may indicate the first value 3810a and/or the second value 3810b, for example, after or in response to determining the first value 3810a and/or the second value 3810b. The first message 3850 may be at least one of a wireless device context setup response message, a wireless device context modification response message, and/or a wireless device context modification required message that the DU (e.g., candidate DU 3815 and/or serving DU 3805) may send (e.g., transmit) to the CU 3835.

The CU 3835 may receive the first message 3850 from the serving DU 3805. The CU 3835 may send (e.g., transmit) a second message 3855 to the serving DU 3805 after or in response to receiving the first message 3850. The second message 3855 may be at least one of a wireless device context setup request message, a wireless device context modification request message, a wireless device context modification confirm message, and/or a DL RRC message transfer message that the CU 3835 may send (e.g., transmit) to the DU (e.g., candidate DU 3815 and/or serving DU 3805). The second message 3855 may be a response to the first message 3850. The second message 3855 may comprise field(s) and/or parameter(s) that may indicate the first value 3810a and/or the second value 3810b, for example, as a confirmation that the first value 3810a and/or the second value 3810b to be used for the ETA between the wireless device 3820 and the candidate target cell of the candidate DU 3815. The second message 3855 may comprise first field(s) and/or first parameter(s) that may indicate a third value different from the first value 3810a. In this case, the serving DU 3805 may update or replace the first value 3810a with the third value. The second message 3855 may comprise second field(s) and/or second parameter(s) that may indicate a fourth value different from the second value 3810b. The serving DU 3805 may update or replace the second value 3810b with the fourth value, for example, if this is the case.

The CU 3835 may send (e.g., transmit) a third message 3860 to the serving DU 3805 after or in response to receiving the first message 3850. The third message 3860 may be at least one of a wireless device context setup request message, a wireless device context modification request message, a wireless device context modification confirm message, and/or a DL RRC message transfer message that the CU 3835 may send (e.g., transmit) to the DU (e.g., candidate DU 3815 and/or serving DU 3805). The third message 3860 may be a message to share the first value 3810a and/or the second value 3810b that the serving DU 3805 and/or the CU 3835 determine. The third message 3860 may comprise field(s) and/or parameter(s) that may indicate the first value 3810a and/or the second value 3810b, for example, that the CU 3835 receives from the serving DU 3805 for the ETA between the wireless device 3820 and the candidate target cell of the candidate DU 3815. The third message 3860 may comprise first field(s) and/or first parameter(s) that may indicate a third value different from the first value 3810a for the case that the CU 3835 receives the first value 3810a but determines, changes, selects, replaces, and/or updates the first value 3810a with the third value. In this case, the second message 3855 that the CU 3835 may send (e.g., transmit) to the serving DU 3805 may comprise the third value (e.g., instead of the first value 3810a). The third message 3860 may comprise second field(s) and/or second parameter(s) that may indicate a fourth value different from the second value 3810b for the case that the CU 3835 receives the second value 3810b but determines, changes, selects, replaces, and/or updates the second value 3810b with the fourth value. The second message 3855 that the CU 3835 may send (e.g., transmit) to the serving DU 3805 may comprise the fourth value (e.g., instead of the second value 3810b), for example, if this is the case.

The CU 3835 may send (e.g., transmit) the second message 3855 to the serving DU 3805 after or in response to sending (e.g., transmitting) the third message 3860 to the candidate DU 3815. The CU 3835 may send (e.g., transmit) the second message 3855 to the serving DU 3805 after or in response to receiving, from the candidate DU 3815, a response to the third message 3860.

The CU 3835 may send (e.g., transmit) the third message 3860 to the candidate DU 3815 after or in response to sending (e.g., transmitting) the second message 3855 to the serving DU 3805. The CU 3835 may send (e.g., transmit) the third message 3860 to the candidate DU 3815 after or in response to receiving, from the serving DU 3805, a response to the second message 3855 to the serving DU 3805.

The ETA procedure may start after or in response to the serving DU 3805 receiving the second message 3855. The ETA procedure may start after or in response to the serving DU 3805 sending (e.g., transmitting) a response to the second message 3855 to the CU 3835. The serving DU 3805 may send (e.g., transmit) an L1/L2 ETA indication to the wireless device 3820 after or in response to receiving the second message 3855 from the CU 3835 and/or after or in response to sending (e.g., transmitting) the response to the second message 3855 to the CU 3835.

The ETA procedure 3825 may indicate ETA procedures as described herein in FIG. 35, FIG. 36, and/or FIG. 37. The ETA procedure 3825, as described herein in FIG. 38, may be the ETA procedure as described herein in FIG. 35 and/or FIG. 37, for example, if the first value 3810a is present in the first message 3850 and/or the second message 3855. The ETA procedure 3825 in FIG. 38 may be the ETA procedure as described herein in FIG. 36 and/or FIG. 37, for example, if the second value 3810b is present in the first message 3850 and/or the second message 3855. The ETA procedure 3825, as described herein in FIG. 38, may be the ETA procedure as described herein in FIG. 37, for example, if the first value 3810a and the second value 3810b are present in the first message 3850 and/or the second message 3855.

The second message 3855 may comprise the third value (e.g., as a replacement of the first value 3810a) and/or the fourth value (e.g., as a replacement of the second value 3810b). The first value 3810abeing present and/or indicated by the signal(s), message(s), and/or procedure(s) as described herein in FIG. 35 to FIG. 38 may be replaced by the third value, for example, if the second message 3855 comprises the third value. A number of times that the serving DU 3805 may send (e.g., transmit) one or more L1/L2 ETA indications, as described herein in FIG. 35 to FIG. 38, may be equal to the third value.

The second value 3810b being present and/or indicated by the signal(s), message(s), and/or procedure(s) as described herein in FIG. 35 to FIG. 38 may be replaced by the fourth value for example, if the second message 3855 comprises the fourth value. A number of times that the wireless device may send (e.g., transmit), for example, for each of L1/L2 ETA indications (e.g., per L1/L2 ETA indication) for one or more preambles to the candidate target cell of the candidate DU as described herein in FIG. 35 to FIG. 38 may be equal to the fourth value.

A wireless device may send (e.g., transmit) one or more preambles during ETA procedures as described herein in FIG. 32, FIG. 35, FIG. 36, and/or FIG. 37. PRACH resource(s), of the candidate target cell, to which the wireless device may send (e.g., transmit) the one or more preambles may be one of resource(s) (e.g., PRACH) that may be indicated by the one or more parameters that the wireless device received from the CU as described herein in FIG. 38.

FIG. 39 shows an example of signaling between network nodes for ETA. A CU 3905 may determine a first value 3910a (e.g., that may refer to the first value as described herein in FIG. 35 and/or FIG. 37) and/or a second value 3910b (e.g., that may refer to the second value as described herein in FIG. 36 and FIG. 37).

The first value 3910a as, in FIG. 39, may indicate, as described herein in FIG 35 and/or FIG. 37, a number of L1/L2 ETA indications (e.g., transmissions of L1/L2 ETA indications N times, $N \geq 1$) that may trigger one or more preamble transmissions that the wireless device 3920 may perform and/or may send to the candidate target cell 3925 (e.g., of the candidate DU) for an ETA procedure 3930, for example, before a serving cell and/or a serving DU 3915 may send (e.g., transmit), to a wireless device 3920, the L1/L2 ETA indications to the wireless device 3920 N times. The second value 3910b as described herein in FIG. 39 may indicate, as described herein in FIG. 36 and/or FIG. 37a number of preamble transmissions (e.g., transmissions of one or more preambles M times, $M \geq 1$) that the wireless device 3920 may send (e.g., transmit) to the candidate target cell 3925 for the ETA, for example, based on receiving an L1/L2 ETA indication (e.g., per an L1/L2 ETA indication). The number (e.g., M) of preamble transmissions may indicate that the wireless device 3920 may send (e.g., transmit) one or more repetitions of a same preamble M times to the candidate target cell 3925. The number (e.g., M) of preamble transmissions may indicate that the wireless device 3920 may send (e.g., transmit) different preambles M times to the candidate target cell 3925.

The ETA procedure 3930, in FIG. 39, may be and/or may indicate an ETA procedure as described herein in FIG. 35, FIG. 36, and/or FIG. 37. For example, the signaling and/or procedure(s), as described herein in FIG. 39, may be signaling and/or procedure(s) that may occur (e.g., be performed) before the ETA procedure as described herein in FIG. 35, FIG. 36, and/or FIG. 37.

The candidate DU 3925, in FIG. 39, may determine one or more parameters of preamble transmission 3935 to a candidate target cell 3925 (e.g., a preamble identifier of a preamble, transmission power parameter of the preamble, resource(s) (e.g., PRACH) for transmission of the preamble). The one or more parameters 3935 may be for the ETA 3930 from the wireless device 3920 to the candidate target cell 3925 of the candidate DU. The candidate DU may send (e.g., transmit) the one or more parameters 3935 to the CU 3905 for the ETA 3930 and/or the LTM comprising the ETA 3930. The configuration of the candidate target cell 3925 for the LTM that the candidate DU 3925 may send (e.g., transmit) to the CU 3905 (e.g., as described herein in FIG. 30), for example, may comprise the one or more parameters 3935.

A message (e.g., a wireless device context setup response message, a wireless device context modification response message, and/or a wireless device context modification required message), in FIG. 39, that the DU (e.g., candidate DU 3925 and/or serving DU 3915) may send (e.g., transmit) to the CU 3905, for example, may comprise the configuration of the candidate target cell 3925 for the LTM and/or the one or more parameters 3935. The CU 3905 may send (e.g., transmit) the one or more parameters 3940 to the serving DU 3915 and/or the wireless device 3920 after or in response to receiving the one or more parameters 3935. A message (e.g., a wireless device context setup request message, a wireless device context modification request message, a wireless device context modification confirm message, and/or a DL RRC message transfer message) that the CU 3905 may send (e.g., transmit) to the DU (e.g., candidate DU and/or serving DU 3915), for example, may comprise the one or more parameters 3940. A message (e.g., a RRC message and/or RRC reconfiguration message)) that the CU 3905 may send (e.g., transmit) via the DU (e.g., candidate DU 3925 and/or serving DU 3915) to the wireless device 3920 may comprise the one or more parameters 3935. The DL RRC message transfer may comprise the RRC message and/or the RRC reconfiguration message. The wireless device 3920 may perform one or more measurements. The wireless device 3920 may send (e.g., transmit), to the serving cell of the serving DU 3915, L1 measurements 3945 that may comprise the measurement results of the one or more measurements. The serving DU 3915 may determine (e.g., select) the first value 3910a and/or the second value 3910b after or in response to receiving the L1 measurements 3945.

The CU 3905 may determine (e.g., select) the first value 3910a and/or the second value 3910b, for example, after or in response to receiving L1 measurements 3945 from the wireless device 3920. \ the serving DU 3915 may send (e.g., transmit), to the CU 3905, the measurement results of the one or more measurements 3950 (e.g., L1 measurement) of the candidate target cell 3925. The CU 3905 may determine (e.g., select) the first value 3910a and/or the second value 3910b, for example, based on the measurement results in the L1 measurements 3945 received from the serving DU 3915 and/or received from the wireless device 3920 via the serving DU 3915.

The CU 3905 may send (e.g., transmit), to the candidate DU 3925, a first message 3955 that may comprise field(s) and/or parameter(s) that may indicate the first value 3910a and/or the second value 3910b, for example, after or in response to determining the first value 3910a and/or the second value 3910b. The first message that the CU 3905 may send (e.g., transmit) to the candidate DU 3925 may be at least one of a wireless device context setup request message, a wireless device context modification request message, a wireless device context modification confirm message, and/or a DL RRC message transfer message that the CU 3905 may send (e.g., transmit) to the DU (e.g., candidate DU 3925 and/or serving DU 3915).

The CU 3905 may send (e.g., transmit), to the serving DU 3915, a second message 3960 that may comprise field(s) and/or parameter(s) that may indicate the first value 3910a and/or the second value 3910b, for example, after or in response to determining the first value 3910a and/or the second value 3910b. The second message 3960 that the CU 3905 may send (e.g., transmit) to the serving DU 3915 may be at least one of a wireless device context setup request message, a wireless device context modification request message, a wireless device context modification confirm message, and/or a DL RRC message transfer message that the CU 3905 may send (e.g., transmit) to the DU (e.g., candidate DU 3925 and/or serving DU 3915).

The L1 measurement 3950 that the serving DU 3915 may send (e.g., transmit) to the CU 3905 may be in a message that may comprise the first value 3910a and/or the second value 3910b that the serving DU 3915 determines, selects, and/or proposes. The second message 3960 may be a response to the message that may comprise the L1 measurement 3950. The second message 3960 may comprise field(s) and/or parameter(s) that may indicate the first value 3910a and/or the second value 3910b, for example, as a confirmation of the first value 3910a and/or the second value 3910b that the CU 3905 receives via the message that may comprise the L1 measurements 3950. The second message 3960 may comprise first field(s) and/or first parameter(s) that may indicate a third value different from the first value 3910a in the message that may comprise the L1 measurement 3950. The serving DU 3915 may update or replace the first value 3910a with the third value for this case. The second message 3960 may comprise second field(s) and/or second parameter(s) that may indicate a fourth value different from the second value 3910b in the message that may comprise the L1 measurement 3950. The serving DU 3915 may update or replace the second value 3910b with the fourth value for this case.

The CU 3905 may send (e.g., transmit) the second message 3960 to the serving DU 3915 after or in response to sending (e.g., transmitting) the first message to the candidate DU 3925. The CU 3905 may send (e.g., transmit) the second message 3960 to the serving DU 3915, for example, after or in response to receiving, from the candidate DU 3925, a response to the first message.

The CU 3905 may send (e.g., transmit) the first message 3955 to the candidate DU 3925 after or in response to sending (e.g., transmitting) the second message 3960 to the serving DU 3915. For example, the CU 3905 may send (e.g., transmit) the first message to the candidate DU 3925 after or in response to receiving, from the serving DU 3915, a response to the second message 3960 to the serving DU 3915.

The ETA procedure 3930 may start after or in response to the serving DU 3915 receiving the second message 3960. The ETA procedure 3930 may start after or in response to the serving DU 3915 sending (e.g., transmitting) a response to the second message 3960 to the CU 3905. The serving DU 3915 may send (e.g., transmit) an L1/L2 ETA indication to the wireless device 3920 after or in response to receiving the second message 3960 from the CU 3905 and/or after or in response to sending (e.g., transmitting) the response to the second message 3960 to the CU 3905.

The ETA procedure 3930 may indicate an ETA procedure as described herein in FIG. 35, FIG. 36, and/or FIG. 37. The ETA procedure described in FIG. 39 may be an ETA procedure as described herein in FIG. 35 and/or FIG. 37, for example, if the first value 3910a is present in the first message and/or the second message 3960. The ETA procedure described in FIG. 39 may be the ETA procedure as described herein in FIG. 36 and/or FIG. 37, for example, if the second value 3910b is present in the first message and/or the second message 3960. The ETA procedure described in FIG. 39 may be the ETA procedure as described herein in FIG. 37, for example, if the first value 3910a and the second value 3910b are present in the first message and/or the second message 3960.

The second message 3960 may comprise the third value (e.g., as a replacement of the first value 3910a) and/or the fourth value (e.g., as a replacement of the second value 3910b). The first value 3910a being present and/or indicated by the signal(s), message(s), and/or procedure(s) from FIG. 35 to FIG. 39 may be replaced by the third value, for example, if the second message 3960 comprises the third value. A number of times that the serving DU 3915 may send (e.g., transmit) one or more L1/L2 ETA indications as described herein in FIG. 35 to FIG. 39 may be equal to the third value.

In FIG. 39, the second value 3910b being present and/or indicated by the signal(s), message(s), and/or procedure(s) as described herein in FIG. 35 to FIG. 39 may be replaced by the fourth value, for example, if the second message 3960 comprises the fourth value. A number of times that the wireless device 3920 may send (e.g., transmit) one or more preambles to the candidate target cell 3925 of the candidate DU as described herein in FIG. 35 to FIG. 39 may be equal to the fourth value, for example, for each of L1/L2 ETA indications (e.g., per L1/L2 ETA indication).

The wireless device 3920 may send (e.g., transmit) one or more preambles during the ETA procedure 3930 according to example embodiments as described herein in FIG. 32, FIG. 35, FIG. 36, and/or FIG. 37. The PRACH resource(s), of the candidate target cell 3925, to which the wireless device 3920 may send (e.g., transmit) the one or more preambles may be one of resource(s) (e.g., PRACH) indicated by the one or more parameters 3935 that the wireless device 3920 received from the CU 3905 as described herein in FIG. 39.

FIG. 40 shows an example of signaling between network nodes. A candidate DU 4005 may determine a first value 4010a (e.g., that may refer to the first value as described herein in FIG. 35 and/or FIG. 37) and/or a second value 4010b (e.g., that may refer to the second value as described herein in FIG. 36 and FIG. 37). For example, the first value 4010a in FIG. 40 may indicate, as described herein in FIG 35 and/or FIG. 37, a number of L1/L2 ETA indications (e.g., transmissions of L1/L2 ETA indications N times, N≥1) that may trigger one or more preamble transmissions that the wireless device may perform and/or send (e.g., transmit) to the candidate target cell for the ETA 4015 (e.g., ETA procedure), for example, before a serving cell (and/or a serving DU) may send (e.g., transmit), to the wireless device, the L1/L2 ETA indications to the wireless device N times. For example, the second value 4010b as described herein in FIG. 40 may indicate, as described herein in FIG. 36 and/or FIG. 37, a number of preamble transmissions (e.g., transmissions of one or more preambles M times, M≥1) that the wireless device may send (e.g., transmit) to the candidate target cell for the ETA 4015 (e.g., ETA procedure) based on receiving an L1/L2 ETA indication (e.g., per an L1/L2 ETA indication). For example, the number (e.g., M) of preamble transmissions may indicate that the wireless device may send (e.g., transmit) one or more repetitions of a same preamble M times to the candidate target cell. For example, the number (e.g., M) of preamble transmissions may indicate that the wireless device may send (e.g., transmit) different preambles M times to the candidate target cell.

The ETA procedure 4015, in FIG. 40, may be (e.g., indicate) an ETA procedure as described herein in FIG. 35, FIG. 36, and/or FIG. 37. Signaling and/or procedure(s) in FIG. 40 may be signaling and/or procedure(s) that may occur (e.g., be performed) before the ETA procedure as described herein in FIG. 35, FIG. 36, and/or FIG. 37.

The candidate DU 4005 may determine one or more parameters of preamble transmission to a candidate target cell (e.g., a preamble identifier of a preamble, transmission power parameter of the preamble, resource(s) (e.g., PRACH) for transmission of the preamble). The one or more parameters may be for the ETA 4015 (e.g., ETA procedure) from the wireless device to the candidate target cell of the candidate DU 4005. The candidate DU 4005 may send (e.g., transmit) the one or more parameters 4020 to a CU 4025 for the ETA 4015 (e.g., ETA procedure) and/or the LTM that may comprise the ETA 4015 (e.g., ETA procedure). The configuration of the candidate target cell for the LTM that the candidate DU 4005 may send (e.g., transmit) to the CU 4025 (e.g., as described herein in FIG. 30) may comprise the one or more parameters 4020.

A message (e.g., a wireless device context setup response message, a wireless device context modification response message, and/or a wireless device context modification required message) that the DU (e.g., candidate DU 4005 and/or serving DU) may send (e.g., transmit) to the CU 4025 may comprise the configuration of the candidate target cell for the LTM and/or the one or more parameters 4030. The CU 4025 may send (e.g., transmit) the one or more parameters 4030 to the serving DU 4035 and/or the wireless device after or in response to receiving the one or more parameters 4020. A message (e.g., a wireless device context setup request message, a wireless device context modification request message, a wireless device context modification confirm message, and/or a DL RRC message transfer message) that the CU 4025 may send (e.g., transmit) to the DU (e.g., candidate DU 4005 and/or serving DU 4035) may comprise the one or more parameters 4030. A message (e.g., a RRC message and/or RRC reconfiguration message)) that the CU 4025 may send (e.g., transmit) via the DU (e.g., candidate DU 4005 and/or serving DU 4035) to a wireless device 4040 may comprise the one or more parameters 4030. The DL RRC message transfer, for example, may comprise the RRC message and/or the RRC reconfiguration message. The wireless device 4040 may perform one or more measurements. The wireless device 4040 may send (e.g., transmit), to the serving cell of the serving DU 4035, L1 measurements 4045 that may comprise the measurement results of the one or more measurements. The serving DU 4035 may determine (e.g., select) the first value 4010a and/or the second value 4010b after or in response to receiving the L1 measurements 4045.

The candidate DU 4005 may determine (e.g., select) the first value 4010a and/or the second value 4010b, for example, after or in response to receiving L1 measurements 4050 from the CU 4025. The serving DU 4035 may send (e.g., transmit), to the CU 4025, a message that may comprise the measurement results of the one or more measurements 4045 (e.g., L1 measurement) of the candidate target cell. The CU 4025 may send (e.g., transmit), to the candidate DU 4005, a message comparing the measurement results of the one or more measurements 4050 (e.g., L1 measurement) of the candidate target cell of the candidate DU 4005. The candidate DU 4005 may determine (e.g., select) the first value 4010a and/or the second value 4010b based on the measurement results in the L1 measurements 4045, for example, received from the CU 4025 and/or received from the wireless device 4040 via the serving DU 4035 and the CU 4025.

The candidate DU 4005 may send (e.g., transmit), to the CU 4025, a first message 4055 that may comprise field(s) and/or parameter(s) that may indicate the first value 4010a and/or the second value 4010b, for example, after or in response to determining the first value 4010a and/or the second value 4010b. The first message 4055 that the candidate DU 4005 may send (e.g., transmit) to the CU 4025 may be at least one of a wireless device context setup response message, a wireless device context modification response message, and/or a wireless device context modification required message that the DU (e.g., candidate DU 4005 and/or serving DU 4035) may send (e.g., transmit) to the CU 4025. The first message 4055 may be a response to the message that may comprise the L1 measurement 4050 that the CU 4025 may send (e.g., transmit) to the candidate DU 4005.

The CU 4025 may send (e.g., transmit), to the serving DU 4035, a second message 4060 that may comprise field(s) and/or parameter(s) that may indicate the first value 4010a and/or the second value 4010b, for example, after or in response to determining the first value 4010a and/or the second value 4010b. The second message 4060 that the CU 4025 may send (e.g., transmit) to the serving DU 4035 may be at least one of a wireless device context setup request message, a wireless device context modification request message, a wireless device context modification confirm message, and/or a DL RRC message transfer message that the CU 4025 may send (e.g., transmit) to the DU (e.g., candidate DU 4005 and/or serving DU 4035). The second message 4060 may be a response to the message that may comprise the L1 measurements 4050 that the serving DU 4035 may send (e.g., transmit) to the CU 4025.

The L1 measurements 4050 that the serving DU 4035 may send (e.g., transmit) to the CU 4025 may be in a message that may comprise the first value 4010a and/or the second value 4010b that the serving DU 4035 may determine, select, and/or propose. The second message 4060 may be a response to the message that may comprise the L1 measurements 4050 that the serving DU 4035 may send (e.g., transmit) to the CU 4025. The second message 4060 may comprise field(s) and/or parameter(s) that may indicate the first value 4010a and/or the second value 4010b, for example, as a confirmation that the first value 4010a and/or the second value 4010b that the candidate DU 4005 receives via the message that may comprise the L1 measurements 4050 that the serving DU 4035 may send (e.g., transmit) to the CU 4025 and/or via the message that may comprise the L1 measurements 4050 that the candidate DU 4005 receives from the CU 4025. The second message 4060 may comprise first field(s) and/or first parameter(s) that may indicate a third value different from the first value 4010a in the message that may comprise the L1 measurements 4050 that the serving DU 4035 may send (e.g., transmit) to the CU 4025. The serving DU 4035 may update or replace the first value 4010a with the third value in this case. The second message 4060 may comprise second field(s) and/or second parameter(s) that may indicate a fourth value different from the second value 4010b in the message that may comprise the L1 measurements 4050 that the serving DU 4035 may send (e.g., transmit) to the CU 4025. The serving DU 4035 may update or replace the second value 4010b with the fourth value in this case.

The L1 measurements 4050 that the CU 4025 may send (e.g., transmit) to the candidate DU 4005 may be in a message that may comprise the first and/or the second value 4010b that the CU 4025 or the serving DU 4035 may determine, select, and/or propose. The first message 4055 may be a response to the message that may comprise the L1 measurements 4050 that the CU 4025 may send (e.g., transmit) to the candidate DU 4005. The first message 4055 may comprise field(s) and/or parameter(s) that may indicate the first value 4010a and/or the second value 4010b, for example, as a confirmation that the first value 4010a and/or the second value 4010b that the candidate DU 4005 receives via the message that may comprise the L1 measurements 4050 that the candidate DU 4005 may receive from the CU 4025. The first message 4055 may comprise first field(s) and/or first parameter(s) that may indicate a third value different from the first value 4010a in the message that the CU 4025 may send (e.g., transmit) to the candidate DU 4005. The CU 4025 may update or replace the first value 4010a with the third value and/or send (e.g., transmit), to the serving DU 4035, the second message 4060 that may comprise the third value as a number of times that the serving DU 4035 may send (e.g., transmit), to the wireless device 4040, one or more L1/L2 ETA indications in this case. The serving DU 4035 may determine (e.g., update or replace the first value 4010a with the third value) the third value as a number of times that the serving DU 4035 may send (e.g., transmit), to the wireless device 4040, one or more L1/L2 ETA indications based on receiving the second message 4060. The first message 4055 may comprise second field(s) and/or second parameter(s) that may indicate a fourth value different from the second value 4010b in the message that may comprise the L1 measurements 4050 that the CU 4025 may send (e.g., transmit) to the candidate DU 4005. The CU 4025 may update or replace the second value 4010b with the fourth value and/or send (e.g., transmit), to the serving DU 4035, the second message 4060 that may comprise the fourth value as a number of times that the wireless device 4040 may send (e.g., transmit), to the serving DU 4035, one or more preambles, for example, for each of L1/L2 ETA indications (e.g., per L1/L2 ETA indication) in this case. The serving DU 4035 may determine (e.g., update or replace the second value 4010b with the fourth value) the fourth value as a number of times that the serving DU 4035 may send (e.g., transmit), to the wireless device 4040, one or more L1/L2 ETA indications based on receiving the second message 4060. The CU 4025 may send (e.g., transmit) the second message 4060 to the serving DU 4035 after or in response to sending (e.g., transmitting) a response to the first message 4055 to the candidate DU 4005.

The ETA procedure 4015 may start after or in response to the serving DU 4035 receiving the second message 4060. The ETA procedure 4015 may start, for example, after or in response to the serving DU 4035 sending (e.g., transmitting) a response to the second message 4060 to the CU 4025. The serving DU 4035 may send (e.g., transmit) an L1/L2 ETA indication to the wireless device 4040, for example, after or in response to receiving the second message 4060 from the CU 4025 and/or after or in response to sending (e.g., transmitting) the response to the second message 4060 to the CU 4025.

The ETA procedure 4015 may indicate an ETA procedure as described herein in FIG. 35, FIG. 36, and/or FIG. 37. The ETA procedure 4015 as described herein in FIG. 40 may be an ETA procedure as described herein in FIG. 35 and/or FIG. 37, for example, if the first value 4010a is present in the first message 4055 and/or the second message 4060. The ETA procedure 4015 as described herein in FIG. 40 may be an ETA procedure as described herein in FIG. 36 and/or FIG. 37, for example, if the second value 4010b is present in the first message 4055 and/or the second message 4060. The ETA procedure 4015 as described herein in FIG. 40 may be an ETA procedure as described herein in FIG. 37, for example, if the first value 4010a and the second value 4010b are present in the first message 4055 and/or the second message 4060.

The second message 4060 may comprise the third value (e.g., as a replacement of the first value 4010a) and/or the fourth value (e.g., as a replacement of the second value 4010b). The first value 4010a that may be present and/or indicated by the signal(s), message(s), and/or procedure(s) from FIG. 35 to FIG. 40 may be replaced by the third value, for example, if the second message 4060 comprises the third value. A number of times that the serving DU 4035 may send (e.g., transmit) one or more L1/L2 ETA indications from FIG. 35 to FIG. 40 may be equal to the third value.

The second value 4010b that may be present and/or indicated by the signal(s), message(s), and/or procedure(s) from FIG. 35 to FIG. 40 may be replaced by the fourth value for example, if the second message 4060 comprises the fourth value. A number of times that the wireless device 4040 may send (e.g., transmit), for example, for each of L1/L2 ETA indications (e.g., per L1/L2 ETA indication) one or more preambles to the candidate target cell of the candidate DU 4005 from FIG. 35 to FIG. 40 may be equal to the fourth value.

The wireless device 4040 may send (e.g., transmit) one or more preambles during the ETA procedure 4015 according to example embodiments as described herein in FIG. 32, FIG. 35, FIG. 36, and/or FIG. 37. The PRACH resource(s), of the candidate target cell, to which the wireless device 4040 may send (e.g., transmit) the one or more preambles may be one or more of resource(s) (e.g., PRACH) indicated by one or more parameters that the wireless device 4040 may receive from the CU 4025 as described herein in FIG. 40.

Referring to the examples described herein in FIG. 35 through FIG. 40, a first value may differ from preamble-TransMax as described herein in FIG. 22. A wireless device may determine, for example, if a number of preamble transmissions that the wireless device may send (e.g., transmit) may exceed a threshold value that may be indicated by preambleTransMax. The first value as described herein may indicate a number of times that a serving DU may send (e.g., transmit), to the wireless device, one or more L1/L2 ETA indications. A second value may differ from the preamble-TransMax. The second value as described herein may indicate a number of times that the wireless device may send (e.g., transmit) one or more preambles to the serving DU for each of one or more L1/L2 ETA indications and/or per L1/L2 ETA indications. The wireless device may receive the first value and/or the second value, for example, as a part of an ETA configuration. Network nodes may send (e.g., transmit) and/or receive the first value and/or the second value, for example, as a part of an ETA configuration. The wireless device 4040 may receive preambleTransMax, for example, as a part of LTM configuration (e.g., not for the ETA configuration). Network nodes may send (e.g., transmit) and/or receive preambleTransMax, for example, as a part of LTM configuration (e.g., not for the ETA configuration). The ETA configuration may not comprise preambleTransMax. The LTM configuration may comprise (e.g., both) the first value and preambleTransMax. The LTM configuration may comprise (e.g., both) the second value and preambleTransMax. The LTM configuration may comprise a first field and/or first parameter that may indicate the first value, a second field and/or second parameter that may indicate the third value, and/or the first value, a second field and/or second parameter that may indicate preambleTransMax.

Referring to the examples described herein in FIG. 35 through FIG. 40, a serving cell of a serving DU may send (e.g., transmit) two consecutive L1/L2 ETA indications with a time interval (e.g., time duration, window and/or timer). The time interval between two consecutive L1/L2 ETA indications may be predefined. The time interval between two consecutive L1/L2 ETA indications may be configurable. The serving DU may determine the time interval. A first message, a second message and/or a third message as described herein in FIG. 38 may comprise the tine interval. The CU may determine the time interval. A first message and/or a second message as described herein in FIG. 39 may comprise the tine interval. A candidate DU may determine the time interval. A first message and/or a second message as described herein in FIG. 40 may comprise the tine interval. A serving DU as described herein in FIG. 35 through FIG. 40 may send (e.g., transmit) a first L1/L2 ETA indication with a time offset (e.g., as indicated by the time interval) that may be started, for example, after or in response to sending (e.g., transmitting) a second L1/L2 ETA indication.

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics."

Clause 1. A method comprising, receiving, by a base station via a first cell, a first message comprising one or more measurements, of a wireless device, that are associated with reference signals of a second cell.

Clause 2. The method of clause 1, further comprising, sending a second message indicating one or more preamble repetitions for the wireless device to send to the second cell for an early timing advance acquisition of a layer 1 or layer 2 triggered mobility (LTM) procedure.

Clause 3. The method of any one of clauses 1-2, further comprising receiving a third message based on the second message and indicating physical random access channel (PRACH) resources for the one or more preamble repetitions.

Clause 4. The method of any one of clauses 1-3, further comprising further comprising receiving a fourth message based on the second message and indicating PRACH resources for the one or more of preamble repetitions.

Clause 5. The method of any one of clauses 1-4, wherein the first cell comprises a serving cell of the LTM procedure, and wherein the second base station DU comprises a candidate target base station DU of the LTM procedure.

Clause 6. The method of any one of clauses 1-5, the receiving the first message comprises receiving the first message via the first cell of a base station distributed unit (DU), the sending the second message comprises sending the second message to a base station central unit (CU), and the receiving the third message comprises receiving the third message from the base station CU.

Clause 7. The method of any one of clauses 1-6, wherein the first message comprises at least one of a radio resource control (RRC) message, or uplink control information (UCI).

Clause 8. The method of any one of clauses 1-7, wherein the second message comprises at least one of a wireless device context setup response message, a wireless device context modification response message, or a wireless device context modification required message.

Clause 9. The method of any one of clauses 1-8, wherein the third message comprises at least one of a wireless device context setup request message, a wireless device context modification request message, a wireless device context modification confirm message, or a DL RRC message transfer message.

Clause 10. The method of any one of clauses 1-9, wherein the LTM procedure comprises an early timing advance acquisition for the wireless device to send, to the second cell, one or more preambles based on the number of the one or more preamble repetitions.

Clause 11. The method of any one of clauses 1-10, wherein the second message comprises one or more of a configuration parameter, a field, or a field value of the field indicating a number of times to repeat the one or more preamble repetitions.

Clause 12. The method of any one of clauses 1-11, wherein the indication is included in one or more of downlink control information (DCI), or a medium access control (MAC) control element (CE).

Clause 13. The method of any one of clauses 1-12, further comprising sending, to the wireless device, an indication wherein the indication indicates the PRACH resources for the one or more preamble repetitions.

Clause 14. The method of clauses 1-13, wherein the indication indicates the number of preamble repetitions.

Clause 15. A computing device comprising one or more processors and memory storing instructions that, when executed by the one or more processors, cause the computing device to perform the method of any one of clauses 1-14.

Clause 16. A system comprising: a first computing device configured to perform the method of any one of clauses 1-14, a second computing device configured to send the third message; and a wireless device configured to send the first message.

Clause 17. A computer-readable medium storing instructions that, when executed, cause performance of the method of any one of clauses 1-14.

Clause 18. A method comprising, sending, by a base station via a second cell, a first message indicating one or more measurements, of a wireless device, that are associated with reference signals of a first cell.

Clause 19. The method of clause 18, further comprising receiving, from the second cell, a second message based on the first message and indicating a number of preamble repetitions for the wireless device to send to the second cell for an early timing advance acquisition of a layer 1 or layer 2 triggered mobility (LTM) procedure.

Clause 20. The method of any one of clauses 18-19, further comprising sending, to the first cell, a third message indicating physical random access channel (PRACH) resources for the one or more preamble repetitions.

Clause 21. The method of any one of clauses 18-20, further comprising further comprising sending, to the second cell of a base station, a fourth message indicating at least one of: a request for one or more configuration parameters of the second cell for the LTM procedure of the wireless device, or one or more measurements, of the wireless device, associated with reference signals of the second cell.

Clause 22. The method of any one of clauses 18-21, wherein the PRACH resources are for the first cell to send, to the wireless device, an indication indicating at least one of: the number of preamble repetitions, or PRACH resources.

Clause 23. The method of any one of clauses 18-22, wherein the first cell comprises a serving cell of the LTM procedure, and wherein the second cell comprises a candidate target cell of the LTM procedure.

Clause 24. The method of any one of clauses 18-23, wherein the sending the first message comprises sending the first message to a second base station distributed unit (DU), the receiving the second message comprises receiving the second message from the second base station DU, and the sending the third message comprises sending the third message to a first base station DU.

Clause 25. The method of any one of clauses 18-24, further comprising sending, to the wireless device, one or more measurement configurations of the second cell, wherein the one or more measurement configurations indicate reference signals of the second cell.

Clause 26. The method of any one of clauses 18-25, wherein the first message further indicates a request for one or more configuration parameters of the second cell for the LTM procedure of the wireless device.

Clause 27. A computing device comprising one or more processors and memory storing instructions that, when executed by the one or more processors, cause the computing device to perform the method of any one of clauses 18-26.

Clause 28. A system comprising: a first computing device configured to perform the method of any one of clauses 18 - 26, a second computing device configured to send the second message, a third computing device to receive the third message, and a wireless device to receive the configuration parameters.

Clause 29. A computer-readable medium storing instructions that, when executed, cause performance of the method of any one of clauses 18 - 26.

Clause 30. A method comprising, sending, by a wireless device and to a first base station, a first message comprising one or more measurements of the wireless device that are associated with reference signals of a second base station.

Clause 31. The method of clause 30, further comprising receiving, from the first base station, a second message comprising an indication indicating one or more preamble repetitions for the wireless device to send to the second base station for an early timing advance acquisition of a layer 1 or layer 2 triggered mobility (LTM) procedure, and an indication indicating physical random access channel (PRACH) resources for the one or more preamble repetitions.

Clause 32. The method of any one of clauses 30-31, wherein the first base station comprises a serving base station of the LTM procedure, and the second base station comprises a candidate target base station of the LTM procedure.

Clause 33. The method of any one of clauses 30-32, wherein the first message comprises at least one of a radio resource control (RRC) message, or uplink control information (UCI).

Clause 34. The method of any one of claims 30-33, wherein the second message comprises at least one of a wireless device context setup message, a wireless device context modification response message, or a wireless device context modification required message.

Clause 35. A wireless device comprising one or more processors and memory storing instructions that, when executed by the one or more processors, cause the wireless device to perform the method of any one of clauses 30-34.

Clause 36. A system comprising: a wireless device configured to perform the method of any one of clauses 30-34, and a computing device configured to send the second message.

Clause 37. A computer-readable medium storing instructions that, when executed, cause performance of the method of any one of clauses 30-34.

Clause 38. A method comprising, receiving, by a base station central unit (CU) from a second base station distributed unit (DU), a second message, indicating a number of preamble repetitions for a wireless device to send (e.g., transmit) to the second base station DU for an early timing advance (TA) acquisition of a layer 1 or layer 2 triggered mobility (LTM) procedure.

Clause 39. The method of clause 38, further comprising, sending (e.g., transmitting), to a first base station DU, a third message indicating the number of repetitions.

Clause 40. The method of any one of clauses 38-39, further comprising sending (e.g., transmitting), by the base station CU to the second base station DU, a first message indicating at least one of a request for one or more configuration parameters of the second base station DU for the LTM procedure of the wireless device, or one or more measurements, of the wireless device, associated with reference signals of the second base station DU.

Clause 41. The method of any one of clauses 38-40, wherein the LTM procedure comprises an early timing advance (TA) acquisition for the wireless device to send (e.g., transmit) one or more preambles, based on the number of preamble repetitions, to the second base station DU.

Clause 42. The method of any one of clauses 38-41, further comprising sending (e.g., transmitting), to the wireless device, one or more measurement configurations of a cell associated with the second base station DU.

Clause 43. The method of clause 42, wherein the one or more measurement configurations indicate reference signals of the cell associated with the second base station DU.

Clause 44. The method of clause 38-43, further comprising receiving, from the wireless device, an uplink signal or a message comprising one or more measurements associated with the reference signals of the cell.

Clause 45. The method of clause 44, wherein the uplink signal comprises uplink control information, and the message comprises an RRC message.

Clause 46. The method of any one of clauses 38-45, wherein the first message comprises at least one of a wireless device context setup response message, a wireless device context modification response message, or a wireless device context modification required message.

Clause 47. A computing device comprising one or more processors and memory storing instructions that, when executed by the one or more processors, cause the computing device to perform the method of any one of clauses 38-46.

Clause 48. A system comprising: a first computing device configured to perform the method of any one of clauses 38-46, a second computing device configured to send the second message, a third computing device configured to receive the third message, and a wireless device configured to receive the one or more measurement configurations.

Clause 49. A computer-readable medium storing instructions that, when executed, cause performance of the method of any one of clauses 38-46.

A base station may perform one or more operations. A base station, for example, may receive via a first cell and from a wireless device, a first message that may comprise one or more measurements of the wireless device that may be associated with reference signals of a second cell. The first base station may send (e.g., transmit) a second message that may indicate one or more preamble repetitions for the wireless device to send (e.g., transmit) to the second base stationDU for a layer 1 or layer 2 triggered mobility (LTM) procedure. The first base station may receive a third message that may be based on the second message and that may indicate physical random access channel (PRACH) resources for the one or more preamble repetitions. The first base station may receive a fourth message, that may, based on the second message, indicate PRACH resources for the one or more preamble repetitions. The first cell may be a serving cell of the LTM procedure. The second cell may be a candidate target cell of the LTM procedure. The base station may be a base station distributed unit (DU). The second message may be sent to a base station central unit (CU). The base station CU may send (e.g., transmit) the third message. The first message may comprise at least one of a radio resource control (RRC) message or uplink control information (UCI). The second message may comprise at least one of a wireless device context setup response message, a wireless device context modification response message, or a wireless device context modification required message. The third message may comprise at least one of a wireless device context setup request message, a wireless device context modification request message, a wireless device context modification confirm message, or a downlink (DL) RRC message transfer message. The LTM procedure may comprise an early timing advance acquisition for the wireless device to send (e.g., transmit) one or more preambles that may be based on the number of the one or more preamble repetitions to the second cell. The second message may comprises one or more of a configuration parameter, a field, or a field value of the field indicating a number of times to repeat the one or more preamble repetitions A base station may comprise one or more processors and memory storing instructions that, when executed by the one or more processors, may cause the base station to perform the described methods, additional operations and/or include the additional elements. A system may comprise a first base station that may be configured to perform the described method, additional operations and/or include the additional elements, a second base station configured to send the third message, and a wireless device configured to send the first message. A computer-readable medium may store instructions that, when executed, cause performance of the described method, additional operations, and/or include the additional elements.

A base station may perform one or more operations. A base station, for example, may send (e.g., transmit) via a second cell a first message that may indicate one or more measurements, of the wireless device, that may be associated with reference signals of a first cell. The base station may receive a second message, that may be based on the first message and that may comprise an indication of a number of preamble repetitions for the wireless device to send (e.g., transmit) to the second cell for an early timing advance acquisition of the LTM procedure. The base station may send (e.g., transmit) a third message that may indicate the number of repetitions. The base station may send (e.g., transmit), to the second base cell, a fourth message that may indicate at least one of a request for one or more configuration parameters of the second base cell for the LTM procedure of the wireless device, or one or more measurements, of the wireless device, associated with reference signals of the second cell. The PRACH resources may be for the first cell to send (e.g., transmit), to the wireless device, an indication that may indicate at least one of the number of preamble repetitions, or the PRACH resources. The indication may be included in one or more of downlink control information (DCI), or medium access control (MAC) control element (CE). The first base cell may be a serving cell of the LTM procedure. The second base cell may be a candidate target cell of the LTM procedure. The base station may be a base station central unit (CU). A second base station distributed unit (DU) may receive the first message. A first base station DU may receive the third message. The second base station DU may send (e.g., transmit) the second message. The base station may send (e.g., transmit), to the wireless device, one or more measurement configurations of the second cell, wherein the one or more measurement configurations may indicate reference signals of the second cell. The first message may further indicate a request for one or more configuration parameters of the second cell for a layer 1 or layer 2 triggered mobility (LTM) procedure of a wireless device. A base station may comprise one or more processors and memory storing instructions that, when executed by the one or more processors, may cause the base station to perform the described methods, additional operations and/or include the additional elements. A system may comprise a first base station that may be configured to perform the described method, additional operations and/or include the additional elements, a second base station configured to send the second message, a third base station configured to receive the third message, and a wireless device configured to receive the one or more measurement configurations. A computer-readable medium may store instructions that, when executed, cause performance of the described method, additional operations, and/or include the additional elements.

A wireless device may perform one or more operations. A wireless device may send a first message to a first base station. The first message may comprise one or more measurements of the wireless device that may be associated with reference signals of a second base station. The wireless device may receive a second message from the first base station. The second message may comprise an indication that may indicate one or more preamble repetitions for the wireless device to send to the second base station for an early timing advance acquisition of a layer 1 or layer 2 triggered mobility (LTM) procedure. The second message may also comprise an indication that may indicate physical random access channel (PRACH) resources for the one or more preamble repetitions. The first base station may comprise a serving base station of the LTM procedure, and the second base station may comprise a candidate target base station of the LTM procedure. The first message may comprise at least one of a radio resource control (RRC) message or uplink control information (UCI). The second message may comprise at least one of a wireless device context setup message, a wireless device context modification response message, or a wireless device context modification required message. A wireless device may comprise one or more processors and memory storing instructions that, when executed by the one or more processors, may cause the wireless device to perform the described methods, additional operations and/or include the additional elements. A system may comprise a wireless device that may be configured to perform the described method, additional operations and/or include the additional elements, and a first base station that may be configured to send the second message. A computer-readable medium may store instructions that, when executed, cause performance of the described method, additional operations, and/or include the additional elements.

A base station may perform one or more operations. A first base station distributed unit (DU) may receive, from a wireless device, a first message that may comprise one or more measurements of the wireless device that may be associated with reference signals of a second base station DU. The first base station DU may send (e.g., transmit), to a base station central unit (CU), a second message that may comprise an indication of a number of preamble repetitions for the wireless device to send (e.g., transmit) to the second base station DU for a layer 1 or layer 2 triggered mobility (LTM) procedure. The first base station DU may receive, from the base station CU, a third message, that may be based on the second message and that may indicate physical random access channel (PRACH) resources for the number of preamble repetitions. The PRACH resources may be for the first base station DU to send (e.g., transmit) to the wireless device an indication that may indicate one or more of the number of preamble repetition or the PRACH resources for the number of preamble repetitions. The indication may be included in one or more of downlink control information (DCI) or a medium access control (MAC) control element (CE). The first base station DU may be a serving base station DU of the LTM procedure; and wherein the second base station DU may be a candidate target base station DU of the LTM procedure. A base station may comprise one or more processors and memory storing instructions that, when executed by the one or more processors, may cause the base station to perform the described methods, additional operations and/or include the additional elements. A system may comprise a first base station that may be configured to perform the described method, additional operations and/or include the additional elements, a second base station configured to send the third message, and a wireless device configured to send the first message. A computer-readable medium may store instructions that, when executed, cause performance of the described method, additional operations, and/or include the additional elements.

A base station may perform one or more operations. A base station central unit (CU) may receive, from a second base station distributed unit (DU), a second message that may indicate a number of preamble repetitions for a wireless device to send (e.g., transmit) to the second base station DU for an early timing advance (TA) acquisition of a layer 1 or layer 2 triggered mobility (LTM) procedure. The base station CU may send (e.g., transmit), to a first base station DU, a third message that may indicate the number of repetitions. The base station CU may send (e.g., transmit), to the second base station DU, a first message that may indicate at least one of a request for one or more configuration parameters of the second base station DU for the LTM procedure of the wireless device or one or more measurements, of the wireless device, that may be associated with reference signals of the second base station DU. The LTM procedure may comprise an early timing advance (TA) acquisition for the wireless device to send (e.g., transmit) one or more preambles, that may be based on the number of preamble repetitions, to the second base station DU. The base station CU may send (e.g., transmit), to the first base station DU, a third message that may indicate physical random access channel resources for the number of preamble repetitions of the early TA acquisition. The one or more measurement configurations may indicate reference signals of the cell that may be associated with the second base station DU. The base station CU may receive, from the wireless device, an uplink signal or a message that may comprise one or more measurements that may be associated with the reference signals of the cell. The uplink signal may comprise uplink control information (UCI) and the message may comprise a radio resource control (RRC) message. The first message may comprise at least one of a wireless device context setup response message, a wireless device context modification response message, or a wireless device context modification required message. The second message may comprise at least one of a wireless device context setup request message, a wireless device context modification request message, a wireless device context modification confirm message, or a DL RRC message transfer message. A base station may comprise one or more processors and memory storing instructions that, when executed by the one or more processors, may cause the base station to perform the described methods, additional operations and/or include the additional elements. A system may comprise a first base station that may be configured to perform the described method, additional operations and/or include the additional elements, a second base station configured to receive the first message, and a third base station configured to receive the third message. A computer-readable medium may store instructions that, when executed, cause performance of the described method, additional operations, and/or include the additional elements.

One or more of the operations described herein may be conditional. For example, one or more operations may be performed if certain criteria are met, such as in a wireless device, a base station, a radio environment, a network, a combination of the above, and/or the like. Example criteria may be based on one or more conditions such as wireless device and/or network node configurations, traffic load, initial system set up, packet sizes, traffic characteristics, a combination of the above, and/or the like. If the one or more criteria are met, various examples may be used. It may be possible to implement any portion of the examples described herein in any order and based on any condition.

A base station may communicate with one or more of wireless devices. Wireless devices and/or base stations may support multiple technologies, and/or multiple releases of the same technology. Wireless devices may have some specific capability(ies) depending on wireless device category and/or capability(ies). A base station may comprise multiple sectors, cells, and/or portions of transmission entities. A base station communicating with a plurality of wireless devices may refer to a base station communicating with a subset of the total wireless devices in a coverage area. Wireless devices referred to herein may correspond to a plurality of wireless devices compatible with a given LTE, 5G, 6G, or other 3GPP or non-3GPP release with a given capability and in a given sector of a base station. A plurality of wireless devices may refer to a selected plurality of wireless devices, a subset of total wireless devices in a coverage area, and/or any group of wireless devices. Such devices may operate, function, and/or perform based on or according to drawings and/or descriptions herein, and/or the like. There may be a plurality of base stations and/or a plurality of wireless devices in a coverage area that may not comply with the disclosed methods, for example, because those wireless devices and/or base stations may perform based on older releases of LTE, 5G, 6G, or other 3GPP or non-3GPP technology.

One or more parameters, fields, and/or Information elements (IEs), may comprise one or more information objects, values, and/or any other information. An information object may comprise one or more other objects. At least some (or all) parameters, fields, IEs, and/or the like may be used and can be interchangeable depending on the context. If a meaning or definition is given, such meaning or definition controls.

One or more elements in examples described herein may be implemented as modules. A module may be an element that performs a defined function and/or that has a defined interface to other elements. The modules may be implemented in hardware, software in combination with hardware, firmware, wetware (e.g., hardware with a biological element) or a combination thereof, all of which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. Additionally or alternatively, it may be possible to implement modules using physical hardware that incorporates discrete or programmable analog, digital and/or quantum hardware. Examples of programmable hardware may comprise: computers, microcontrollers, microprocessors, application-specific integrated circuits (ASICs); field programmable gate arrays (FPGAs); and/or complex programmable logic devices (CPLDs). Computers, microcontrollers and/or microprocessors may be programmed using languages such as assembly, C, C++ or the like. FPGAs, ASICs and CPLDs are often programmed using hardware description languages (HDL), such as VHSIC hardware description language (VHDL) or Verilog, which may configure connections between internal hardware modules with lesser functionality on a programmable device. The above-mentioned technologies may be used in combination to achieve the result of a functional module.

One or more features described herein may be implemented in a computer-usable data and/or computer-executable instructions, such as in one or more program modules, executed by one or more computers or other devices. Generally, program modules include routines, programs, objects, components, data structures, etc. That perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired. The functionality may be implemented in whole or in part in firmware or hardware equivalents such as integrated circuits, field programmable gate arrays (FPGA), and the like. Particular data structures may be used to more effectively implement one or more features described herein, and such data structures are contemplated within the scope of computer executable instructions and computer-usable data described herein.

A non-transitory tangible computer readable media may comprise instructions executable by one or more processors configured to cause operations of multi-carrier communications described herein. An article of manufacture may comprise a non-transitory tangible computer readable machine-accessible medium having instructions encoded thereon for enabling programmable hardware to cause a device (e.g., a wireless device, wireless communicator, a wireless device, a base station, and the like) to allow operation of multi-carrier communications described herein. The device, or one or more devices such as in a system, may include one or more processors, memory, interfaces, and/or the like. Other examples may comprise communication networks comprising devices such as base stations, wireless devices or user equipment (wireless device), servers, switches, antennas, and/or the like. A network may comprise any wireless technology, including but not limited to, cellular, wireless, WiFi, 4G, 5G, 6G, any generation of 3GPP or other cellular standard or recommendation, any non-3GPP network, wireless local area networks, wireless personal area networks, wireless ad hoc networks, wireless metropolitan area networks, wireless wide area networks, global area networks, satellite networks, space networks, and any other network using wireless communications. Any device (e.g., a wireless device, a base station, or any other device) or combination of devices may be used to perform any combination of one or more of steps described herein, including, for example, any complementary step or steps of one or more of the above steps.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the descriptions herein. Accordingly, the foregoing description is by way of example only, and is not limiting.

## Claims

**1.** A method comprising:

receiving, by a base station via a first cell, a first message comprising one or more measurements, of a wireless device, that are associated with reference signals of a second cell;
sending a second message indicating one or more preamble repetitions for the wireless device to send to the second cell for an early timing advance acquisition of a layer 1 or layer 2 triggered mobility (LTM) procedure; and
receiving a third message based on the second message and indicating physical random access channel (PRACH) resources for the one or more preamble repetitions.

**2.** The method of claim 1, further comprising receiving a fourth message based on the second message and indicating PRACH resources for the one or more of preamble repetitions.

**3.** The method of any one of claims 1-2, wherein the first cell comprises a serving cell of the LTM procedure, and the second base station DU comprises a candidate target base station DU of the LTM procedure.

**4.** The method of any one of claims 1-3, wherein:

the receiving the first message comprises receiving the first message via the first cell of a base station distributed unit (DU);
the sending the second message comprises sending the second message to a base station central unit (CU); and
the receiving the third message comprises receiving the third message from the base station CU.

**5.** The method of any one of claims 1-4, wherein the first message comprises at least one of:

a radio resource control (RRC) message; or
uplink control information (UCI).

**6.** The method of any one of claims 1-5, wherein the second message comprises at least one of:

a wireless device context setup response message;
a wireless device context modification response message; or
a wireless device context modification required message.

**7.** The method of any one of claims 1-6, wherein the third message comprises at least one of:

a wireless device context setup request message;
a wireless device context modification request message;
a wireless device context modification confirm message; or
a downlink (DL) RRC message transfer message.

**8.** The method of any one of claims 1-7, wherein the LTM procedure comprises an early timing advance acquisition for the wireless device to send, to the second cell, one or more preambles based on the number of the one or more preamble repetitions.

**9.** The method of any one of claims 1-8, wherein the second message comprises one or more of a configuration parameter, a field, or a field value of the field indicating a number of times to repeat the one or more preamble repetitions.

**10.** The method of any one of claims 1-9, further comprising sending to the wireless device, an indication that initiates the early timing advance acquisition.

**11.** The method of any one of claims 1-10, further comprising sending, to the wireless device, an indication that initiates the early timing advance acquisition, wherein the indication is included in one or more of:

downlink control information (DCI); or
a medium access control (MAC) control element (CE).

**12.** The method of any one of claims 1-11, further comprising sending, to the wireless device, an indication wherein the indication indicates the PRACH resources for the one or more preamble repetitions.

**13.** A computing device comprising:

one or more processors; and
memory storing instructions that when executed, cause the computing device to perform the method of any one of claims 1-12.

**14.** A system comprising:

a first computing device configured to perform the method of any one of claims 1-12;
a second computing device configured to send the third message; and
a wireless device configured to send the first message.

**15.** A computer-readable medium storing instructions that, when executed, cause performance of the method of any one of claims 1-12.

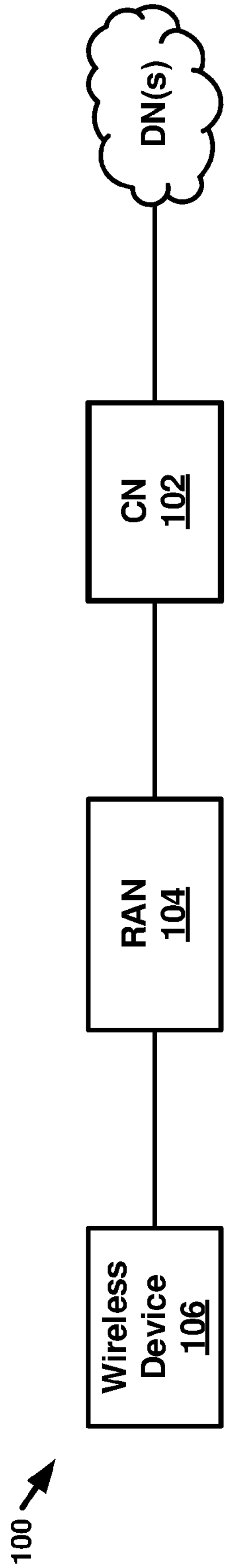
100
Wireless Device 106
RAN 104
CN 102
DN(s)

FIG. 1A

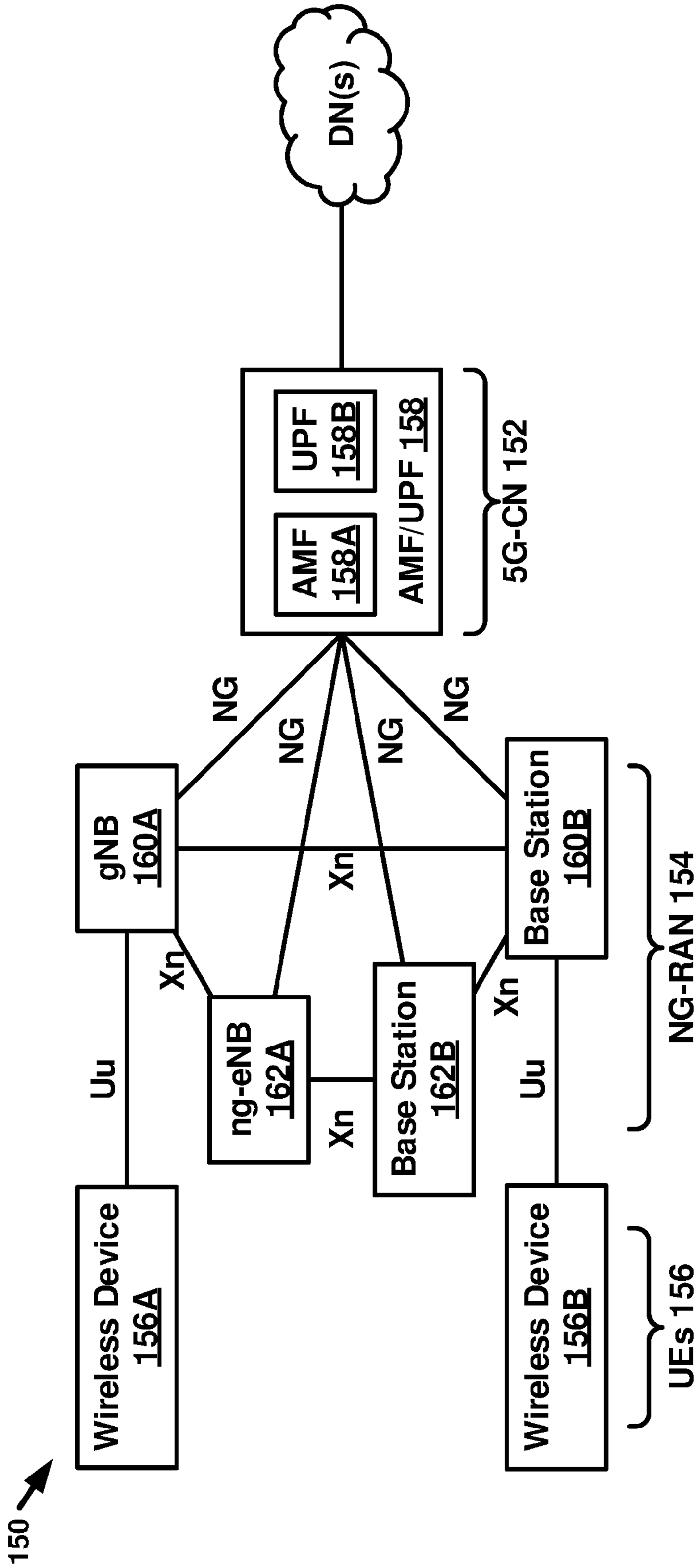
150
Wireless Device 156A
Wireless Device 156B
UEs 156
Uu
Uu
gNB 160A
ng-eNB 162A
Base Station 162B
Base Station 160B
Xn
Xn
Xn
Xn
NG
NG
NG
NG
NG-RAN 154
AMF 158A
UPF 158B
AMF/UPF 158
5G-CN 152
DN(s)

FIG. 1B

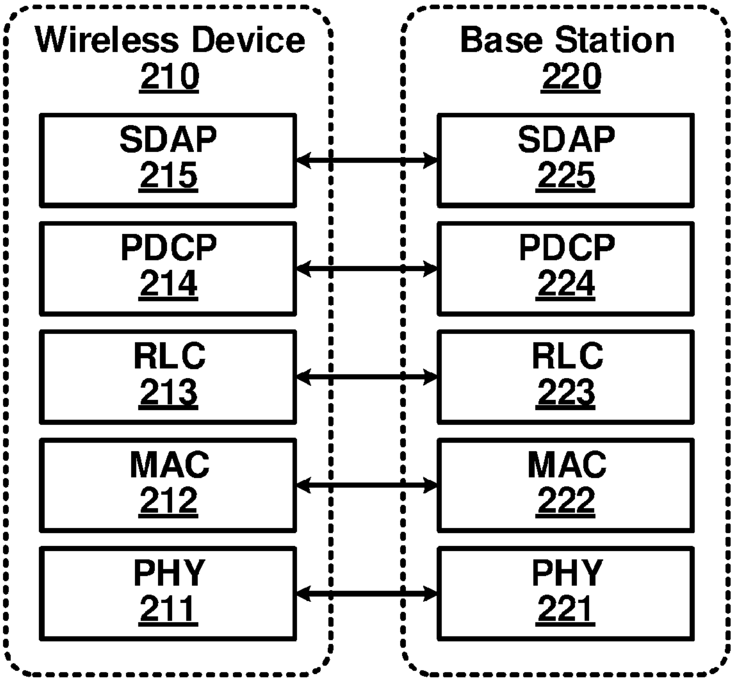
Wireless Device
210
SDAP
215
PDCP
214
RLC
213
MAC
212
PHY
211
Base Station
220
SDAP
225
PDCP
224
RLC
223
MAC
222
PHY
221

FIG. 2A

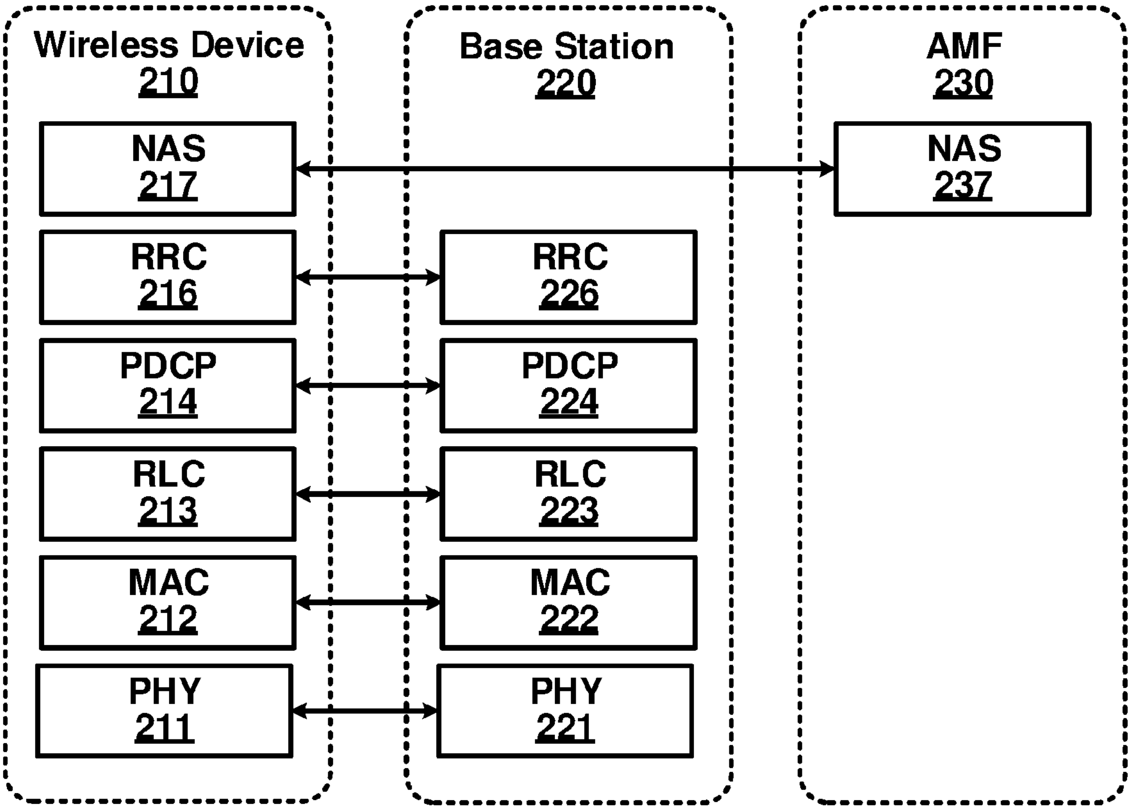
Wireless Device
210
NAS
217
RRC
216
PDCP
214
RLC
213
MAC
212
PHY
211
Base Station
220
RRC
226
PDCP
224
RLC
223
MAC
222
PHY
221
AMF
230
NAS
237

FIG. 2B

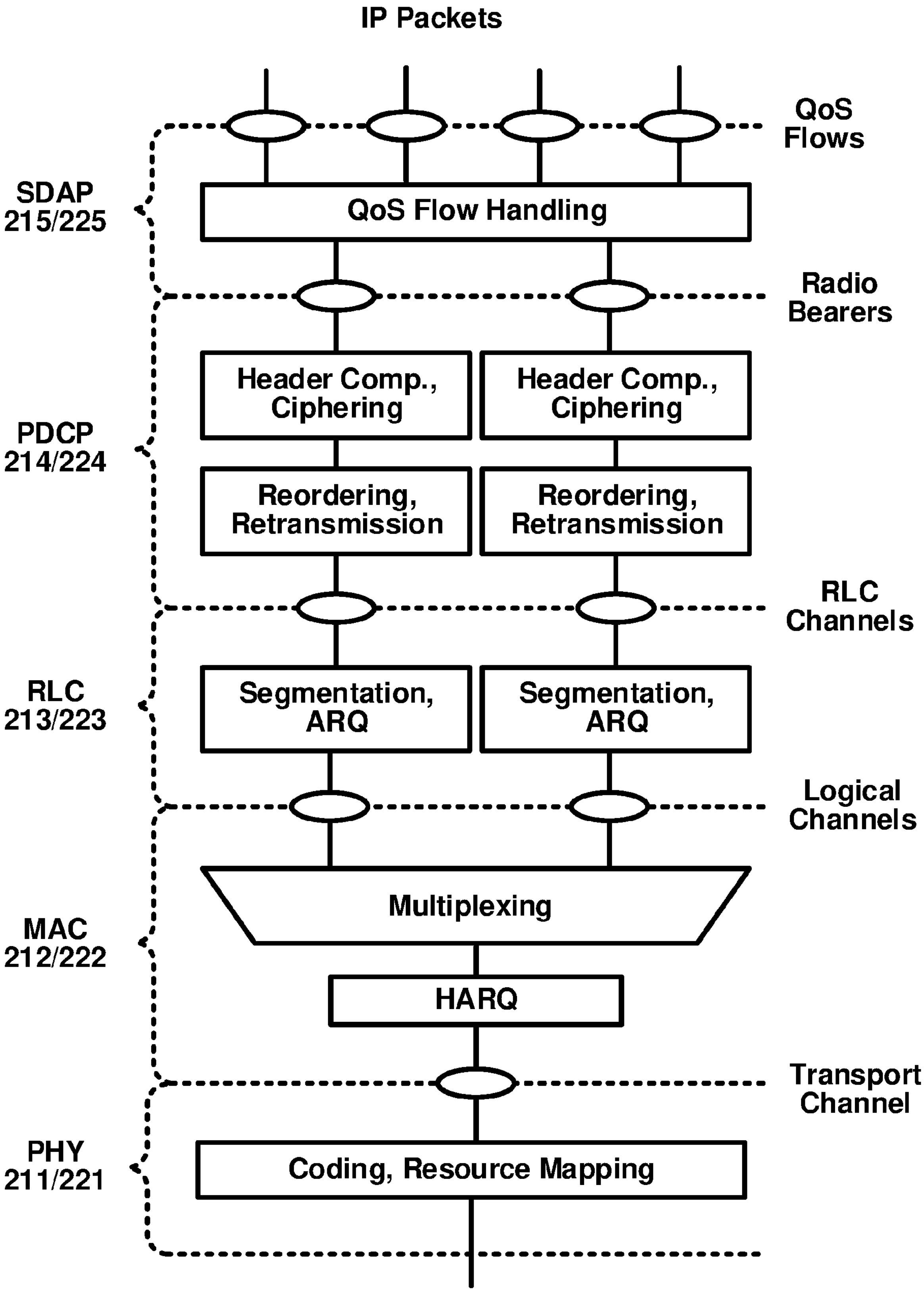
IP Packets
QoS Flows
SDAP 215/225
QoS Flow Handling
Radio Bearers
Header Comp., Ciphering
Header Comp., Ciphering
PDCP 214/224
Reordering, Retransmission
Reordering, Retransmission
RLC Channels
RLC 213/223
Segmentation, ARQ
Segmentation, ARQ
Logical Channels
MAC 212/222
Multiplexing
HARQ
Transport Channel
PHY 211/221
Coding, Resource Mapping

FIG. 3

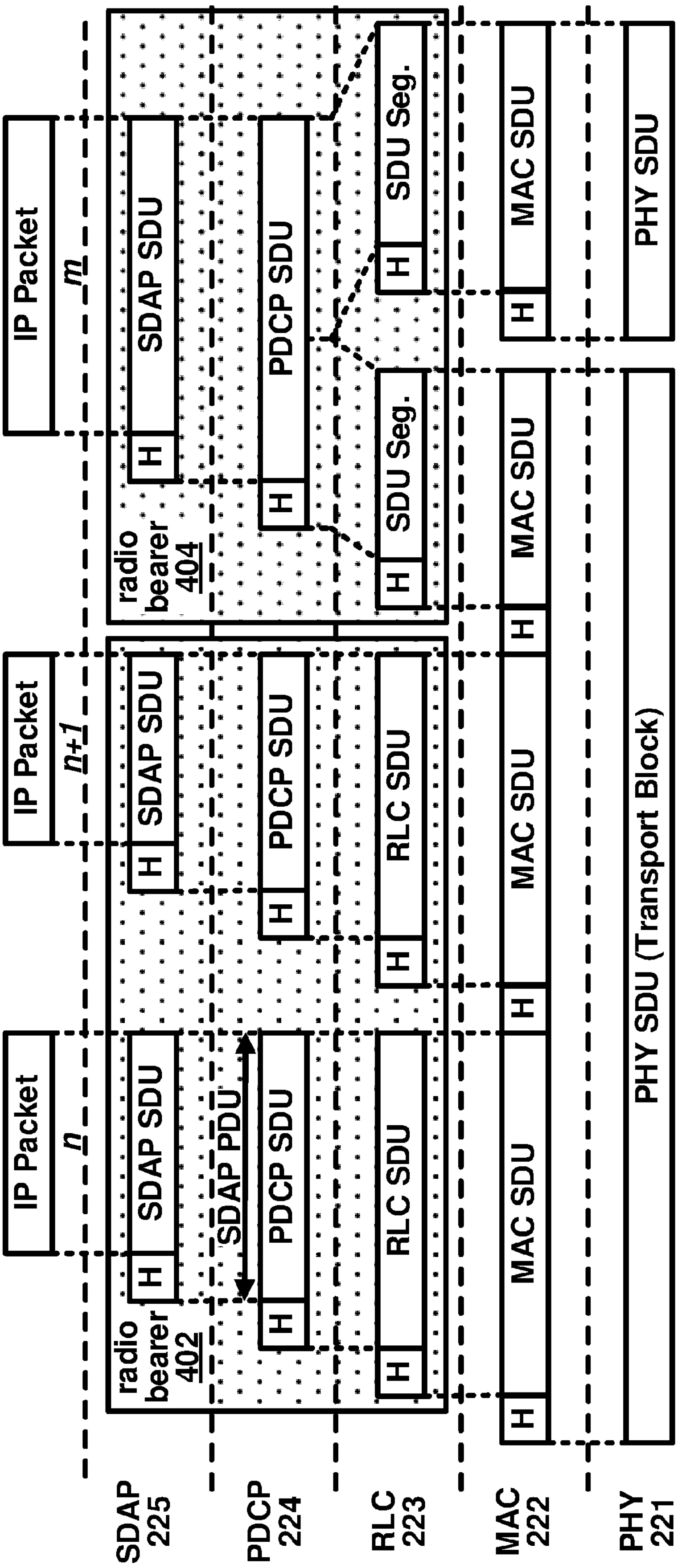
SDAP 225
PDCP 224
RLC 223
MAC 222
PHY 221
IP Packet n
IP Packet n+1
IP Packet m
radio bearer 402
radio bearer 404
H
SDAP SDU
SDAP PDU
PDCP SDU
RLC SDU
SDU Seg.
MAC SDU
PHY SDU (Transport Block)
PHY SDU

FIG. 4A

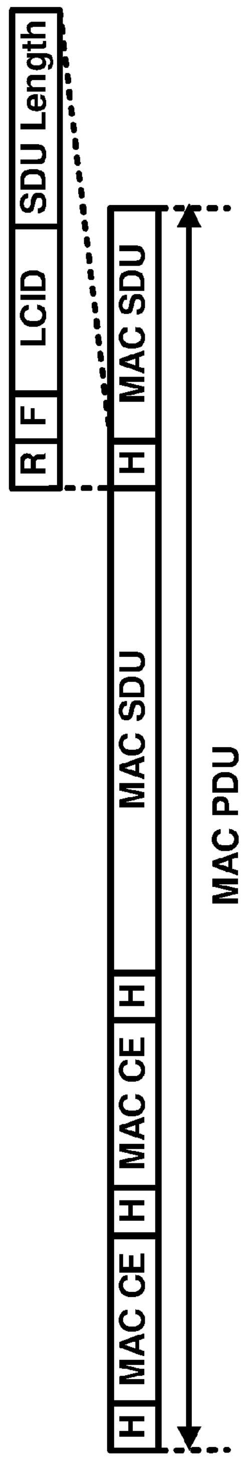
R
F
LCID
SDU Length
H
MAC CE
MAC SDU
MAC PDU

FIG. 4B

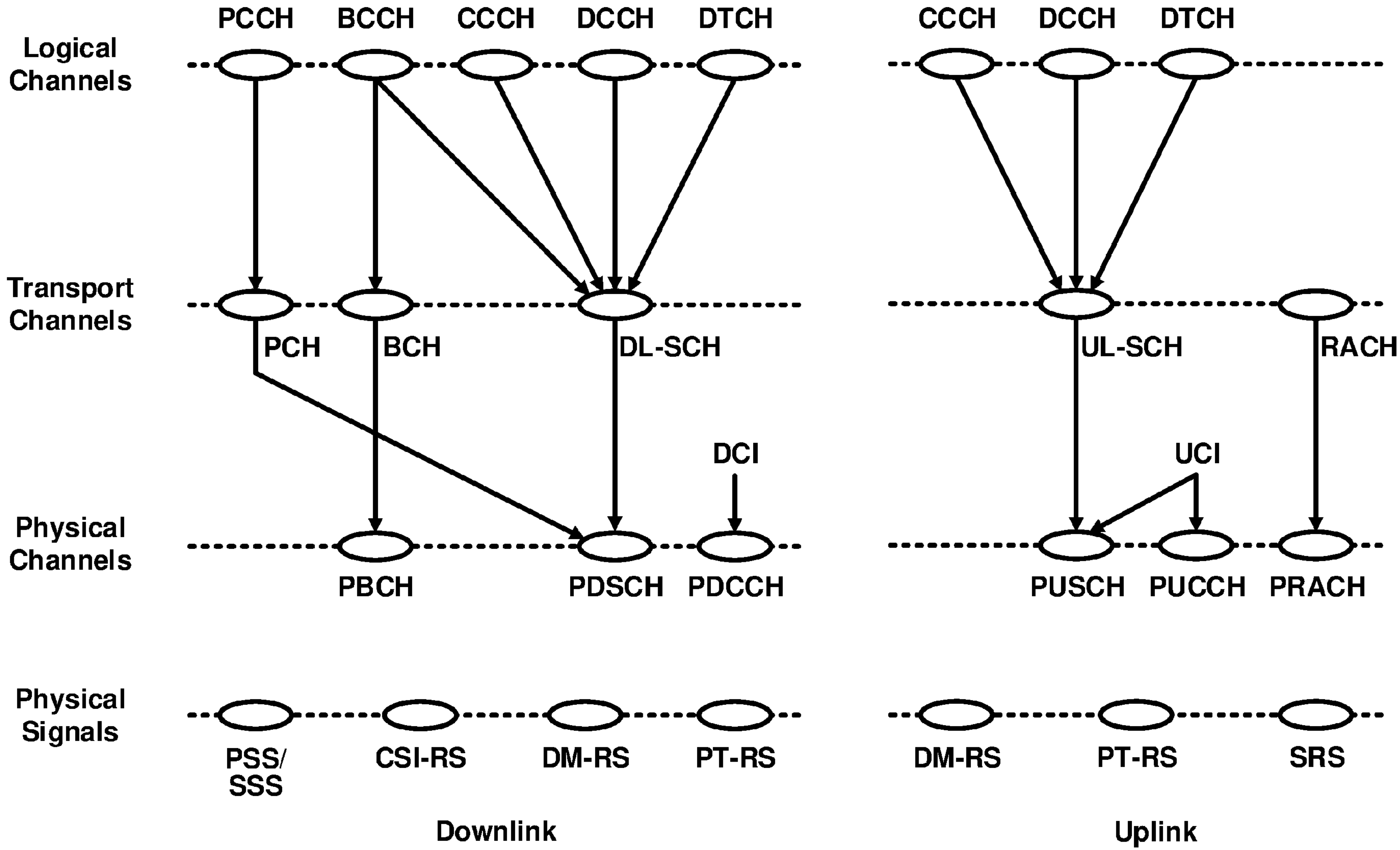
Logical Channels
Transport Channels
Physical Channels
Physical Signals
PCCH
BCCH
CCCH
DCCH
DTCH
PCH
BCH
DL-SCH
DCI
PBCH
PDSCH
PDCCH
PSS/ SSS
CSI-RS
DM-RS
PT-RS
Downlink
CCCH
DCCH
DTCH
UL-SCH
RACH
UCI
PUSCH
PUCCH
PRACH
DM-RS
PT-RS
SRS
Uplink

FIG. 5A

FIG. 5B

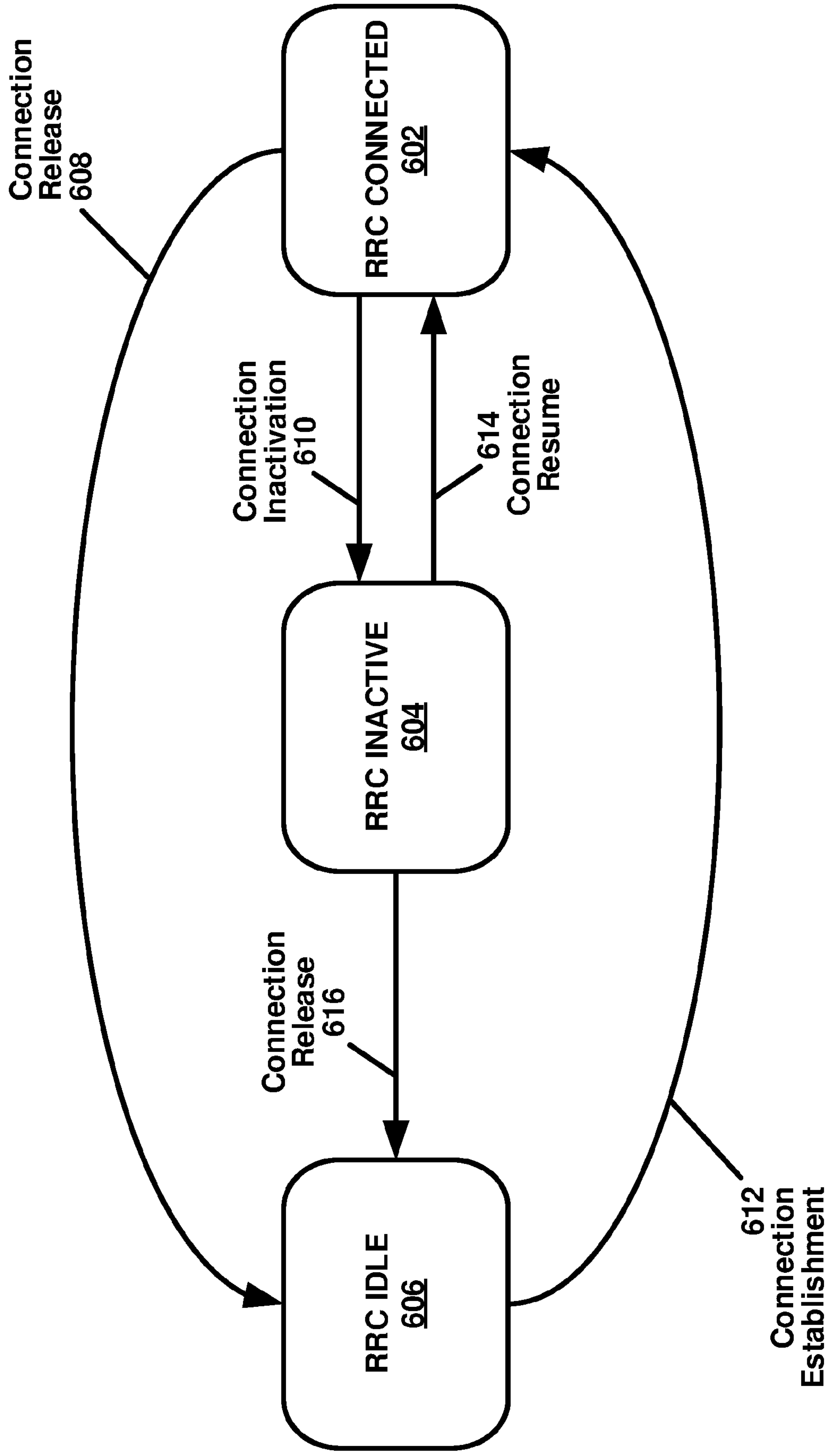
RRC CONNECTED
602
RRC INACTIVE
604
RRC IDLE
606
Connection Release 608
Connection Inactivation 610
612 Connection Establishment
614 Connection Resume
Connection Release 616

FIG. 6

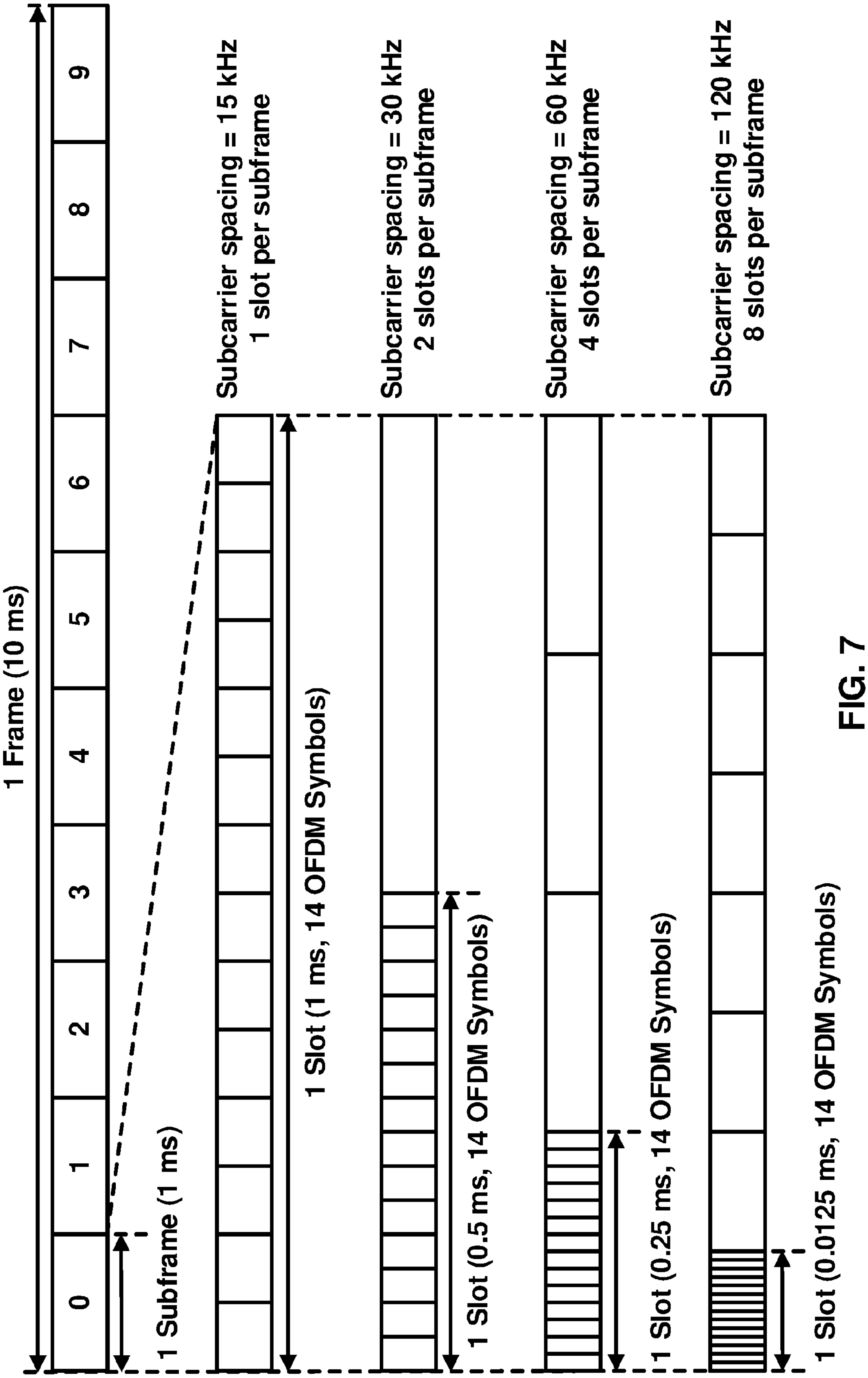
1 Frame (10 ms)
0
1
2
3
4
5
6
7
8
9
1 Subframe (1 ms)
Subcarrier spacing = 15 kHz
1 slot per subframe
1 Slot (1 ms, 14 OFDM Symbols)
Subcarrier spacing = 30 kHz
2 slots per subframe
1 Slot (0.5 ms, 14 OFDM Symbols)
Subcarrier spacing = 60 kHz
4 slots per subframe
1 Slot (0.25 ms, 14 OFDM Symbols)
Subcarrier spacing = 120 kHz
8 slots per subframe
1 Slot (0.0125 ms, 14 OFDM Symbols)

FIG. 7

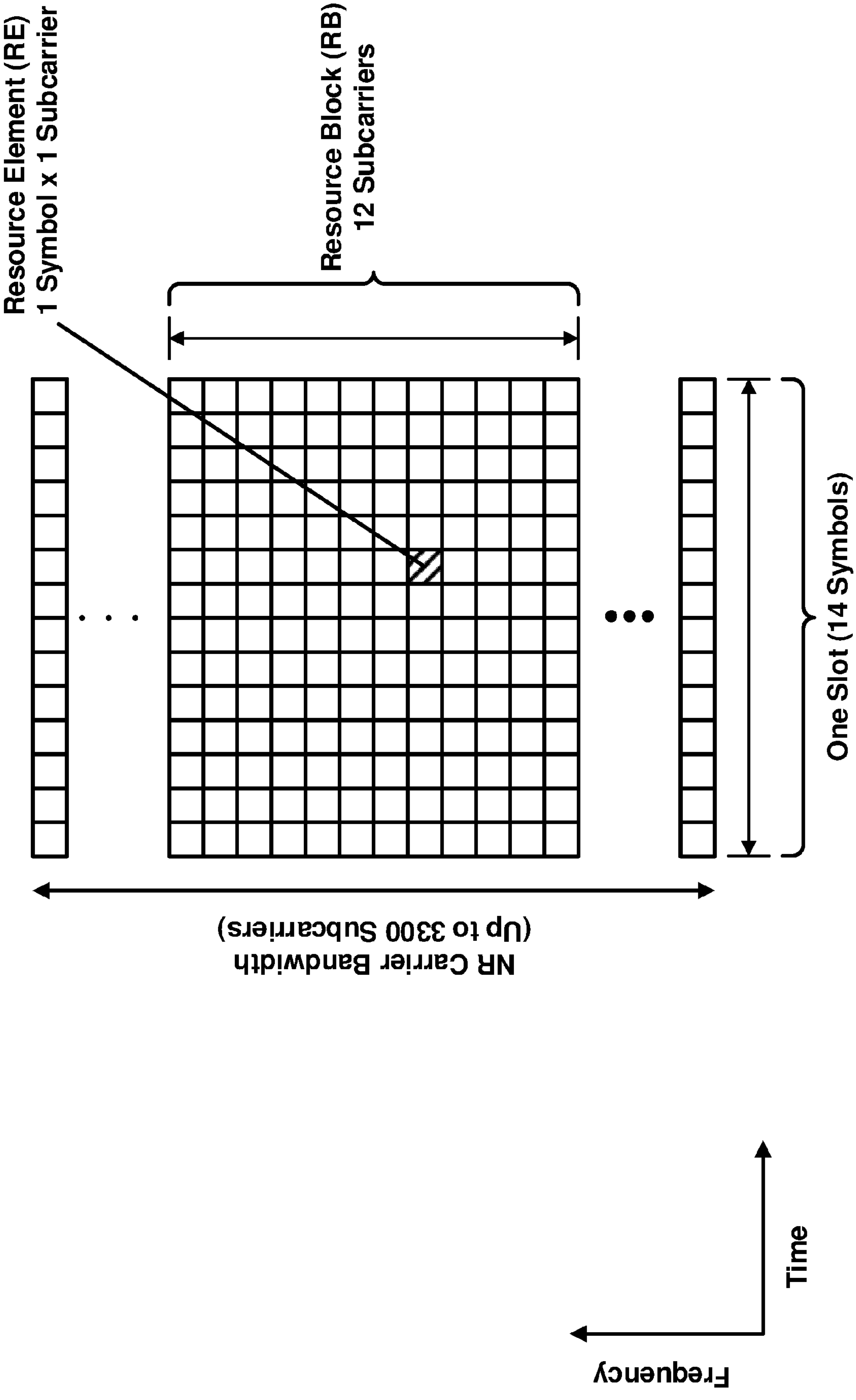
Resource Element (RE)
1 Symbol x 1 Subcarrier
Resource Block (RB)
12 Subcarriers
One Slot (14 Symbols)
NR Carrier Bandwidth
(Up to 3300 Subcarriers)
Time
Frequency

FIG. 8

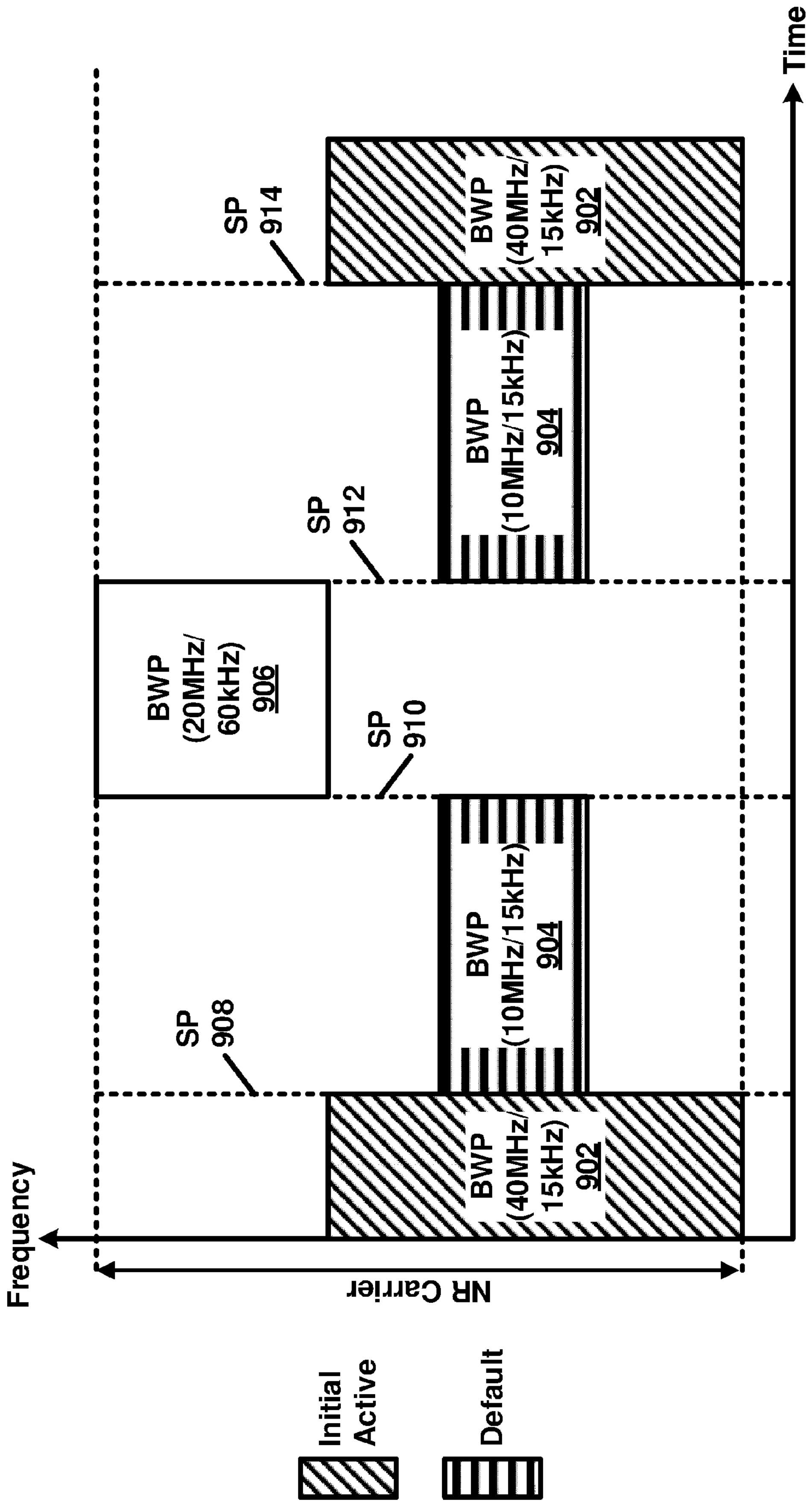
Time
Frequency
NR Carrier
SP 908
SP 910
SP 912
SP 914
BWP (40MHz/ 15kHz) 902
BWP (10MHz/15kHz) 904
BWP (20MHz/ 60kHz) 906
BWP (10MHz/15kHz) 904
BWP (40MHz/ 15kHz) 902
Initial Active
Default

FIG. 9

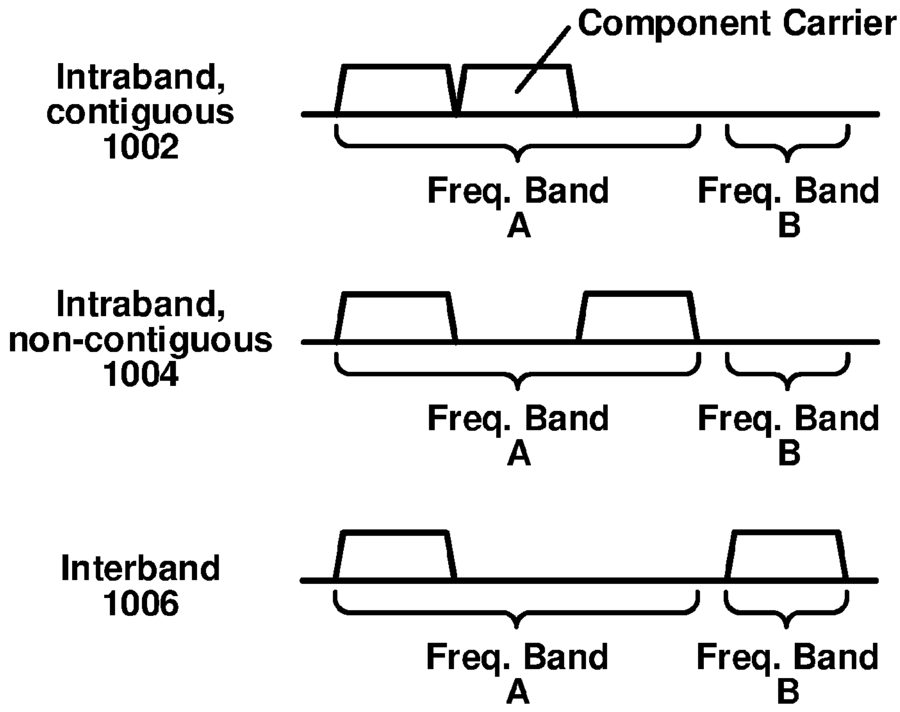


FIG. 10A

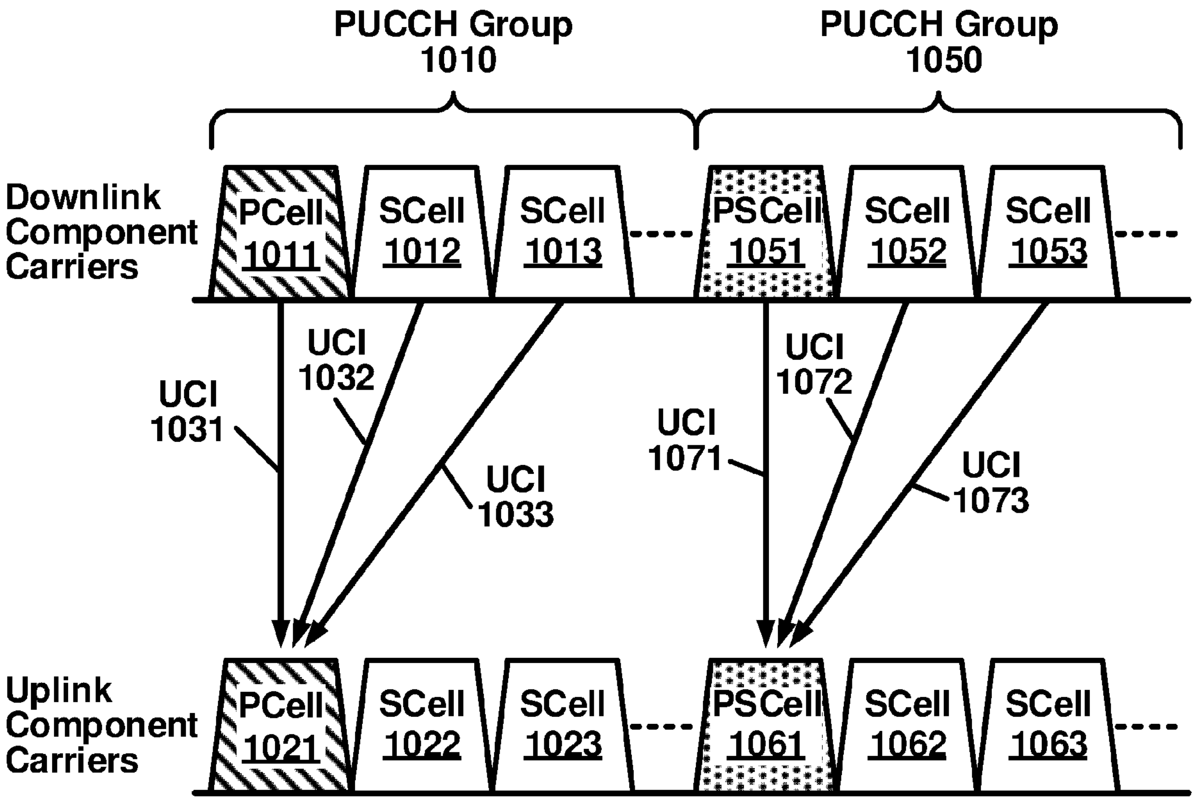


FIG. 10B

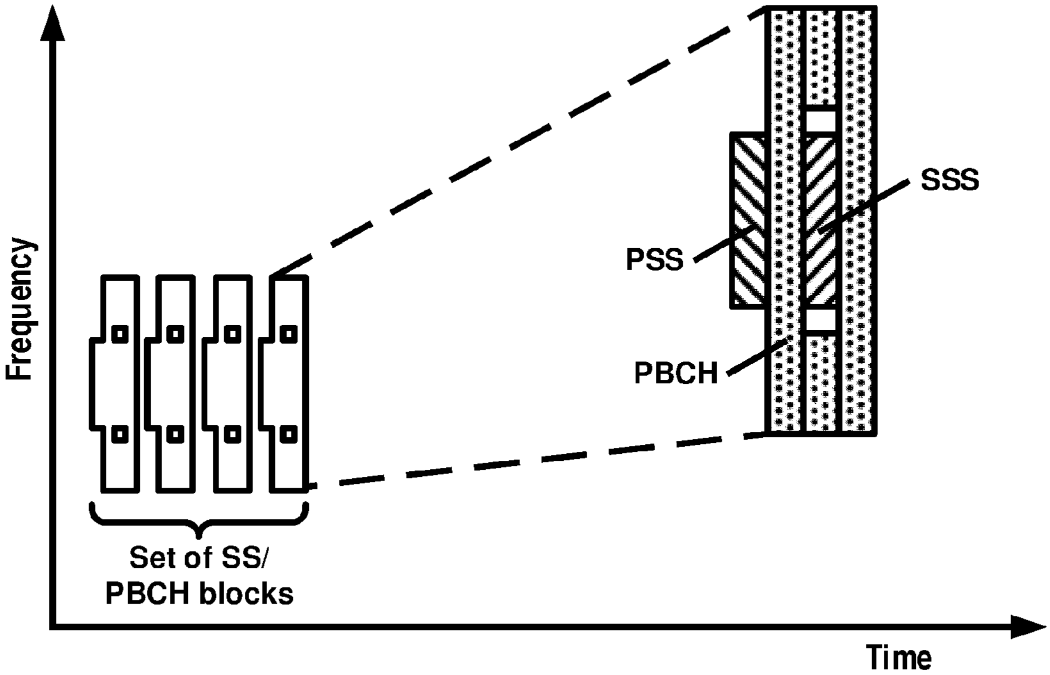


FIG. 11A

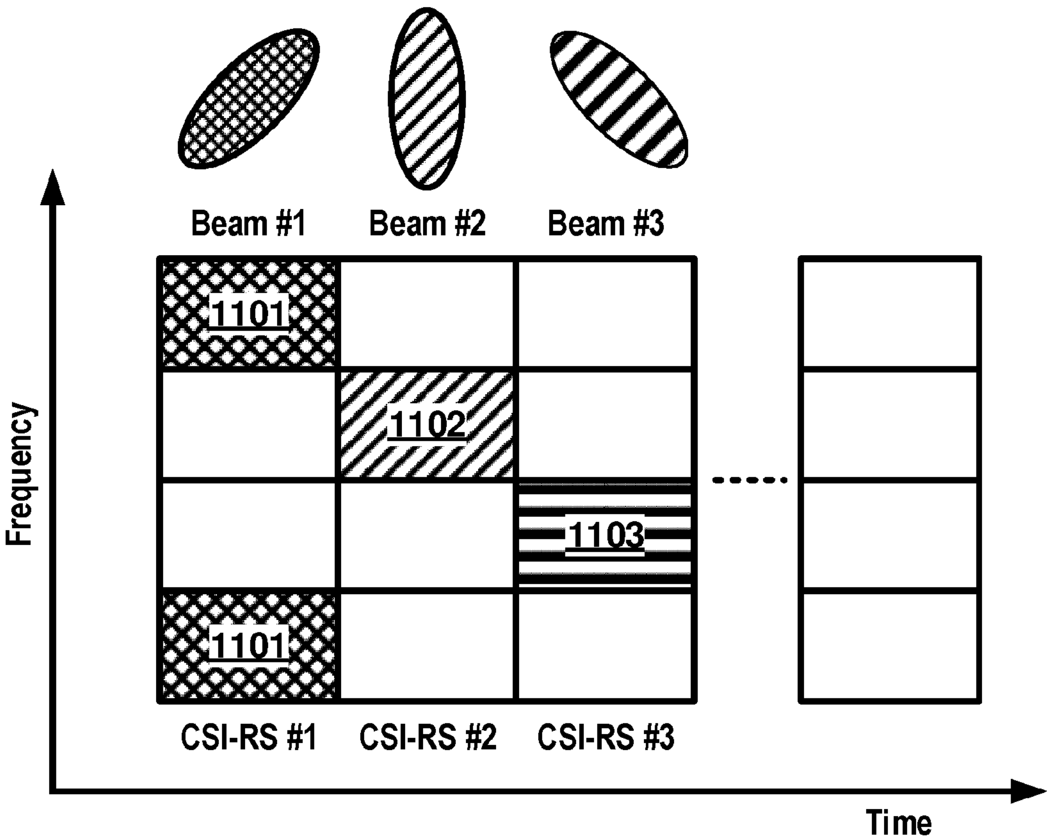


FIG. 11B

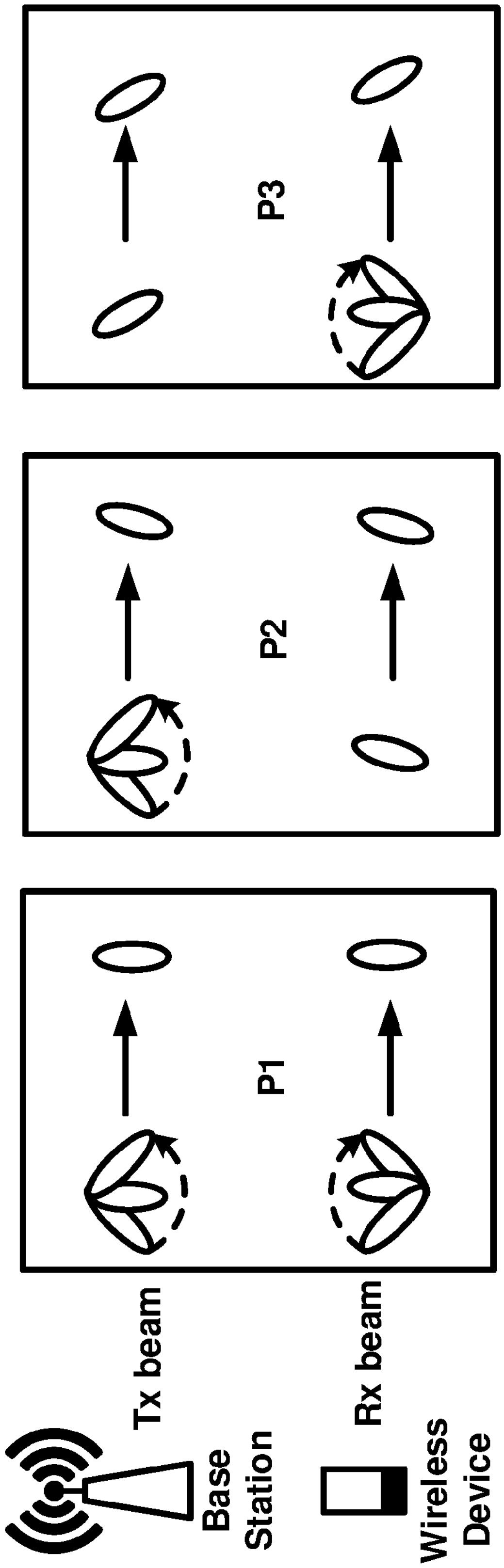


FIG. 12A

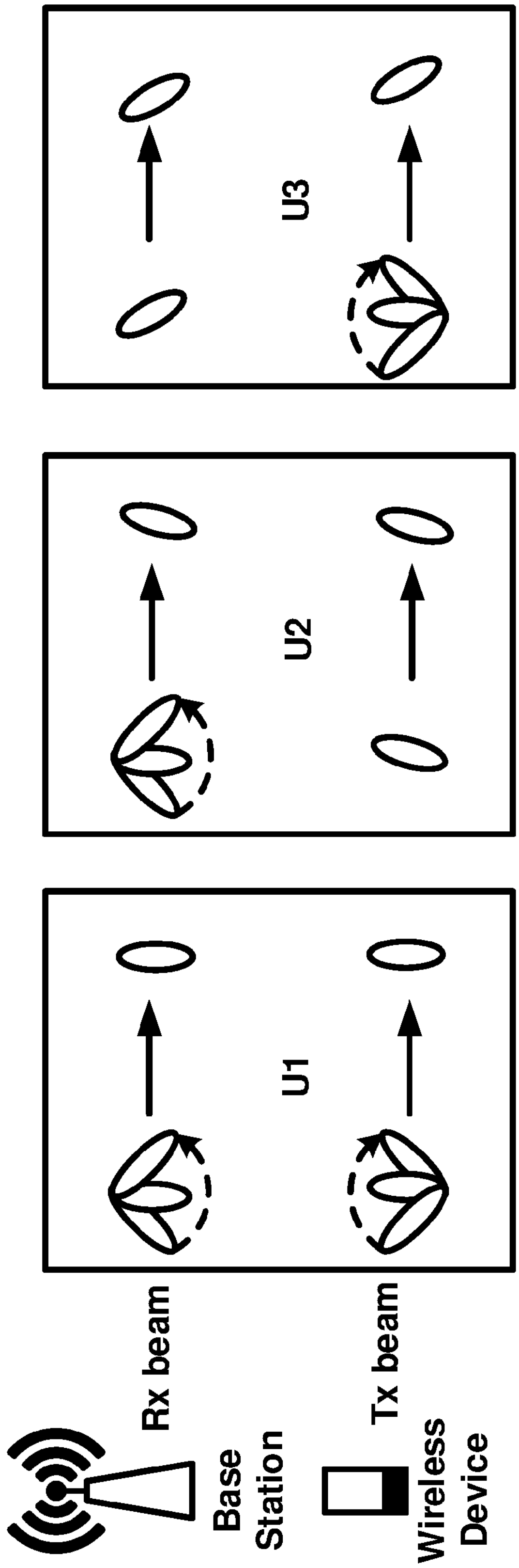


FIG. 12B

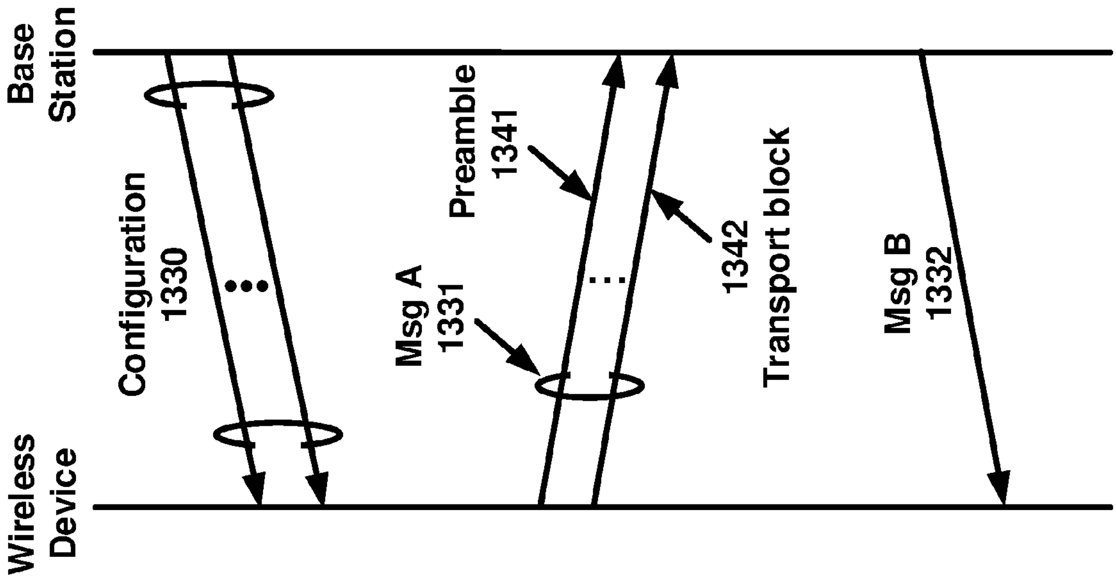


FIG. 13C

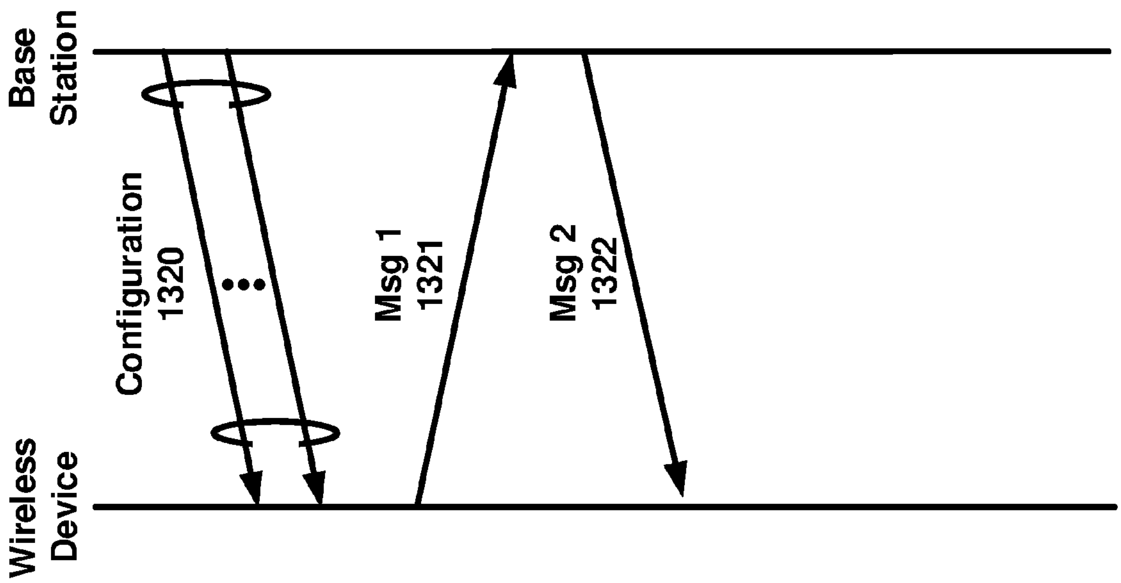


FIG. 13B

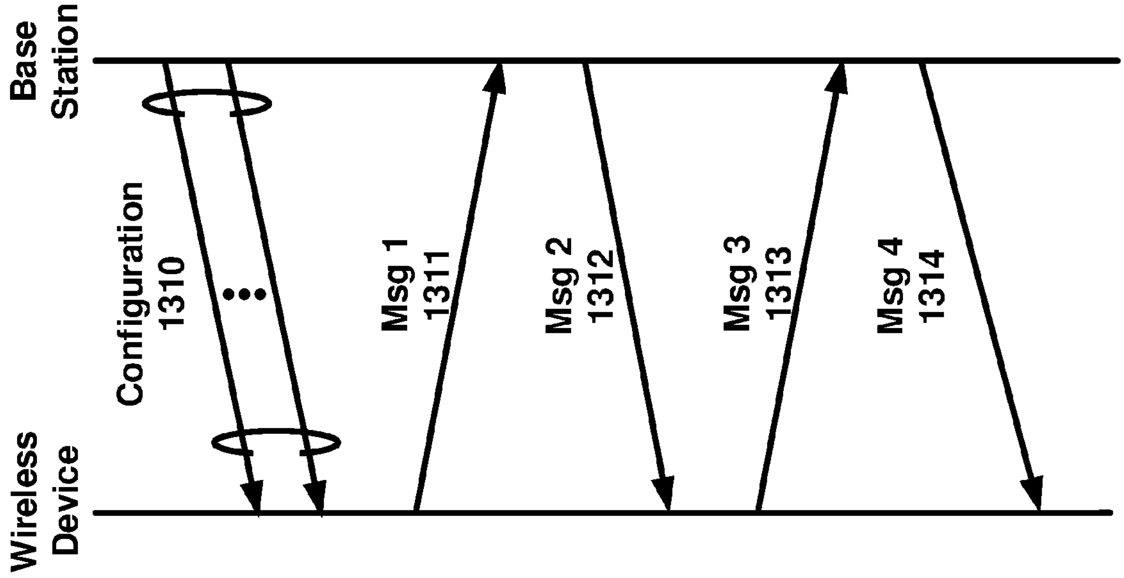


FIG. 13A

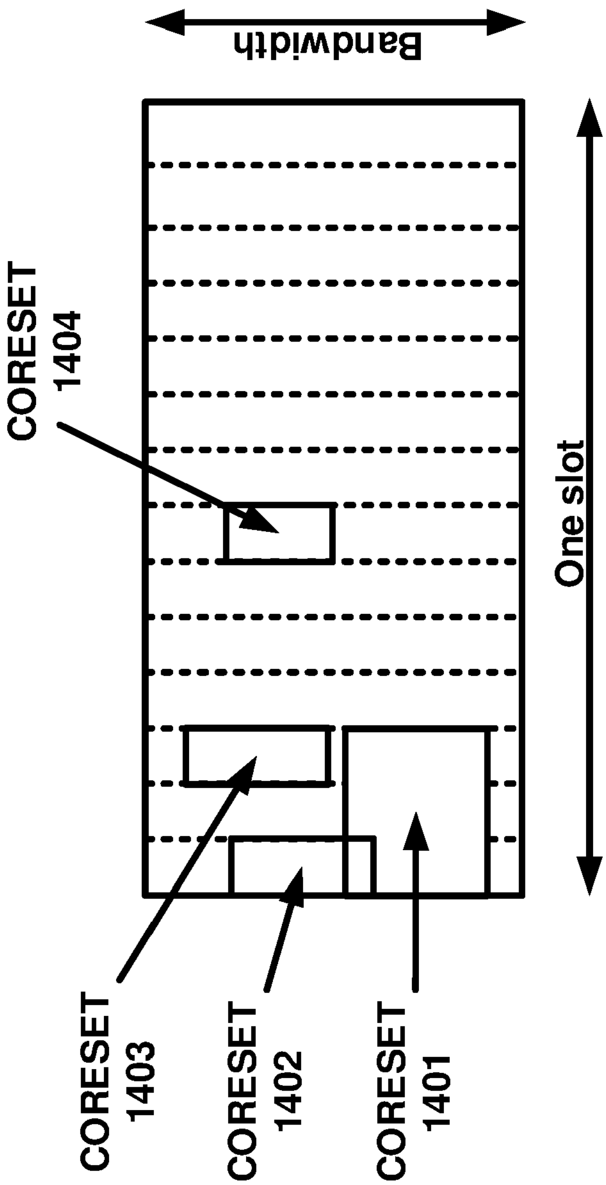


FIG. 14A

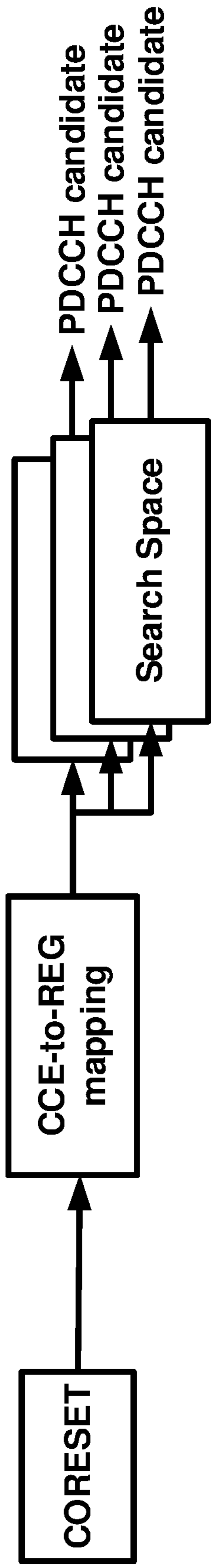


FIG. 14B

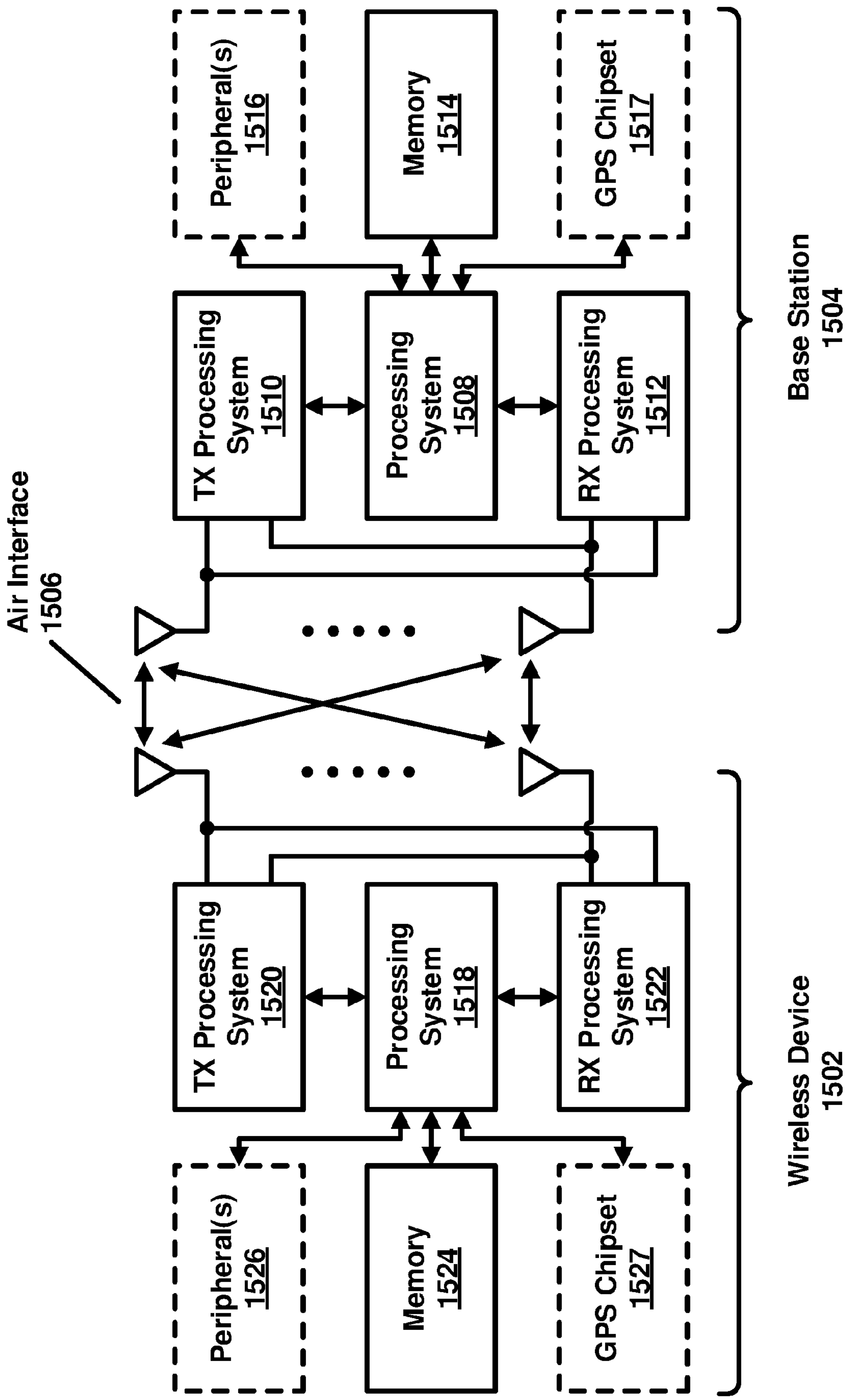
Air Interface
1506
Peripheral(s)
1516
Memory
1514
GPS Chipset
1517
TX Processing
System
1510
Processing
System
1508
RX Processing
System
1512
Base Station
1504
TX Processing
System
1520
Processing
System
1518
RX Processing
System
1522
Peripheral(s)
1526
Memory
1524
GPS Chipset
1527
Wireless Device
1502

FIG. 15A

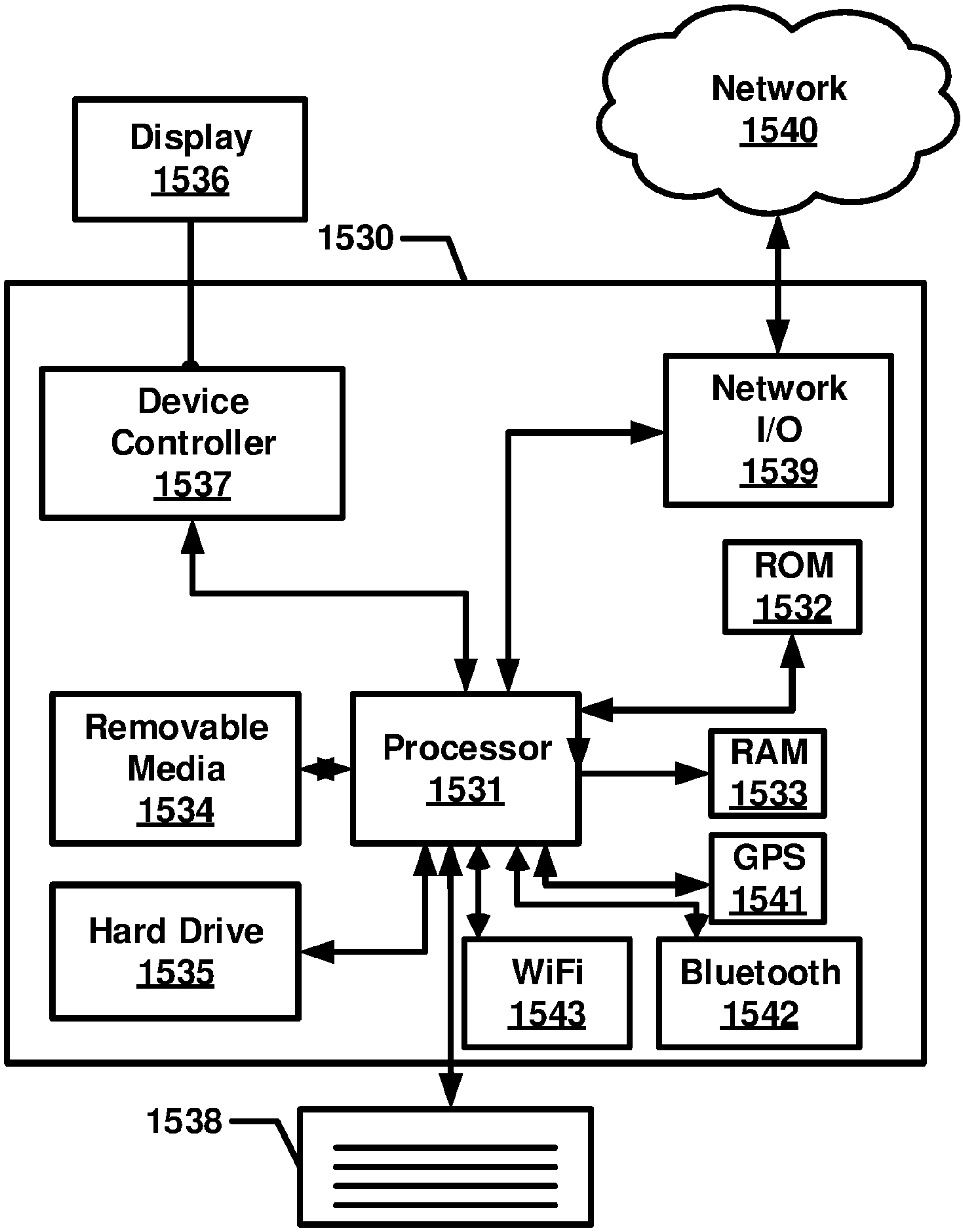
Network
1540
Display
1536
1530
Device
Controller
1537
Network
I/O
1539
ROM
1532
Removable
Media
1534
Processor
1531
RAM
1533
GPS
1541
Hard Drive
1535
WiFi
1543
Bluetooth
1542
1538

FIG. 15B

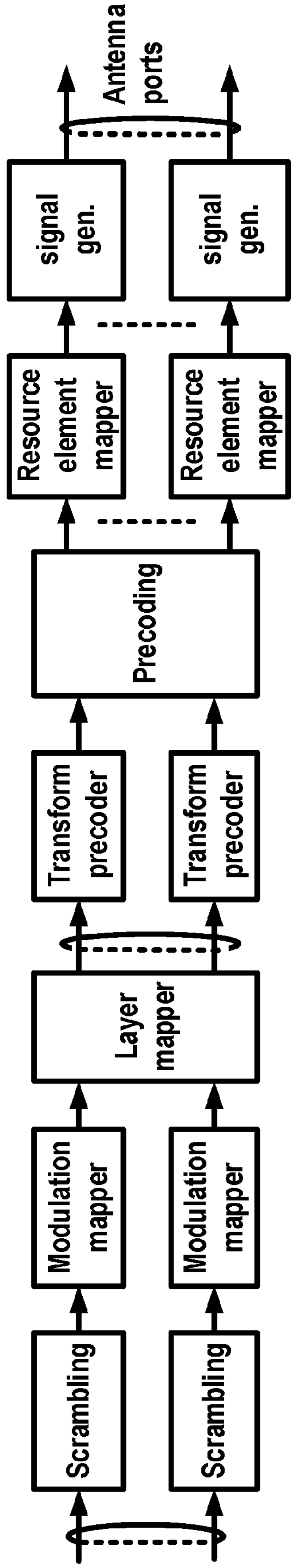


FIG. 16A

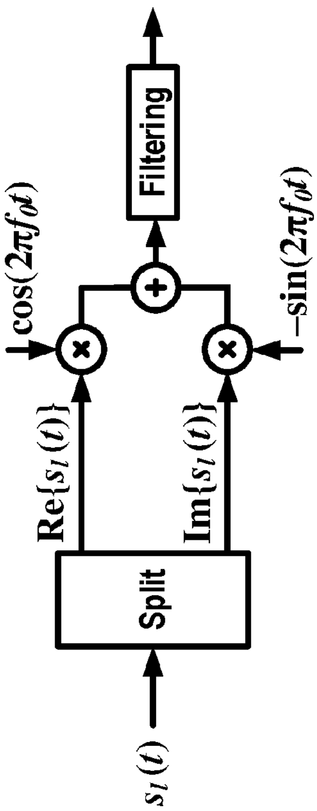


FIG. 16B

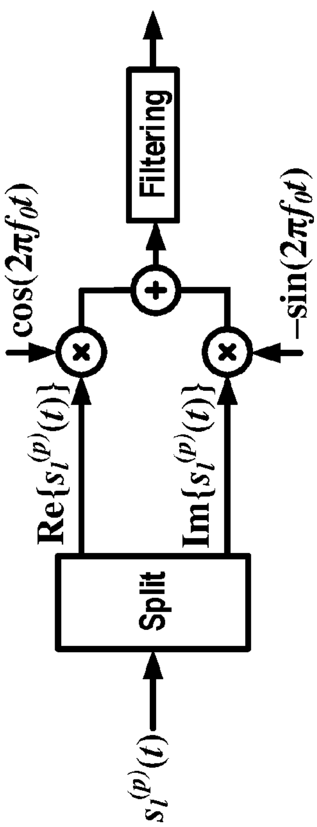


FIG. 16D

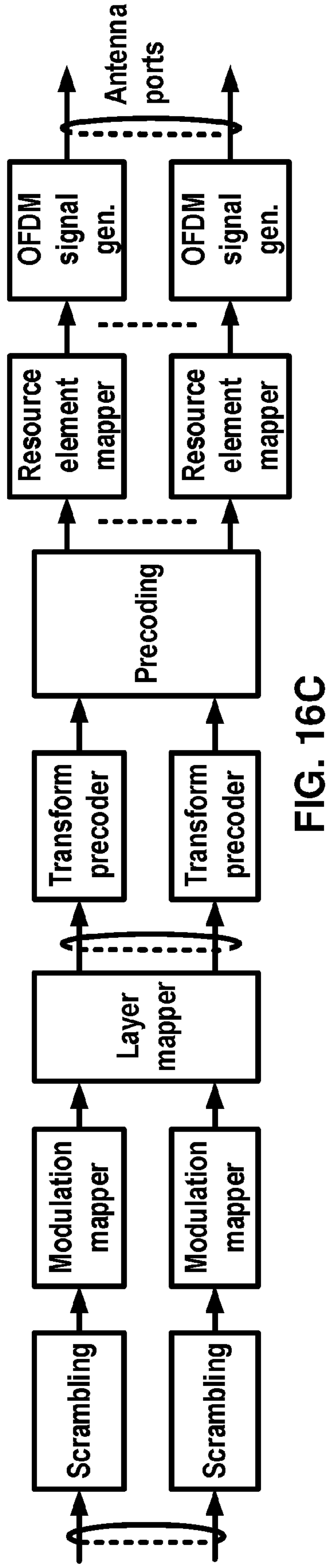


FIG. 16C

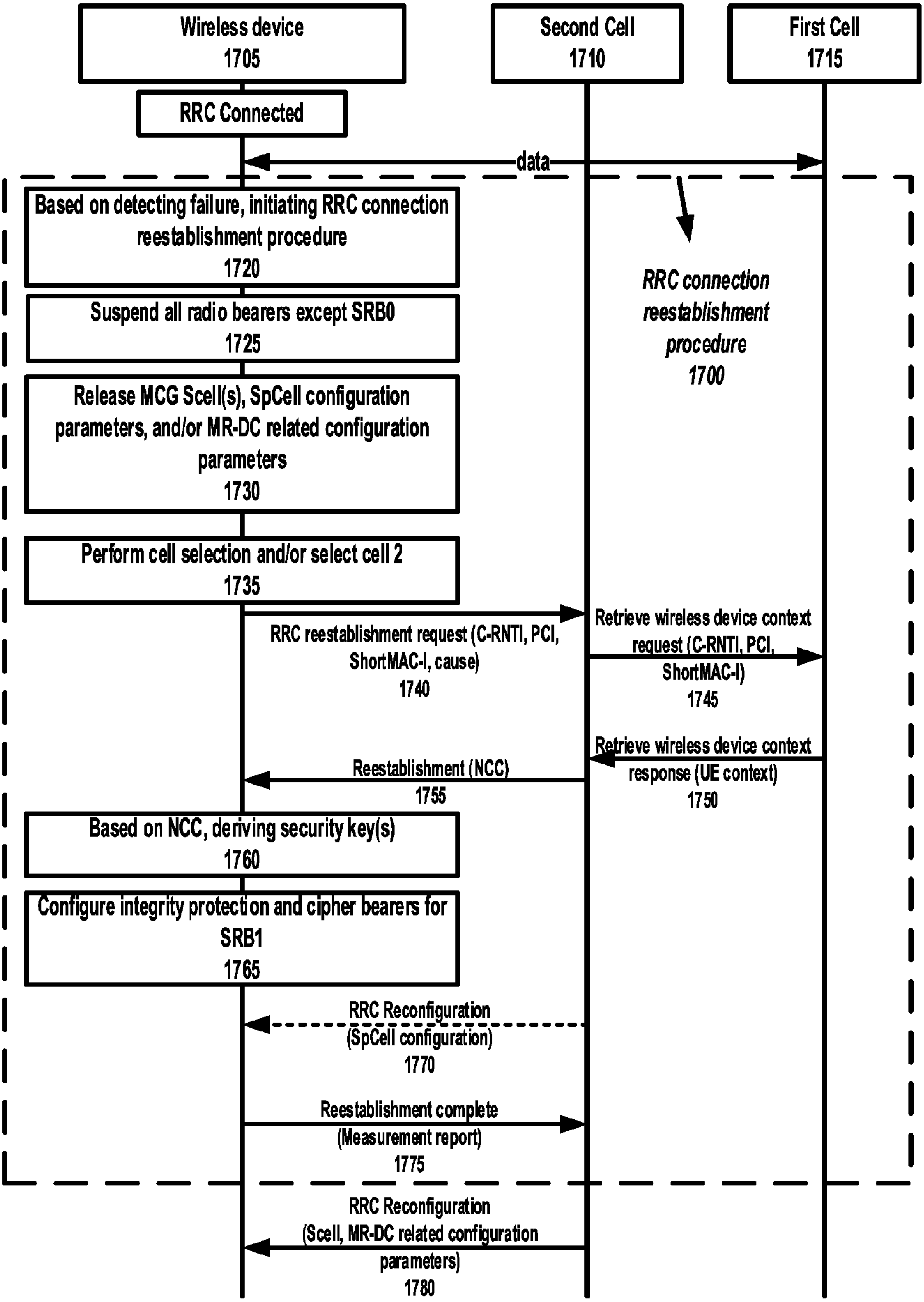
Wireless device
1705
Second Cell
1710
First Cell
1715
RRC Connected
data
RRC connection reestablishment procedure
1700
Based on detecting failure, initiating RRC connection reestablishment procedure
1720
Suspend all radio bearers except SRB0
1725
Release MCG Scell(s), SpCell configuration parameters, and/or MR-DC related configuration parameters
1730
Perform cell selection and/or select cell 2
1735
RRC reestablishment request (C-RNTI, PCI, ShortMAC-I, cause)
1740
Retrieve wireless device context request (C-RNTI, PCI, ShortMAC-I)
1745
Retrieve wireless device context response (UE context)
1750
Reestablishment (NCC)
1755
Based on NCC, deriving security key(s)
1760
Configure integrity protection and cipher bearers for SRB1
1765
RRC Reconfiguration
(SpCell configuration)
1770
Reestablishment complete
(Measurement report)
1775
RRC Reconfiguration
(Scell, MR-DC related configuration parameters)
1780

FIG. 17

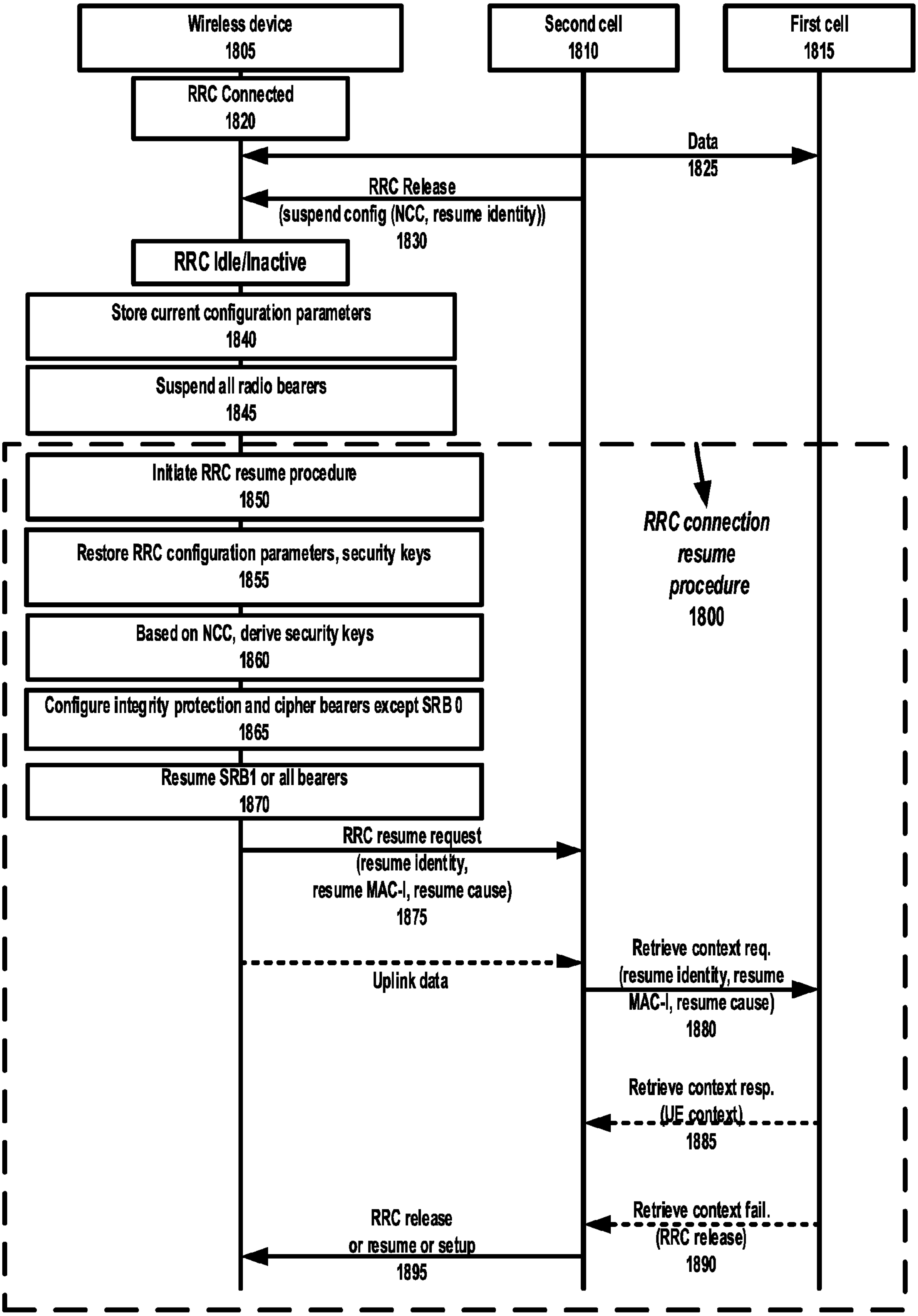
Wireless device
1805
Second cell
1810
First cell
1815
RRC Connected
1820
Data
1825
RRC Release
(suspend config (NCC, resume identity))
1830
RRC Idle/Inactive
Store current configuration parameters
1840
Suspend all radio bearers
1845
Initiate RRC resume procedure
1850
RRC connection resume procedure
1800
Restore RRC configuration parameters, security keys
1855
Based on NCC, derive security keys
1860
Configure integrity protection and cipher bearers except SRB 0
1865
Resume SRB1 or all bearers
1870
RRC resume request
(resume identity,
resume MAC-I, resume cause)
1875
Uplink data
Retrieve context req.
(resume identity, resume
MAC-I, resume cause)
1880
Retrieve context resp.
(UE context)
1885
RRC release
or resume or setup
1895
Retrieve context fail.
(RRC release)
1890

FIG. 18

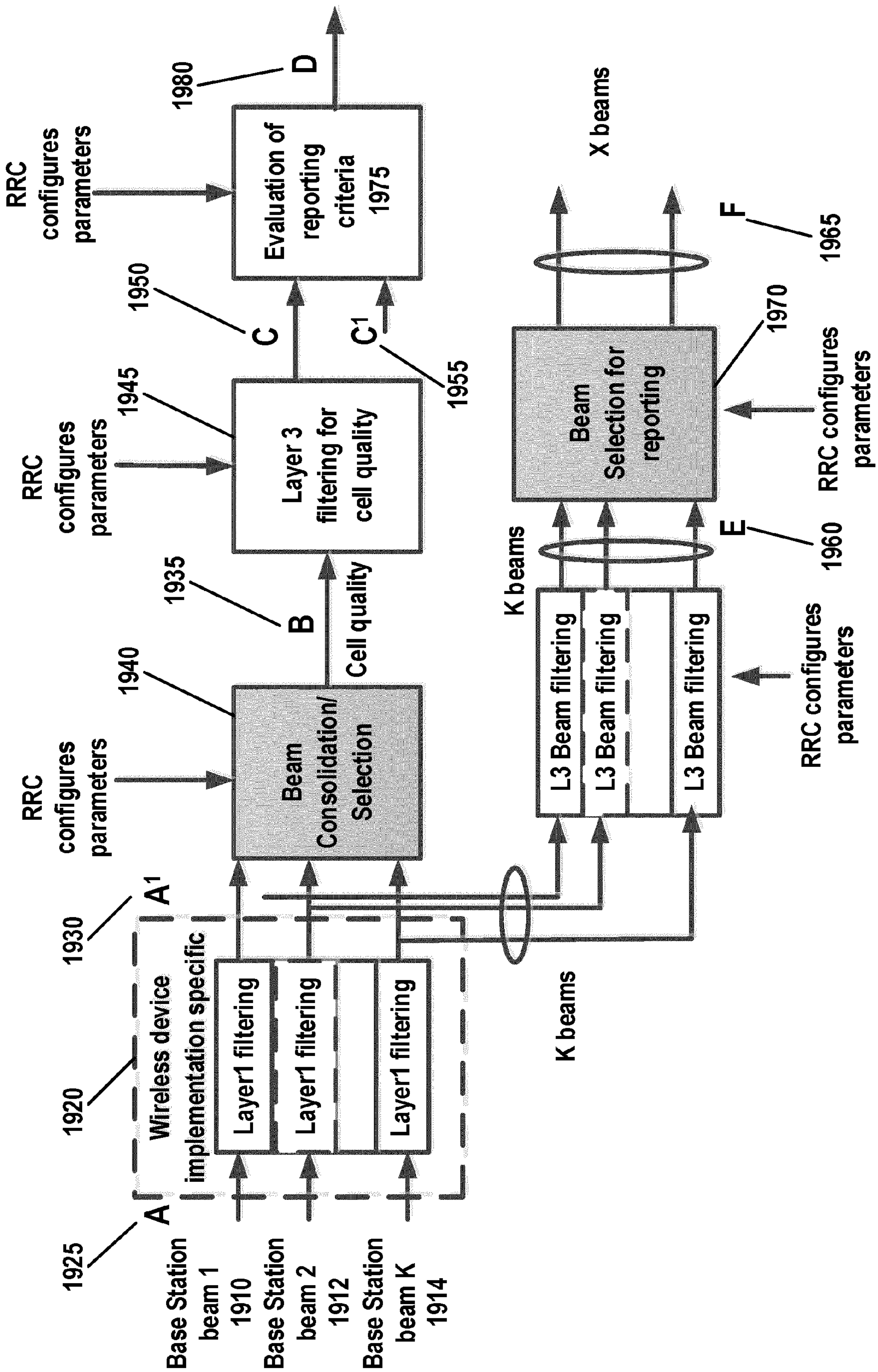
Base Station beam 1 1910
Base Station beam 2 1912
Base Station beam K 1914
1925
A
1920
Wireless device implementation specific
Layer1 filtering
Layer1 filtering
Layer1 filtering
1930
A1
K beams
RRC configures parameters
1940
Beam Consolidation/ Selection
1935
B
Cell quality
RRC configures parameters
1945
Layer 3 filtering for cell quality
1950
C
C1
1955
RRC configures parameters
Evaluation of reporting criteria 1975
1980
D
K beams
L3 Beam filtering
L3 Beam filtering
L3 Beam filtering
RRC configures parameters
E
1960
Beam Selection for reporting
1970
RRC configures parameters
F
1965
X beams

FIG. 19

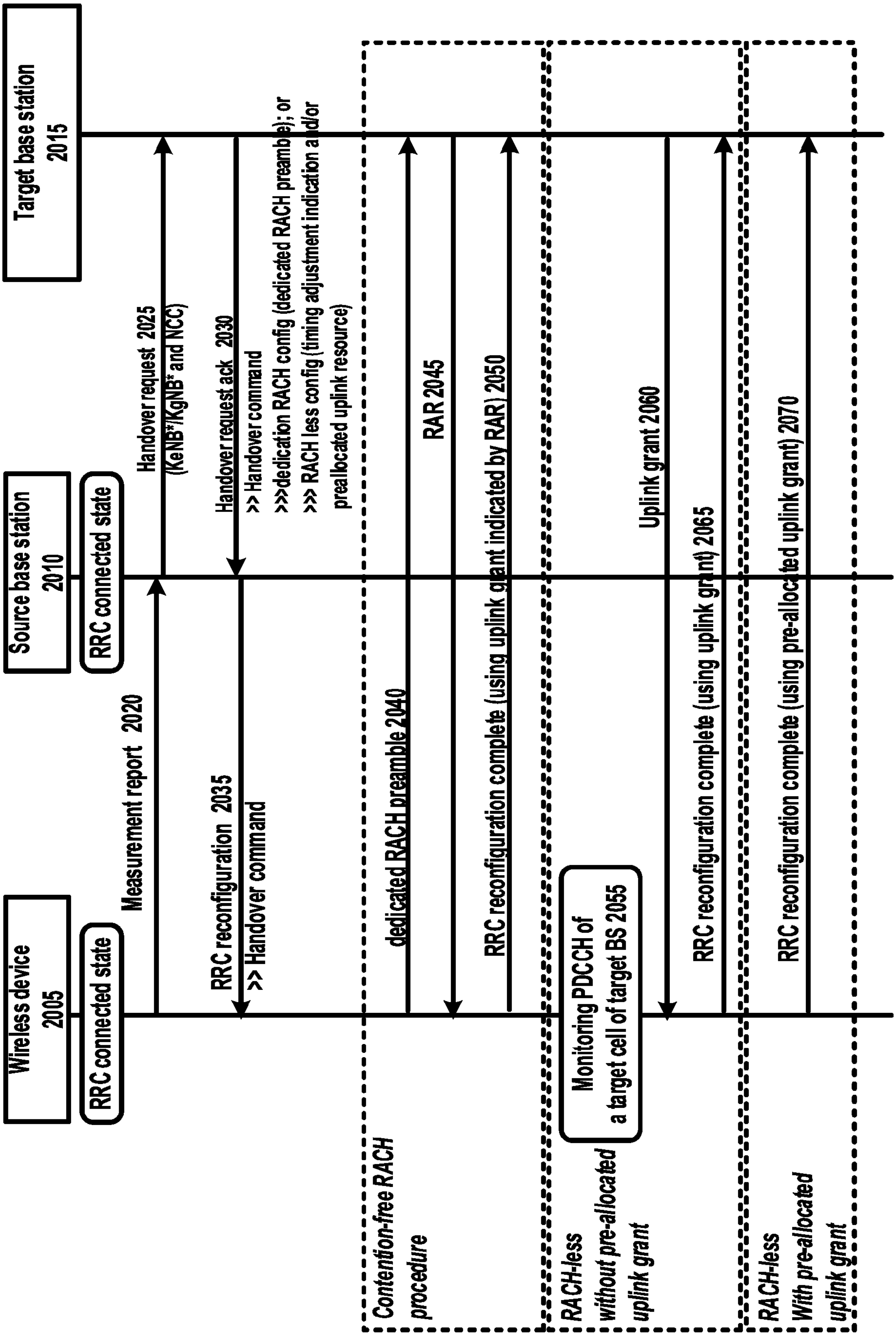
Wireless device
2005
RRC connected state
Source base station
2010
RRC connected state
Target base station
2015
Measurement report 2020
Handover request 2025
(KeNB*/KgNB* and NCC)
Handover request ack 2030
>> Handover command
>>>dedication RACH config (dedicated RACH preamble); or
>>> RACH less config (timing adjustment indication and/or
preallocated uplink resource)
RRC reconfiguration 2035
>> Handover command
Contention-free RACH
procedure
dedicated RACH preamble 2040
RAR 2045
RRC reconfiguration complete (using uplink grant indicated by RAR) 2050
RACH-less
without pre-allocated
uplink grant
Monitoring PDCCH of
a target cell of target BS 2055
Uplink grant 2060
RRC reconfiguration complete (using uplink grant) 2065
RACH-less
With pre-allocated
uplink grant
RRC reconfiguration complete (using pre-allocated uplink grant) 2070

FIG. 20

```
RRCReconfiguration-IEs ::=          SEQUENCE {
  radioBearerConfig                 RadioBearerConfig
  secondaryCellGroup                OCTET STRING (CONTAINING CellGroupConfig)
  measConfig                        MeasConfig
  nonCriticalExtension              RRCReconfiguration-v1530-IEs
}
RRCReconfiguration-v1530-IEs ::=    SEQUENCE {
  masterCellGroup          OCTET STRING (CONTAINING CellGroupConfig)
  fullConfig               ENUMERATED {true}       OPTIONAL, -- Cond FullConfig
  ...}
CellGroupConfig ::=                 SEQUENCE {
  cellGroupId                       CellGroupId,
  rlc-BearerToAddModList      SEQUENCE (SIZE(1..maxLC-ID)) OF RLC-BearerConfig
  mac-CellGroupConfig         MAC-CellGroupConfig
  physicalCellGroupConfig     PhysicalCellGroupConfig
  spCellConfig                SpCellConfig
  sCellToAddModList           SEQUENCE (SIZE (1..maxNrofSCells)) OF SCellConfig
...,}

SpCellConfig ::=                SEQUENCE {
  servCellIndex                 ServCellIndex
  reconfigurationWithSync           ReconfigurationWithSync
  spCellConfigDedicated             ServingCellConfig
  ...,}
ServingCellConfig ::=           SEQUENCE {
  initialDownlinkBWP              BWP-DownlinkDedicated
  downlinkBWP-ToAddModList  SEQUENCE (SIZE (1..maxNrofBWPs)) OF BWP-Downlink
  firstActiveDownlinkBWP-Id         BWP-Id
  defaultDownlinkBWP-Id             BWP-Id
  uplinkConfig                  UplinkConfig
  ...}

UplinkConfig ::=              SEQUENCE {
  initialUplinkBWP                BWP-UplinkDedicated
  uplinkBWP-ToAddModList    SEQUENCE (SIZE (1..maxNrofBWPs)) OF BWP-Uplink
  firstActiveUplinkBWP-Id           BWP-Id
  carrierSwitching                SetupRelease { SRS-CarrierSwitching }
  ...,}

ReconfigurationWithSync ::=       SEQUENCE {
  spCellConfigCommon                ServingCellConfigCommon
  newUE-Identity                  RNTI-Value,
  t304                        ENUMERATED {ms50, ms100, ms150, ...},
  rach-ConfigDedicated              CHOICE {
    uplink                        RACH-ConfigDedicated,
    supplementaryUplink             RACH-ConfigDedicated
  }...,}
```

**FIG. 21**

```
RACH-ConfigDedicated ::=        SEQUENCE {
   cfra                         CFRA
   ra-Prioritization            RA-Prioritization
...}

CFRA ::=                    SEQUENCE {
   occasions                    SEQUENCE {
      rach-ConfigGeneric        RACH-ConfigGeneric,
      ssb-perRACH-Occasion  ENUMERATED {oneEighth, oneFourth, oneHalf, one, two, ...}
      }
   resources                    CHOICE {
      ssb                       SEQUENCE {
         ssb-ResourceList   SEQUENCE (SIZE(1..maxRA-SSB-Resources)) OF CFRA-SSB-
Resource,
         ra-ssb-OccasionMaskIndex       INTEGER (0..15)
      },
      csirs                     SEQUENCE {
         csirs-ResourceList             SEQUENCE (SIZE(1..maxRA-CSIRS-Resources)) OF
CFRA-CSIRS-Resource,
         rsrp-ThresholdCSI-RS           RSRP-Range
      }
   },
   ...,}

CFRA-SSB-Resource ::=           SEQUENCE {
   ssb                          SSB-Index,
   ra-PreambleIndex                 INTEGER (0..63),
   ...,}

CFRA-CSIRS-Resource ::=         SEQUENCE {
   csi-RS                       CSI-RS-Index,
   ra-OccasionList                  SEQUENCE (SIZE(1..maxRA-OccasionsPerCSIRS)) OF
INTEGER (0..maxRA-Occasions-1),
   ra-PreambleIndex                 INTEGER (0..63),
   ...}


RACH-ConfigGeneric ::=              SEQUENCE {
   prach-ConfigurationIndex             INTEGER (0..255),
   msg1-FDM                         ENUMERATED {one, two, four, eight},
   msg1-FrequencyStart                  INTEGER (0..maxNrofPhysicalResourceBlocks-1),
   zeroCorrelationZoneConfig            INTEGER(0..15),
   preambleReceivedTargetPower          INTEGER (-202..-60),
   preambleTransMax                     ENUMERATED {n3, n4, n5, n6, n7, n8, n10, ...},
   powerRampingStep                     ENUMERATED {dB0, dB2, dB4, dB6},
   ra-ResponseWindow                    ENUMERATED {sl1, sl2, sl4, sl8, sl10, sl20, sl40, sl80},
   ...,}
```

**FIG. 22**

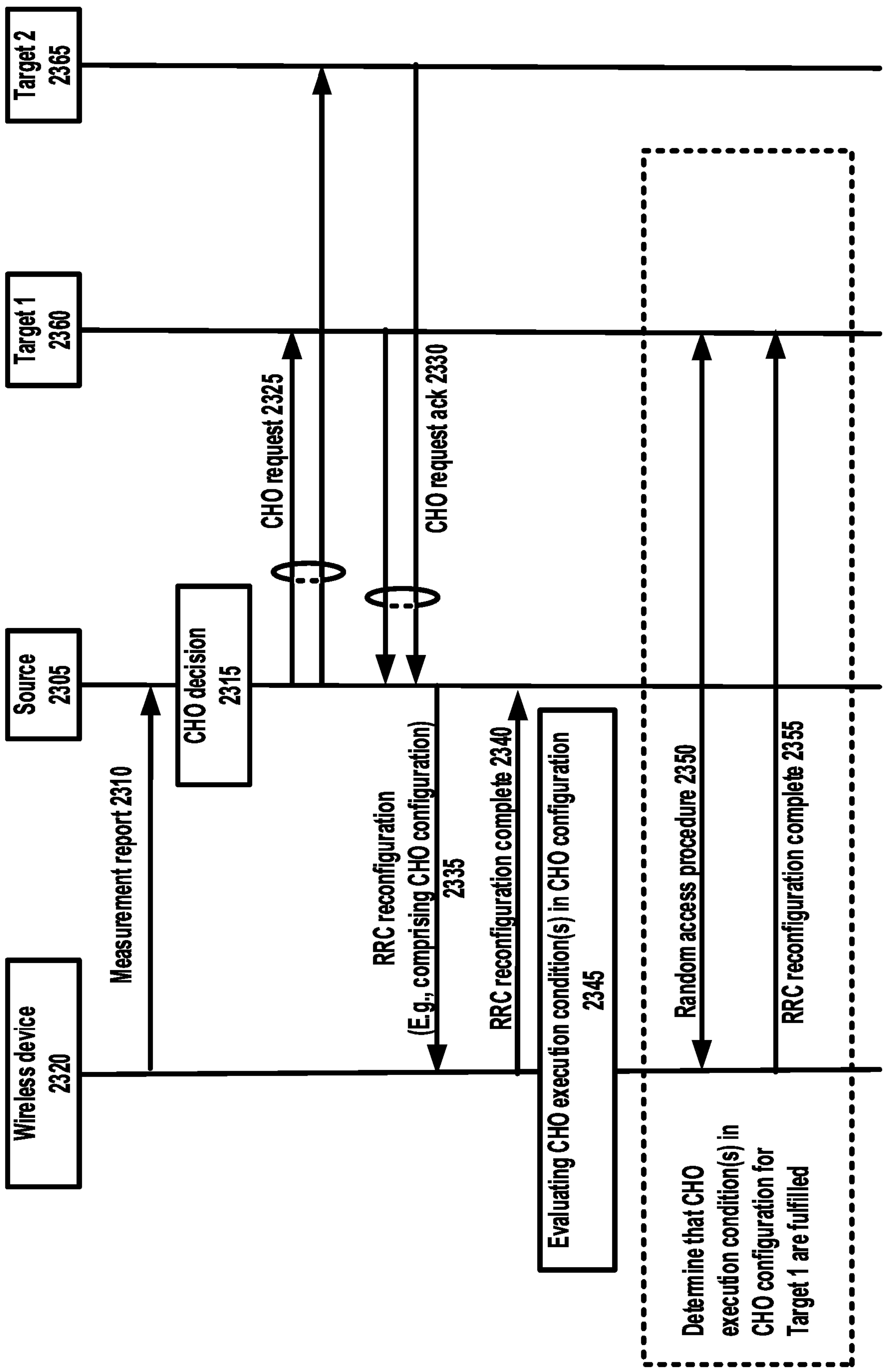
Wireless device
2320
Source
2305
Target 1
2360
Target 2
2365
Measurement report 2310
CHO decision
2315
CHO request 2325
CHO request ack 2330
RRC reconfiguration
(E.g., comprising CHO configuration)
2335
RRC reconfiguration complete 2340
Evaluating CHO execution condition(s) in CHO configuration
2345
Random access procedure 2350
RRC reconfiguration complete 2355
Determine that CHO
execution condition(s) in
CHO configuration for
Target 1 are fulfilled

FIG. 23

```
 RRCReconfiguration-v1610-IEs ::=        SEQUENCE {
    otherConfig-v1610                   OtherConfig-v1610
    bap-Config-r16                      SetupRelease { BAP-Config-r16 }
    iab-IP-AddressConfigurationList-r16    IAB-IP-AddressConfigurationList-r16
    conditionalReconfiguration-r16        ConditionalReconfiguration-r16
    daps-SourceRelease-r16               ENUMERATED{true}
    t316-r16                          SetupRelease {T316-r16}
   ...
    targetCellSMTC-SCG-r16               SSB-MTC
    }

ConditionalReconfiguration-r16 ::=   SEQUENCE {
   attemptCondReconfig-r16            ENUMERATED {true}
condReconfigToRemoveList-r16        CondReconfigToRemoveList-r16
condReconfigToAddModList-r16        CondReconfigToAddModList-r16
 ...
}

CondReconfigToAddModList-r16 ::= SEQUENCE (SIZE (1.. maxNrofCondCells-r16)) OF
CondReconfigToAddMod-r16

CondReconfigToAddMod-r16 ::=    SEQUENCE {
   condReconfigId-r16            CondReconfigId-r16,
   condExecutionCond-r16           SEQUENCE (SIZE (1..2)) OF MeasId
   condRRCReconfig-r16            OCTET STRING (CONTAINING RRCReconfiguration)
   ...,
}

CondReconfigId-r16 ::=          INTEGER (1.. maxNrofCondCells-r16)
```

***condExecutionCond***
The execution condition that needs to be fulfilled in order to trigger the execution of a conditional reconfiguration for CHO, CPA, intra-SN CPC without MN involvement or MN initiated inter-SN CPC. When configuring 2 triggering events (Meas Ids) for a candidate cell, network ensures that both refer to the same *measObject*. For CHO, if network configures *condEventD1* or *condEventT1* for a candidate cell network configures a second triggering event *condEventA3, condEventA4* or *condEventA5* for the same candidate cell. Network does not configure both *condEventD1* and *condEventT1* for the same candidate cell.

CondEvent A3: Conditional reconfiguration candidate becomes amount of offset better than PCell/PSCell;
CondEvent A4: Conditional reconfiguration candidate becomes better than absolute threshold;
CondEvent A5: PCell/PSCell becomes worse than absolute threshold1 AND Conditional reconfiguration candidate becomes better than another absolute threshold2;

**FIG. 24**

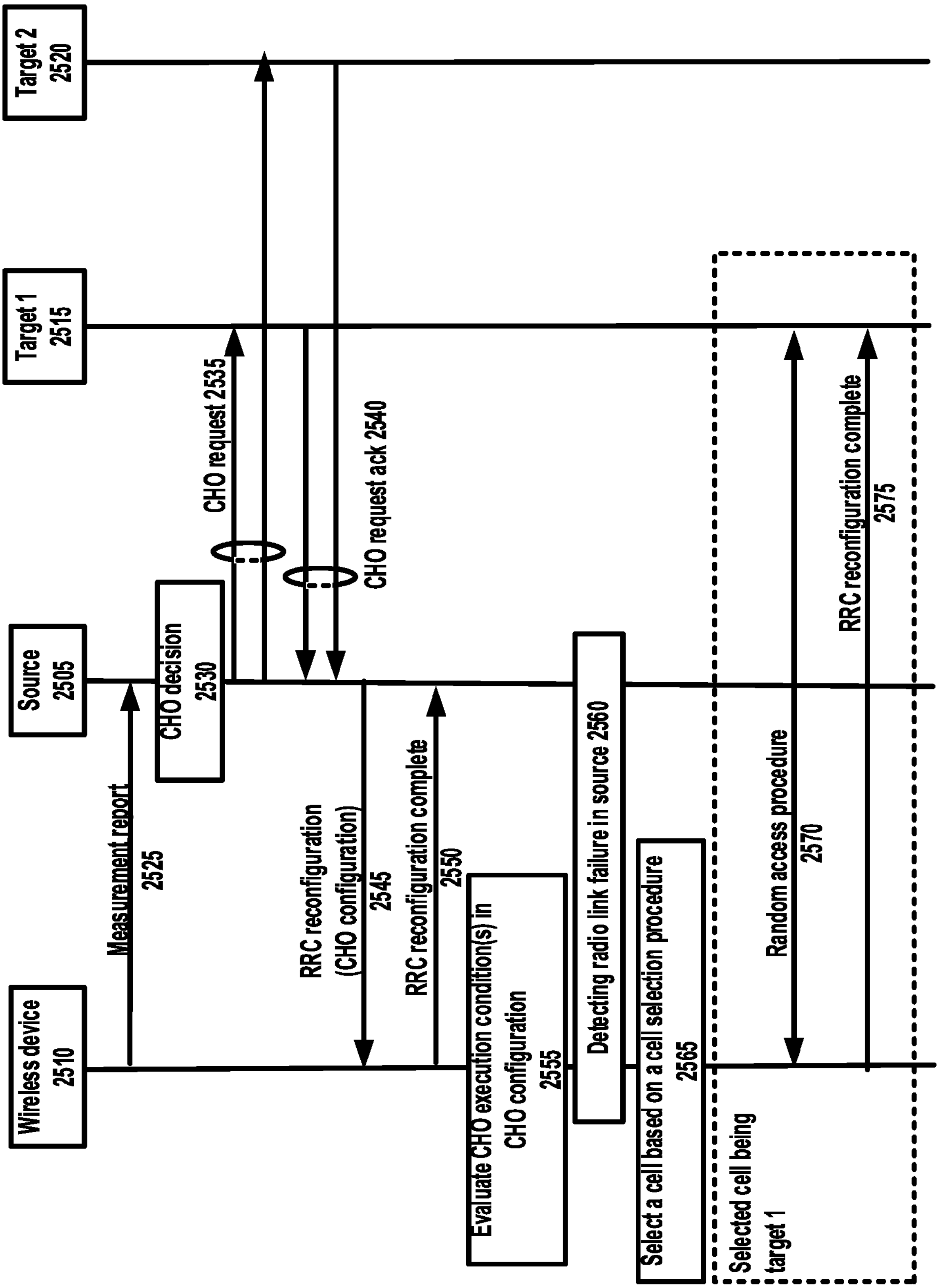

Wireless device 2510
Source 2505
Target 1 2515
Target 2 2520
Measurement report 2525
CHO decision 2530
CHO request 2535
CHO request ack 2540
RRC reconfiguration (CHO configuration) 2545
RRC reconfiguration complete 2550
Evaluate CHO execution condition(s) in CHO configuration 2555
Detecting radio link failure in source 2560
Select a cell based on a cell selection procedure 2565
Selected cell being target 1
Random access procedure 2570
RRC reconfiguration complete 2575


FIG. 25

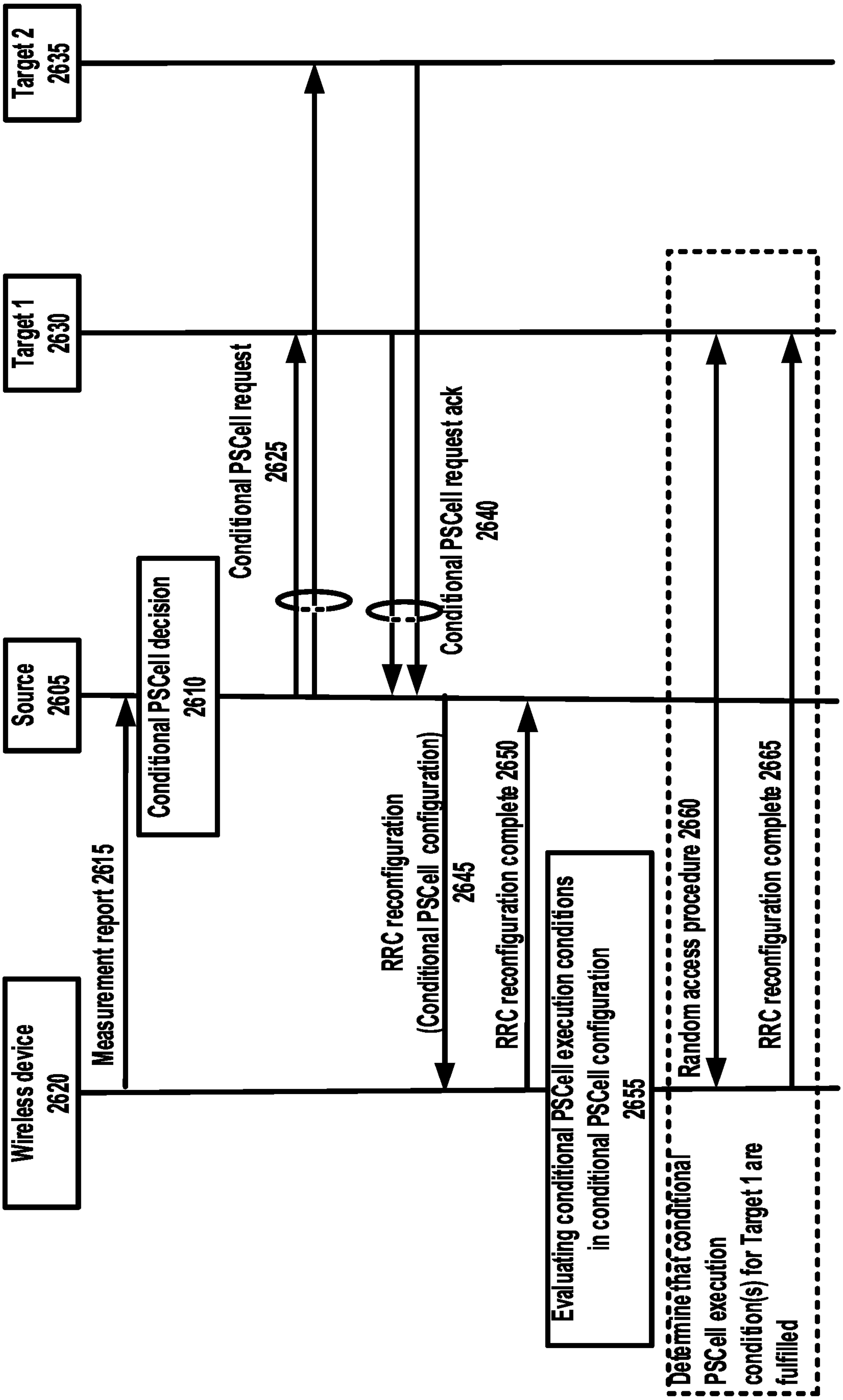
Target 2
2635
Target 1
2630
Source
2605
Wireless device
2620
Measurement report 2615
Conditional PSCell decision
2610
Conditional PSCell request
2625
Conditional PSCell request ack
2640
RRC reconfiguration
(Conditional PSCell configuration)
2645
RRC reconfiguration complete 2650
Evaluating conditional PSCell execution conditions
in conditional PSCell configuration
2655
Random access procedure 2660
RRC reconfiguration complete 2665
Determine that conditional
PSCell execution
condition(s) for Target 1 are
fulfilled

FIG. 26

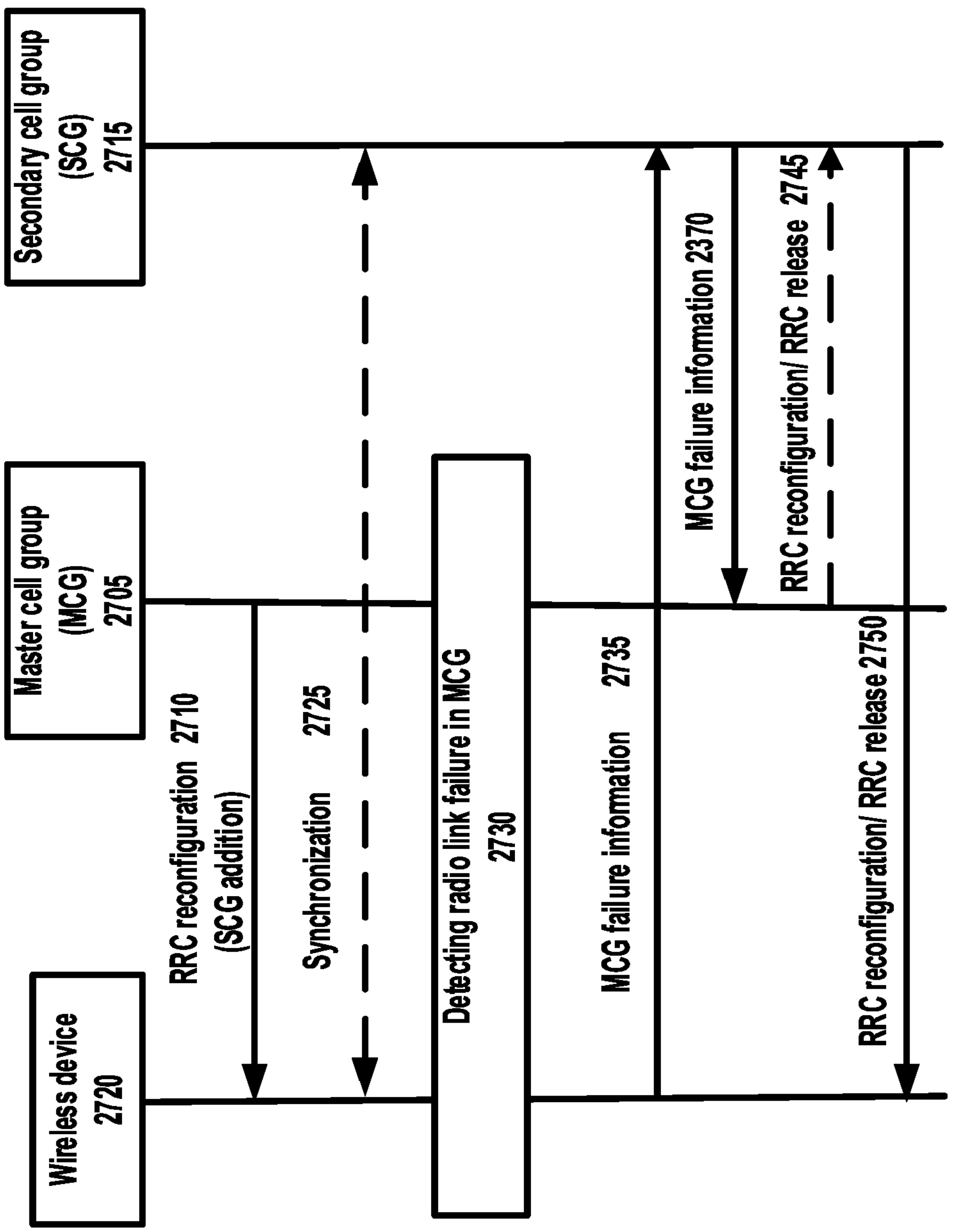
Secondary cell group (SCG) 2715
Master cell group (MCG) 2705
Wireless device 2720
RRC reconfiguration 2710 (SCG addition)
Synchronization 2725
Detecting radio link failure in MCG 2730
MCG failure information 2735
MCG failure information 2370
RRC reconfiguration/ RRC release 2745
RRC reconfiguration/ RRC release 2750

FIG. 27

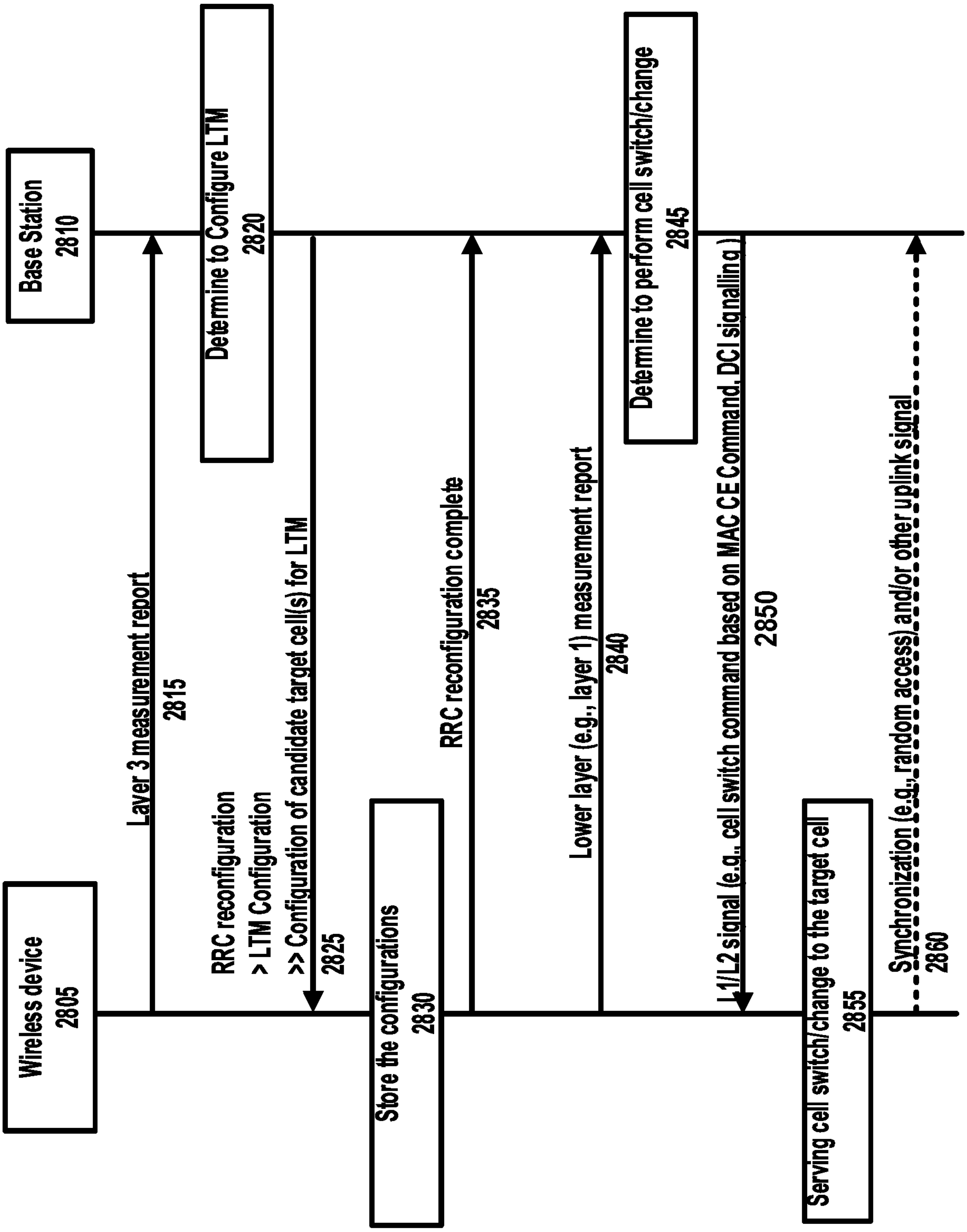

Wireless device
2805
Base Station
2810
Layer 3 measurement report
2815
Determine to Configure LTM
2820
RRC reconfiguration
> LTM Configuration
>> Configuration of candidate target cell(s) for LTM
2825
Store the configurations
2830
RRC reconfiguration complete
2835
Lower layer (e.g., layer 1) measurement report
2840
Determine to perform cell switch/change
2845
L1/L2 signal (e.g., cell switch command based on MAC CE Command, DCI signalling)
2850
Serving cell switch/change to the target cell
2855
Synchronization (e.g., random access) and/or other uplink signal
2860


FIG. 28

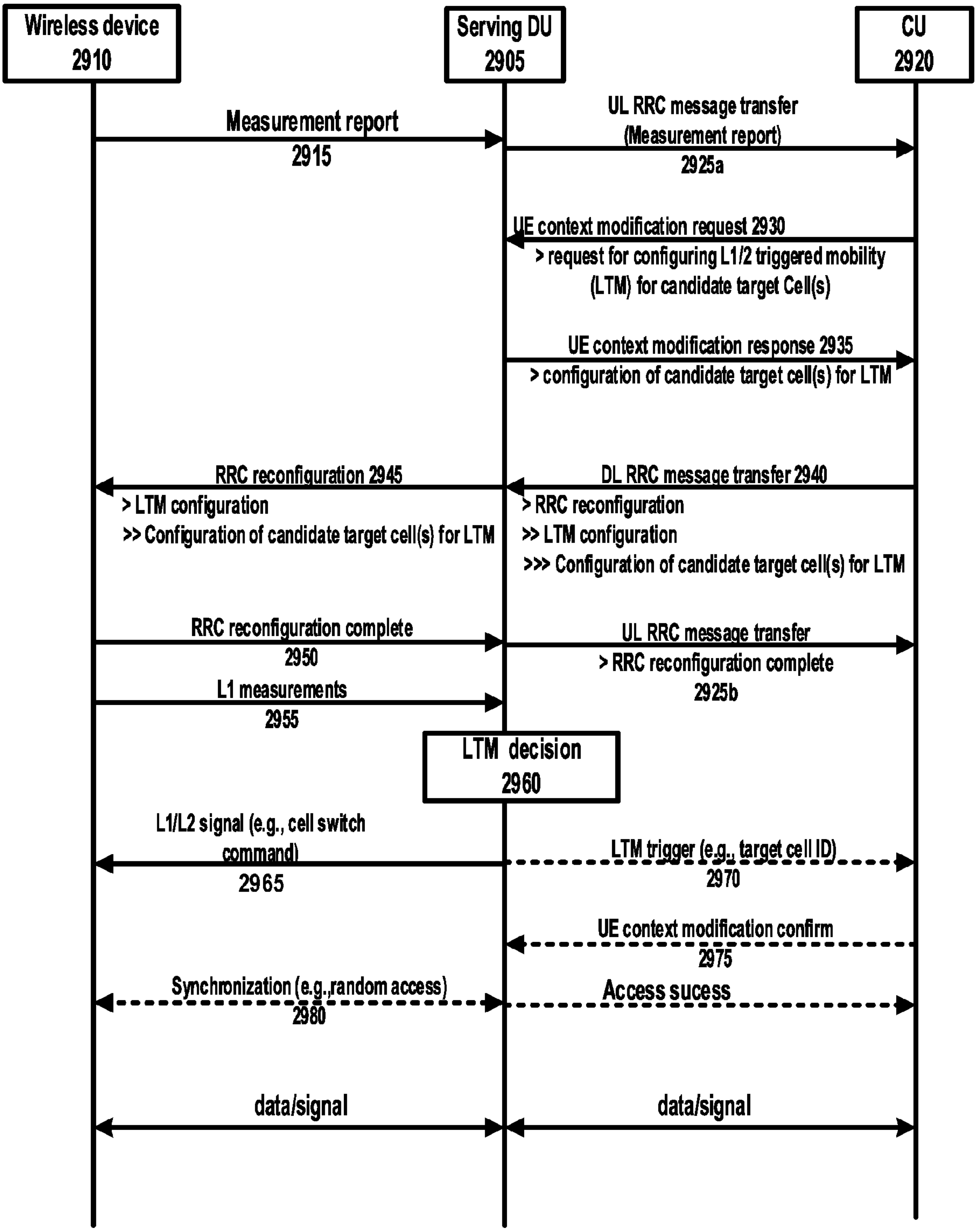
Wireless device
2910
Serving DU
2905
CU
2920
Measurement report
2915
UL RRC message transfer
(Measurement report)
2925a
UE context modification request 2930
> request for configuring L1/2 triggered mobility
(LTM) for candidate target Cell(s)
UE context modification response 2935
> configuration of candidate target cell(s) for LTM
RRC reconfiguration 2945
> LTM configuration
>> Configuration of candidate target cell(s) for LTM
DL RRC message transfer 2940
> RRC reconfiguration
>> LTM configuration
>>> Configuration of candidate target cell(s) for LTM
RRC reconfiguration complete
2950
UL RRC message transfer
> RRC reconfiguration complete
2925b
L1 measurements
2955
LTM decision
2960
L1/L2 signal (e.g., cell switch
command)
2965
LTM trigger (e.g., target cell ID)
2970
UE context modification confirm
2975
Synchronization (e.g.,random access)
2980
Access sucess
data/signal
data/signal

FIG. 29

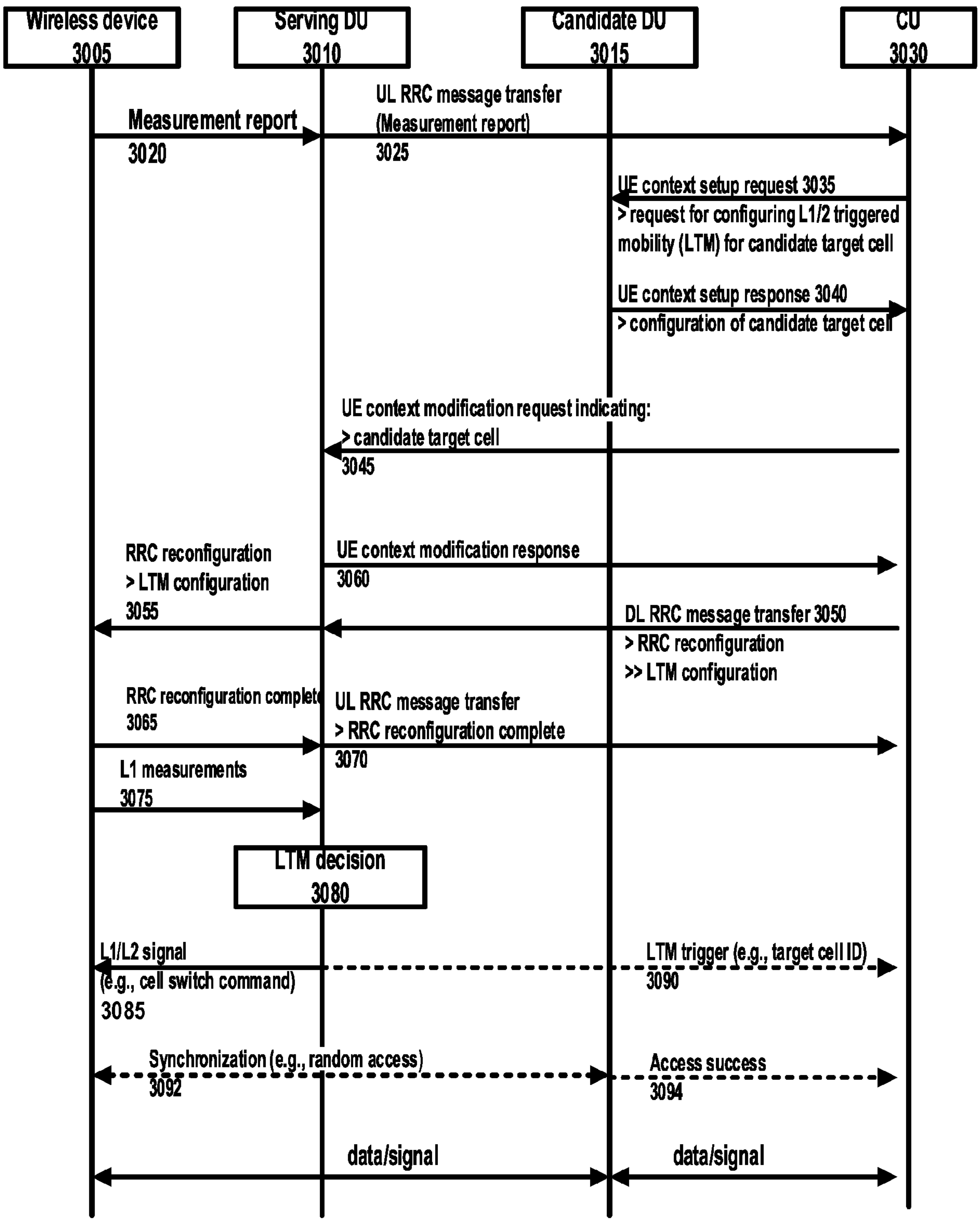
Wireless device 3005
Serving DU 3010
Candidate DU 3015
CU 3030
Measurement report 3020
UL RRC message transfer (Measurement report) 3025
UE context setup request 3035
> request for configuring L1/2 triggered mobility (LTM) for candidate target cell
UE context setup response 3040
> configuration of candidate target cell
UE context modification request indicating:
> candidate target cell
3045
RRC reconfiguration
> LTM configuration
3055
UE context modification response
3060
DL RRC message transfer 3050
> RRC reconfiguration
>> LTM configuration
RRC reconfiguration complete
3065
UL RRC message transfer
> RRC reconfiguration complete
3070
L1 measurements
3075
LTM decision
3080
L1/L2 signal
(e.g., cell switch command)
3085
LTM trigger (e.g., target cell ID)
3090
Synchronization (e.g., random access)
3092
Access success
3094
data/signal
data/signal

FIG. 30

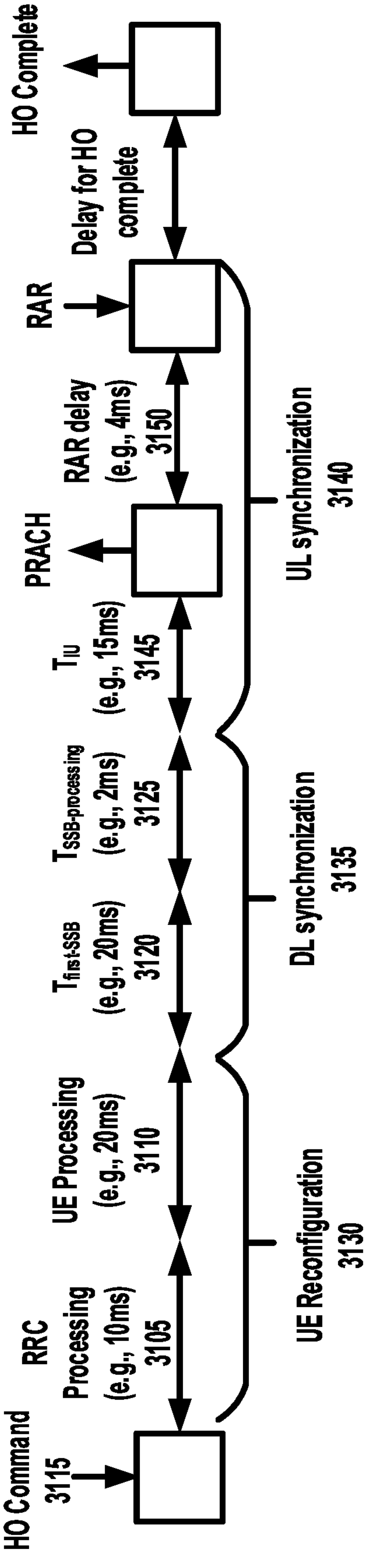


FIG. 31A

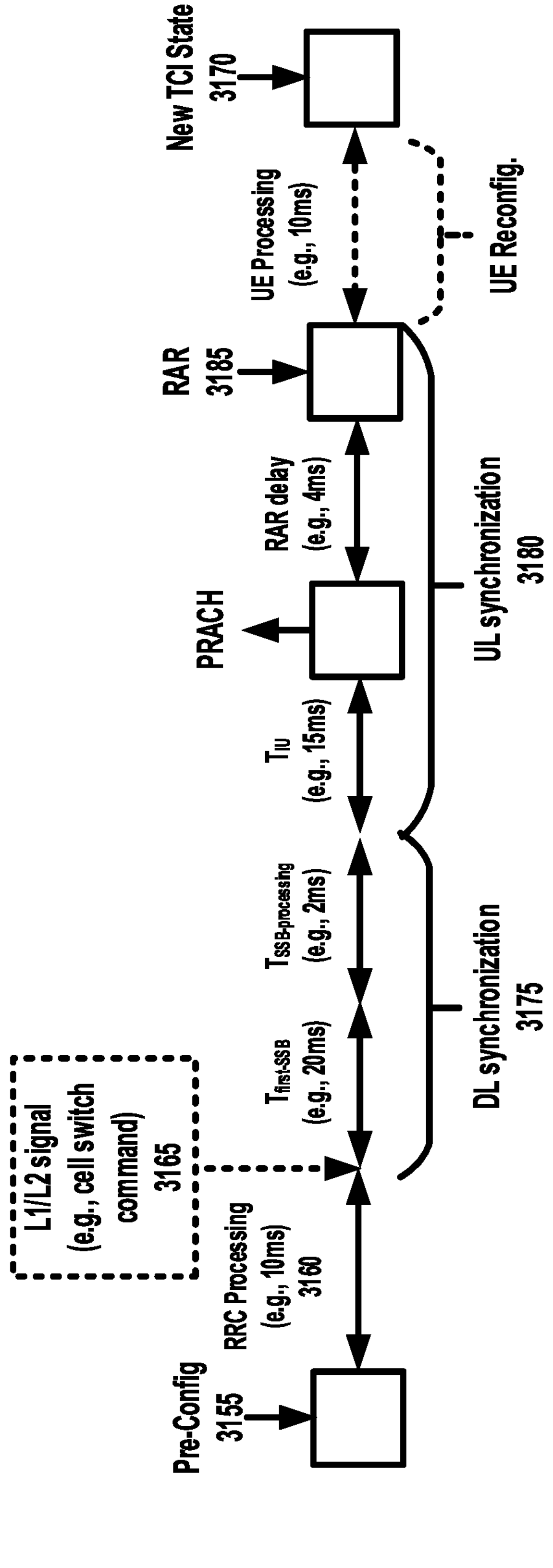


FIG. 31B

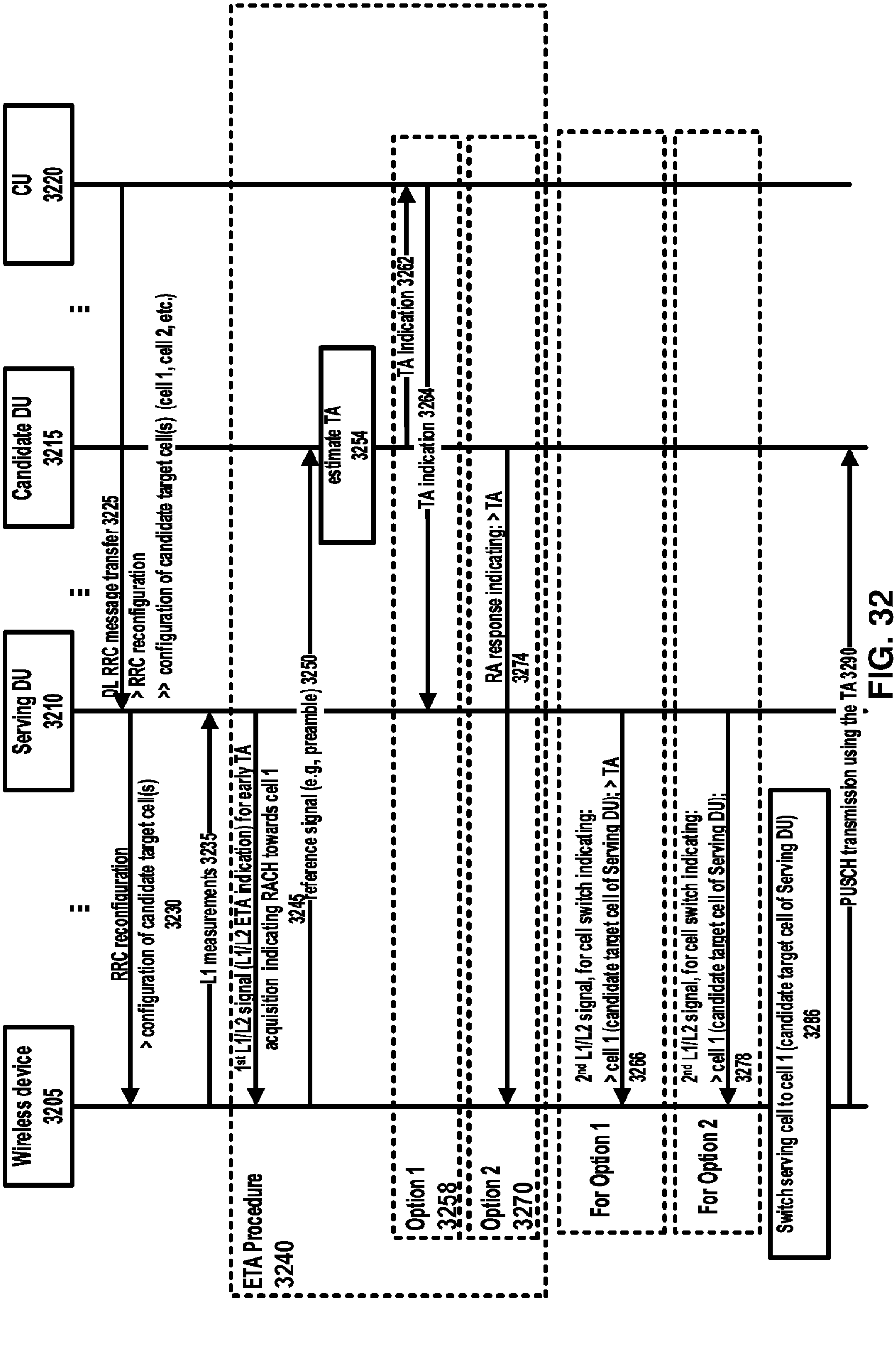
Wireless device 3205
Serving DU 3210
Candidate DU 3215
CU 3220
DL RRC message transfer 3225
> RRC reconfiguration
>> configuration of candidate target cell(s) (cell 1, cell 2, etc.)
RRC reconfiguration
> configuration of candidate target cell(s)
3230
L1 measurements 3235
ETA Procedure 3240
1st L1/L2 signal (L1/L2 ETA indication) for early TA acquisition indicating RACH towards cell 1
3245
reference signal (e.g, preamble) 3250
estimate TA 3254
TA indication 3262
TA indication 3264
Option 1 3258
RA response indicating: > TA
3274
Option 2 3270
For Option 1
2nd L1/L2 signal, for cell switch indicating:
> cell 1 (candidate target cell of Serving DU): > TA
3266
For Option 2
2nd L1/L2 signal, for cell switch indicating:
> cell 1 (candidate target cell of Serving DU):
3278
Switch serving cell to cell 1 (candidate target cell of Serving DU)
3286
PUSCH transmission using the TA 3290

FIG. 32

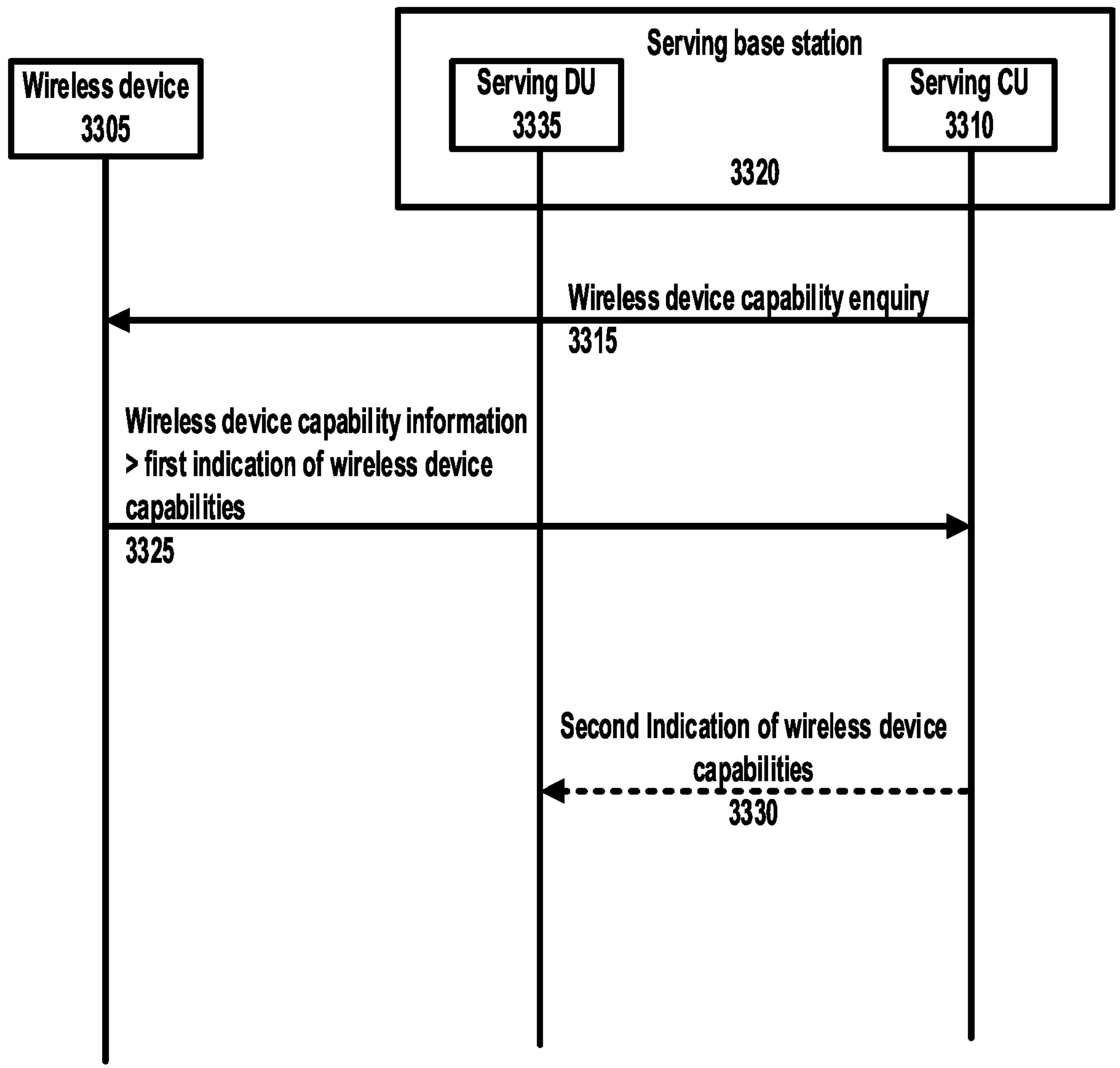
Serving base station
3320
Wireless device
3305
Serving DU
3335
Serving CU
3310
Wireless device capability enquiry
3315
Wireless device capability information
> first indication of wireless device
capabilities
3325
Second Indication of wireless device
capabilities
3330

FIG. 33

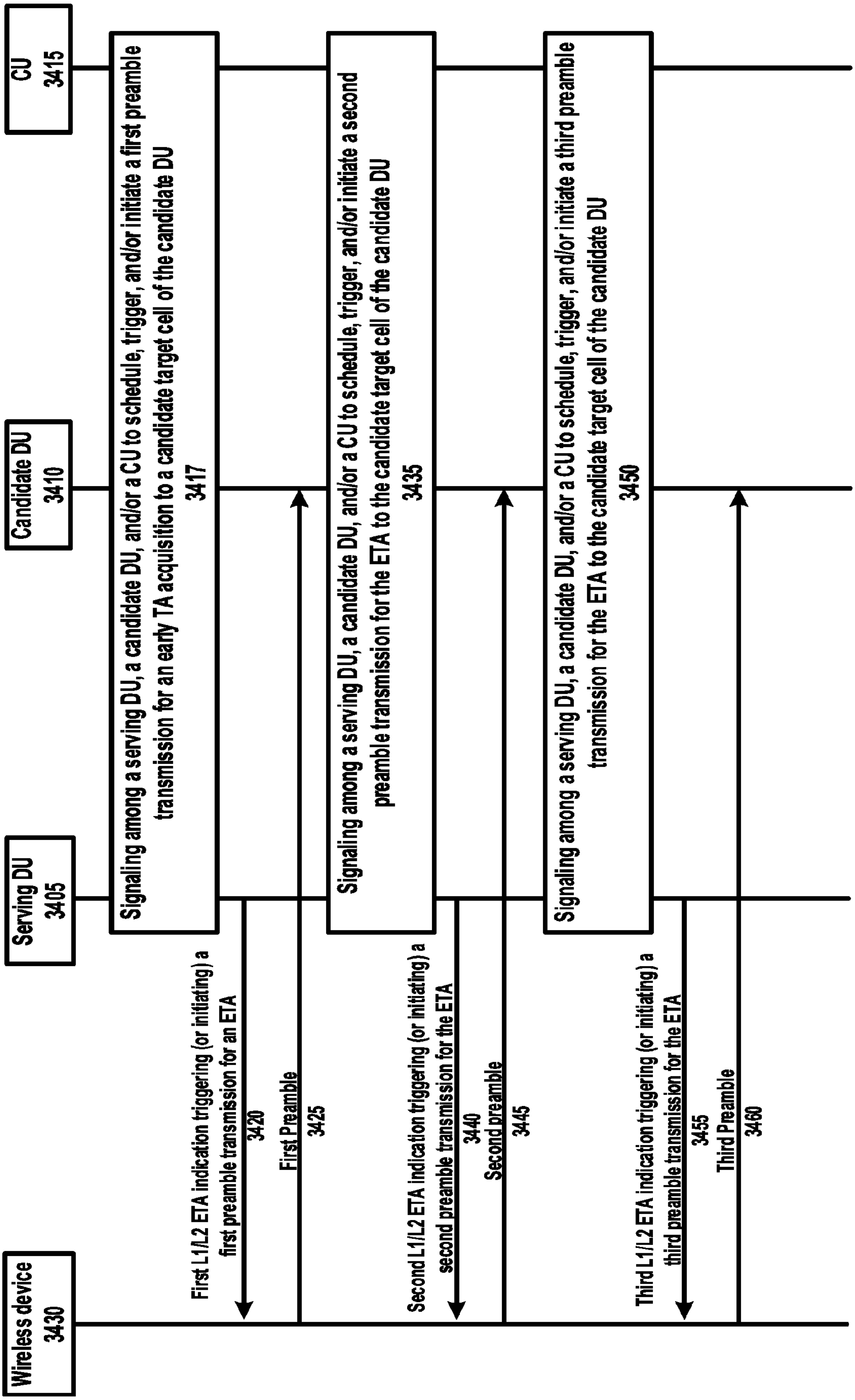

Wireless device
3430
Serving DU
3405
Candidate DU
3410
CU
3415
Signaling among a serving DU, a candidate DU, and/or a CU to schedule, trigger, and/or initiate a first preamble transmission for an early TA acquisition to a candidate target cell of the candidate DU
3417
First L1/L2 ETA indication triggering (or initiating) a first preamble transmission for an ETA
3420
First Preamble
3425
Signaling among a serving DU, a candidate DU, and/or a CU to schedule, trigger, and/or initiate a second preamble transmission for the ETA to the candidate target cell of the candidate DU
3435
Second L1/L2 ETA indication triggering (or initiating) a second preamble transmission for the ETA
3440
Second preamble
3445
Signaling among a serving DU, a candidate DU, and/or a CU to schedule, trigger, and/or initiate a third preamble transmission for the ETA to the candidate target cell of the candidate DU
3450
Third L1/L2 ETA indication triggering (or initiating) a third preamble transmission for the ETA
3455
Third Preamble
3460


FIG. 34

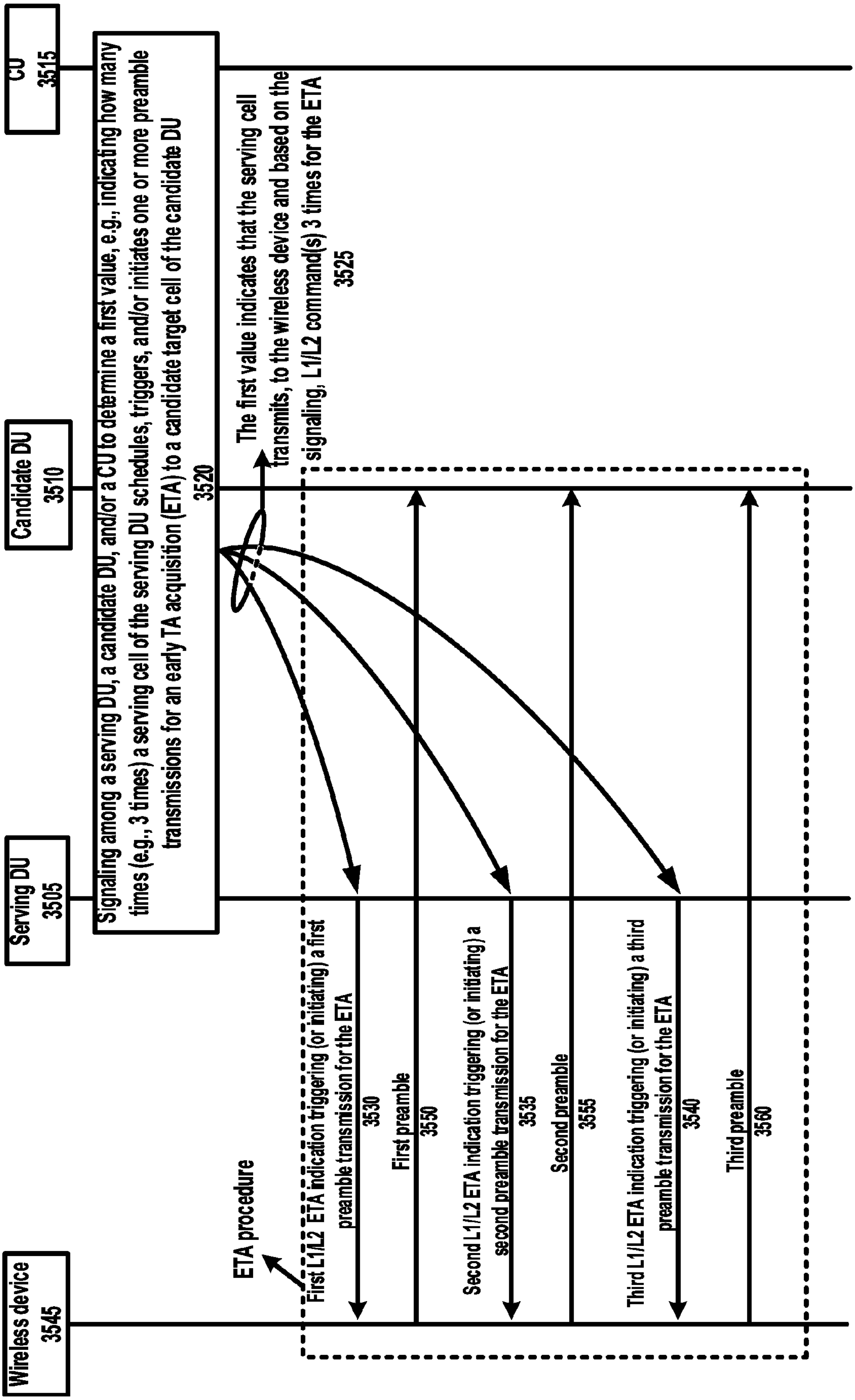
Wireless device
3545
Serving DU
3505
Candidate DU
3510
CU
3515
Signaling among a serving DU, a candidate DU, and/or a CU to determine a first value, e.g., indicating how many times (e.g., 3 times) a serving cell of the serving DU schedules, triggers, and/or initiates one or more preamble transmissions for an early TA acquisition (ETA) to a candidate target cell of the candidate DU
3520
The first value indicates that the serving cell transmits, to the wireless device and based on the signaling, L1/L2 command(s) 3 times for the ETA
3525
ETA procedure
First L1/L2 ETA indication triggering (or initiating) a first preamble transmission for the ETA
3530
First preamble
3550
Second L1/L2 ETA indication triggering (or initiating) a second preamble transmission for the ETA
3535
Second preamble
3555
Third L1/L2 ETA indication triggering (or initiating) a third preamble transmission for the ETA
3540
Third preamble
3560

FIG. 35

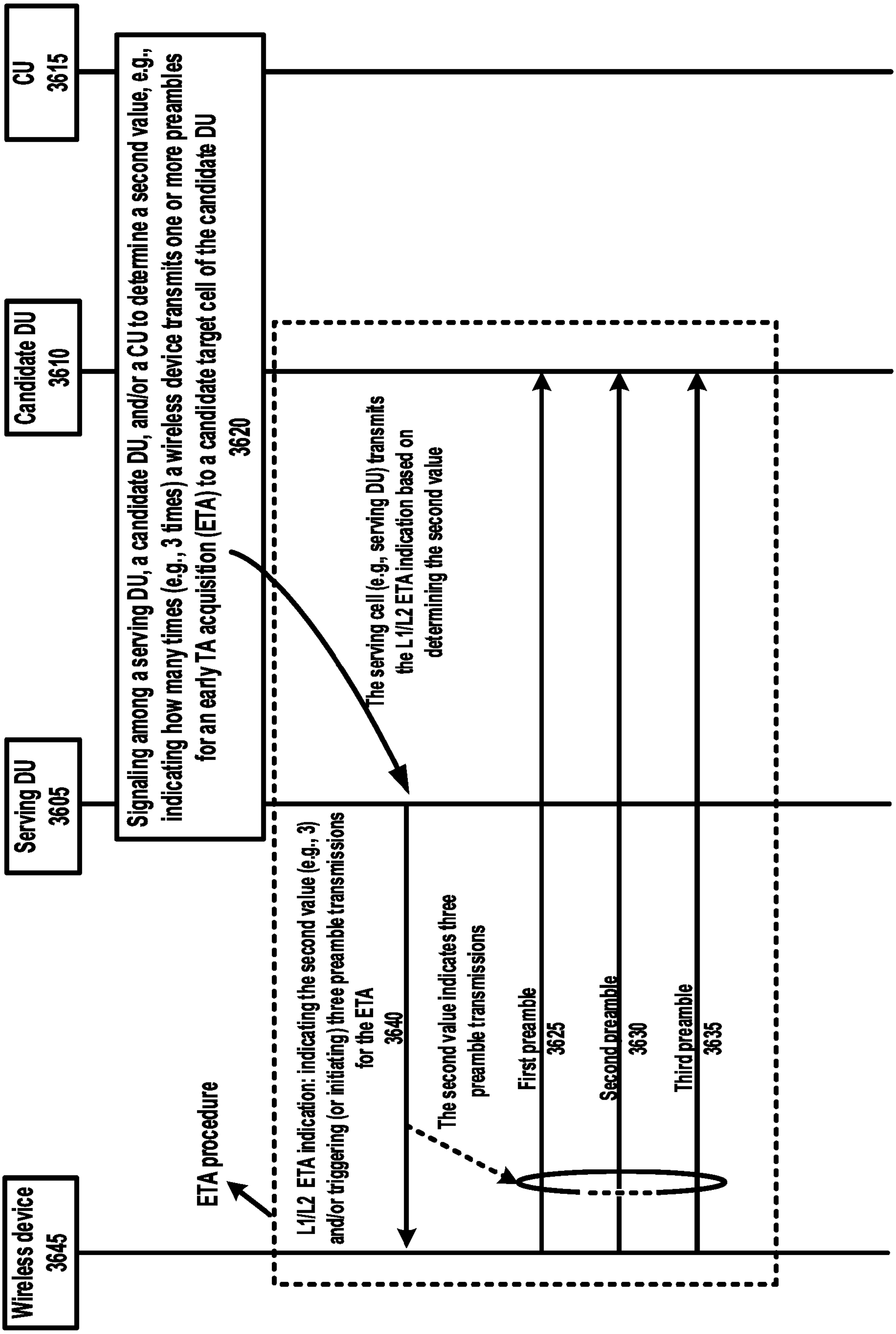

Wireless device 3645
Serving DU 3605
Candidate DU 3610
CU 3615
Signaling among a serving DU, a candidate DU, and/or a CU to determine a second value, e.g., indicating how many times (e.g., 3 times) a wireless device transmits one or more preambles for an early TA acquisition (ETA) to a candidate target cell of the candidate DU
3620
ETA procedure
The serving cell (e.g., serving DU) transmits the L1/L2 ETA indication based on determining the second value
L1/L2 ETA indication: indicating the second value (e.g., 3) and/or triggering (or initiating) three preamble transmissions for the ETA
3640
The second value indicates three preamble transmissions
First preamble
3625
Second preamble
3630
Third preamble
3635


FIG. 36

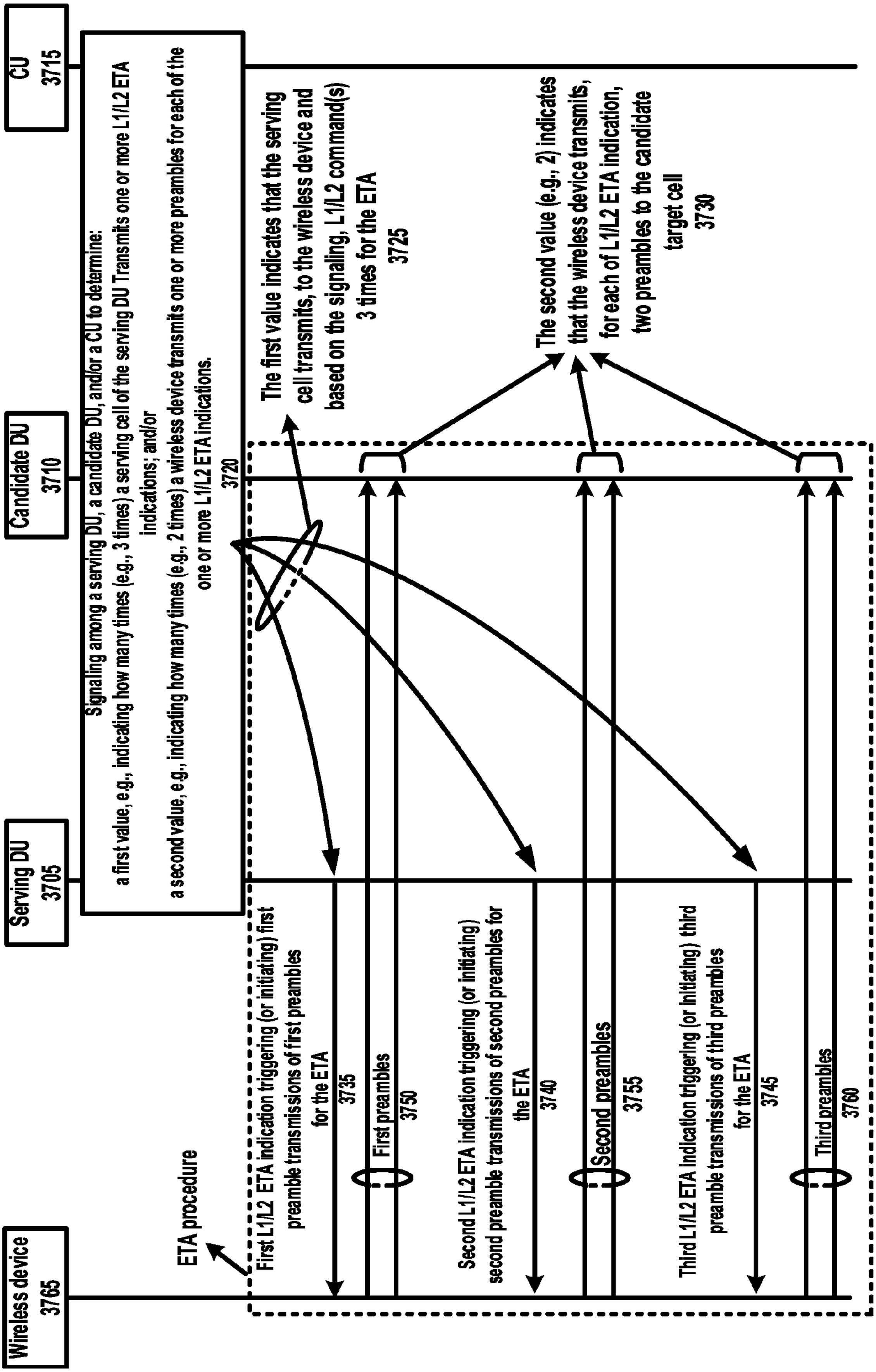
Wireless device
3765
Serving DU
3705
Candidate DU
3710
CU
3715
Signaling among a serving DU, a candidate DU, and/or a CU to determine:
a first value, e.g., indicating how many times (e.g., 3 times) a serving cell of the serving DU Transmits one or more L1/L2 ETA indications; and/or
a second value, e.g., indicating how many times (e.g., 2 times) a wireless device transmits one or more preambles for each of the one or more L1/L2 ETA indications.
3720
The first value indicates that the serving cell transmits, to the wireless device and based on the signaling, L1/L2 command(s) 3 times for the ETA
3725
The second value (e.g., 2) indicates that the wireless device transmits, for each of L1/L2 ETA indication, two preambles to the candidate target cell
3730
ETA procedure
First L1/L2 ETA indication triggering (or initiating) first preamble transmissions of first preambles for the ETA
3735
First preambles
3750
Second L1/L2 ETA indication triggering (or initiating) second preamble transmissions of second preambles for the ETA
3740
Second preambles
3755
Third L1/L2 ETA indication triggering (or initiating) third preamble transmissions of third preambles for the ETA
3745
Third preambles
3760

FIG. 37

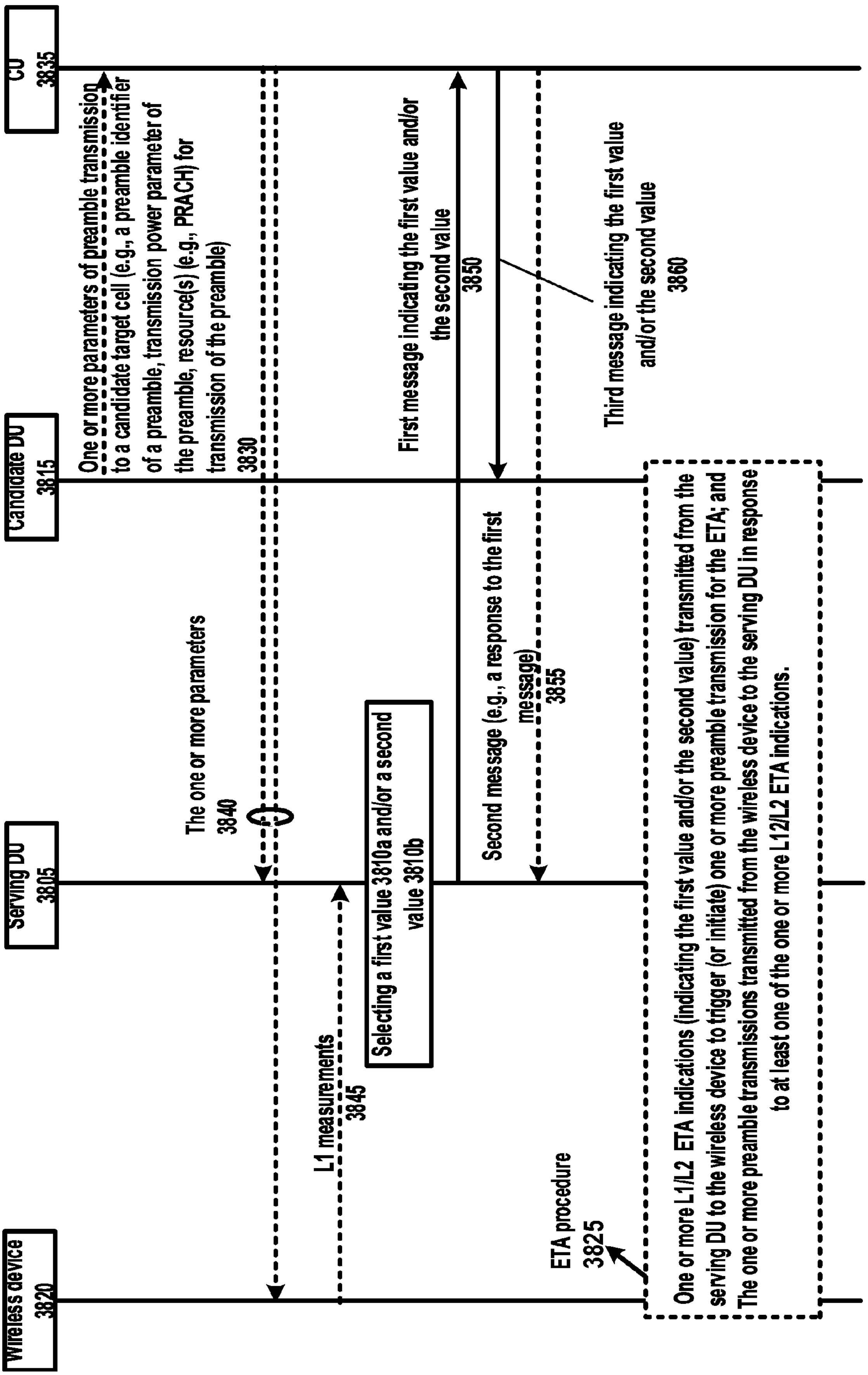
Wireless device
3820
Serving DU
3805
Candidate DU
3815
CU
3835
One or more parameters of preamble transmission to a candidate target cell (e.g., a preamble identifier of a preamble, transmission power parameter of the preamble, resource(s) (e.g., PRACH) for transmission of the preamble)
3830
The one or more parameters
3840
L1 measurements
3845
Selecting a first value 3810a and/or a second value 3810b
First message indicating the first value and/or the second value
3850
Second message (e.g., a response to the first message)
3855
Third message indicating the first value and/or the second value
3860
ETA procedure
3825
One or more L1/L2 ETA indications (indicating the first value and/or the second value) transmitted from the serving DU to the wireless device to trigger (or initiate) one or more preamble transmission for the ETA; and
The one or more preamble transmissions transmitted from the wireless device to the serving DU in response to at least one of the one or more L12/L2 ETA indications.

FIG. 38

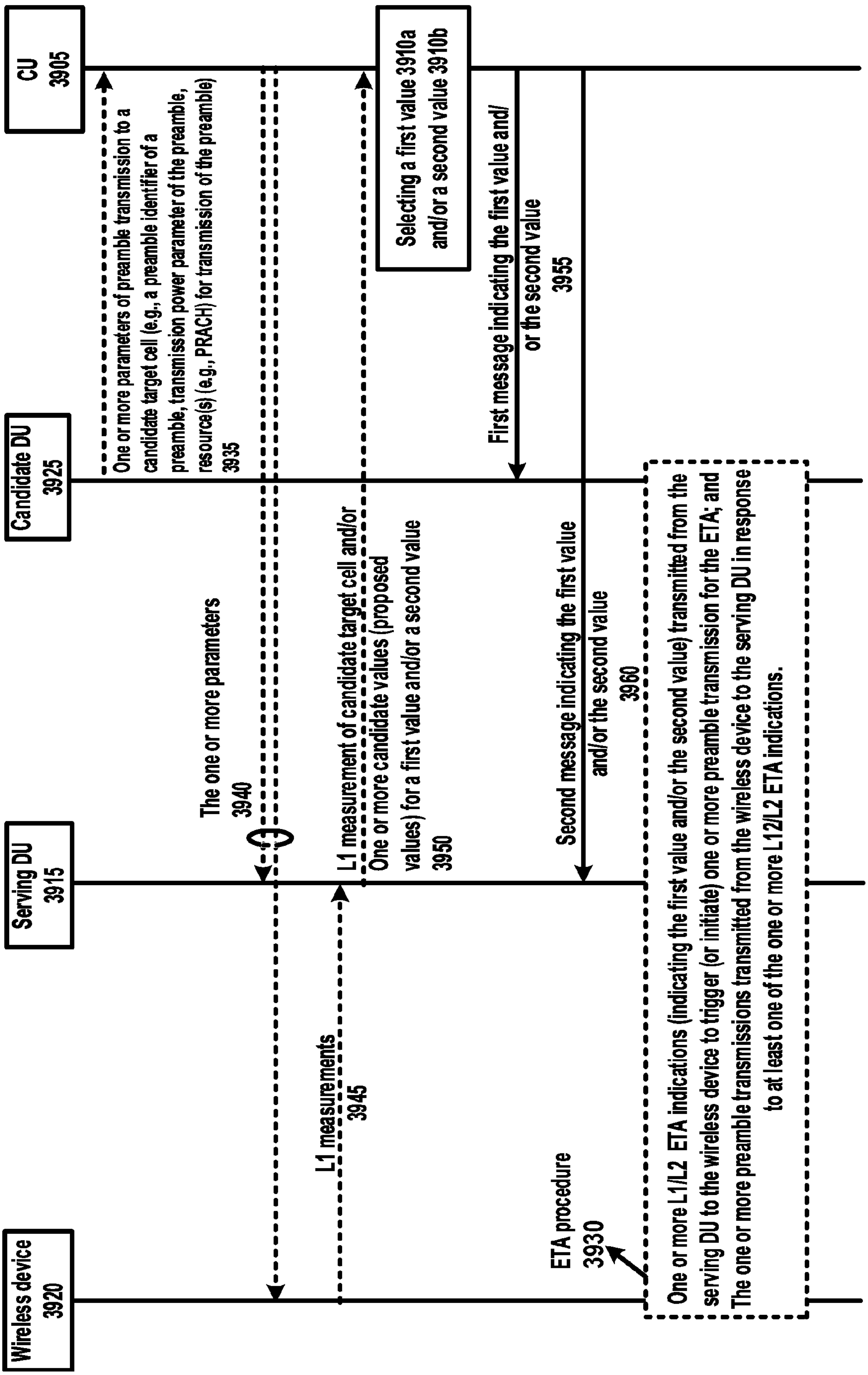
Wireless device
3920
Serving DU
3915
Candidate DU
3925
CU
3905
One or more parameters of preamble transmission to a candidate target cell (e.g., a preamble identifier of a preamble, transmission power parameter of the preamble, resource(s) (e.g., PRACH) for transmission of the preamble)
3935
The one or more parameters
3940
L1 measurements
3945
L1 measurement of candidate target cell and/or One or more candidate values (proposed values) for a first value and/or a second value
3950
Selecting a first value 3910a and/or a second value 3910b
First message indicating the first value and/or the second value
3955
Second message indicating the first value and/or the second value
3960
ETA procedure
3930
One or more L1/L2 ETA indications (indicating the first value and/or the second value) transmitted from the serving DU to the wireless device to trigger (or initiate) one or more preamble transmission for the ETA; and
The one or more preamble transmissions transmitted from the wireless device to the serving DU in response to at least one of the one or more L12/L2 ETA indications.

FIG. 39

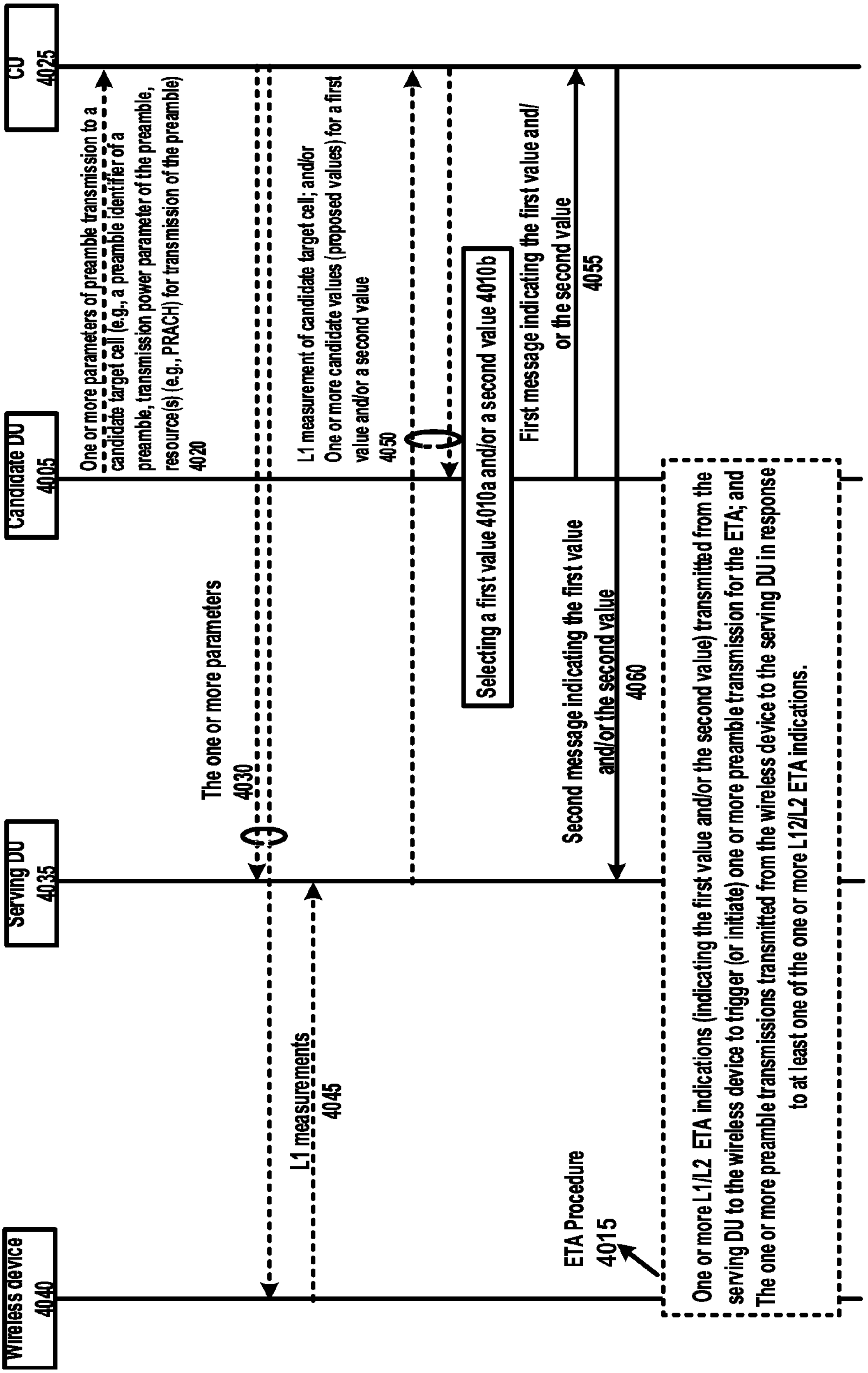
CU
4025
Candidate DU
4005
Serving DU
4035
Wireless device
4040
One or more parameters of preamble transmission to a candidate target cell (e.g., a preamble identifier of a preamble, transmission power parameter of the preamble, resource(s) (e.g., PRACH) for transmission of the preamble)
4020
The one or more parameters
4030
L1 measurements
4045
L1 measurement of candidate target cell; and/or
One or more candidate values (proposed values) for a first value and/or a second value
4050
Selecting a first value 4010a and/or a second value 4010b
First message indicating the first value and/or the second value
4055
Second message indicating the first value and/or the second value
4060
ETA Procedure
4015
One or more L1/L2 ETA indications (indicating the first value and/or the second value) transmitted from the serving DU to the wireless device to trigger (or initiate) one or more preamble transmission for the ETA; and
The one or more preamble transmissions transmitted from the wireless device to the serving DU in response to at least one of the one or more L12/L2 ETA indications.

FIG. 40

Europäisches Patentamt
European Patent Office
Office européen des brevets

# EUROPEAN SEARCH REPORT

Application Number
EP 24 15 8050

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | LI-CHUAN TSENG ET AL: "Procedures of L1L2-triggered Mobility", 3GPP DRAFT; R2-2211195; TYPE DISCUSSION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. 3GPP RAN 2, no. Toulouse, FR; 20221114 - 20221118 4 November 2022 (2022-11-04), XP052215307, Retrieved from the Internet: URL:https://www.3gpp.org/ftp/TSG_RAN/WG2_RL2/TSGR2_120/Docs/R2-2211195.zip R2-2211195 Procedures of L1L2-triggered Mobility.docx [retrieved on 2022-11-04] * abstract * * sections 2.1 and 2.2 * ----- | 1-15 | INV. H04W56/00 H04W74/0833 ADD. H04W36/00 H04W36/08 |
| | -/-- | | **TECHNICAL FIELDS SEARCHED (IPC)** |
| | | | H04W |

The present search report has been drawn up for all claims

1

| Place of search | Date of completion of the search | Examiner |
|---|---|---|
| Munich | 24 June 2024 | Valpondi Hereza, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 1 of 2

Europäisches Patentamt
European Patent Office
Office européen des brevets

# EUROPEAN SEARCH REPORT

Application Number
EP 24 15 8050

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | APPLE INC: "Timing advance management to reduce mobility latency", 3GPP DRAFT; R1-2209604, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. e-Meeting; 20221010 - 20221019 30 September 2022 (2022-09-30), XP052259077, Retrieved from the Internet: URL:https://ftp.3gpp.org/tsg_ran/WG1_RL1/TSGR1_110b-e/Docs/R1-2209604.zip R1-2209604.docx [retrieved on 2022-09-30] * abstract * * sections 2.1 and 2.2 * | 1-15 | |
| Y | US 2020/314913 A1 (RASTEGARDOOST NAZANIN [US] ET AL) 1 October 2020 (2020-10-01) * abstract * * paragraphs [0251], [0280] - [0288], [0316] - [0374] * | 1-15 | TECHNICAL FIELDS SEARCHED (IPC) |
| A | US 2022/210844 A1 (MOLAVIANJAZI EBRAHIM [US] ET AL) 30 June 2022 (2022-06-30) * abstract * * paragraphs [0101] - [0190], [0250] - [0258], [0523] - [0552] * | 1-15 | |

1

The present search report has been drawn up for all claims

| Place of search | Date of completion of the search | Examiner |
|---|---|---|
| Munich | 24 June 2024 | Valpondi Hereza, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO.

EP 24 15 8050

This annex lists the patent family members relating to the patent documents cited in the above-mentioned European search report. The members are as contained in the European Patent Office EDP file on The European Patent Office is in no way liable for these particulars which are merely given for the purpose of information.

24-06-2024

| Patent document cited in search report | Publication date | Patent family member(s) | Publication date |
|---|---|---|---|
| US 2020314913 A1 | 01-10-2020 | US 2020314913 A1 | 01-10-2020 |
| | | US 2022353922 A1 | 03-11-2022 |
| | | US 2023284282 A1 | 07-09-2023 |
| US 2022210844 A1 | 30-06-2022 | CN 116746270 A | 12-09-2023 |
| | | EP 4272505 A1 | 08-11-2023 |
| | | KR 20230125228 A | 29-08-2023 |
| | | US 2022210844 A1 | 30-06-2022 |
| | | US 2024129959 A1 | 18-04-2024 |
| | | WO 2022146102 A1 | 07-07-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 63446289